(19) Europäisches Patentamt
European Patent Office
Office européen des brevets

(11) EP 1 752 987 A2

(12) EUROPEAN PATENT APPLICATION

(43) Date of publication:
14.02.2007 Bulletin 2007/07

(51) Int Cl.:
G11B 27/10 (2006.01)      G11B 27/32 (2006.01)

(21) Application number: 06117850.5

(22) Date of filing: 26.07.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 08.08.2005 JP 2005229792

(71) Applicant: KABUSHIKI KAISHA TOSHIBA
Tokyo 105-8001 (JP)

(72) Inventors:
• Ando, Hideo
Toshiba Corporation
Minato-ku
Tokyo 105-8001 (JP)

• Tsumagari, Yasufumi
Toshiba Corporation
Minato-ku
Tokyo 105-8001 (JP)
• Kobayashi, Takero
Toshiba Corporation
Minato-ku
Tokyo 105-8001 (JP)

(74) Representative: Henkel, Feiler & Hänzel
Patentanwälte
Maximiliansplatz 21
80333 München (DE)

(54) **Information storage medium, information playback apparatus, information playback method, and information playback program**

(57) According to one embodiment, an information playback apparatus includes an advanced content playback unit (ADVPL) configured to play back an advanced content, and the advanced content playback unit includes a navigation manager unit (NVMNG) configured to manage playback of video information and audio information which form the advanced content, and an AV renderer unit (AVRND) configured to combine the video information and the audio information.

FIG. 16

## Description

One embodiment of the invention relates to an information storage medium such as an optical disc or the like. Another embodiment of the invention relates to an information playback apparatus, an information playback method, and an information playback program for playing back information from such information storage medium.

In recent years, DVD-Video discs having high image quality and advanced functions, and video players which play back those discs have prevailed, and peripheral devices and the like which can be used to play back such multi-channel audio data now have broader options. Then, for content users, an environment that can personally implement a home theater and allows the users to freely enjoy movies, animations, and the like with high image quality and high sound quality at home has become available. For content providers, a variety of video expressions are available. For example, Jpn. Pat. Appln. KOKAI Publication No. 2004-343254 discloses a technique which can set buttons with arbitrary shapes and can form flexible and various menus by setting a graphic unit including highlight information as an independent stream.

For the existing DVD-Video standards, the content providers and content users have the following needs:

1. realization of flexible and diversified expression formats like a computer window
2. realization of flexible responses to various actions via network
3. realization of easy processing of video related information and easy transmission of information after processing

However, the prior arts cannot meet such needs.

It is an object of the invention to provide an information storage medium which can attain advanced expressive power and convenience in association with images and the like. It is another object of the invention to provide an information playback apparatus, an information playback method, and an information playback program, which can play back such information storage medium.

An information storage medium according to one embodiment of the invention is an information storage medium which is played back by an information recording and playback apparatus or an information playback apparatus that comprises a navigation manager unit, comprising a content area that records a content to be played back based on a playlist, wherein the content area comprises a playlist area that records the playlist at least a part of which is interpreted by a playlist manager unit included in the navigation manager unit.

An information playback apparatus according to one embodiment of the invention comprises an advanced content playback unit configured to play back an advanced content, and the advanced content playback unit comprises a navigation manager unit configured to manage playback of video information and audio information which form the advanced content; and an AV renderer unit configured to combine the video information and the audio information.

An information playback method according to one embodiment of the invention is an information playback method to be applied to an information playback apparatus which comprises an advanced content playback unit including a navigation manager unit and an AV renderer unit, an information recording and playback unit, and at least one of a persistent storage drive and a network controller, comprising: playing back the advanced content by the navigation manager.

An information playback program according to one embodiment of the invention comprises a content, and a playlist which is used to play back the content, and at least a part of which is interpreted by a playlist manager of an information recording and playback apparatus or an information playback apparatus.

The invention can be more fully understood from the following detailed description when taken in conjunction with the accompanying drawings, in which:

FIG. 1 is an explanatory view (part 1) of the relationship between a technical feature and an effect produced by that feature according to an embodiment of the present invention;
FIG. 2 is an explanatory view (part 2) of the relationship between a technical feature and an effect produced by that feature according to the embodiment;
FIG. 3 is an explanatory view (part 3) of the relationship between a technical feature and an effect produced by that feature according to the embodiment;
FIG. 4 is an explanatory view of the data structure in a standard content according to the embodiment;
FIG. 5 is an explanatory view of an example of the data structure recorded in an information storage medium compliant to category 1 according to the embodiment;
FIG. 6 is an explanatory view of an example of the data structure recorded in an information storage medium compliant to category 2 according to the embodiment;
FIG. 7 is an explanatory view of an example of the data structure recorded in an information storage medium compliant to category 3 according to the embodiment;
FIG. 8 is an explanatory view of the transition relationship in advanced content playback and standard content playback according to the embodiment;

FIG. 9 is an explanatory view of a playback content for information storage media compliant to different categories according to the embodiment;

FIG. 10 is an explanatory view of a startup sequence in an information playback apparatus of only audio according to the embodiment;

FIG. 11 is an explanatory view of different data accesses to an advanced content and standard content according to the embodiment;

FIG. 12 is an explanatory view of the relationship among various objects according to the embodiment;

FIG. 13 is an explanatory view of the file structure associated with an advanced content according to the embodiment;

FIGS. 14A, 14B, and 14C are explanatory views of the data structure in an advanced content according to the embodiment;

FIG. 15 is a schematic block diagram of a system including an information recording and playback apparatus according to the embodiment;

FIG. 16 is an explanatory view of the structure of an advanced content playback unit according to the embodiment;

FIG. 17 is an explanatory view of a presentation example (part 1) of a video content according to the embodiment;

FIG. 18 is an explanatory view of a presentation example (part 2) of a video content according to the embodiment;

FIG. 19 is an explanatory view of a presentation example (part 3) of a video content according to the embodiment;

FIG. 20 is a view showing an example of a presentation frame at point $\alpha$ in FIG. 19 according to the embodiment;

FIG. 21 is an explanatory view of an overview of information in a playlist according to the embodiment;

FIG. 22 is an explanatory view of the relationship between various clip elements described in a playlist and various objects to be played back and used according to the embodiment;

FIG. 23 is an explanatory view of a file storage location destination range according to the embodiment;

FIG. 24 is an explanatory view of a path designation description method to a file according to the embodiment;

FIG. 25 is an explanatory view of information in a playlist file according to the embodiment;

FIG. 26 is an explanatory view of information in an XML tag and playlist tag according to the embodiment;

FIGS. 27A and 27B are explanatory views of the contents of title information in a playlist according to the embodiment;

FIGS. 28A and 28B are explanatory views of the contents of title attribute information, object mapping information, and playback information according to the embodiment;

FIG. 29 is an explanatory view of the data flow in an advanced content playback unit according to the embodiment;

FIG. 30 is an explanatory view of the structure in a data access manager according to the embodiment;

FIG. 31 is an explanatory view of the structure in a data cache according to the embodiment;

FIG. 32 is an explanatory view of the structure in a navigation manager according to the embodiment;

FIG. 33 is a state transition chart of an advanced content player according to the embodiment;

FIG. 34 is an explanatory view of the structure in a presentation engine according to the embodiment;

FIG. 35 is an explanatory view of the structure in an advanced application presentation engine according to the embodiment;

FIG. 36 is an explanatory view of a graphic process model in the presentation engine according to the embodiment;

FIG. 37 is an explanatory view of the structure in an advanced subtitle player according to the embodiment;

FIG. 38 is an explanatory view of the structure in a font rendering system according to the embodiment;

FIG. 39 is an explanatory view of the structure in a secondary video player according to the embodiment;

FIG. 40 is an explanatory view of the structure in a primary video player according to the embodiment;

FIG. 41 is an explanatory view of the structure in a decoder engine according to the embodiment;

FIG. 42 is an explanatory view of the structure in an AV renderer according to the embodiment;

FIG. 43 is an explanatory view of respective frame layers on the presentation frame according to the embodiment;

FIG. 44 is an explanatory view of a presentation model in a graphic plane according to the embodiment;

FIG. 45 is an explanatory view of a video composition model according to the embodiment;

FIG. 46 is an explanatory view of an audio mixing model according to the embodiment;

FIG. 47 is an explanatory view of a data supply model from a network server and persistent storage memory according to the embodiment;

FIG. 48 is an explanatory view of a user input handling model according to the embodiment;

FIG. 49 is a view showing a list of user input events according to the embodiment;

FIG. 50 is a view showing a list of player parameters according to the embodiment;

FIG. 51 is a view showing a list of profile parameters according to the embodiment;

FIG. 52 is a view showing a list of presentation parameters according to the embodiment; and

FIG. 53 is a view showing a list of layout parameters according to the embodiment.

Various embodiments according to the invention will be described hereinafter with reference to the accompanying drawings. In general, according to one embodiment of the invention, an information storage medium is an information storage medium which is played back by an information recording and playback apparatus or an information playback apparatus which comprises a navigation manager unit, comprising a content area (ADVCT) which records a content to be played back based on a playlist, wherein the content area comprises a playlist area (PLLST) that records the playlist, which is at least partially decoded by a playlist manager included in the navigation manager.

One embodiment of the invention will be described hereinafter with reference to the accompanying drawings.

<System Arrangement>

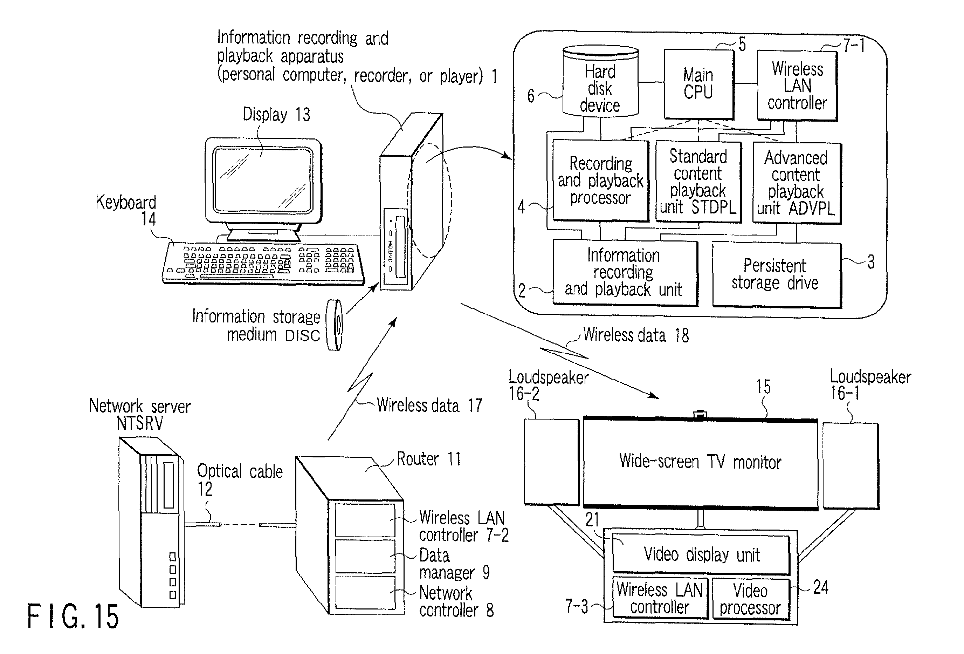

FIG. 15 is a diagram showing the arrangement of a system according to an embodiment of the invention.

This system comprises an information recording and playback apparatus (or an information playback apparatus) 1 which is implemented as a personal computer (PC), a recorder, or a player, and an information storage medium DISC implemented as an optical disc which is detachable from the information recording and playback apparatus 1. The system also comprises a display 13 which displays information stored in the information storage medium DISC, information stored in a persistent storage PRSTR, information obtained from a network server NTSRV via a router 11, and the like. The system further comprises a keyboard 14 used to make input operations to the information recording and playback apparatus 1, and the network server NTSRV which supplies information via the network. The system further comprises the router 11 which transmits information provided from the network server NTSRV via an optical cable 12 to the information recording and playback apparatus 1 in the form of wireless data 17. The system further comprises a wide-screen TV monitor 15 which displays image information transmitted from the information recording and playback apparatus 1 as wireless data, and loudspeakers 16-1 and 16-2 which output audio information transmitted from the information recording and playback apparatus 1 as wireless data.

The information recording and playback apparatus 1 comprises an information recording and playback unit 2 which records and plays back information on and from the information storage medium DISC, and a persistent storage drive 3 which drives the persistent storage PRSTR that includes a fixed storage (flash memory or the like), removable storage (secure digital (SD) card, universal serial bus (USB) memory, portable hard disk drive (HDD), and the like). The apparatus 1 also comprises a recording and playback processor 4 which records and plays back information on and from a hard disk device 6, and a main central processing unit (CPU) 5 which controls the overall information recording and playback apparatus 1. The apparatus 1 further comprises the hard disk device 6 having a hard disk for storing information, a wireless local area network (LAN) controller 7-1 which makes wireless communications based on a wireless LAN, a standard content playback unit STDPL which plays back a standard content STDCT (to be described later), and an advanced content playback unit ADVPL which plays back an advanced content ADVCT (to be described later).

The router 11 comprises a wireless LAN controller 7-2 which makes wireless communications with the information recording and playback apparatus 1 based on the wireless LAN, a network controller 8 which controls optical communications with the network server NTSRV, and a data manager 9 which controls data transfer processing.

The wide-screen TV monitor 15 comprises a wireless LAN controller 7-3 which makes wireless communications with the information recording and playback apparatus 1 based on the wireless LAN, a video processor 24 which generates video information based on information received by the wireless LAN controller 7-3, and a video display unit 21 which displays the video information generated by the video processor 24 on the wide-screen TV monitor 15.

Note that the detailed functions and operations of the system shown in FIG. 15 will be described later.

<Points of This Embodiment>

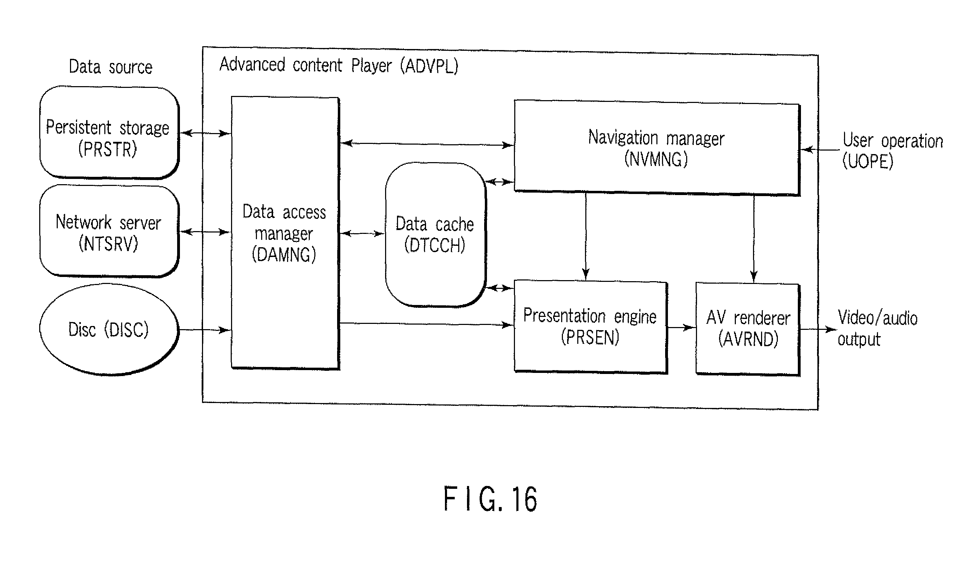

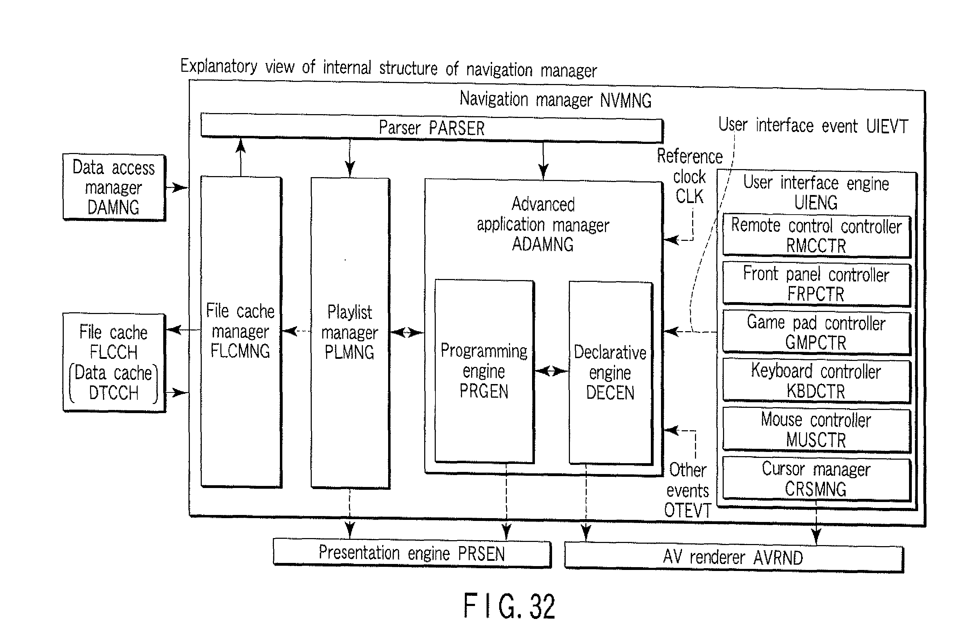

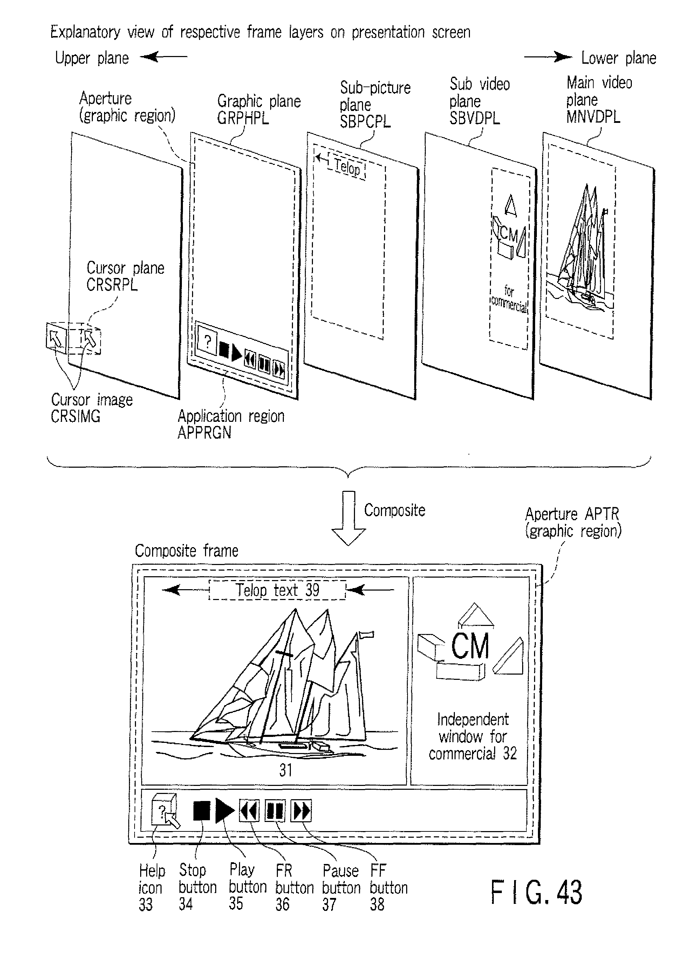

1. An advanced content playback unit ADVPL includes a data access manager DAMNG, a navigation manager NVMNG, a data cache DTCCH, a presentation engine PRSEN, and an AV renderer AVRND (see FIG. 16).
2. The navigation manager NVMNG includes a playlist manager PLMNG, a parser PARSER, and an advanced application manager ADAMNG (see FIG. 32).
3. A frame to be presented to the user is obtained by compositing a main video plane MNVDPL, a sub video plane SBVDPL, and a graphic plane GRPHPL (see FIG. 43).

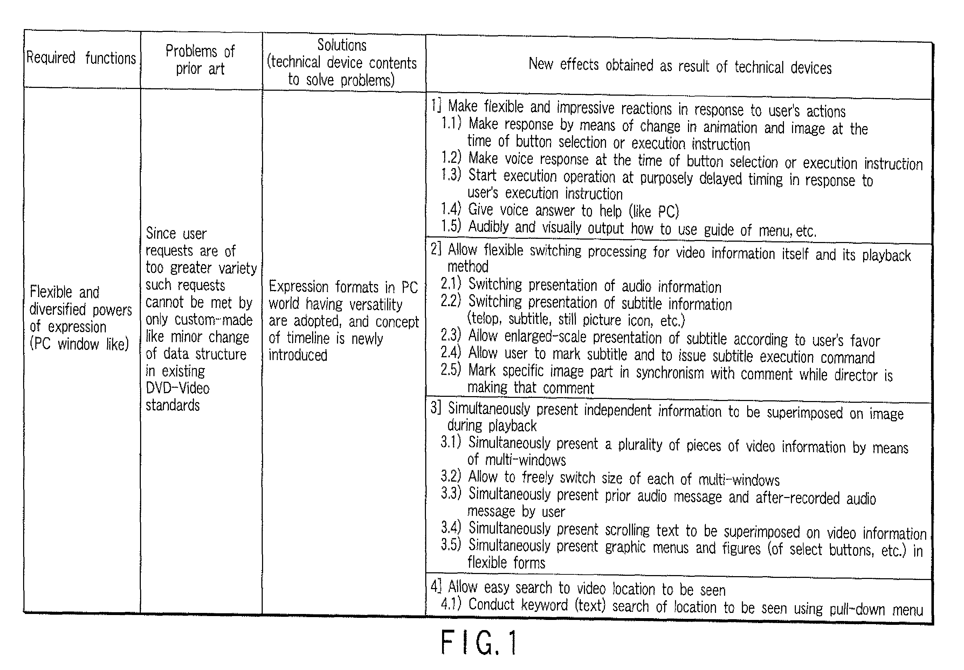

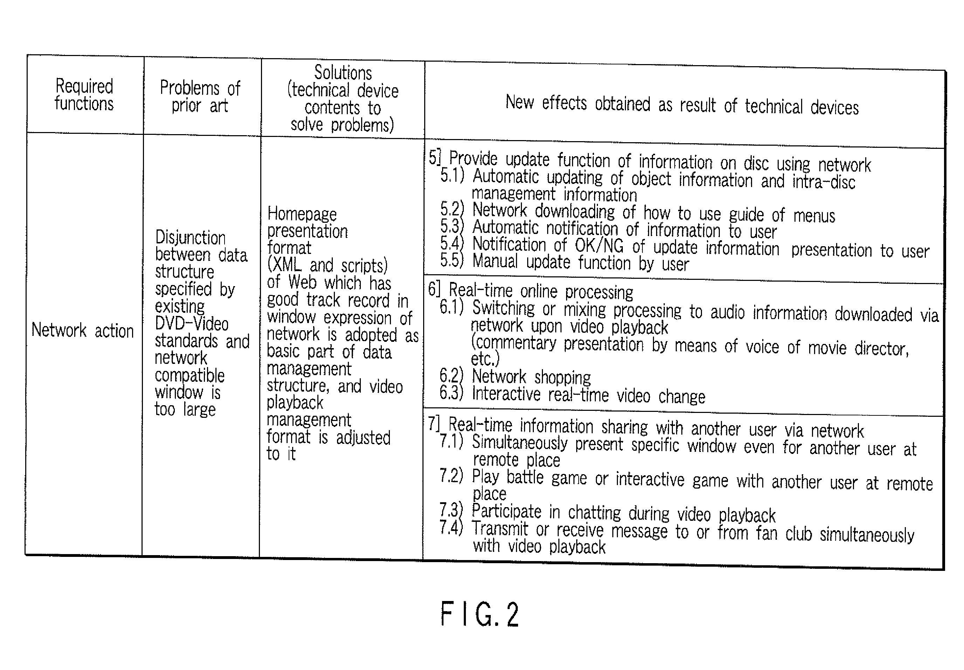

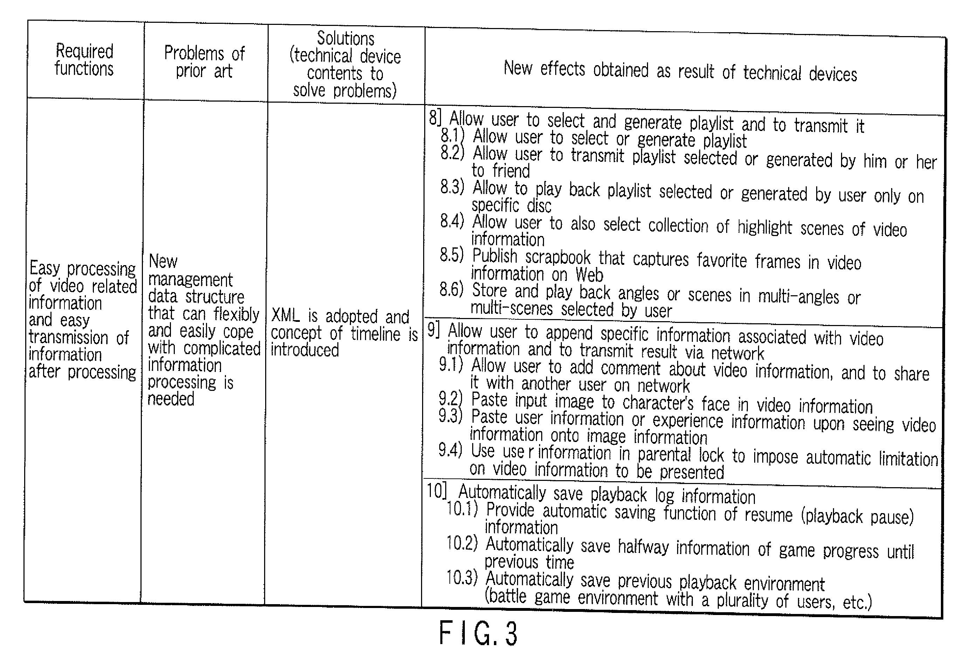

User requests to the next generation standards based on the existing DVD-Video and problems posed when the related existing DVD-Video standards are expanded, and solutions of the embodiment of the invention and new effects as a result of such solutions will be described below with reference to FIGS. 1 to 3. There are three following prominent request functions demanded by the users for the current-generation DVD-Video standards:

1. flexible and diversified expressive power (to assure expressive power close to window presentation of an existing personal computer)

2. network actions

3. easy processing of video related information and easy transmission of information after processing

When the request function of "1. flexible and diversified expressive power" listed first is to be made by only a minor change of the existing DVD-Video standards, since user requests are of too greater variety, the following problem is posed. That is, such need cannot be met by only a custom-made like minor change of the data structure in the existing DVD-Video standards. As technical device contents to solve this problem, this embodiment adopts expression formats in the PC world having versatility, and newly introduces the concept of timeline. As a result, according to this embodiment, the following new effects can be obtained.

1] Make flexible and impressive reactions in response to user's actions:

1.1) Make response by means of change in animation and image at the time of button selection or execution instruction;
1.2) Make voice response at the time of button selection or execution instruction;
1.3) Start execution operation at purposely delayed timing in response to user's execution instruction;
1.4) Give voice answer to help (like PC); and
1.5)Audibly and visually output how to use guide of menu, etc.

2] Allow flexible switching processing for video information itself and its playback method:

2.1) Switching presentation of audio information;
2.2) Switching presentation of subtitle information (telop, subtitle, still picture icon, etc.);
2.3) Allow enlarged-scale presentation of subtitle according to user's favor;
2.4) Allow user to mark subtitle and to issue subtitle execution command; and
2.5) Mark specific video part in synchronism with comment while movie director is making that comment.

3] Simultaneously present independent information to be superimposed on video information during playback:

3.1) Simultaneously present a plurality of pieces of video information by means of multi-windows;
3.2) Allow to freely switch window size of each of multi-windows;
3.3) Simultaneously present prior audio message and after-recorded audio message by user;
3.4) Simultaneously present scrolling text to be superimposed on video information; and
3.5) Simultaneously present graphic menus and figures (of select buttons, etc.) in flexible forms.

4] Allow easy search to video location to be seen:

4.1)Conduct keyword (text) search of location to be seen using pull-down menu.
As for 2, "Realization of flexible responses to various actions via network," above, a disjunction between the data structure specified by the existing DVD-Video standards and a network compatible window is too large. As technical device contents to solve this problem, this embodiment adopts a homepage presentation format (XML and scripts) of a Web which has a good track record in window expression of a network as a basic part of the data management structure, and adjusts a video playback management format to it. As a result, according to the embodiment of the invention, the following new effects can be obtained.

5] Provide update function of information on disc using network:

5.1) Automatic updating of object information and intra-disc management information;
5.2) Network downloading of how to use guide of menus;
5.3) Notification of automatic updating of information to user;
5.4)Notification of OK/NG of update information presentation to user; and
5.5) Manual update function by user.

6] Real-time online processing:

6.1) Switching or mixing processing to audio information downloaded via network upon video playback (commentary presentation by means of voice of movie director);
6.2) Network shopping; and

6.3) Interactive real-time video change.

7] Real-time information sharing with another user via network:

7.1) Simultaneously present specific window even for another user at remote place;
7.2) Play battle game or interactive game with another user at remote place;
7.3) Participate in chatting during video playback; and
7.4) Transmit or receive message to or from fan club simultaneously with video playback.

When 3, "Realization of easy processing of video related information and easy transmission of information after processing," above, is to be implemented by a minor change of the existing DVD-Video standards, complicated edit processing cannot be flexibly and easily coped with. In order to flexibly and easily cope with the complicated edit processing, a new management data structure is needed. As technical device contents to solve this problem, this embodiment adopts XML and the concept of timeline to be described later. As a result, according to the embodiment of the invention, the following new effects can be obtained.

8] Allow user to select and generate playlist and to transmit it:

8.1) Allow user to select or generate playlist;
8.2) Allow user to transmit playlist selected or generated by him or her to friend;
8.3) Allow to play back playlist selected or generated by user only on specific disc;
8.4) Allow user to also select collection of highlight scenes of video information;
8.5) Publish scrapbook that captures favorite frames in video information on Web; and
8.6) Store and play back angles or scenes in multi-angles or multi-scenes selected by user.

9] Allow user to append specific information related with video information and to transmit result via network:

9.1) Allow user to add comment about video information, and to share it with another user on network;
9.2) Paste input image to character's face in video information;
9.3) Paste user information or experience information upon seeing video information onto image information; and
9.4) Use user information in parental lock to impose automatic limitation on video information to be presented.

10] Automatically save playback log information:

10.1) Provide automatic saving function of resume (playback pause) information;
10.2) Automatically save halfway information of game progress until previous time; and
10.3) Automatically save previous playback environment (battle game environment with a plurality of users, etc.).

In order to meet the three needs shown in FIGS. 1 to 3, this embodiment innovates the XML and scripts and the concept of timeline in correspondence with the expression format in the PC world. However, by merely adopting such data structure, compatibility with the existing DVD-Video standards is lost. In order to meet the requirements of the users and the like described using FIGS. 1 to 3, network connection is needed, and it becomes difficult to provide a very inexpensive information playback apparatus to the user. Hence, this embodiment adopts an arrangement which can use the advanced content ADVCT which meets the requirements of the users and the like described using FIGS. 1 to 3, and the standard content STDCT which cannot meet the requirements of the users and the like described using FIGS. 1 to 3 but can be played back by a very inexpensive information playback apparatus (without any precondition of Internet connection) while assuring the compatibility to the existing DVD-Video standards. This point is a large technical feature in this embodiment.

Note that the data structure of the standard content STDCT and that of the advanced content ADVCT will be described in detail later.

<Example of Content Playback Method>

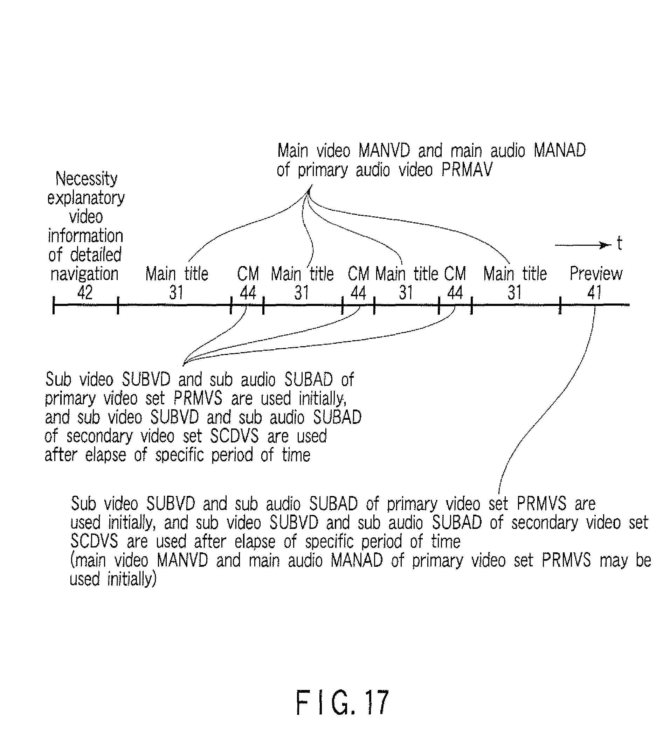

FIGS. 17 to 19 show examples of video content playback methods by the information recording and playback apparatus 1.

An example of a case is shown in FIG. 17 wherein a main title 31 is presented like a television broadcast video information after video information 42 used to give an explanation of detailed navigation, commercial 44 for a product, service, or the like is presented to be inserted into the main title 31, a preview 41 of a movie is presented after completion of presentation of the main title 31.

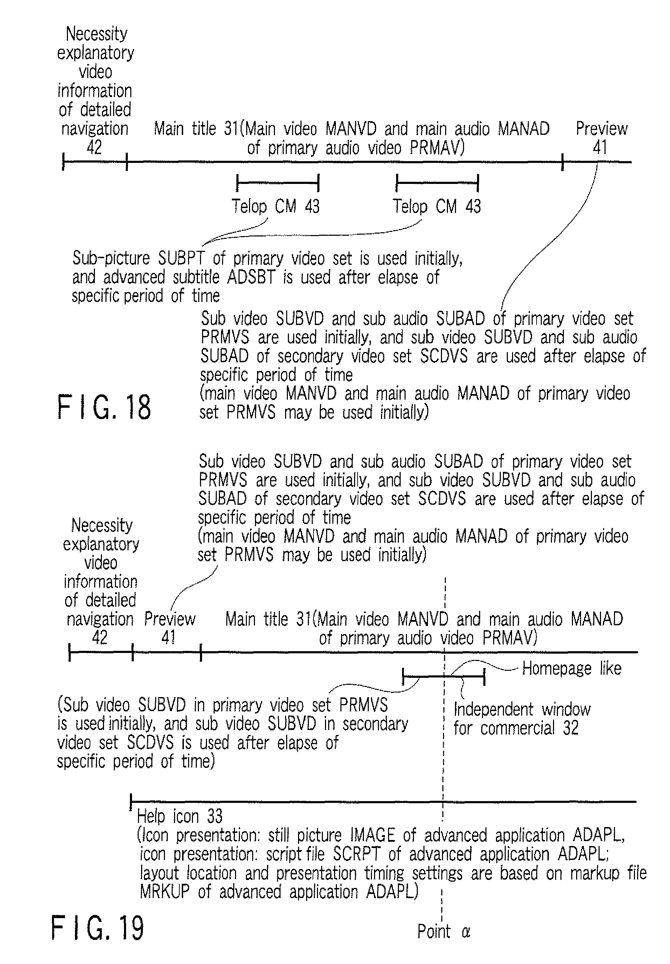

An example of a case is shown in FIG. 18 wherein a main title 31 is presented like a television broadcast video information after video information 42 used to give an explanation of detailed navigation, a commercial 43 in the form of a telop is presented to be superimposed on presentation of the main title 31, and a preview 41 of a movie is presented after completion of presentation of the main title 31.

An example of a case is shown in FIG. 19 wherein a preview 41 of a movie is presented after video information 42 used to give an explanation of detailed navigation, a main title 31 is then presented, an independent window 32 for a commercial is presented on a presentation area different from the main title 31 during presentation of the main title 31, and a help icon 33 is presented on a presentation area different from the main title 31 during presentation of the preview 41 and main title 31.

Note that what kind of information is used to present the main title, commercial, preview, telop commercial, and the like will be described in detail later.

<Example of Presentation Window>

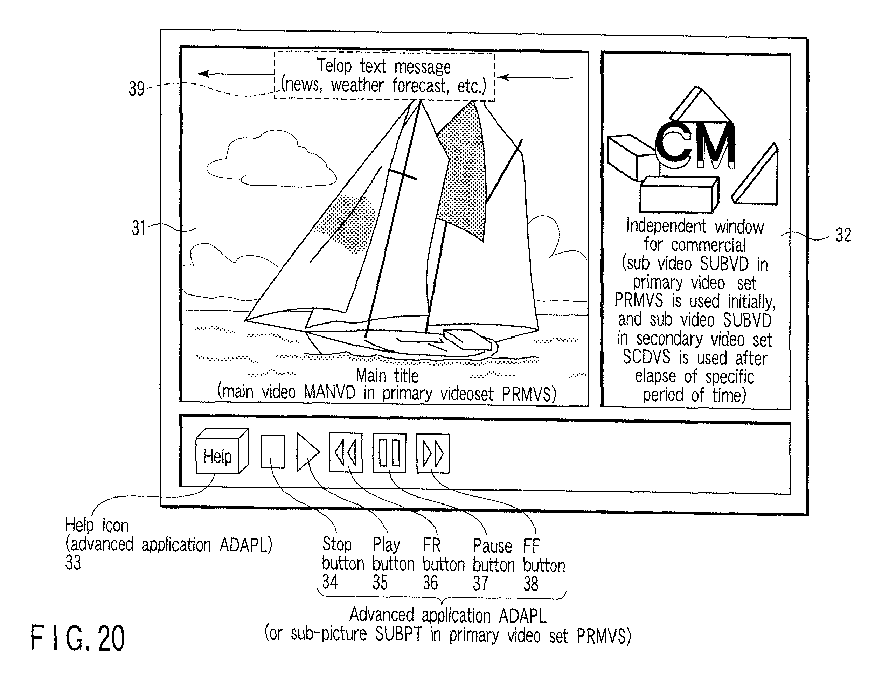

FIG. 20 shows an example of a presentation window at point $\alpha$ when the main title 31, the independent window 32 for a commercial, and the help icon 33 are simultaneously presented in FIG. 19.

In the example of this presentation window, the main title 31 is presented as a moving picture of a main picture on the upper left area, the independent window 32 for a commercial is presented as a moving picture of a sub-picture on the upper right area, and the help icon 33 is presented as a still picture (graphic) on the lower area. Also, a stop button 34, play button 35, FR (fast-rewinding) button 36, pause button 37, FF (fast-forwarding) button 38, and the like are also presented as still pictures (graphics). In addition, a cursor (not shown) or the like is presented.

Note that what kind of information is used to present each individual moving picture or still picture on the presentation window will be described in detail later.

<Content Type>

This embodiment defines 2 types of contents; one is Standard Content and the other is Advanced Content. Standard Content consists of Navigation data and Video object data on a disc. On the other hand, Advanced Content consists of Advanced Navigation such as Playlist, Manifest, Markup and Script files and Advanced Data such as Primary/ Secondary Video Set and Advanced Element (image, audio, text and so on). At least one Playlist file and Primary Video Set shall be located on a disc which has Advanced Content, and other data can be on a disc and also be delivered from a server.

More intelligible explanations will be provided below.

This embodiment defines two different types of contents, i.e., the standard content STDCT and the advanced content ADVCT. This point is a large technical feature in this embodiment.

The standard content STDCT of this embodiment includes enhanced video object EVOB which records video information itself and navigation data IFO which records management information of that enhanced video object. The standard content STDCT has a data structure obtained by purely extending the existing DVD-Video data structure.

By contrast, the advanced content ADVCT has a data structure which records various kinds of information to be described later.

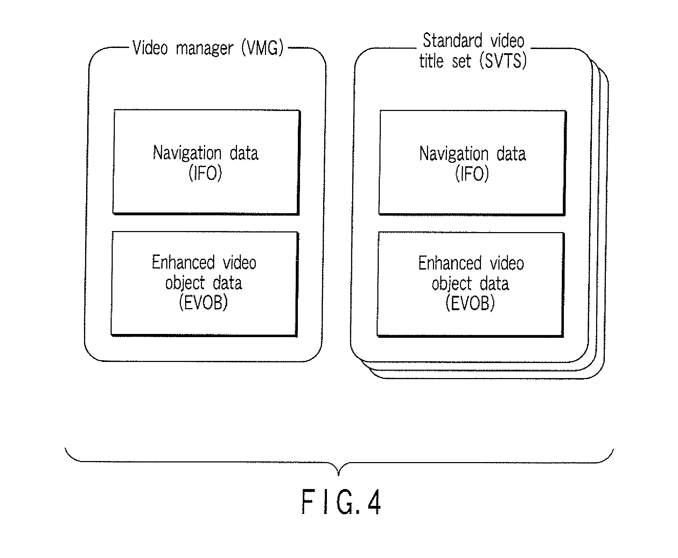

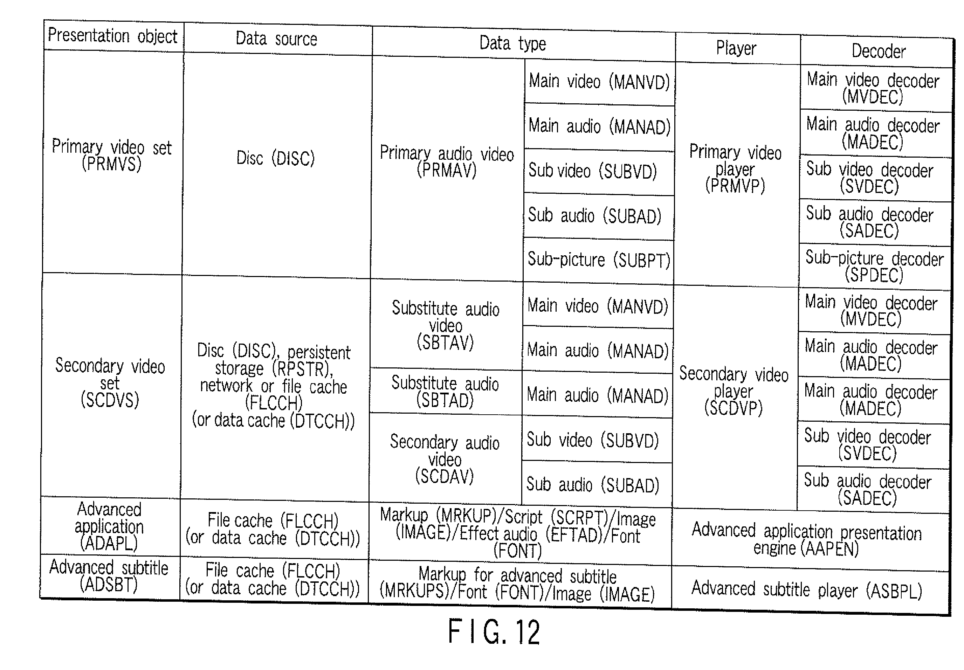

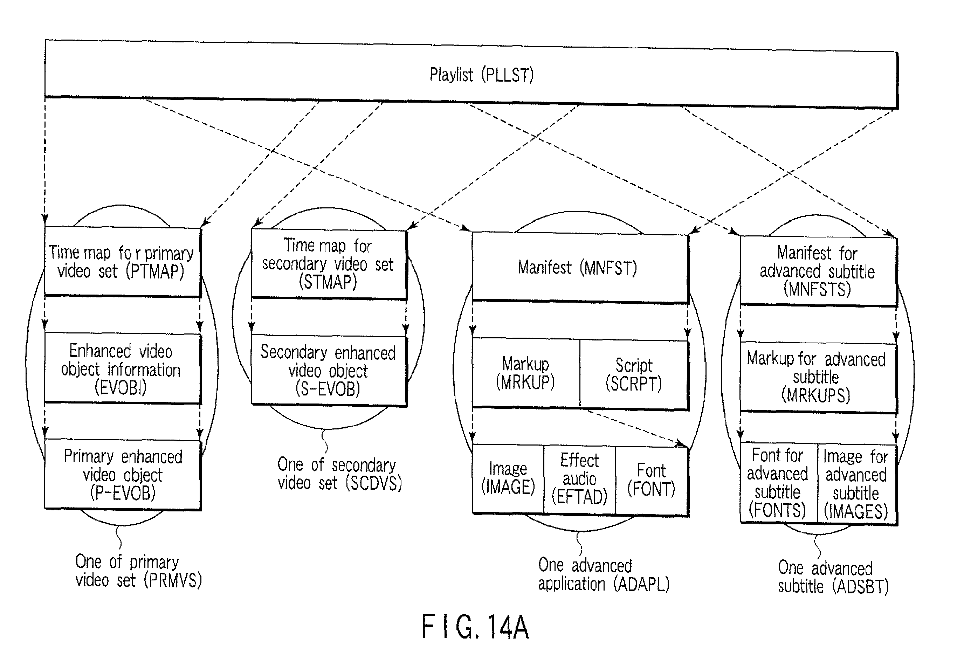

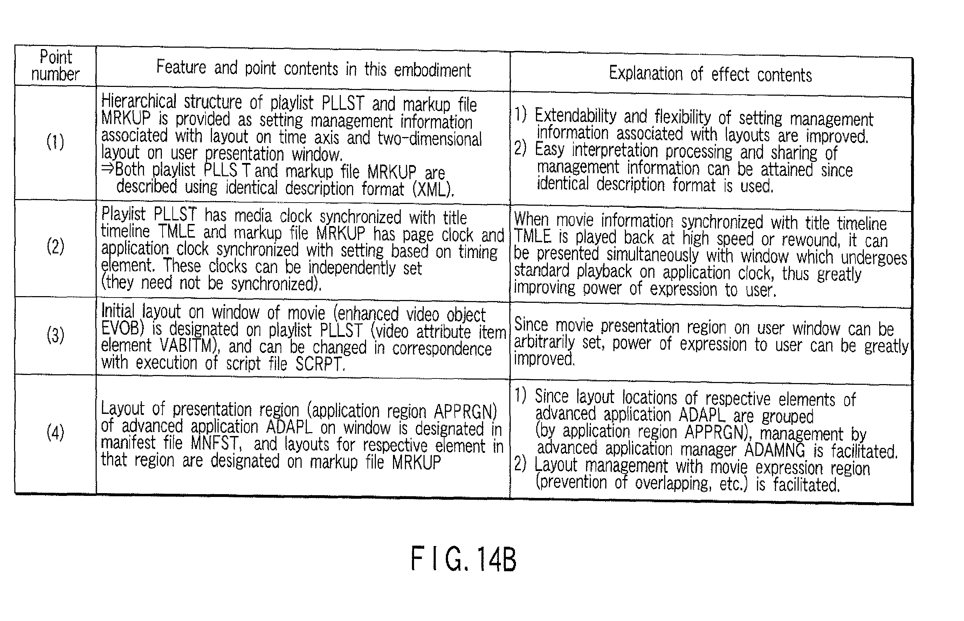

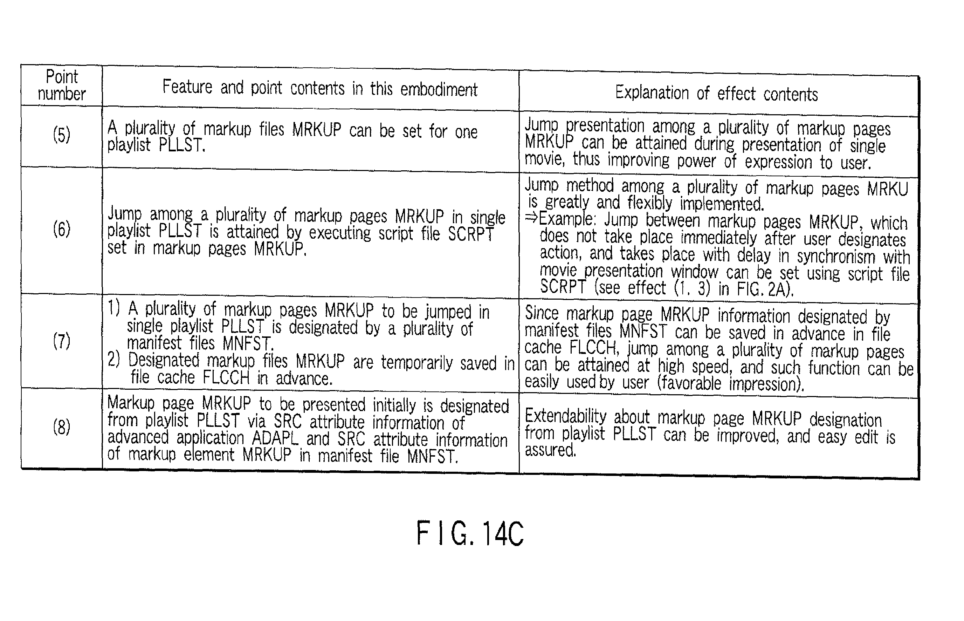

FIG. 4 shows the data structure of the standard content STDCT, and FIGS. 14A, 14B, and 14C shows the data structure of an advanced content and explanations of effects and the like. FIG. 12 shows the relationship among various objects in this embodiment. These figures will be referred to as needed in the following description.

<Standard Content>

Standard Content is just extension of content defined in DVD-Video specification especially for high-resolution video, high-quality audio and some new functions. Standard Content basically consists of one VMG space and one or more VTS spaces (which are called as "Standard VTS" or just "VTS"), as shown in FIG. 4. In comparison to the existing DVD-Video specification, this embodiment gives new functionalities. For instance,

- Extension of Video stream such as codec/resolution
- Extension of Audio stream such as codec/frequency/channel number
- Extension of Sub-picture stream/Highlight Information stream
- Extension of Navigation Command
- Elimination of some restrictions for FP_DOM/VMGM_DOM/VTSM_DOM
- Elimination of some restrictions for transition among domains
- Introduction of Resume Sequence, and so on

More intelligible explanations will be provided below.

The data structure of the standard content STDCT will be described below using FIG. 4.

The standard content STDCT includes a video manager VMG that represents a menu frame, and a standard video title set SVTS that records video data.

The video manager VMG that records the menu frame includes enhanced video object EVOB that records video information itself, and navigation data IFO that records management data of that EVOB. The standard video title set SVTS includes enhanced video object EVOB that records video information itself and navigation data IFO that records management data of that EVOB.

The standard content STDCT represents an extended structure of the content specified by the conventional DVD-Video. Especially, new functionalities that improve the resolution of video data and the sound quality of audio data compared to the conventional DVD-Video are added. As shown in FIG. 4, the standard content STDCT consists of one video manager VMG space, and one or more video title set VTS spaces, which is called the standard video title set SVTS or VTS.

In comparison to the existing DVD-Video specification, this embodiment gives the following new functionalities.

- A new compression method which assures a high resolution for video information and a high compression efficiency is adopted.
- The number of channels of audio information is increased, and a higher sampling frequency is supported. An audio information compression method that assures high sound quality and a high compression efficiency is adopted.
- Sub-picture information are extended, and a new stream for highlight information is defined.
- Navigation command is extended.
- Some restrictions which are conventionally included in a first play domain that executes processing upon activation, a video manager domain that manages a menu image, and a video title set domain that executes processing upon playback of video information are eliminated, thus allowing more flexible expression.
- Some restrictions for transition among domains are eliminated, thus defining a more flexible expression environment.
- A new resume sequence function that represents processing upon pausing playback is added, and user's convenience after pausing is improved.

<Standard VTS>

Standard VTS is basically used in Standard Content, however this VTS may be utilized in Advanced Content via time map TMAP. The EVOB may contain some specific information for Standard Content, and such information as highlight information HLI and presentation control information PCI shall be ignored in Advanced Content.

More intelligible explanations will be provided below.

The standard video title set SVTS in this embodiment is basically used on the standard content STDCT described above. However, this standard video title set SVTS may be utilized in the advanced content ADVCT via a time map TMAP (to be described later).

The enhanced video object EVOB as object data used in the standard video title set SVTS may contain some pieces of specific information for the standard content STDCT. Some pieces of specific information contain, e.g., highlight information HLI and presentation control information PCI which are used in the standard content STDCT, but shall be ignored in the advanced content ADVCT in this embodiment.

<HDDVD_TS Directory>

"HVDVD_TS" directory shall exist directly under the root directory. All files related with Primary Video Set (i.e. a VMG, Standard Video Set(s) and an Advanced VTS) shall reside under this directory.

More intelligible explanations will be provided below.

The directory structure upon recording the standard content STDCT shown in FIG. 4 in the information storage medium DISC will be described below. In this embodiment, the standard content STDCT and the advanced content ADVCT (to be described later) are recorded in the HDDVD_TS directory together. The HDDVD_TS directory exists directly under the root directory of the information storage medium DISC. For example, all files related with a primary video set PRMVS (to be described later) such as the video manager VMG, standard video title set SVTS, and the like shall reside under this directory.

<Video Manager (VMG)>

A Video Manager Information (VMGI), an Enhanced Video Object for First Play Program Chain Menu (FP_PGCM_EVOB), a Video Manager Information for backup (VMGI_BUP) shall be recorded respectively as a component file under the HVDVD_TS directory. An Enhanced Video Object Set for Video Manager Menu (VMGM_EVOBS) which should be divided into up to 98 files under the HVDVD_TS directory. For these files of a VMGM_EVOBS, every file shall be allocated contiguously.

More intelligible explanations will be provided below.

Components of the video manager VMG shown in FIG. 4 will be described below. The video manager VMG basically include menu frame information and control information of the conventional DVD-Video. Under the aforementioned HDDVD_TS directory, video manager information VMGI, enhanced video object EVOB related with a menu FP_PGCM_EVOB which is to be presented first immediately after insertion of the information storage medium DISC, video manager information VMGI_BUP as backup data of the navigation data IFO of the video manager VMG, and the like are separately recorded as component files.

Under the HDDVD_TS directory, an enhanced video object set VMGM_EVOBS related with a video manager menu has a size of 1 GB or more, and these data shall be recorded while being divided into up to 98.

In a read-only information storage medium in this embodiment, all the files of the enhanced video object set VMGM_EVOBS of the video manager menu shall be allocated contiguously for the sake of convenience upon playback. In this manner, since the information of the enhanced video object set VMGM_EVOBS related with the video manager menu is recorded at one location together, data access convenience, data collection convenience, and high presentation speed can be assured.

<Standard Video Title Set (Standard VTS)>

A Video Title Set Information (VTSI) and a Video Title Set Information for backup (VTSI_BUP) shall be recorded respectively as a component file under the HVDVD_TS directory. An Enhanced Video Object Set for Video Title Set Menu (VTSM_EVOBS), and an Enhanced Video Object Set for Titles (VTSTT_EVOBS) may be divided into up to 99 files. These files shall be component files under the HVDVD_TS directory. For these files of a VTSM_EVOBS, and a VTSTT_EVOBS, every file shall be allocated contiguously.

More intelligible explanations will be provided below.

In this embodiment, video title set information VTSI and backup data VTSI_BUP of the video title set information shall be recorded respectively as a component file under the HDDVD_TS directory. The sizes of an enhanced video object set VTSM_EVOBS of a video title set menu and an enhanced video object set VTSTT_EVOBS of each title are allowed to exceed 1 GB. However, their data should be recorded while being divided into up to 99 files. As a result, each file size can be set to be 1 GB or less. These files shall be independent component files under the HDDVD_TS directory. Every file of the enhanced video object set VTSM_EVOBS of the video title set menu and the enhanced video object set VTSTT_EVOBS of each title shall be allocated contiguously, respectively. As a result, since data are recorded at one location, the data access convenience, speeding up, and easy data processing management can be attained, and these pieces of information for the user can be presented at high speed.

<Structure of Standard Video Title Set (VTS)>

A VTS is a collection of Tides. Each VTS is composed of control data referred to as Video Title Set Information (VTSI), Enhanced Video Object Set for the VTS Menu (VTSM_VOBS), Enhanced Video Object Set for Titles in a VTS (VTSTT_EVOBS) and backup control data (VTSI_P).

The following rules shall apply to Video Title Set (VTS):

1) Each of the control data (VTSI) and the backup of control data (VTSI_BUP) shall be a single File.

2) Each of the EVOBS for the VTS Menu (VTSM_EVOBS) and the EVOBS for Titles in a VTS (VTSTT_EVOBS) may be divided into Files, up to maximum of 99 respectively.

3) VTSI, VTSM_EVOBS (if present), VTSTT_EVOBS and VTSI_BUP shall be allocated in this order.

4) VTSI and VTSI_BUP shall not be recorded in the same ECC block.

5) Files comprising VTSM_EVOBS shall be allocated contiguously. Also files comprising VTSTT_EVOBS shall be allocated contiguously.

6) The contents of VTSI_BOP shall be exactly the same as VTSI completely. Therefore, when relative address information in VTSI_BUP refers to outside of VTSI_BUP, the relative address shall be taken as a relative address of VTSI.

7) VTS numbers are the consecutive numbers assigned to VTS in the Volume. VTS numbers range from '1' to '511' and are assigned in the order the VTS are stored on the disc (from the smallest LBN at the beginning of VTSI of each VTS).

8) In each VTS, a gap may exist in the boundaries among VTSI, VTSM_EVOBS (if present), VTSTT_EVOBS and VTSI_BUP.

9) In each VTSM_EVOBS (if present), each EVOB shall be allocated in contiguously.

10) In each VTSTT_EVOBS, each EVOB shall be allocated in contiguously.

11) VTSI and VTSI_BUP shall be recorded respectively in a logically contiguous area which is composed of consecutive LSNs.

More intelligible explanations will be provided below.

The video title set VTS is a collection of a set of video titles. This video title set includes video title set information VTSI as control information related with the video title set, an enhanced video object set VTSM_EVOBS of a video title set menu, an enhanced video object set (video information itself) VTSTT_EVOBS of each title, and backup data VTSI_BUP of the video title set information.

In this embodiment, the following rules shall apply to the video title set VTS.

1) Each of the video title set information VTSI that records control information, and the backup data VTSI_BUP of the video title set information shall be recorded in a single file of 1 GB or less.

2) The enhanced video object set VTSM_EVOBS of the video title set menu and the enhanced video object set (video information itself) VTSTT_EVOBS of each title shall be recorded while being divided into files, up to maximum of 99 respectively, per information storage medium DISC, each having a size of 1 GB or less.

3) The video title set information VTSI, the enhanced video object set VTSM_EVOBS of the video title set menu, the enhanced video object set (video information itself) VTSTT_EVOBS of each title, and the backup data VTSI_BUP of the video title set information shall be allocated in this order.

4) The video title set information VTSI and the backup data VTSI_BUP of the video title set information shall not be recorded in one ECC block together. That is, the video title set information VTSI and the backup data VTSI_BUP of the video title set information are recorded contiguously, but the boundary position of them is inhibited from being allocated at the center of a single ECC block. That is, when the boundary portion of these data is allocated in the single ECC block, if that ECC block cannot be played back due to any defect, both pieces of information cannot be played back. Therefore, padding information is recorded in the residual area in the ECC block at the end position of the video title set information VTSI to allocate the head of the next backup data VTSI_BUP of the video title set information at the head position of the next ECC block, thus avoiding both the data from being recorded in the single ECC block. This point is a large technical feature in this embodiment. With this structure, not only the reliability of data playback can be greatly improved, but also the playback processing upon data playback can be facilitated.

5) A plurality of files comprising the enhanced video object set VTSM_EVOBS of the video title set menu shall be recorded contiguously on the information storage medium DISC. Also, a plurality of files comprising the enhanced video object set (video information itself) VTSTT_EVOBS of each title shall be recorded contiguously. Since the files are allocated contiguously, respective pieces of information can be played back at a time by a single continuous playback operation of an optical head upon playback (the need for jumping processing of the optical head is obviated). In this way, easy processing of various kinds of information upon data playback can be assured, and the time from when data playback until presentation can be shortened.

6) The contents of the backup data VTSI_BUP of the video title set information shall be exactly the same as the video title set information VTSI completely. Therefore, if the video title set information VTSI as management information cannot be played back due to an error, video information can be stably played back by playing back the backup data VTSI_BUP of the video title set information.

7) The video title set VTS numbers are the consecutive numbers assigned to the video title sets VTS recorded in a volume space. The numbers of respective video title sets VTS ranges numbers 1 to 511 and are assigned in ascending order of logical block number LBN as the address inn the logical space indicating the allocation position of the video title set VTS recorded on the information storage medium DISC.

8) In each video title set VTS, gap may exist in boundary areas between neighboring ones of the video title set information VTSI, the enhanced video object set VTSM_EVOBS of the video title set menu, the enhanced video object set (video information itself) VTSTT_EVOBS of each title in the video title set VTS, and the backup data VTSI_BUP of the video title set information. More specifically, the aforementioned four types of information are allocated in different ECC blocks, thus assuring high reliability and easy playback processing of data upon playback, and speeding up of processing. For this reason, this embodiment is designed as follows. That is, when the recording position of the last data of each information ends at the middle of one ECC block, padding information is recorded in the residual area, so that the head position of the next information matches that of the next ECC block. The part of the padding information in the ECC block will be referred to as a gap in this embodiment.

9) In the enhanced video object set VTSM_EVOBS of each video title set menu, enhanced video object EVOB shall be allocated in contiguously on the information storage medium DISC. Thus, the convenience of playback processing can be improved.

10) In the enhanced video object set (video information itself) VTSTT_EVOBS of each title in the video title set VTS, respective enhanced video objects shall be allocated in contiguously on the information storage medium DISC. In this manner, the convenience of information playback can be assured, and the time required until playback can be shortened.

11) The video title set information VTSI and the backup data VTSI_BUP of the video title set information shall be recorded respectively in a logically contiguous areas defined by serial logical block numbers LSN which represent the address positions on the information storage medium DISC. In this way, the information can be read by single continuous playback (without any jumping processing), thus assuring the convenience of playback processing and speeding up of processing.

<Structure of Video Manager (VMG)>

The VMG is the table of contents for Standard Video Title Sets which exist in the "HD DVD-Video zone". A VMG is composed of control data referred to as Video Manager Information (VMGI), Enhanced Video Object for First Play PGC Menu (FP_PGCM_EVOB), Enhanced Video Object Set for VMG Menu (VMGM_EVOBS) and a backup of the control data (VMGI_BUP). The control data is static information necessary to playback titles and providing information to support User Operation. The FP_PGCM_EVOB is an Enhanced Video Object (EVOB) used for the selection of menu language. The VMGM_EVOBS is a collection of Enhanced Video Objects (EVOBs) used for Menus that support the volume access.

The following rules shall apply to Video Manager (VMG) :

1) Each of the control data (VMGI) and the backup of control data (VMGI_BUP) shall be a single File.
2) EVOB for FP PGC Menu (FP_PGCM_EVOB) shall be a single File. EVOBS for VMG Menu (VMGM_EVOBS) may be divided into Files, up to maximum of 98.
3) VMGI, FP PGCM_EVOB (if present), VMGM_EVOBS (if present) and VMGI_BUP shall be allocated in this order.
4) VMGI and VMGI_BUP shall not be recorded in the same ECC block.
5) Files comprising VMGM_EVOBS shall be allocated contiguously.
6) The contents of VMGI_BUP shall be exactly the same as VMGI completely. Therefore, when relative address information in VMGI_BUP refers to outside of VMGI_BUP, the relative address shall be taken as a relative address of VMGI.
7) A gap may exist in the boundaries among VMGI, FP_PGCM EVOB (if present), VMGM_EVOBS (if present) and VMGI_BUP.
8) In VMGM_EVOBS (if present), each EVOB shall be allocated contiguously.
9) VMGI and VMGI_BUP shall be recorded respectively in a logically contiguous area which is composed of consecutive LSNs.

More intelligible explanations will be provided below.

The video manager VMG is the table of contents for the standard video title set SVTS, and is recorded in an HDDVD-Video zone to be described later. Constituent elements of the video manager VMG are control information as video manager information VMGI, a menu FP_PGCM_EVOB which is to be presented first immediately after insertion of the information storage medium DISC, an enhanced video object set VMGM_EVOBS of a video manager menu, and backup data VMGI_BUP of control information as the video manager information VMGI. The control information as the video manager information VMGI records information required to play back each title, and information used to support user's operations. The menu FP_PGCM_EVOB which is to be presented first immediately after insertion of the information storage medium DISC is used to select a language presented in the menu. That is, the user himself or herself selects an optimal menu language immediately after insertion of the information storage medium DISC, thus presenting various menu frames using the best understandable language. The enhanced video object set VMGM_EVOBS related with the video manager menu is a collection of the enhanced video objects EVOBs used for in menus that support volume access. That is, information of a menu frame (a frame provided as independent information for each individual language) presented in the language selected by the user is recorded as the enhanced video object set.

In this embodiment, the following rules shall apply to the video manager VMG.

1) Each of the video manager information VMGI and the backup file VMGI_BUP of the video manager information shall be recorded in the information storage medium DISC to have each file size of 1 GB or less.
2) The enhanced video object EVOB of the menu FP_PGCM_EVOB which is to be presented first immediately after insertion of the information storage medium DISC shall be divisionally recorded in the information storage medium DISC to have each file size of 1 GB or less. The enhanced video object set VMGM_EVOBS of the video manager menu is divisionally recorded to have each file size of 1 GB or less, and the number of files of the enhanced video object set VMGM_EVOBS of the video manager menu recorded per information storage medium DISC is set to be 98 or fewer. Since the data size of one file is set to 1 GB or less, a buffer memory can be easily managed, and data accessibility is improved.

3) The video manager information VMGI, the menu FP_PGCM_EVOB which is to be presented first immediately after insertion of the information storage medium DISC, the enhanced video object set VMGM_EVOBS of the video manager menu, and the backup file VMGI_BUP of the video manager information shall be allocated in this order on the information storage medium DISC.

4) The video manager information VMGI and the backup file VMGI BUP of the video manager information shall not be recorded in a single ECC block.

Since the video manager information VMGI, the menu FP_PGCM_EVOB which is to be presented first immediately after insertion of the information storage medium DISC, and the enhanced video object set VMGM_EVOBS of the video manager menu are optional, they are not often recorded on the information storage medium DISC. In such case, the video manager information VMGI and the backup file VMGI_BUP of the video manager information may be contiguously allocated in turn. This means that the boundary position of the video manager information VMGI and the backup file VMGI_BUP of the video manager information is not allocated at the center of one ECC block. Basically, information is played back from the information storage medium for each ECC block. For this reason, if the boundary position of both pieces of information is recorded in the single ECC block, not only the convenience of data processing of playback information is impaired, but also if an error occurs in the ECC block which stores the boundary portion to disable playback, both the video manager information VMGI and the backup file VMGI_BUP of the video manager information cannot often be played back. Therefore, when the boundary portion of both the pieces of information is allocated at that of ECC blocks, the superiority of processing upon playback is assured. Even when one of these ECC blocks includes many errors and cannot be played back, information can be restored and played back using the residual data. Therefore, by setting the boundary of both the pieces of information to that between neighboring ECC blocks, the data playback reliability of the video manager information VMGI can be improved.

5) Files comprising the enhanced video object set VMGM_EVOBS of the video manager menu that represents menu information shall be allocated contiguously. As described above, the data size of the enhanced video object set VMGM_EVOBS of the video manager menu is allowed to exceed 1 GB. In this embodiment, it is specified to divisionally record the data of the enhanced video object set VMGM_EVOBS of the video manager menu in a plurality of files to have each file size of 1 GB or less. The divided files are required to be recorded contiguously on the information storage medium DISC. In this way, all enhanced video object sets of the video manager menu can be fetched by single continuous playback, thus assuring high reliability of playback control and speeding up of presentation processing for the user.

6) The contents of the backup file VMGI_BUP of the video manager information shall be exactly the same of the video manager information VMGI completely.

7) A gap may exist in the boundary positions between neighboring ones of video manager information VMGI, the menu FP_PGCM_EVOB which is to be presented first immediately after insertion of the information storage medium DISC, the enhanced video object set VMGM_EVOBS of the video manager menu, and the backup file VMGI_BUP of the video manager information. As described in 4), when information of each data is recorded together for each ECC block, the position of the last data may have a difference from the boundary position of ECC blocks, and a residual area may be formed in the ECC block. This residual area is called a gap. Since existence of the gap areas is allowed in this way, each information can be recorded for respective ECC blocks. As a result, the convenience upon playback and the reliability upon data playback can be assured, as described above.

8) Each enhanced video object EVOB in the enhanced video object set VMGM_EVOBS of the video manager menu shall be allocated contiguously. As described above, the enhanced video object set VMGM_EVOBS of the video manager menu can have a size which exceeds 1 GB, and can be divisionally recorded in files of 1 GB or less. This means that the divided files are recorded contiguously on the information storage medium DISC. As a result, the enhanced video object set VMGM_EVOBS of the video manager menu can be read together by a single playback operation, thus assuring the convenience of the playback processing and shortening the time required for presentation for the user.

9) When the menu FP_PGCM_EVOB which is to be presented first immediately after insertion of the information storage medium DISC and the enhanced video object set VMGM_EVOBS of the video manager menu do not exist, the video manager information VMGI and the backup file VMGI_BUP of the video manager information shall be recorded respectively in continuous areas defined by continuous logical sector numbers. In this manner, the playback convenience of the video manager information VMGI and the backup file VMGI_BUP of the video manager information can be improved.

<Structure of Enhanced Video Object Set (EVOS) in Standard Content>

The EVOBS is a collection of Enhanced Video Object which is composed of data on Video, Audio, Sub-picture and the like.

The following rules shall apply to EVOBS:

1) In an EVOBS, EVOBs are to be recorded in Contiguous Block and Interleaved Block.
2) An EVOBS is composed of one or more EVOBs. EVOB_ID numbers are assigned from the EVOB with the smallest LSN in EVOBS, in ascending order starting with one (1).
3) An EVOB is composed of one or more Cells. C_ID numbers are assigned from the Cell with the smallest LSN in an EVOB, in ascending order starting with one (1).
4) Cells in EVOBS may be identified by the EVOB_ID number and the C ID number.
5) An EVOB shall be allocated in ascending order in logical sector number contiguously (without any gaps).

More intelligible explanations will be provided below.

The enhanced video object set EVOBS is a collection of the enhanced video object EVOB, which is composed of data on video, audio, sub-picture, and the like. In this embodiment, the following rules shall apply to the enhanced video object set EVOBS.

1) In the enhanced video object set EVOBS, enhanced video objects EVOBs are to be recorded in contiguous blocks and interleaved blocks.
2) An enhanced video object set EVOBS is composed of one or more enhanced video objects EVOBs.
3) ID numbers EVOB_ID assigned to respective enhanced video object EVOB are assigned in ascending order of logical sector number LSN, which indicates the recording address of enhanced video object EVOB on the information storage medium DISC. The first number is "1", and is incremented in turn.
One enhanced video object EVOB is composed of one or more cells. As ID numbers C_ID set for respective cells, numerals which are incremented in turn to have a minimum value "1" in ascending order of logical sector number LSN which indicates the recording location of each cell on the information storage medium DISC are set.
4) Respective cells in the enhanced video object set EVOBS may be individually identified by the ID number EVOB_ID assigned to the enhanced video object EVOB and the ID numbers C_ID set for respective cells.

<Category of Information Storage Medium>

In this embodiment, for example, as video information and its management information to be recorded on the information storage medium DISC, two different types of contents, i.e., the advanced content ADVCT and standard content STDCT are set. By providing the advanced content ADVCT, the requirements of the user who wants to assure flexible and diversified expressions, easy processing of video related information of network actions, and easy transmission of information after processing, can be satisfied. By providing the standard content STDCT at the same time, the data compatibility to the conventional DVD-Video can be assured, and even an inexpensive information playback apparatus without any precondition of network connection can play back video information of this embodiment. This point is a large technical feature in this embodiment.

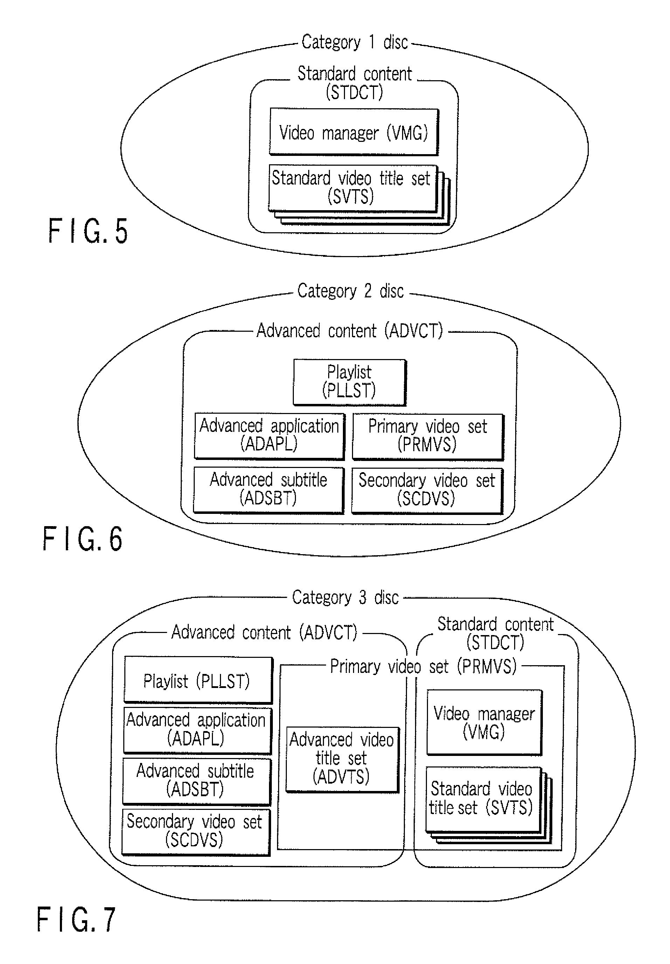

As shown in FIGS. 5 to 7, information storage media DISC corresponding to three different categories are defined as the information storage media DISC that record respective contents. That is, as shown in FIG. 5, a medium which records only information of the standard content STDCT as data to be recorded in the information storage medium DISC compliant to category 1 is defined. The information storage medium DISC compliant to category 1 can be played back by both an inexpensive information playback apparatus without any precondition of network connection and an advanced information playback apparatus premised on network connection.

An information storage medium DISC which records only advanced content ADVCT as data recorded in an information storage medium compliant to category 2 is defined, as shown in FIG. 6. The information storage medium DISC compliant to category 2 can be played back by only an advanced information playback apparatus premised on network connection. Furthermore, as shown in FIG. 7, an information storage medium DISC compliant to category 3 that records identical video information in both the formats of the advanced content ADVCT and standard content STDCT is defined. This point is a large technical feature of this embodiment. Using the information storage medium DISC compliant to category 3, an advanced information playback apparatus having a network connection function can play back the advanced content ADVCT, and an inexpensive information playback apparatus without any precondition of network connection can play back the standard content STDCT. Hence, the contents optimal to every models can be presented (provided) to the user.

<Category 1 Disc>

This disc contains only Standard Content which consists of one VMG and one or more Standard VTSs. This disc contains no Advanced Content such as a Playlist, Advanced VTS and so on. As for an example of structure, see FIG. 5.

More intelligible explanations will be provided below.

The information storage medium DISC compliant to category 1 shown in FIG. 5 records the standard content STDCT which consists of one video manager VMG which forms a menu frame, and one or more standard video title sets SVTS that manage video information. No information of the advanced content ADVCT is recorded on this information storage medium DISC.

<Category 2 Disc>

This disc contains only Advanced Content which consists of Playlist, Primary Video Set (only Advanced VTS), Secondary Video Set and Advanced Subtitle. This disc contains no Standard Content such as VMG or Standard VTS. As for an example of structure, see FIG. 6.

More intelligible explanations will be provided below.

The information storage medium DISC compliant to category 2 shown in FIG. 6 records only the advanced content ADVCT, and does not record any standard content STDCT.

<Category 3 Disc>

This disc contains both Advanced Content which consists of Playlist, Advanced VTS in Primary Video Set, Secondary Video Set, Advanced Application and Advanced Subtitle and Standard Content which consists of one or more Standard VTSs in Primary Video Set. That is, neither FP_DOM nor VMGM_DOM should exist in this Primary Video Set. Even though FP_DOM and VMGM_DOM may exist on a disc, some navigation command to transit to FP_DOM or VMGM_DOM shall be ignored by a player. As for an example of structure, see FIG. 7. Even though this disc contains Standard Content, basically this disc follows rules for the Category 2 disc. Standard Content may be referred by Advanced Content with cancellations of some functions. In addition, for playback of this disc, there are kinds of state such as Advanced Content Playback State and Standard Content Playback State, and the transition between the states is allowed.

More intelligible explanations will be provided below.

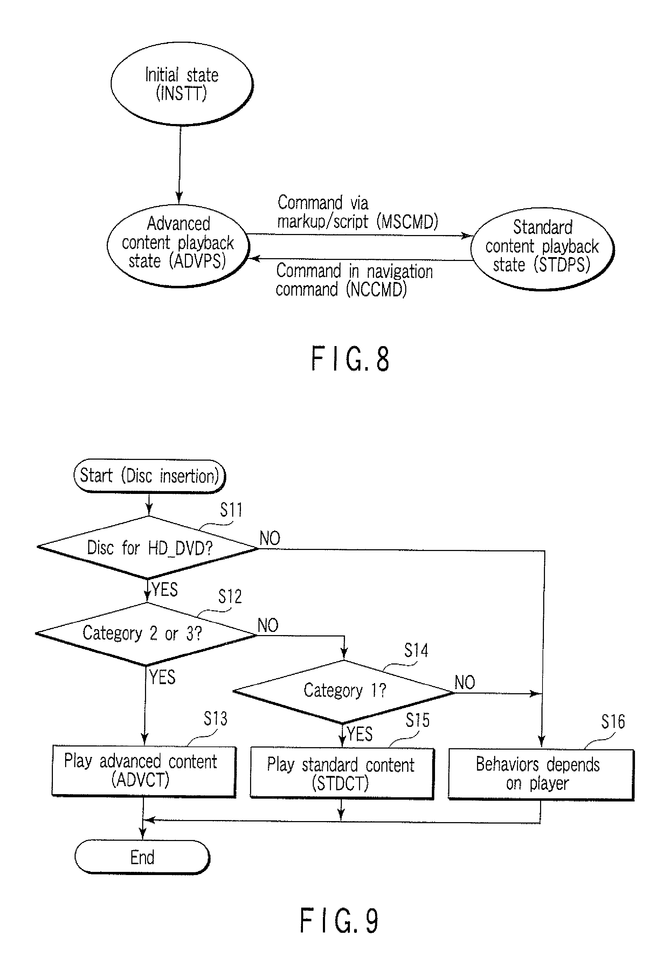

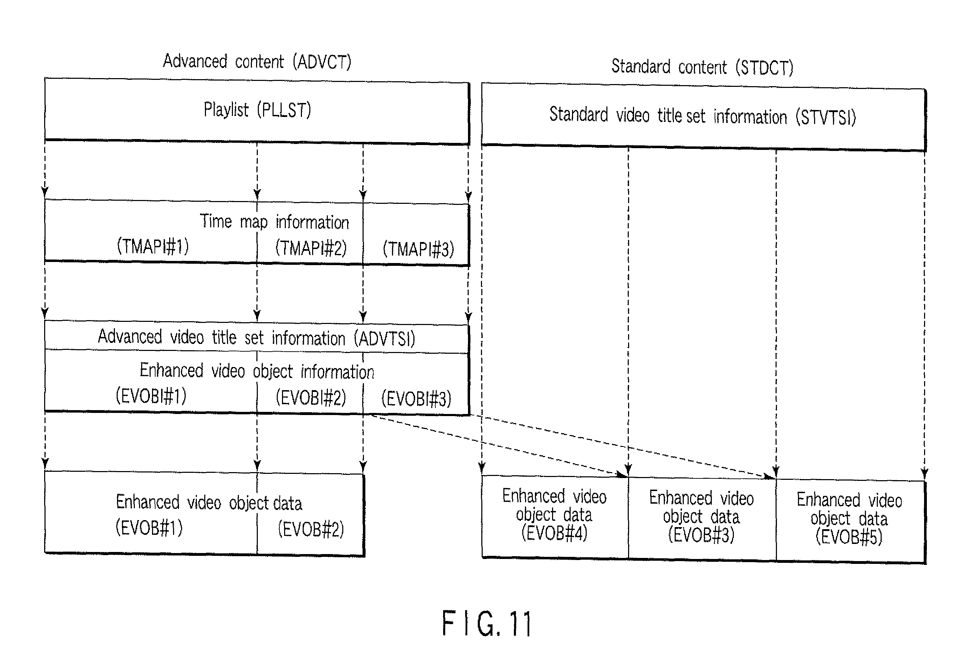

The information storage medium DISC compliant to category 3 shown in FIG. 7 records the advanced content ADVCT and standard content STDCT. In the information storage medium DISC compliant to category 3, a primary video set PRMVS (to be described later) is defined. In the primary video set PRMVS, neither a first play domain FP_DOM corresponding to a frame to be presented immediately after insertion of the information storage medium DISC nor a video manager menu domain VMGM_DOM that presents a menu is defined in the primary video set PRMVS. However, the first play domain FP_DOM and video manager menu domain VMGM_DOM may exist in an area other than the primary video set PRMVS in the information storage medium DISC compliant to category 3. Furthermore, an information playback apparatus shall ignore a navigation command to transit to the first play domain FP_DOM or the video manager domain VMGM_DOM. The first play domain FP_DOM corresponding to a frame to be presented immediately after insertion of the information storage medium DISC and the video manager domain VMGM_DOM are basically required in a menu operation in the standard content STDCT. However, in this embodiment, as shown in FIG. 11 or 8, menu processing is executed in the advanced content ADVCT to refer to the standard video title set SVTS which records video information in the standard content STDCT as needed. In this way, by inhibiting jump to the first play domain FP_DOM of a menu presented immediately after insertion of the information storage medium DISC and the video manager domain VMGM_DOM, the menu processing on the advanced content ADVCT can always be assured, thus avoiding confusion to the user. Even though the information storage medium DISC compliant to category 3 contains the standard content STDCT, basically this information storage medium DISC follows rules for the information storage medium DISC compliant to category 2 shown in FIG. 6.

<Primary Video Set>

Primary Video Set in Advanced Content consists of Advanced VTS space, Standard VTS space and VMG. Basically Advanced VTS is used only in Advanced Content, and Standard VTS may be used in Advanced Content even though this VTS is mainly used for Standard Content. In Advanced Content, VMG may exist in Primary Video Set, however the transition to VMGM_DOM or FP_DOM is not allowed. The data for Primary Video Set is located on a disc under HVDVD_TS directory.

More intelligible explanations will be provided below.

The contents of the primary video set PRMVS shown in FIG. 7 will be described below. The primary video set PRMVS in the advanced content ADVCT includes an advanced video title set ADVTS, a standard video title set SVTS, and a video manager VMG. These video title sets are mainly used in the standard content STDCT. However, the advanced video title set ADVTS is used only in the advanced content ADVCT, and the standard video title set SVTS may be used in the advanced content ADVCT. In the advanced content ADVCT, the video manager VMG in the primary video set PRMVS may exist. However, during use of the advanced content ADVCT, the transition to the aforementioned video manager menu domain VMGM_DOM and first play domain FP_DOM is inhibited. The first play domain FP_DOM corresponding to a frame to be presented immediately after insertion of the information storage medium DISC and the video manager domain VMGM_DOM are basically required in a menu operation in the standard content STDCT. However, in this embodiment, as shown in FIG. 11 or 8, the menu processing is executed in the advanced content ADVCT to refer to the standard video title set SVTS which records video information in the standard content STDCT as needed. In this way, by inhibiting the transition to the first play domain FP_DOM of a menu presented immediately after insertion of the information storage medium DISC and the video manager domain VMGM_DOM, the menu processing on the advanced content ADVCT can always be assured, thus effectively avoiding confusion to the user. The primary video set PRMVS are recorded in the information storage medium DISC compliant to category 3. The primary video set PRMVS is allocated in the HDDVD_TS directory described above as the data structure to be recorded. However, the embodiment of the invention is not limited to this, and the primary video set PRMVS may be recorded in the persistent storage.

At least the primary video set PRMVS and at least one playlist PLLST (details will be described later) shall be recorded in the information storage medium DISC compliant to category 2 or 3. Other pieces of information related with the advanced content ADVCT described in FIGS. 6 and 7 shall be located in on information storage medium DISC but can be delivered from a server via the network.

<Structure of Volume Space>

The Volume Space of an HD DVD-Video disc consists of

1) The Volume and File structure, which shall be assigned for the UDF structure.
2) Single "HD DVD-Video zone", which shall be assigned for the data structure of HD DVD-Video format. This zone consists of "Standard Content zone" and "Advanced Content zone".
3) "DVD others zone", which may be used for other than HD DVD-Video applications.

The following rules apply for HD DVD-Video zone.

1) "HD DVD-Video zone" shall consist of a "Standard Content zone" in Category 1 disc.
"HD DVD-Video zone" shall consist of an "Advanced Content zone" in Category 2 disc.
"HD DVD-Video zone" shall consist of both a "Standard Content zone" and an "Advanced Content zone" in Category 3 disc.
2) "Standard Content zone" shall consist of single Video Manager (VMG) and at least 1 with maximum 511 Video Title Set (VTS) in Category 1 disc and Category 3 disc. "Standard Content zone" should not exist in Category 2 disc.
3) VMG shall be allocated at the leading part of "HD DVD-Video zone" if it exists, that is Category 1 disc case.
4) VMG shall be composed of at least 2 with maximum 102 files.
5) Each VTS (except Advanced VTS) shall be composed of at least 3 with maximum 200 files.
6) "Advanced Content zone" shall consist of files supported in Advanced Content with an Advanced VTS. The maximum number of files for Advanced Content zone under ADV_OBJ directory is 512 x 2047.
7) Advanced VTS shall be composed of at least 3 with maximum 5995 files.

More intelligible explanations will be provided below.
The recording locations of the advanced content ADVCT and standard content STDCT recorded in the information storage medium DISC will be described below using FIG. 7. In the following description, a medium in which the recording location of only the advanced content ADVCT is set corresponds to the information storage medium DISC shown in FIG. 6, and a medium in which the recording location of only the standard content STDCT corresponds to the information storage medium DISC of category 1 shown in FIG. 5. A space that records each content on the information storage medium DISC, as shown in FIG. 7, is defined as a volume space, and logical sector numbers LSN are assigned to all locations in the volume space. In this embodiment, the volume space is formed of the following three zones.

1) Zone that describes the volume and file structure (file system management information recording area)

This zone is defined as an area that records management information of a file system, although it is not described in FIG. 7. In this embodiment, a file system compliant to uniform disc format (UDF) is built. The above zone indicates a zone which records management information of that file system.

2) Single HD_DVD-Video zone

This zone records data in this embodiment described in FIG. 7. This zone consists of a zone that records the advanced content ADVCT, and a zone that records the standard content STDCT.
Other DVD related information recording zone.

3) DVD others zone

This zone records DVD related information other than information used in the HD_DVD-Video of this embodiment. This zone can record information related with the HD_DVD-Video recording standards and information related with the existing DVD-Video and DVD-Audio standards.
In this embodiment, the following rules apply for the HD_DVD-Video zone described in 2) above and FIG. 7.

1) The information storage media compliant to categories 1 and 3 can record information of one video manager VMG and 1 to 511 video title sets VTS in the recording area of the standard content STDCT. The information storage medium DISC compliant to category 2 cannot set the recording area of the standard content STDCT.
2) In the information storage medium DISC compliant to category 1, the video manager VMG shall be recorded at the first location in the HD_DVD-Video recording area.
3) The video manager VMG shall be composed of 2 with maximum 102 files.
4) Each video title set VTS except the advanced video title sets ADVTS shall be composed of at least 3 with maximum 200 files.
5) The recording area of the advanced content ADVCT shall consists of files supported in the advanced content ADVCT with an advanced video title set ADVTS. The maximum number of files for advanced content ADVCT to be recorded in the recording area is 512 x 2047.
6) The advanced video title set ADVTS shall be composed of 3 with 5995 files.

<Transition Upon Playback>

The transitions upon playback of the advanced content ADVCT and upon playback of the standard content STDCT will be explained below using FIG. 8. The information storage medium DISC compliant to category 3 shown in FIG. 7 has a structure that can independently play back the advanced content ADVCT and standard content STDCT. When the information storage medium DISC compliant to category 3 is inserted into an advanced information playback apparatus having an Internet connection function, the playback apparatus reads advanced navigation data ADVNV included in the advanced content ADVCT in an initial state INSTT. After that, the playback apparatus transits to an advanced content playback state ADVPS. The same processing applies when the information storage medium DISC compliant to category 2 shown in FIG. 6 is inserted. In the advanced content playback state ADVPS shown in FIG. 8, a playback situation can transit to a standard content playback state STDPS by executing a command MSCMD corresponding to a markup file MRKUP or script file SCRPT. In the standard content playback state STDPS, the playback situation can return to the advanced content playback state ADVPS by executing a command NCCMD of navigation commands set in the standard content STDCT.
In the standard content STDCT, system parameters which record information, e.g., the presentation angle numbers, playback audio numbers, and the like that are set by the system as in the existing DVD-Video standards are defined. In this embodiment, the advanced content ADVCT can play back data to be set in the system parameter or can change the system parameter values in the advanced content playback state ADVPS. In this manner, compatibility to the existing DVD-Video playback can be assured. Independently of the transition direction between the advanced content playback state ADVPS and the standard content playback state STDPS, the consistency of the setting values of the system parameters can be maintained in this embodiment.
When an arbitrary transition is made according to user's favor between the advanced content ADVCT and standard content STDCT in the information storage medium DISC compliant to category 3 shown in FIG. 7, since the system parameter values have consistency, as described above, for example, the same presentation language is used before and after transition, and the user's convenience upon playback can be assured.

<Medium Identification Processing Method>

FIG. 9 shows a medium identification processing method by the information playback apparatus of this embodiment when three different types of information storage media DISC shown in FIGS.5 to 7 are mounted.

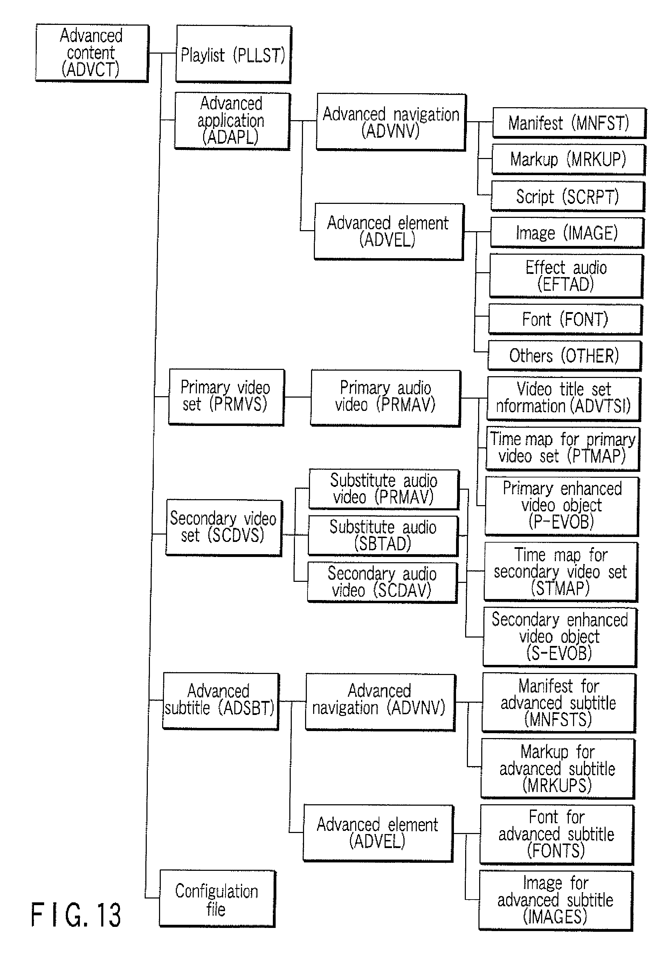

When the information storage medium DISC is mounted on a high-end information playback apparatus having a network connection function, the information playback apparatus determines if the information storage medium DISC is compliant to HD_DVD (step S11). In case of the information storage medium DISC compliant to HD_DVD, the information playback apparatus goes to find a playlist file PLLST recorded in an advanced content directory ADVCT located directly under the root directory shown in FIG. 13 and determines if the information storage medium DISC is compliant to category 2 or 3 (step S12). If the playlist file PLLST is found, the information playback apparatus determines that the information storage medium DISC is compliant to category 2 or 3, and plays back the advanced content ADVCT (step S13). If the playlist file PLLST is not found, the information playback apparatus checks the video manager ID number VMGM_ID recorded in the video manager information VMGI in the standard content STDCT and determines if the information storage medium DISC is compliant to category 1 (step S14). In case of the information storage medium DISC compliant to category 1, the video manager ID number VMGM_ID is recorded as specific data, and it can be identified based on the information in a video manager category VMG_CAT that the standard content STDCT compliant to category 1 alone is recorded. In this case, the standard content STDCT is played back (step S15). If the mounted information storage medium DISC belongs to none of categories described in FIGS. 5 to 7, a processing method depending on the information playback apparatus is adopted (step S16).

<Playback of Only Audio>

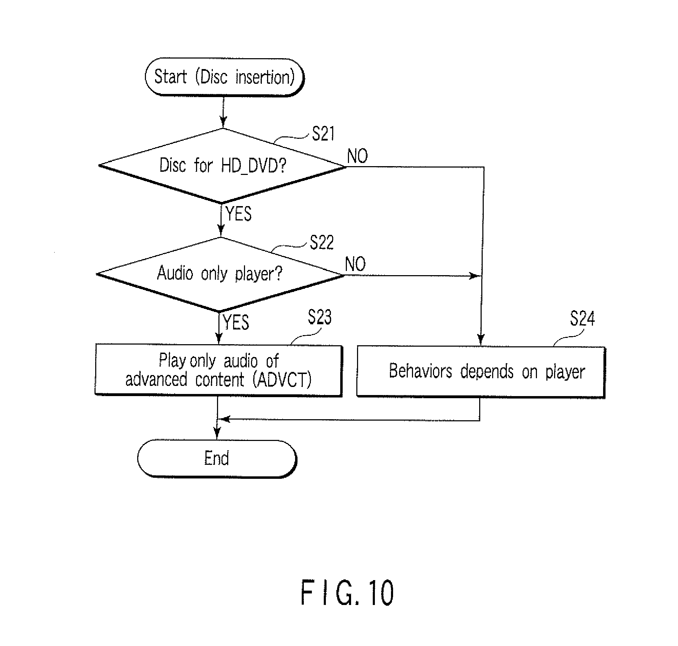

This embodiment supports a playback apparatus which does not have any video display function and plays back only audio information. FIG. 10 shows the startup sequence in an audio-only information playback apparatus.
When the information storage medium DISC is mounted on the information playback apparatus, the information playback apparatus determines if the information storage medium DISC is compliant to HD_DVD (step S21). If the information storage medium DISC is not compliant to HD_DVD in this embodiment, a processing method depending on the information playback apparatus is adopted (step S24). Also, if the information playback apparatus is not the one which plays back only audio information, a processing method depending on the information playback apparatus is adopted (steps S22 and S24). If the mounted information storage medium DISC is compliant to HD_DVD of this embodiment, the information playback apparatus checks the presence/absence of a playlist file PLLST recorded in the advanced content directory ADVCT located directly under the root directory. If the playlist file PLLST is found, the information playback apparatus which plays back only audio information plays back audio information (steps S22 and S23). At this time, the information playback apparatus plays back information via the playlist file PLLST.

<Data Access Method>

Different management methods (different data access methods to contents and the like) for the enhanced video object EVOB in the standard content STDCT and those in the advanced content ADVCT in this embodiment will be described below with reference to FIG. 11.
On standard video title set information STVTSI as management information in the standard content STDCT in this embodiment, access to each enhanced video object EVOB is designated by a logical sector number LSN as address information on the logical space. In this way, since access is managed using the address information, compatibility to the existing DVD-Video standards can be assured. By contrast, access to each enhanced video object EVOB in the advanced content ADVCT is managed not by address information but by time information. This point is a large technical feature in this embodiment. With this feature, not only compatibility to the video recording standards that allow existing video recording and playback can be assured, but also easy edit processing is guaranteed. More specifically, in a playlist PLLST which represents playback management information on the advanced content ADVCT, the playback range of advanced video object data at a playback position is set by time information. In the advanced content ADVCT of this embodiment, time information designated in the playlist PLLST can be converted into address information by time map information TMAPI. The time map information TMAPI is used to convert the designated time information into a logical sector number LSN indicating a logical address position on the information storage medium DISC. The time map information TMAPI is recorded at a position different from the playlist PLLST. Furthermore, advanced video title set information ADVTSI in the advanced content ADVCT corresponds to the standard video title set information STVTSI in the standard content STDCT. This advanced video title set information ADVTSI records enhanced video object information EVOBI which records individual attribute information of respective enhanced video object EVOB. This enhanced video object information EVOBI refers to and manages each individual enhanced video object EVOB as management information of attribute information. When this enhanced video object information EVOBI#3 manages and refers to attributes of the enhanced video object EVOB in the standard content STDCT, the playlist PLLST that manages playback of the advanced content ADVCT can designate playback of enhanced video object EVOB in the standard content STDCT.

<Utilization of Standard Content By Advanced Content>

Standard Content can be utilized by Advanced Content. VTSI of Advanced VTS can refer EVOBs which is also be referred by VTSI of Standard VTS, by use of TMAP (see FIG. 11). In this case, a TMAP Information refers one or more EVOBUs in an EVOB. However, the EVOB may contain HLI, PCI and so on, which are not supported in Advanced Content. In the playback of such EVOBs, some information which is not supported in Advanced Content such as HLI and PCI shall be ignored in Advanced Content.

More intelligible explanations will be provided below.

As described above, the advanced content ADVCT can utilize some data in the standard content STDCT. This point is a large technical feature in this embodiment.

For example, as shown in FIG. 11, the enhanced video object information EVOBI#3 in the advanced video title set information ADVTSI can refer to and play back enhanced video object EVOB#3 in the standard content STDCT by utilizing time map information TMAPI#3 in the advanced content ADVCT. Also, as shown in FIG. 11, the enhanced video object EVOB#3 referred to by the enhanced video object information EVOBI#3 in the advanced content can also be referred to by the standard video title set information STVTSI. As described above, in this embodiment, since the enhanced video object EVOB#3 in the standard content STDCT can be referred to by a plurality of pieces of information, it can be commonly utilized, and the efficiency of data to be recorded on the information storage medium DISC can be improved.

This enhanced video object EVOB#3 includes information such as highlight information HLI, presentation control information PCI, and the like. However, the advanced content ADVCT does not support these pieces of information, and information specified by these highlight information HLI and presentation control information PCI is ignored upon playback of the advanced content ADVCT based on the playlist PLLST.

<Advanced VTS>

Advanced VTS is utilized Video Title Set for Advanced Content. In comparison to Standard VTS, followings are additionally defined.

1) More enhancement for an EVOB

- 1 Main Video stream
- 8 Main Audio streams (Maximum)
- 1 Sub Video stream
- 8 Sub Audio streams (Maximum)
- 32 Sub-picture streams (Maximum)
- 1 Advanced stream

2) Integration of Enhanced VOB Set (EVOBS)

- Integration of both Menu EVOBS and Title EVOBS

3) Elimination of a layered structure

- No Tide, no PGC, no PTT and no Cell
- No supports of Navigation Command and UOP control

4) Introduction of new Time Map Information (TMAPI)

- In case of Contiguous Block, one TMAPI corresponds to one EVOB and it shall be stored as a file.
- In case of Interleaved Block, the TMAPIs which correspond to EVOBs in the Block shall be stored as a file.
- Some information in a NV_PCK are simplified.

More intelligible explanations will be provided below. The advanced video title set ADVTS shown in FIG. 7 will be described below with reference to FIG. 11. The advanced video title set ADVTS is utilized as a video title set for the advanced content ADVCT. Differences between the advanced video title set ADVTS shown in FIG. 7 and the standard video title set SVTS will be listed below.

1) More enhancement for the enhanced video object EVOB in advanced content ADVCT

The advanced video title set ADVTS can have one main video stream MANVD, eight (maximum) or fewer main audio streams MANAD, one sub video stream SUBVD, eight (maximum) or less sub audio streams SUBAD, 32 (maximum) or fewer sub-picture streams SUBPT, and one advanced stream (stream data that records an advanced application ADAPL to be described later).

2) Integration of enhanced video object set EVOBS

In the standard content STDCT, as shown in FIG. 4, enhanced video object EVOB in the video manager VMG that represents a menu frame is completely separated from enhanced video object EVOB in the standard video title set SVTS which represents video information to be played back, and a moving image and menu frame cannot be simultaneously presented. By contrast, the advanced video title set ADVTS in this embodiment can manage and present a menu frame and a picture frame that represents a moving image by integrating them.

3) Elimination of a layered structure of management information for video information

The existing DVD-Video and standard content STDCT adopts a layered structure of program chains PGC/parts of title PTT/cells as a video management unit. However, the management method of the advanced content ADVCT in this embodiment does not adopt such layered structure. Also, the standard content STDCT of the existing DVD-Video uses navigation commands to execute special processing such as transition processing and the like and performs user operation processing. However, the advanced content ADVCT of this embodiment does not perform these processes.

4) Introduction of new time map information TMAPI

In a contiguous block to be described later, one time map information TMAPI corresponds to one enhanced video object EVOB, and respective pieces of time map information TMAPI are recorded as one file on the information storage medium DISC. In case of an interleaved block, a plurality of enhanced video object EVOB corresponding to each stream in that interleaved block are included. Time map information TMAPI is set for each individual enhanced video object EVOB, and a plurality of pieces of time map information TMAPI are recorded in one file for each interleaved block. Furthermore, information in a navigation pack NV_PCK defined in the conventional DVD-Video and standard content STDCT is recorded after it is simplified.

<Structure of Advanced Video Title Set (Advanced VTS) >

This VTS consists of only one Title. This VTS is composed of control data referred to as Video Title Set Information (VTSI), Enhanced Video Object Set for Titles in a VTS (VTSTT_EVOBS), Video Title Set Time Map Information (VTS_TMAP), backup control data (VTSI_BUP) and backup of Video Title Set Time Map Information (VTS_TMAP_BUP).

The following rules shall apply to Video Title Set (VTS):

1) The control data (VTSI) and the backup of control data (VTSI_BUP) (if exists: this data is recorded optionally) shall be a single File.
2) VTSI and VTSI_BUP (if exists) shall not be recorded in the same ECC block.
3) Each of a Video Title Set Time Map Information (VTS_TMAP) and the backup of this (VTS TMAP_BUP) (if exists: this data is recorded optionally) shall be composed of files, up to a maximum of 999 respectively.
4) VTS_TMAP and VTS_TMAP_BUP (if exists) shall not be recorded in the same ECC block.
5) Files comprising VTS_TMAP shall be allocated continuously.
6) Files comprising VTS_TMAP_BUP (if exists) shall be allocated continuously.
7) An EVOB which belongs to Contiguous Block shall be a single File.
8) EVOBs which consist of an Interleaved Block shall be included in a single File.
9) An EVOBS of a VTS (VTSTT_EVOBS) shall be composed of files, up to a maximum of 999.
10) Files comprising VTSTT_EVOBS shall be allocated continuously.
11) The contents of VTSI_BUP (if exists) shall be exactly the same as VTSI completely. Therefore, when relative address information in VTSI_BUP refers to outside of VTSI BUP, the relative address shall be taken as a relative address of VTSI.

More intelligible explanations will be provided below.

The data structure in the advanced video title set ADVTS in the advanced content ADVCT shown in FIG. 11 will be described below.

In this embodiment, one advanced video title set ADVTS is composed of only one title that represents video information itself. In this embodiment, the advanced video title set ADVTS is composed of advanced video title set information ADVTSI which records control information, an enhanced video object set VTSTT_EVOBS which stores a video title representing the video information itself, video title set time map information VTS_TMAP which records time map information TMAPI shown in FIG. 11, backup information ADVTSI_BUP of the advanced video title set information ADVTSI, and backup information VTS_TMAP_BUP of the time map information. These pieces of information shall be recorded contiguously in this order on the information storage medium DISC. The following rules shall apply to the advanced video title set ADVTS in this embodiment.

1) The advanced video title set information ADVTSI as control information and its backup information ADVTSI_BUP shall be recorded as a single file on the information storage medium DISC.

2) The advanced video title set information ADVTSI and its backup information ADVTSI_BUP shall not be stored in one ECC block together. When the advanced video title set information ADVTSI and its backup information ADVTSI_BUP are recorded contiguously, if the last information in the advanced video title set information ADVTSI is located in the middle of one ECC block, padding information should be recorded in the residual area in that ECC block so that the next backup information ADVTSI_BUP is allocated in a different ECC block. In this manner, even when an ECC block at the boundary between the advanced video title set information ADVTSI and the next backup information ADVTSI_BUP cannot be read due to an error, one of these two pieces of information can be played back, thus improving the reliability upon playback.

3) Each of the video title set time map information VTS_TMAP and its backup information VTS_TMAP_BUP shall be recorded in 1 to 999 (maximum) or fewer files.

4) Each of the video title set time map information VTS_TMAP and its backup information VTS_TMAP_BUP shall not be recorded in one ECC block together. That is, as in 2), when the boundary between these two pieces of information is to be allocated in one ECC block, i.e., when the last part of the video title set time map information VTS_TMAP is allocated in the middle of one ECC block, padding data is recorded to allocate the next backup information VTS_TMAP_BUP to be recorded from the head position of the next ECC block. In this manner, the reliability upon playback can be assured.

5) A plurality of files comprising the video title set time map information VTS_TMAP shall be recorded continuously on the information storage medium DISC. In this way, the need for unwanted transition processing of an optical head can be obviated, and the video title set time map information VTS_TMAP can be played back by single continuous playback, thus attaining easy playback processing and speeding up.

6) A plurality of files comprising the backup information VTS_TMAP_BUP of each video title set time map information VTS_TMAP shall be recorded continuously on the information storage medium DISC. In this way, as in 5), easy playback processing and speeding up can be attained.

7) An enhanced video object set VTSTT_EVOBS that record titles of the advanced video title set shall be recorded on the information storage medium DISC as 1 to 999 (maximum) or fewer files.

8) A plurality of files which record the enhanced video object sets VTSTT_EVOBS that record titles of the advanced video title set shall be recorded continuously on the information storage medium DISC. In this manner, the enhanced video object sets VTSTT_EVOBS that record titles of the advanced video title set can be played back by single continuous playback, thus assuring continuity upon playback.

9) The contents of the backup information ADVTSI_BUP of the advanced video title set information ADVTSI shall be the same as the advanced video title set information ADVTSI completely.

<Structure of Enhanced Video Object Set (EVOBS) in Advanced VTS>

The EVOBS is a collection of Enhanced Video Object which is composed of data on Video, Audio, Sub-picture and the like.

The following rules shall apply to EVOBS:

1) In an EVOBS, EVOBs are to be recorded in Contiguous Block and Interleaved Block.

2) An EVOBS is composed of one or more EVOBs. EVOB_ID numbers are assigned from the EVOB with the smallest LSN in EVOBS, in ascending order starting with one (1). EVOB_ID number is also corresponding to the same number of EVOBI in VTSI.

3) Each EVOB has one corresponded TMAP file if the EVOB belongs to Contiguous Block. EVOBs which compose Interleaved Block have one corresponded TMAP file.

4) An EVOB shall be allocated in ascending order in logical sector number contiguously (without any gaps).

More intelligible explanations will be provided below.

The data structure of the enhanced video object EVOB in the advanced content ADVCT shown in FIG. 11 will be described below. In this embodiment, a collection of enhanced objects EVOBs is called an enhanced video object set EVOBS, and is composed of data of video, audio, sub-picture, and the like. In this embodiment, the following rules shall apply to the enhanced video object set EVOBS in the advanced content ADVCT.

1) Enhanced video objects EVOBs are recorded in a contiguous block and interleaved block (to be described later).
2) One enhanced video object set EVOBS includes one or more enhanced video object EVOB. The aforementioned ID numbers EVOB_ID of the enhanced video object are assigned in the layout order of enhanced video object EVOB recorded on the information storage medium DISC. That is, the ID numbers EVOB_ID are assigned in ascending order of logical sector number LSN which indicates the recording address of enhanced video object EVOB on the logical space, and the first number is set to 1. The ID number EVOB_ID of the enhanced video object is corresponding to the same number of the enhanced video object information EVOBI described in the advanced title set information ADVTSI. That is, as shown in FIG. 11, enhanced video object EVOB#1 has an ID number EVOB_ID = "1", and enhanced video object EVOB#2 has an ID number EVOB_ID = "2". Enhanced video object information EVOBI#1 which controls that data is set to have a number = "1", and enhanced video object information EVOBI#2 that manages the enhanced video object EVOB#2 is set to have a number = "2".
3) Each enhanced video object EVOB has one corresponded time map file if the enhanced video object EVOB belongs to the contiguous block. That is, as shown in FIG. 11, time map information TMAPI#1 exists as a part for managing the time of enhanced video object EVOB#1, and this time map information TMAPI#1 is recorded on the information storage medium DISC as one time map file. When a plurality of enhanced video objects EVOBs compose an interleaved block, one time map file is recorded on the information storage medium DISC in correspondence with one interleaved block.

<Relation among Presentation Objects>

FIG. 12 shows the relation among Data Type, Data Source and Player/Decoder for each presentation object defined above.

More intelligible explanations will be provided below.

The advanced content ADVCT in this embodiment uses objects shown in FIG. 12. The correspondence among the data types, data sources, and players/decoders, and player for each presentation object is shown in FIG. 12. Initially, "via network" and "persistent storage PRSTR" as the data sources will be described below.

<Network Server>

Network Server is an optional data source for Advanced Content playback, but a player should have network access capability. Network Server is usually operated by the content provider of the current disc. Network Server usually locates in the internet.

More intelligible explanations will be provided below.

"Via network" related with the data sources shown in FIG. 12 will be explained.

This embodiment is premised on playback of object data delivered from the network server NTSRV via the network as the data source of objects used to play back the advanced content ADVCT. Therefore, a player with advanced functions in this embodiment is premised on network access. As the network server NTSRV which represents the data source of objects upon transferring data via the network, a server to be accessed is designated in the advanced content ADVCT on the information storage medium DISC upon playback, and that server is operated by the content provider who created the advanced content ADVCT. The network server NTSRV is usually located in the Internet.

<Data categories on Network Server>

Any Advanced Content files can exist on Network Server. Advanced Navigation can download any files on Dada Sources to the File Cache or Persistent Storage by using proper API(s). For S-EVOB data read from Network Server, Secondary Video Player can use Streaming Buffer.

More intelligible explanations will be provided below.

Files which record the advanced content ADVCT in this embodiment can be recoded in the network server NTSRV in advance. An application processing command API which is set in advance downloads advanced navigation data ADVNV onto a file cache FLCCH (data cache DTCCH) or the persistent storage PRSTR. In this embodiment, a primary video set player cannot directly play back a primary video set PRMVS from the network server NTSRV. The primary video set PRMVS is temporarily recorded on the persistent storage PRSTR, and data are played back via the persistent storage PRSTR (to be described later). A secondary video player SCDVP can directly play back secondary enhanced video object S-EVOB from the network server NTSRV using a streaming buffer. The persistent storage PRSTR shown in FIG. 12 will be described below.

<Persistent Storage/Data categories on Persistent Storage>

There are two categories of Persistent Storage. One is called as "Required Persistent Storage". This is a mandatory Persistent Storage device attached in a player. FLASH memory is typical device for this. The minimum capacity for Fixed Persistent Storage is 128 MB. Others are optional and called as "Additional Persistent Storage". They may be removable storage devices, such as USB Memory/HDD or Memory Card. NAS (Network Attached Storage) is also one of possible Additional Persistent Storage device. Actual device implementation is not specified in this specification. They should pursuant API model for Persistent Storage.

Any Advanced Content files can exist on Persistent Storage. Advanced Navigation can copy any files on Data Sources to Persistent Storage or File Cache by using proper API(s). Secondary Video Player can read Secondary Video Set from Persistent Storage.

More intelligible explanations will be provided below.

This embodiment defines two different types of persistent storages PRSTRs. The first type is called a required persistent storage (or a fixed persistent storage as a mandatory persistent storage) PRSTR. The information recording and playback apparatus 1 (player) in this embodiment has the persistent storage PRSTR as a mandatory component. As a practical recording medium which is most popularly used as the fixed persistent storage PRSTR, this embodiment assumes a flash memory. This embodiment is premised on that the fixed persistent storage PRSTR has a capacity of 64 MB or more. When the minimum required memory size of the persistent storage PRSTR is set, as described above, the playback stability of the advanced content ADVCT can be guaranteed independently of the detailed arrangement of the information recording and playback apparatus 1. As shown in FIG. 12, the file cache FLCCH (data cache DTCCH) is designated as the data source. The file cache FLCCH (data cache DTCCH) represents a cache memory having a relatively small capacity such as a DRAM, SRAM, or the like. The fixed persistent storage PRSTR in this embodiment incorporates a flash memory, and that memory itself is set not to be detached from the information playback apparatus. However, this embodiment is not limited to such specific memory, and for example, a portable flash memory may be used in addition to the fixed persistent storage PRSTR.

The other type of the persistent storage PRSTR in this embodiment is called an additional persistent storage PRSTR. The additional persistent storage PRSTR may be a removable storage device, and can be implemented by, e.g., a USB memory, portable HDD, memory card, or the like.

In this embodiment, the flash memory has been described as an example the fixed persistent storage PRSTR, and the USB memory, portable HDD, memory card, or the like has been described as the additional persistent storage PRSTR. However, this embodiment is not limited to such specific devices, and other recording media may be used.

This embodiment performs data I/O processing and the like for these persistent storages PRSTR using the data processing API (application interface). A file that records a specific advanced content ADVCT can be recorded in the persistent storage PRSTR. The advanced navigation data ADVNV can copy a file that records it from a data source to the persistent storage PRSTR or file cache FLCCH (data cache DTCCH). A primary video player PRMVP can directly read and present the primary video set PRMVS from the persistent storage PRSTR. The secondary video player SCDVP can directly read and present a secondary video set SCDVS from the persistent storage PRSTR.

<Note about Presentation Objects>

Resource files in a disc, in Persistent Storage or in network need to be once stored in File Cache.

More intelligible explanations will be provided below.

In this embodiment, the advanced application ADAPL or an advanced subtitle ADSBT recorded in the information storage medium DISC, the persistent storage PRSTR, or the network server NTSRV needs to be once stored in the file cache, and such information then undergoes data processing. When the advanced application ADAPL or advanced subtitle ADSBT is once stored in the file cache FLCCH (data cache DTCCH), speeding up of the presentation processing and control processing can be guaranteed.

The primary video player PRMVP and secondary video player SDCVP as the playback processors shown in FIG. 12 will be described later. In short, the primary video player PRMVP includes a main video decoder MVDEC, main audio decoder MADEC, sub video decoder SVDEC, sub audio decoder SADEC, and sub-picture decoder SPDEC. As for the secondary video player SCDVP, the main audio decoder MADEC, sub video decoder SVDEC, and sub audio decoder SADEC are commonly used as those in the primary video player PRMVP. Also, an advanced element presentation engine AEPEN and advanced subtitle player ASBPL will also be described later.

<Primary Video Set>

There is only one Primary Video Set on Disc. It consists of IFO, one or more EVOB files and TMAP files with matching names.

More intelligible explanations will be provided below.

In this embodiment, only one primary video set PRMVS exists in one information storage medium DISC. This primary video set PRMVS includes its management information, one or more enhanced video object files EVOB, and time map files TMAP, and uses a common filename for each pair.

<Primary Video Set> (Continued)

Primary Video Set is a container format of Primary Audio Video. The data structure of Primary Video Set is in conformity to Advanced VTS which consists of Video Title Set Information (VTSI), Time Map (TMAP) and Primary Enhanced Video Object (P-EVOB). Primary Video Set shall be played back by the Primary Video Player.

More intelligible explanations will be provided below.

The primary video set PRMVS contains a format of a primary audio video PRMAV. The primary video set PRMVS consists of advanced video title set information ADVTSI, time maps TMAP, and primary enhanced video object P-EVOB, and the like. The primary video set PRMVS shall be played back by the primary video player PRMVP.

Components of the primary video set PRMVS shown in FIG. 12 will be described below.

In this embodiment, the primary video set PRMVS mainly means main video data recorded on the information storage medium DISC. The data type of this primary video set PRMVS consists of a primary audio video PRMAV, and a main video MANVD, main audio MANAD, and sub-picture SUBPT mean the same information as video information, audio information, and sub-picture information of the conventional DVD-Video and the standard content STDCT in this embodiment. The advanced content ADVCT in this embodiment can newly present a maximum of two frames at the same time. That is, a sub video SUBVD is defined as video information that can be played back simultaneously with the main video MANVD. Likewise, a sub audio SUBAD that can be output simultaneously with the main audio MANAD is newly defined.

In this embodiment, the following two different use methods of the sub audio SUBAD are available:

1) A method of outputting audio information of the sub video SUBVD using the sub audio SUBAD when the main video MANVD and sub video SUBVD are presented at the same time; and

2) A method of outputting the sub audio SUBAD to be superimposed on the main audio MANAD as a comment of a director when only the main video MANVD is played back and presented on the screen and the main audio MANAD as audio information corresponding to video data of the main video MANVD is output and when, for example, the comment of the director is audibly output to be superposed.

<Secondary Video Set>

Secondary Video Set is used for substitution of Main Video/Main Audio streams to the corresponding streams in Primary Video Set (Substitute Audio Video), substitution of Main Audio stream to the corresponding stream in Primary Video Set (Substitute Audio), or used for addition to/substitution of Primary Video Set (Secondary Audio Video). Secondary Video Set may be recoded on a disc, recorded in Persistent Storage or delivered from a server. The file for Secondary Video Set is once stored in File Cache or Persistent Storage before playback, if the data is recorded on a disc, and it is possible to be played with Primary Video Set simultaneously. Secondary Video Set on a disc may be directly accessed in case that Primary Video Set is not played back (i.e. it is not supplied from a disc). On the other hand, if Secondary Video Set is located on a server, whole of this data should be once stored in File Cache or Persistent Storage and played back ("Complete downloading"), or a part of this data should be stored in Streaming Buffer sequentially and stored data in the buffer is played back without buffer overflow during downloading data from a server ("Streaming").

More intelligible explanations will be provided below.

The secondary video set SCDVS is used as a substitution for the main audio MANAD in the primary video set PRMVS, and is also used as additional information or substitute information of the primary video set PRMVS. This embodiment is not limited to this. For example, the secondary video set SCDVS may be used as a substitution for a main audio MANAD of a substitute audio SBTAD or as an addition (superimposed presentation) or substitution for a secondary audio video SCDAV. In this embodiment, the content of the secondary video set SCDVS can be downloaded from the aforementioned network server NTSRV via the network, or can be recorded and used in the persistent storage PRSTR, or can be recorded in advance on the information storage medium DISC of the embodiment of the invention. If information of the secondary video set SCDVS is recorded in the information storage medium DISC of the embodiment, the following mode is adopted. That is, the secondary video set file SCDVS is once stored in the file cache FLCCH (data cache DTCCH) or the persistent storage PRSTR, and is then played back from the file cache or persistent storage PRSTR. The information of the secondary video set SCDVS can be played back simultaneously with some data of the primary video set PRMVS. In this embodiment, the primary video set PRMVS recorded on the information storage medium DISC can be directly accessed and presented, but the secondary video set SCDVS recorded on the information storage medium DISC in this embodiment cannot be directly played back. In this embodiment, information in the primary video set PRMVS is recorded in the aforementioned persistent storage PRSTR, and can be directly played back from the persistent storage PRSTR. More specifically, when the secondary video set SCDVS is recorded on the network server NTSRV, whole of the secondary video set SCDVS are once stored in the file cache FLCCH (data cache DTCCH) or the persistent storage PRSTR, and are then played back. This embodiment is not limited to this. For example, a part of the secondary video set SCDVS recorded on the network server NTSRV is once stored in the streaming buffer within the range in which the streaming buffer does not overflow, as needed, and can be played back from there.

<Secondary Video Set> (Continued)

Secondary Video Set can carry three types of Presentation Objects, Substitute Audio Video, Substitute Audio and Secondary Audio Video. Secondary Video Set may be provided from Disc, Network Server, Persistent Storage or File Cache in a player. The data structure of Secondary Video Set is a simplified and modified structure of Advanced VTS. It consists of Time Map (TMAP) with attribute information and Secondary Enhanced Video Object (S-EVOB). Secondary Video Set shall be played back by the Secondary Video Player.

More intelligible explanations will be provided below.

The secondary video set SCDVS can carry three different types of presentation objects, i.e., a substitute audio video SBTAV, a substitute audio SBTAD, and secondary audio video SCDAV. The secondary video set SCDVS may be provided from the information storage medium DISC, network server NTSRV, persistent storage PRSTR, file cache FLCCH, or the like. The data structure of the secondary video set SCDVS is a simplified and partially modified structure of the advanced video title set ADVTS. The secondary video set SCDVS consists of time map TMAP and secondary enhanced video object S-EVOB. The secondary video set SCDVS shall be played back by the secondary video player SCDVP.

Components of the secondary video set SCDVS shown in FIG. 12 will be described below.

Basically, the secondary video set SCDVS indicates data which is obtained by reading information from the persistent storage PRSTR or via the network, i.e., from a location other than the information storage medium DISC in this embodiment, and presenting the read information by partially substituting for the primary video set PRMVS described above. That is, the main audio decoder MADEC shown in FIG. 12 is common to that of the primary video player PRMVP and the secondary video player SCDVP. When the content of the secondary video set SCDVS is to be played back using the main audio decoder MADEC in the secondary video player SCDVP, the sub audio SUBAD of the primary video set PRMVS is not played back by the primary video player PRMVP, and is output after it is substituted by data of the secondary video set SCDVS. The secondary video set SCDVS consists of three different types of objects, i.e., the substitute audio video SBTAV, substitute audio SBTAD, and secondary audio video SCDAV. A main audio MANAD in the substitute audio SBTAD is basically used when it substitutes for the main audio MANAD in the primary video set PRMVS. The substitute audio video SBTAV consists of the main video MANDV and the main audio MANAD. The substitute audio SBTAD consists of one main audio stream MANAD. For example, when the main audio MANAD recorded in advance on the information storage medium DISC as the primary video set PRMVS records Japanese and English in correspondence with video information of the main video MANVD, the main audio MANAD can only present Japanese or English audio information upon presentation to the user. By contrast, this embodiment can attain as follows. That is, for a user who speaks Chinese as the native language, Chinese audio information recorded in the network server NTSRV is downloaded via the network, and audio information upon playing back the main video MANVD of the primary video set PRMVS can be output instead of presenting the audio information in Japanese or English while it is substituted by Chinese as the main audio MANAD of the secondary Video set SCDVS. Also, the sub audio SUBAD of the secondary video set SCDVS can be used when audio information synchronized with the window of the sub video SUBVD of the secondary audio video SCDAV is to be presented upon presentation on two windows (e.g., when comment information of a director is simultaneously presented to be superposed on the main audio MANAD which is output in synchronism with the main video MANVD of the primary video set PRMVS described above).

<Secondary Audio Video>

Secondary Audio Video contains zero or one Sub Video stream and zero to eight Sub Audio streams. This is used for addition to Primary Video Set or substitution of Sub Video stream and Sub Audio stream in Primary Video Set.

More intelligible explanations will be provided below.

In this embodiment, the secondary audio video SCDAV contains zero or one sub video SUBVD and zero to eight sub audio SUBAD. In this embodiment, the secondary audio video SCDAV is used to be superimposed on (in addition to) the primary video set PRMVS. In this embodiment, the secondary audio video SCDAV can also be used as a substitution for the sub video SUBVD and sub audio SUBAD in the primary video set PRMVS.

<Secondary Audio Video> (Continued)

Secondary Audio Video replaces Sub Video and Sub Audio presentations of Primary Audio Video. It may consist of Sub Video stream with/without Sub Audio stream or Sub Audio stream only. While being played back one of presentation stream in Secondary Audio Video, it is prohibited to be played Sub Video stream and Sub Audio stream in Primary Audio Video. The container format of Secondary Audio Video is Secondary Video Set.
More intelligible explanations will be provided below.
The secondary audio video SCDAV replaces the sub video SUBVD and sub audio SUBAD in the primary video set PRMVS. The secondary audio video SCDAV has the following cases.

1) Case of consisting of the video SUBAD stream only;
2) Case of consisting both the sub video SUBVD and sub audio SUBAD; and
3) Case of consisting of the sub audio SUBAD only.

At the time of playing back a stream in the secondary audio video SCDAV, the sub video SUBVD and sub audio SUBAD in the primary audio video PRMAV cannot be played back. The secondary audio video SCDAV is included in the secondary video set SCDVS.

<Advanced Application>

An Advanced Application consists of one Manifest file, Markup file(s) (including content/style/timing/layout information), Script file(s), Image file(s) (JPEG/PNG/MNG/Capture Image Format), Effect Audio file(s) (LPCM wrapped by WAV), Font file(s) (Open Type) and others. A Manifest file gives information for display layout, an initial Markup file to be executed, Script file(s) and resources in the Advanced Application.
More intelligible explanations will be provided below.
The advanced application ADAPL in FIG. 12 consists of information such as a markup file MRKUP, script file SCRPT, still picture IMAGE, effect audio file EFTAD, font file FONT, and others. As described above, these pieces of information of the advanced application ADAPL are used once they are stored in the file cache. Information related with downloading to the file cache FLCCH (data cache DTCCH) is recorded in a manifest file MNFST (to be described later). Also, information of the download timing and the like of the advanced application ADAPL is described in resource information RESRCI in the playlist PLLST. In this embodiment, the manifest file MNFST also contains information related with loading of the markup file MRKUP information executed initially, information required upon loading information recorded in the script file SCRPT onto the file cache FLCCH (data cache DTCCH), and the like.

<Advanced Application> (Continued)

Advanced Application provides three functions. The first is to control entire presentation behavior of Advanced Content. The next is to realize graphical presentation, such as menu buttons, over the video presentation. The last is to control effect audio playback. Advanced Navigation files of Advanced Application, such as Manifest, Script and Markup, define the behavior of Advanced Application. Advanced Element files are used for graphical and audio presentation.
More intelligible explanations will be provided below.
The advanced application ADAPL provides the following three functions.
The first function is a control function (e.g., jump control between different frames) for presentation behavior of the advanced content ADVCT. The second function is a function of realizing graphical presentation of menu buttons and the like. The third function is an effect audio playback control function. An advanced navigation file ADVNV contains a manifest MNFST, script file SCRPT, markup file MRKUP, and the like to implement the advanced application ADAPL. Information in an advanced element file ADVEL is related with a still picture IMAGE, font file FONT, and the like, and is used as presentation icons and presentation audio upon graphical presentation and audio presentation of the second function.

<Advanced Subtitle>

An advanced subtitle ADSBT is also used after it is stored in the file cache FLCCH (data cache DTCCH) as in the advanced application ADAPL. Information of the advanced subtitle ADSBT can be fetched from the information storage medium DISC or persistent storage PRSTR, or via the network. The advanced subtitle ADSBT in this embodiment basically contains a substituted explanatory title or telop for a conventional video information or images such as pictographic characters, still pictures, or the like. As for substitution of the explanatory title, it is basically formed based on text other than the images, and can also be presented by changing the font file FONT. Such advanced subtitles ADSBT can be added by downloading them from the network server NTSRV. For example, a new explanatory title or a comment for a given video information can be output while playing back the main video MANVD in the primary video set PRMVS stored in the information storage medium DISC. As described above, the following use method is available. That is, when the sub-picture SUBPT stores only Japanese and English subtitles as, for example, the subtitles in the primary video set PRMVS, the user who speaks Chinese as the native language downloads a Chinese subtitle as the advanced subtitle ADSBT from the network server NTSRV via the network, and presents the downloaded subtitle. The data type in this case is set as the type of markup file MRKUPS for the advanced subtitle ADSBT or font file FONT.

<Advanced Subtitle> (Continued)

Advanced Subtitle is used for subtitle synchronized with video, which may be substitution of the Sub-picture data. It consists of one Manifest file for Advanced Subtitle, Markup file(s) for Advanced Subtitle (including content/style/timing/layout information), Font file(s) and Image file(s). The Markup file for Advanced Subtitle is a subset of Markup for Advanced Application.
More intelligible explanations will be provided below.
In this embodiment, the advanced subtitle ADSBT can be used as a subtitle (explanatory title or the like) which is presented in synchronism with the main video MANVD of the primary video set PRMVS. The advanced subtitle ADSBT can also be used as simultaneous presentation (additional presentation processing) for the sub-picture SUBPT in the primary video set PRMVS or as a substitute for the sub-picture SUBPT of the primary video set PRMVS. The advanced subtitle ADSBT consists of one manifest file MNFSTS for the advanced subtitle ADSBT, markup file(s) MRKUPS for the advanced subtitle ADSBT, font file(s) FONTS and image file(s) IMAGES. The markup file MRKUPS for the advanced subtitle ADSBT exists as a subset of the markup file MRKUP of the advanced application ADAPL.

<Advanced Subtitle> (Continued)

Advanced Subtitle provides subtitling feature. Advanced Content has two means for subtitling. The one is by using with Sub-picture stream in Primary Audio Video as well as Sub-picture function of Standard Content. The other is by using with Advanced Subtitle. Both means shall not be used at the same time. Advanced Subtitle is a subset of Advanced Application.
More intelligible explanations will be provided below.
The advanced content ADVCT has two means for a subtitle.
As the first mean, the subtitle is used as a sub-picture stream in the primary audio PRMAV as in the sub-picture function of the standard content STDCT. As the second mean, the subtitle is used as the advanced subtitle ADSBT. Both means shall not be used in both the purposes at the same time. The advanced subtitle ADSBT is a subset of the advanced application ADAPL.

<Advanced Stream>

Advanced Stream is a data format of package files containing one or more Advanced Content files except for Primary Video Set. Advanced Stream is multiplexed into Primary Enhanced Video Object Set (P-EVOBS) and delivered to File Cache with P-EVOBS data supplying to Primary Video Player. The same files which are multiplexed in P-EVOBS and are mandatory for Advanced Content playback, should be stored as files on Disc. These duplicated copies are necessary to guarantee Advanced Content playback. Because Advanced Stream supply may not be finished, when Advanced Content playback is jumped. In this case, necessary files are directly copied by File Cache Manager from Disc to Data Cache before re-starting playback from specified jump timing.
More intelligible explanations will be provided below.
An advanced stream is a data format of package files containing one or more advanced content files ADVCT except for the primary video set PRMVS. The advanced stream is recorded to be multiplexed in a primary enhanced video object set P-EVOBS, and is delivered to the file cache FLCCH (data cache DTCCH). This primary enhanced video object set P-EVOBS undergoes playback processing by the primary video player PRMVP. These files which are recorded to be multiplexed in the primary enhanced video object set P-EVOBS are mandatory for playback of the advanced content ADVCT, and should be stored on the information storage medium DISC of this embodiment to have a file structure.

<Advanced Navigation>

Advanced Navigation files shall be located as files or archived in package file. Advanced Navigation files are read and interpreted for Advanced Content playback. Playlist, which is Advanced Navigation file for startup, shall be located on "ADV_OBJ" directory. Advanced Navigation files may be multiplexed in P-EVOB or archived in package file which is multiplexed in P-EVOB.
More intelligible explanations will be provided below.
Files related with the advanced navigation ADVNV are used in interrupt processing upon playback of the advanced content ADVCT.

<Primary Audio Video>

Primary Audio Video can provide several presentation streams, Main Video, Main Audio, Sub Video, Sub Audio and Sub-picture. A player can simultaneously play Sub Video and Sub Audio, in addition to Main Video and Main Audio. Primary Audio Video shall be exclusively provided from Disc. The container format of Primary Audio Video is Primary Video Set. Possible combination of video and audio presentation is limited by the condition between Primary Audio Video and other Presentation Object which is carried by Secondary Video Set. Primary Audio Video can also carry various kinds of data files which may be used by Advanced Application, Advanced Subtitle and others. The container stream for these files is called Advanced Stream.
More intelligible explanations will be provided below.
The primary audio video PRMAV is composed of streams containing a main video MANVD, main audio MANAD, sub video SUBVD, sub audio SUBAD, and sub-picture SUBPT. The information playback apparatus can simultaneously play back the sub video SUBVD and sub audio SUBAD, in addition to the main video MANVD and main audio MANAD. The primary audio video PRMAV shall be recorded in the information storage medium DISC or the persistent storage PRSTR. The primary audio video PRMAV is included as a part of the primary video set PRMVS. Possible combination of video and audio presentation is limited by the condition between the primary audio video PRMAV and the secondary video set SDCVS. The primary audio video PRMAV can also carry various kinds of data files which may be used by the advanced application ADAPL, advanced subtitle ADSBT, and others. The stream contained in these files are called an advanced stream.

<Substitute Audio>

Substitute Audio replaces the Main Audio presentation of Primary Audio Video. It shall consist of Main Audio stream only. While being played Substitute Audio, it is prohibited to be played back Main Audio in Primary Video Set. The container format of Substitute Audio is Secondary Video Set. If Secondary Video Set includes Substitute Audio Video, then Secondary Video Set can not contain Substitute Audio.
More intelligible explanations will be provided below.
The substitute audio SBTAD replaces the main audio MANAD presentation of the primary audio video PRMAV. This substitute audio SBTAD shall consists of a main audio MANAD stream only. Wile being played the substitute audio SBTAD, it is prohibited to be played back the main audio MANAD in the primary video set PRMVS. The substitute audio SBTAD is contained in the secondary video set SCDVS.

<Primary Enhanced Video Object (P-EVOB) for Advanced Content>

Primary Enhanced Video Object (P-EVOB) for Advanced Content is the data stream which carries presentation data of Primary Video Set. Primary Enhanced Video Object for Advanced Content is just referred as Primary Enhanced Video Object or P-EVOB. Primary Enhanced Video Object complies with Program Stream prescribed in "The system part of the MPEG-2 standard (ISO/IEC 13818-1)". Types of presentation data of Primary Video Set are Main Video, Main Audio, Sub Video, Sub Audio and Sub-picture. Advanced Stream is also multiplexed into P-EVOB.
Possible pack types in P-EVOB are followings.

· Navigation Pack (NV_PCK)
· Main Video Pack (VM_PCK)
· Main Audio Pack (AM_PCK)
· Sub Video Pack (VS_PCK)
· Sub Audio Pack (AS_PCK)
· Sub-picture Pack (SP_PCK)
· Advanced Pack (ADV_PCK)

Time Map (TMAP) for Primary Video Set specifies entry points for each Primary Enhanced Video Object Unit (P-EVOBU).

Access Unit for Primary Video Set is based on access unit of Main Video as well as traditional Video Object (VOB) structure. The offset information for Sub Video and Sub Audio is given by Synchronous Information (SYNCI) as well as Main Audio and Sub-picture.

Advanced Stream is used for supplying various kinds of Advanced Content files to the File Cache without any interruption of Primary Video Set playback. The demux module in the Primary Video Player distributes Advanced Stream Pack (ADV_PCK) to the File Cache Manager in the Navigation Manager.

More intelligible explanations will be provided below.

The primary enhanced video object P-EVOB for the advanced content ADVCT is the data stream which carries presentation data of the primary video set PRMVS. As the types of presentation data of the primary video set PRMVS, the main video MANVD, main audio MANAD, sub video SUBVD, sub audio SUBAD, and sub-picture SUBPT are included. In this embodiment, as packs included in the primary enhanced video object P-EVOB, a navigation pack NV_PCK exists as in the existing DVD and the standard content STDCT, and an advanced stream pack that records the advanced stream exists. In this embodiment, offset information to the sub video SUBVD and sub audio SUBAD is recorded in synchronous information SYNCI as in the main audio MANAD and sub-picture SUBPT.

<File Structure>

FIG. 13 shows the file structure when various object streams shown in FIG. 12 are recorded on the information storage medium DISC. In this embodiment, as for the advanced content ADVCT, an advanced content directory ADVCT is allocated immediately under the root directory of the information storage medium DISC, and all files are recorded in that directory. A playlist file PLLST that records information related with playback exists under the advanced content directory ADVCT. Together with this file, an advanced application directory ADAPL that records information related with the advanced application, a primary video set directory PRMVS that records information related with the primary video set, a secondary video set directory SCDVS that records information related with the secondary video set, and an advanced subtitle directory ADSBT that records information related with the advanced subtitle are recorded.

Under the advanced application directory ADAPL, an advanced navigation directory ADVNV that records management information related with the advanced application, and an advanced element directory ADVEL that records information related with various advanced elements (object information and the like) use in the advanced application. The advanced navigation directory ADVNV includes a manifest file MNFST related with a manifest which records the relationship among various kinds of management information used in the advanced application and information lists required for network downloading together, a markup file MRKUP which records markup data related with page layouts and the like, a script file SCRPT which records script commands. The advanced element directory ADVEL includes a still picture file IMAGE which records still pictures, an effect audio file EFTAD which records effect audio data, a font file FONT which records font information, and other file OTHER.

Under the primary video set directory PRMVS, a primary audio video directory PRMAV exists. This directory includes a video title set information file ADVTSI which records attribute information and management information related with the enhanced video objects of the primary audio video, a time map file PTMAP of the primary video set which records time map information used to convert time information of the primary video set into address information, and a primary enhanced video object file P-EVOB which records the primary enhanced video objects.

Under the secondary video set directory SCDVS, a substitute audio directory SBTAD and secondary audio video directory SCDAV exist. Under the secondary audio video directory SCDAV, a time map file STMAP of the secondary video set which records time map information used to convert time information of the secondary video set into address information, and a secondary enhanced video object file S-EVOB which records the secondary enhanced video objects exist. Under the substitute audio directory SBTAD as well, the time map file STMAP used to convert time information of the secondary video set into address information, and the secondary enhanced video object file S-EVOB can be stored.

Under the advanced subtitle directory ADSBT, an advanced navigation directory ADVNV which records management information related with the advanced subtitle, and an advanced element directory ADVEL as element information of the advanced subtitle exist. The advanced navigation directory ADVNV includes a manifest file MNFSTS of the advanced subtitle, and a markup file MRKUPS of the advanced subtitle. The manifest file MNFSTS of the advanced subtitle records the relationship among various kinds of management information related with the advanced subtitle and information required for network downloading. The markup file MRKUPS of the advanced subtitle records markup information used to designate the presentation position of the advanced subtitle on the screen and the like. The advanced element directory ADVEL includes a font file FONTS of the advanced subtitle which records font information of the advanced subtitle.

<Directories for Advanced Content>

"Directories for Advanced Content" may exist only under the "ADV_OBJ" directory. Any files of Advanced Navigation, Advanced Element and Secondary Video Set can reside at this directory. The name of this directory shall be consisting of character set defined in Files for Advanced Content below. The total number of "ADV_OBJ" sub-directories (excluding "ADV_OBJ" directory) shall be less than 512. Directory depth shall be equal or less than 8 from "ADV_OBJ" directory.

More intelligible explanations will be provided below.

The name of the advanced content directory ADVCT and directories and filenames included in this directory are described using d-characters or d1-characters. Sub-directories exist under the advanced content directory ADVCT. The depth of layers of the sub-directories is eight layers or less, and the total number of sub-directories shall be less than 512 in this embodiment. If the directories are too deep, or if the total number of sub-directories is too large, accessibility drops. Therefore, in this embodiment, high-speed access is assured by limiting the number of layers and that of directories.

<Files for Advanced Content>

The total number of files under the "ADV OBJ" directory shall be limited to 512 x 2047, and the total number of files in each directory shall be less than 2048. Character code set "A to Z a to z 0 to 9 SP ! $ &' () + , - . ; = @ _" (20h, 21h, 24h to 29h, 2Bh to 2Eh, 30h to 39h, 3Bh, 3Dh, 40h to 5Ah, 5Fh, 61h to 7Ah in ISO 8859-1) are used for filename. The length of the filename shall be equal to or less than 255 characters. For use of the filename, following rule shall be applied.

· A disc may have characters in both upper case and lower case.
· A disc must not have the same filename where only the difference case character. (e.g. test.jpg and TEST.JPG must not co-exist in a disc)
· Filename referred in XML/Script document shall match the filename for Advanced Element in a disc/Persistent Storage/network. < case-sensitive > (e.g. test.jpg is not linked to TEST.JPG)

More intelligible explanations will be provided below.

The total number of files that can be recorded under the advanced content directory ADVCT shall be limited to be 512 x 2047, and the total number of files that can be recorded in each directory is shall be less than 2048. The filename adopts a structure in which a dot "." is allocated after each filename, and an extension is allocated after the dot ".". The advanced content directory ADVCT is recorded directly under the root directory of the information storage medium, and the playlist file PLLST is recorded directly under this advanced content directory ADVCT.

<Playlist>

A Playlist file shall reside under "ADV_OBJ" directory with having the filename "VPLST%%%.XPL" for a player which connects with a display device, or the filename "APLST&&&.XPL" for a player which doesn't connect with a display device, in case of Category 2 disc and Category 3 disc. If the Playlist file is necessary to be read in the startup sequence, the Playlist file shall reside directly under "ADV_OBJ" directory (its sub-directories are not included), and "%%%" and "&&&" are described by the value "000" to "999". In this case, the Playlist file which has the maximum number shall be read initially in the startup sequence.

More intelligible explanations will be provided below.

A plurality of playlist files PLLST can be recorded on the information storage medium DISC. As the playlist file PLLST, two different types of playlist files PLLST can be set. The filename of a playlist file PLLST which is directly accessed by the information playback apparatus upon playback is set to be "VPLIST%%%.XML", and that of a playlist file PLLST which is not directly accessed by the information playback apparatus is set to be "APLIST&&&.XML". Note that "%%%" and "&&&" store numerals ranging from 000 to 999.

<Filename for Advanced Video Title Set (Advanced VTS)>

The filename for Video Title Set Information shall be "HVA00001. VTI".

The filename for Enhanced Video Object shall have extension of "EVO".

The filename of Time Map Information for Contiguous Block shall have same body in filename as that of a corresponding EVOB, with extension of "MAP".

The filename of Time Map Information for Interleaved Block shall have same body in filename as that of corresponding EVOBs, with extension of "MAP".

The filename of Time Map Information for Standard VTS referred in Advanced Content shall be "HVSO@@@@.MAP".

-    "@@@@" shall be four characters of "0001" to "1998" which are same number as EVOB index number assigned to each EVOBI and TMAP.

More intelligible explanations will be provided below.

The advanced video title set information file ADVTSI shown in FIG. 13 shall have a filename of "HVA00001.VTI". The extension of the filename of the primary enhanced video object file P-EVOB and that of the secondary enhanced video object file S-EVOB shall be "EVO". The extension of the filename of the time map file PTMAP of the primary video set and that of the time map file STMAP of the secondary video set shall be "MAP".

The number of files of the primary video set time map files PTMAP and secondary video set time map files STMAP shall be limited to 999 or fewer. By specifying the number of time map files, speeding up of access control to the enhanced object EVOB is guaranteed.

FIGS. 14A, 14B, and 14C show the data structure of an advanced content and explanations of effects and the like.

<Advanced Content>

Advanced Content realizes more interactivity in addition to the extension of audio and video realized by Standard Content. Advanced Content consists of followings.

· Playlist
· Primary Video Set
· Secondary Video Set
· Advanced Application
· Advanced Subtitle

Playlist gives playback information among presentation objects as shown in FIG. 14A. For instance, to play back Primary Video Set, a player reads a TMAP file by using URI described in the Playlist, interprets an EVOBI referred by the TMAP and access appropriate P-EVOB defined in the EVOBI. To present Advanced Application, a player reads a Manifest file by using URI described in the Playlist, and starts to present an initial Markup file described in the Manifest file after storing resource elements (including the initial file).

More intelligible explanations will be provided below.

In this embodiment, there is provided the advanced content ADVCT which further extends the audio and video expression format implemented by the standard content STDCT and realizes interactivity. The advanced content ADVCT consists of the playlist PLLST, the primary video set PRMVS, secondary video set SCDVS, advanced application ADAPL, and advanced subtitle ADSBT shown in FIG. 12. The playlist PLLST shown in FIG. 14A records information related with the playback methods of various kinds of object information, and these pieces of information are recorded as one playlist file PLLST under the advanced content directory ADVCT, as shown in FIG. 13.

<Playlist> (Again)

A Playlist file is described by XML and one or more Playlist file are located on a disc. A player interprets initially a Playlist file to play back Advanced Content. The Playlist file consists of following information.

· Object Mapping Information
· Track Number Assignment Information
· Track Navigation Information
· Resource Information
· Playback Sequence Information
· System Configuration Information
· Scheduled Control Information

More intelligible explanations will be provided below.

The playlist PLLST or the playlist file PLLST which records the playlist PLLST is described using XML, and one or more playlist files PLLST are recorded in the information storage medium DISC. In the information storage medium DISC which records the advanced content ADVCT that belongs to category 2 or category 3 in this embodiment, the information playback apparatus searches for the playlist file PLLST immediately after insertion of the information storage medium DISC. In this embodiment, the playlist file PLLST includes the following information.

1) Object mapping information OBMAPI
Object mapping information OBMAPI is set as playback information related with objects such as the primary video set PRMVS, secondary video set SCDVS, advanced application ADAPL, advanced subtitle ADSBT, and the like. In this embodiment, the playback timing of each object data is described in the form of mapping on a title timeline to be described later. In the object mapping information OBMAPI, the locations of the primary video set PRMVS and secondary video set SCDVS are designated with reference to a location (directory or URL) where their time map file PTMAP or time map file STMAP exists. In the object mapping information OBMAPI, the advanced application ADAPL and advanced subtitle ADSBT are determined by designating the manifest file MNFST corresponding to these objects or its location (directory or URL).

2) Track number assignment information
This embodiment allows to have a plurality of audio streams and sub-picture streams. On the playlist PLLST, information indicating what number of stream data is to be presented is described. The information indicating what number of stream is used is described as a track number. As the track number to be described, video track numbers for video streams, sub video track numbers for sub video streams, audio track numbers for audio streams, sub audio track numbers for sub audio streams, subtitle track numbers for subtitle streams, and application track numbers for application streams are set.

3) Track navigation information TRNAVI
Track navigation information TRNAVI describes related information for the assigned track numbers, and records attribute information for respective track numbers as lists for the sake of convenience for user's selection. For example, language codes and the like are recorded in the navigation information for respective track numbers: track No. 1 = Japanese; track No. 2 = English; track No. 3 = Chinese; and so forth. By utilizing the track navigation information TRNAVI, the user can immediately determine a favorite language.

4) Resource information RESRCI
Resource information RESRCI indicates timing information such as a time limit of transfer of a resource file into the file cache and the like. This resource information also describes reference timings of resource files and the like in the advanced application ADAPL.

5) Playback sequence information PLSQI
Playback sequence information PLSQI describes information, which allows the user to easily execute jump processing to a given chapter position, such as chapter information in a single title and the like. This playback sequence information PLSQI is presented as a time designation point on a title timeline TMLE.

6) System configuration information
System configuration information records structural information required to constitute a system such as a stream buffer size that represents the data size required upon storing data in the file cache via the Internet, and the like.

7) Scheduled control information SCHECI
Scheduled control information SCHECI records schedule indicating pause positions (timings) and event starting positions (timings) on the title timeline TMLE.

<Data Reference from Playlist>

FIG. 14A shows the data reference method to respective objects by the playlist PLLST. For example, when specific primary enhanced object P-EVOB is to be played back on the playlist PLLST, that primary enhanced object P-EVOB shall be accessed after enhanced video object information EVOBI which records its attribute information is referred to. The playlist PLLST specifies the playback range of the primary enhanced object P-EVOB as time information on the timeline. For this reason, the time map information PTMAP of the primary video set shall be referred to first as a tool used to convert the designated time information into the address position on the information storage medium DISC. Likewise, the playback range of secondary enhanced video object S-EVOB is also described as time information on the playlist PLLST. In order to search the data source of the secondary enhanced video object S-EVOB on the information storage medium DISC within that range, the time map information STMAP of the secondary video set SCDVS is referred to first. Data of the advanced application ADAPL shall be stored on the file cache before they are used by the information playback apparatus, as shown in FIG. 12. For this reason, in order to use various data of the advanced application ADAPL, the manifest file MNFST shall be referred to from the playlist PLLST to transfer various resource files described in the manifest file MNFST (the storage locations and resource filenames of the resource files are also described in the manifest file MNFST) onto the file cache FLCCH (data cache DTCCH). Similarly, in order to user various data of the advanced subtitle ADSBT, they shall be stored on the file cache FLCCH (data cache DTCCH) in advance. By utilizing the manifest file MNFSTS of the advanced subtitle ADSBT, data transfer to the file cache FLCCH (data cache DTCCH) can be made. Based on the markup file MRKUPS in the advanced subtitle ADSBT, the representation position and timing of the advanced subtitle ADSBT on the screen can be detected, and the font file FONTS in the advanced subtitle ADSBT can be utilized when the advanced subtitle ADSBT information is presented on the screen.

<Reference to Time Map>

In order to present the primary video set PRMVS, the time map information PTMAP shall be referred to and access processing to primary enhanced video object P-EVOB defined by the enhanced video object information EVOBI shall be executed.

<Network Route>

FIG. 15 shows an example of the network route from the network server NTSRV to the information recording and playback apparatus 1, which goes through the router 11 in the home via the optical cable 12 to attain data connection via a wireless LAN in the home. However, this embodiment is not limited to this. For example, this embodiment may have another network route. FIG. 15 illustrates a personal computer as the information recording and playback apparatus 1. However, this embodiment is not limited to this. For example, a single home recorder or a single home player may be set as the information recording and playback apparatus. Also, data may be directly displayed on the monitor by a wire without using the wireless LAN.

In this embodiment, the network server NTSRV shown in FIG. 15 stores information of the secondary video set SCDVS, advanced application ADAPL, and advanced subtitle ADSBT shown in FIG. 12 in advance, and these pieces of information can be delivered to the home via the optical cable 12. Various data sent via the optical cable 12 are transferred to the information recording and playback apparatus 1 in the form of wireless data 17 via the router 11 in the home. The router 11 comprises the wireless LAN controller 7-2, data manager 9, and network controller 8. The network controller 8 controls data updating processing with the network server NTSRV, and the wireless LAN controller 7-2 transfers data to the home wireless LAN. The data manager 9 controls such data transfer processing. Data of various contents of the secondary video set SCDVS, advanced application ADAPL, and advanced subtitle ADSBT, which are sent to be multiplexed on the wireless data 17 from the router 11, are received by the wireless LAN controller 7-1, and are then sent to the advanced content playback unit ADVPL, and some data are stored in the data cache DTCCH shown in FIG. 16. The information playback apparatus of this embodiment incorporates the advanced content playback unit ADVPL which plays back the advanced content ADVCT, the standard content playback unit STDPL which plays back the standard content STDCT, and the recording and playback processor 4 which performs video recording on the recordable information storage medium DISC or the hard disk device 6 and can play back data from there. These playback units and the recording and playback processor 4 are organically controlled by the main CPU 5. As shown in FIG. 15, information is played back or recorded from or on the information storage medium DISC in the information recording and playback unit 2. In this embodiment, media to be played back by the advanced content playback unit ADVPL are premised on playback of information from the information recording and playback unit 2 or the persistent storage drive (fixed or portable flash memory drive) 3. In this embodiment, as described above, data recorded on the network server NTSRV can also be played back. In this case, as described above, data saved in the network server NTSRV go through the optical cable 12, go through the wireless LAN controller 7-2 in the router 11 under the network control in the router 11 to be transferred in the form of wireless data 17, and are then transferred to the advanced content playback unit ADVPL via the wireless LAN controller 7-1. Video information to be played back by the advanced content playback unit ADVPL can be displayed on the wide-screen TV monitor 15 from the wireless LAN controller 7-1 in the form of wireless data 18 when it can be displayed on the display 13 or when a user request of presentation on a wider screen is detected. The wide-screen TV monitor 15 incorporates the video processor 24, video display unit 21, and wireless LAN controller 7-3. The wireless data 18 is received by the wireless LAN controller 7-3, then undergoes video processing by the video processor 24, and is displayed on the wide-screen TV monitor 15 via the video display unit 21. At the same time, audio data is output via the loudspeakers 16-1 and 16-2. The user can make operations on a window (menu window or the like) displayed on the display 13 using the keyboard 14.

<Internal Structure of Advanced Content Playback Unit>

The internal structure of the advanced content playback unit ADVPL in the system explanatory diagram shown in FIG. 15 will be described below with reference to FIG. 16. In this embodiment, the advanced content playback unit ADVPL comprises the following five logical functional modules.

<Data Access Manager>

Data Access Manager is responsible to exchange various kind of data among data sources and internal modules of Advanced Content Player.

More intelligible explanations will be provided below.

A data access manager DAMNG is used to manage data exchange between the external data source where the advanced content ADVCT is recorded, and modules in the advanced content playback unit ADVPL. In this embodiment, as the data source of the advanced content ADVCT, the persistent storage PRSTR, network server NTSRV, and information storage medium DISC are premised, and the data access manager DAMNG exchanges information from them. Various kinds of information of the advanced content ADVCT are exchanged with a navigation manager NVMNG (to be described later), the data cache DTCCH, and a presentation engine PRSEN via the data access manager DAMNG.

<Data Cache>

Data Cache is temporal data storage for Advanced Content playback.

More intelligible explanations will be provided below.

The data cache DTCCH is used as a temporal data storage (temporary data save location) in the advanced content playback unit ADVPL.

<Navigation Manager>

Navigation Manager is responsible to control all functional modules of Advanced Content player in accordance with descriptions in Advanced Application. Navigation Manager is also responsible to control user interface devices, such as remote controller or front panel of a player. Received user interface device events are handled in Navigation Manager.

More intelligible explanations will be provided below.

The navigation manager NVMNG controls all functional modules of the advanced content playback unit ADVPL in accordance with the description contents of the advanced application ADAPL. This navigation manager NVMNG also makes control in response to a user operation UOPE. The user operation UOPE is generated based on key in on a front panel of the information playback apparatus, that on a remote controller, and the like. Information received from the user operation UOPE generated in this way is processed by the navigation manager NVMNG.

<Presentation Engine>

Presentation Engine is responsible for playback of presentation materials, such as Advanced Element of Advanced Application, Advanced Subtitle, Primary Video Set and Secondary Video set.

The presentation engine PRSEN performs presentation playback of the advanced content ADVCT.

<AV Renderer>

AV Renderer is responsible to composite video inputs and mix audio inputs from other modules and output to external devices such as speakers and display.

More intelligible explanations will be provided below.

An AV renderer AVRND executes composition processing of video information and audio information input from other modules, and externally outputs composite information to the loudspeakers 16-1 and 16-2, the wide-screen TV monitor 15, and the like. The audio information used in this case may be either independent stream information or audio information obtained by mixing the sub audio SUBAD and main audio MANAD.

<Implementation of Automatic Updating of Object Information, etc.>

A practical example of new effects obtained as a result of the technical devices according to this embodiment, which have been described using FIGS. 1 to 3, will be described below with reference to FIGS. 17 to 19. As a method of exhibiting a new effect 5.1) "Automatic updating of object information and intra-disc management information" of 5] "Provide information update function on disc using network," in this embodiment, as shown in FIGS. 17 to 19, the commercial 44 as commercial information, the independent window 32 for a commercial, the telop commercial 43, and the preview 41 can always be supplied to the user as the latest video information. This point is a large technical feature in this embodiment.

By always changing the preview 41 to the latest information, the preview of the movie can be timely conducted to the users so as to create an opportunity to call them to a movie theater. In this embodiment, since the commercials (commercial 44, independent window 32 for a commercial, and telop commercial 43) are presented to be linked with playback of the main title 31, sponsor charges are collected from commercial sponsors like in normal TV broadcasting, thus holding down the sales prices of the information storage media to the users. The concept of insertion of commercials into video information has been popularly proposed conventionally. In this embodiment, the latest commercial information is read from the network server NTSRV and the latest commercial information is presented to be linked with showing of the main title 31 recorded on the information storage medium DISC. This point is a large technical feature in this embodiment. The latest preview 41 and commercial information are sequentially updated and saved in the network server NTSRV shown in FIG. 15, and are downloaded via the network in synchronism with the playback timing of the main title 31 recorded in the information storage medium DISC. The relationship between respective objects shown in FIGS. 17 to 19 and those shown in FIG. 12 will be described below.

In FIGS. 17 to 19, the main title 31 includes the main video MANVD and main audio MANAD of the primary audio video PRMAV in the primary video set PRMVS. The preview 41, commercial 44, and independent window 32 for a commercial are also recorded as the sub video SUBVD and sub audio SUBAD of the primary audio video PRMAV in the primary video set PRMVS in the information storage medium DISC. However, when a specific period of time has elapsed after creation of the information storage medium DISC, these pieces of information become too old to be presented. In such case, these pieces of information are substituted by the sub video SUBVD and sub audio SUBAD of the secondary audio video SCDAV in the secondary video set SCDVS saved in the network server NTSRV, and are presented as the commercial 44 or the independent window 32 for a commercial. In this embodiment, the commercial 44 which is recorded in advance on the information storage medium DISC can be recorded as the main video MANVD and main audio MANAD of the primary audio video PRMAV in the primary video set PRMVS as another embodiment. Likewise, when information of the preview 41 is recorded in the information storage medium DISC, it is recorded in the sub video SUBVD and sub audio SUBAD of the primary audio video PRMAV in the primary video set PRMVS or in the main video MANVD and main audio MANAD of the primary audio video PRMAV. When a specific period of time has elapsed after creation of the information storage medium DISC upon playback, that information is downloaded from the network server NTSRV as information of the sub video SUBVD and sub audio SUBAD in the secondary audio video SCDAV in the secondary video set SCDVS, and the downloaded information is presented. In this way, according to this embodiment, the commercial 44, information of the independent window 32 for a commercial or telop commercial 43, and the preview 41 can always be presented to the user as the latest ones, thus improving the PR effects.

<Detailed Playback Method of Video Content>

Presentation examples of the video content in this embodiment will be described in detail below with reference to FIGS. 17 to 19.

In FIG. 17, when the information storage medium DISC is inserted into the information recording and playback apparatus 1, the necessity explanatory video information 42 of detailed navigation is presented first. If the user does not feel the necessity of detailed navigation, he or she ignores it. However, if the user wants to see an explanation of the method of playing back the advanced content ADVCT on this information storage medium DISC, he or she inputs necessity of detailed navigation to present directions of use of detailed navigation (not shown). In case of FIG. 19, how to use a help key (to be described later) is explained in the necessity explanatory video information 42 of detailed navigation, and a help icon is presented all the time. As a result, the user can designate the help icon when needed to ask for an explanation of the use method.

In FIG. 17, the aforementioned commercial 44 is inserted in the middle of presentation of the main title 31 like in the broadcast TV screen, and the presentation method and timing of the commercial 44 are the same as those of commercials normally presented on broadcast reception TVs. In FIG. 17, the preview 41 of a forthcoming movie of the content provider of the information storage medium DISC is presented after completion of presentation of the main title 31.

In FIG. 18, the latest commercial 43 is presented to be superimposed on presentation of the main title 31 in the form of a telop. As a method of always updating the presentation information of the telop commercial 43 to the latest information, this embodiment utilizes the advanced subtitle ADSBT with the aid of network downloading. This point is a large technical feature in this embodiment. That is, at an early timing, the telop commercial 43 is presented in the form of a telop (running text information) in the sub-picture SUBPT of the primary audio video PRMAV in the primary video set PRMVS. When a specific period of time has elapsed after the manufacture of the information storage medium DISC, since the latest information of the telop commercial 43 is recorded as the advanced subtitle ADSBT in the network server NTSRV, it is downloaded via the network and is presented as the telop commercial 43.

A video content presentation example in FIG. 19 will be explained below. In FIG. 19, the preview 41 of a movie to be screened in a movie theater is presented immediately after the necessity explanatory video information 42 of detailed navigation, and the main title 31 is presented after presentation of the preview 41. In this case, the independent window 32 for a different commercial is presented in addition to the main title 31, and the help icon 33 is presented at the same time. In this embodiment, the contents of the main title 31 are recorded in advance in the information storage medium DISC as the main video MANVD and main audio MANAD of the primary audio video PRMAV in the primary video set PRMVS. The independent window 32 for a different commercial is recorded as the sub video SUBVD and sub audio SUBAD of the primary audio video PRMAV in the primary video set PRMVS in the information storage medium DISC. This information is presented to the user at an early timing. When a specific period of time has elapsed after the manufacture of the information storage medium DISC, the independent window 32 for a different commercial can present an updated video information in this embodiment. As this method, information of the independent window 32 for the latest commercial is saved in the network server NTSRV as the sub video SUBVD and sub audio SUBAD of the secondary audio video SCDAV in the secondary video set SCDAV, and is downloaded as needed via the network, thus presenting the latest information to the user. In the embodiment in FIG. 19, the help icon 33 includes the still picture file IMAGE and script file SCRPT of the advanced application ADAPL.

<Practical Example of Presentation Window>

FIG. 20 shows an example of the presentation window at point $\alpha$ when the main title 31, the independent window 32 for a commercial, and the help icon 33 are displayed at the same time in FIG. 19.

The main title 31 is presented on the upper left area in FIG. 20, the independent window 32 for a commercial is presented on the upper right area, and the help icon 33 is presented on the lower area. New effects as a result of the technical devices according to this embodiment shown in the window of FIG. 20 and FIGS. 1 to 3 will be described below.

As for 1] "Make flexible and impressive reactions in response to user's actions" as the new effect obtained as a result of the technical devices according to this embodiment described using FIGS. 1 to 3, a flexible and impressive window close to a homepage on the Internet can be created in this embodiment. The help icon 33 in FIG. 20 corresponds to 1.4) "PC-like help" and 1.5) "How to use guide of menu, etc.," as the practical new effects of this embodiment. Picture data of the help icon 33 on this window exists as the still picture file IMAGE of the advanced application ADAPL, and its information is stored in the advanced element directory ADVEL in the advanced application directory ADAPL under the advanced content directory ADVCT in the information storage medium DISC shown in FIG. 13. When the user clicks the help icon 33, a help compatible picture begins to move. Command processing related with such movement is recorded in the script file SCRPT in the advanced application ADAPL, i.e., it is stored in the script file SCRPT under the advanced navigation directory ADVNV in the advanced application directory ADAPL under the advanced content directory ADVCT in FIG. 13. Information used to designate the still picture of the help icon 33 and an area defined by the script file is recorded in the markup file MRKUP shown in FIG. 13, and associating information (related information required to download data) among these pieces of information is recorded in the manifest file MNFST. A plurality of pieces of information such as the stop button 34, play button 35, FR (fast-rewinding) button 36, pause button 37, FF (fast-forwarding) button 38, and the like shown in FIG. 20 are categorized as the advanced application ADAPL. Still pictures corresponding to these icons are stored in the still picture file IMAGE in FIG. 13, execution commands upon designation of each of these buttons are recorded in the script file in FIG. 13, and their area designations are recorded in the markup file MRKUP.

The window in FIG. 20 which corresponds to 3.1) "Simultaneously present a plurality of pieces of video information by means of multi-windows" and 3.4) "Simultaneously present scrolling text to be superimposed on video information" of 3] "Simultaneously present independent information to be superimposed on video information during playback" of the new effects as a result of the technical devices according to this embodiment shown in FIGS. 1 to 3 will be described below.

In the existing DVD, only one type of video information can be displayed on one window. By contrast, in this embodiment, the sub video SUBVD and sub audio SUBAD can be presented simultaneously with the main video MANVD and main audio MANAD. More specifically, the main title 31 in FIG. 20 corresponds to the main video MANVD and main audio MANAD in the primary video set PRMVS, and the independent window 32 for a commercial on the right side corresponds to the sub video SUBVD and sub audio SUBAD, so that the two windows can be displayed at the same time. Furthermore, in this embodiment, the independent window 32 for a commercial on the right side in FIG. 20 can be presented by substituting it by the sub video SUBVD and sub audio SUBAD in the secondary video set SCDVS. This point is a large technical feature in this embodiment. That is, the sub video SUBVD and sub audio SUBAD in the primary audio video of the primary video set PRMVS are recorded in advance in the information storage medium DISC, and the sub video SUBVD and sub audio SUBAD in the secondary video set SCDVS to be updated are recorded in the network server NTSRV. Immediately after creation of the information storage medium DISC, the independent window 32 for a commercial recorded in advance in the information storage medium DISC is presented. When a specific period of time has elapsed after creation of the information storage medium DISC, the sub video SUBVD and sub audio SUBAD in the secondary video set SCDVS recorded in the network server NTSRV are downloaded via the network and are presented to update the independent window 32 for a commercial to the latest video information. In this manner, the independent window 32 for the latest commercial can always be presented to the user, thus improving the commercial effect of a sponsor. Therefore, by collecting a large amount of commercial charge from the sponsor, the price of the information storage medium DISC to be sold can be hold down, thus promoting prevalence of the information storage medium DISC in this embodiment. In addition, a telop text message 39 shown in FIG. 20 can be presented to be superimposed on the main title 31. As the telop text message, the latest information such as news, weather forecast, and the like is saved on the network server NTSRV in the form of the advanced subtitle ADSBT, and is presented while being downloaded via the network as needed, thus greatly improving the user's convenience. Note that text font information of the telop text message at that time can be stored in the font file FONTS in the advanced element directory ADVEL in the advanced subtitle directory ADSBT, as shown in FIG. 13. Information about the size and presentation position on the main title 31 of this telop text message 39 can be recorded in the markup file MRKUPS of the advanced subtitle ADSBT in the advanced navigation directory ADVNV under the advanced subtitle directory ADSBT in FIG. 13.

<Overview of Information in Playlist>

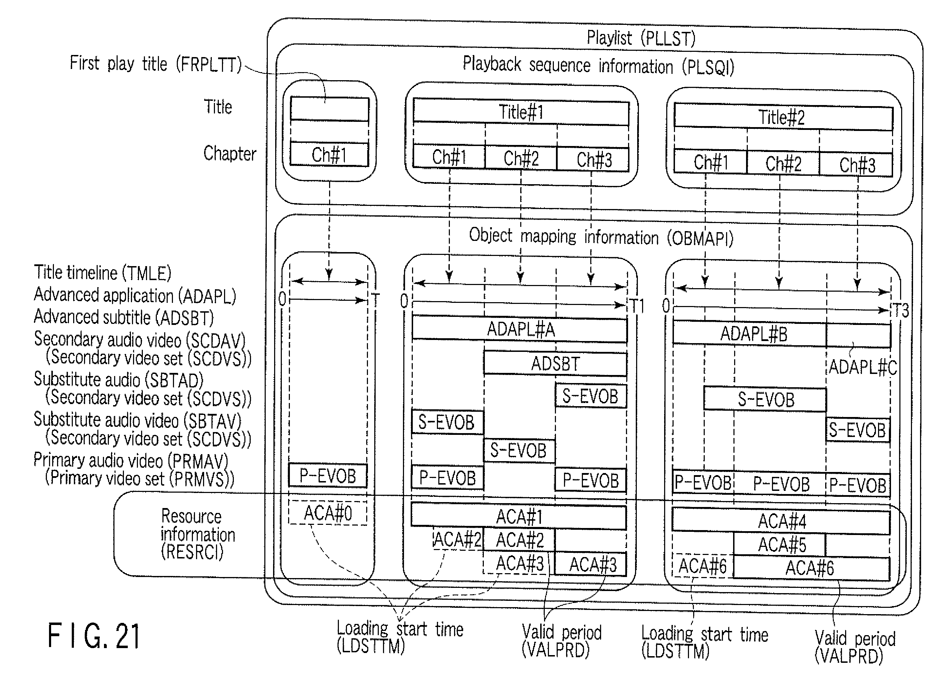

An overview of information in the playlist PLLST in this embodiment will be described below with reference to FIG. 21. The playlist PLLST in this embodiment is recorded in the playlist file PLLST located immediately under the advanced content directory ADVCT in the information storage medium DISC or persistent storage PRSTR, as shown in FIG. 13, and records management information related with playback of the advanced content ADVCT. The playlist PLLST records information such as playback sequence information PLSQI, object mapping information OBMAPI, resource information RESRCI, and the like. The playback sequence information PLSQI records information of each title in the advanced content ADVCT present in the information storage medium DISC, persistent storage PRSTR, or network server NTSRV, and division position information of chapters that divide video information in the title. The object mapping information OBMAPI manages the presentation timings and positions on the screen of respective objects of each title. Each title is set with a title timeline TMLE, and the presentation start and end timings of each object can be set using time information on that title timeline TMLE. The resource information RESRCI records information of the prior storage timing of each object information to be stored in the data cache DTCCH (file cache FLCCH) before it is presented on the screen for each title. For example, the resource information RESRCI records information such as a loading start time LDSTTM for starting loading onto the data cache DTCCH (file cache FLCCH), a use valid period VALPRD in the data cache DTCCH (file cache FLCCH), and the like.

<Presentation Control Based on Title Timeline>

As shown in FIG. 21, management information which designates an object to be presented and its presentation location on the screen is hierarchized into two levels, i.e., the playlist PLLST, and the markup file MRKUP and the markup file MRKUPS in the advanced subtitle ADSBT (via the manifest file MNFST and the manifest file MNFSTS in the advanced subtitle ADSBT), and the presentation timing of an object to be presented in the playlist PLLST is set in synchronism with the title timeline TMLE. This point is a large technical feature in this embodiment. In addition, the presentation timing of an object to be presented is set in synchronism with the title timeline TMLE similarly in the markup file MRKUP or the markup file MRKUPS of the advanced subtitle ADSBT. This point is also a large technical feature in this embodiment. Furthermore, in this embodiment, the information contents of the playlist PLLST as management information that designates the object to be presented and its presentation location, the markup file MRKUP, and the markup file MRKUPS of the advanced subtitle ADSBT are described using an identical description language (XML). This point is also a large technical feature in this embodiment, as will be described below. With this feature, easy edit and change processing of the advanced content ADVCT by its producer can be greatly improved compared to the conventional DVD-Video. As another effect, processing such as skip processing of the playback location and the like in the advanced content playback unit ADVPL which performs presentation processing upon special playback can be simplified.

<Relationship between Various Kinds of Information on Window and Playlist>

A description of features of this embodiment will be continued with reference to FIG. 20. In FIG. 20, the main title 31, the independent window 32 for a commercial, and various icon buttons on the lower area are presented on the window. The main video MANVD in the primary video set PRMVS is presented on the upper left area of the window as the main title 31, and its presentation timing is described in the playlist PLLST. The presentation timing of this main title 31 is set in synchronism with the title timeline TMLE. The presentation location and timing of the independent window 32 for a commercial recorded as, e.g., the sub video SUBVD are also described in the aforementioned same playlist PLLST. The presentation timing of this the independent window 32 for a commercial is also designated in synchronism with the title timeline TMLE. In the existing DVD-Video, the window from the help icon 33 to the FF button 38 in, e.g., FIG. 20 is recorded as the sub-picture SUBPT in a video object, and command information executed upon depression of each button from the help icon 33 to the FF button 38 is similarly recorded as highlight information HLI in a navigation pack in the video object. As a result, easy edit and change processing by the content producer is not allowed. By contrast, in this embodiment, a plurality of pieces of command information corresponding to window information from the help icon 33 to the FF button 38 are grouped together as the advanced application ADAPL, and only the presentation timing and the presentation location on the window of the grouped advanced application ADAPL are designated on the playlist PLLST. Information related with the grouped advanced application ADAPL shall be downloaded onto the file cache FLCCH (data cache DTCCH) before it is presented on the window. The playlist PLLST describes only the filename and file saving location of the manifest file MNFST (manifest file MNFSTS) that records information required to download data related with the advanced application ADAPL and advanced subtitle ADSBT. The plurality of pieces of window information themselves from the help icon 33 to the FF button 38 in FIG. 20 are saved in the advanced element directory ADVEL as still picture files IMAGE (see FIG. 13). Information which manages the locations on the window and presentation timings of respective still pictures IMAGE from the help icon 33 to the FF button 38 in FIG. 20 is recorded in the markup file MRKUP. This information is recorded in the markup file MRKUP in the advanced navigation directory ADVNV in FIG. 13. Each control information (command information) to be executed upon pressing of each of buttons from the help icon 33 to the FF button 38 is saved in the script file SCRPT in the advanced navigation directory ADVNV in FIG. 13, and the filenames and file saving locations of these script files SCRPT are described in the markup file MRKUP (and manifest file MNFST). In FIG. 13, the markup file MRKUP, script file SCRPT, and still picture file IMAGE are recorded in the information storage medium DISC. However, this embodiment is not limited to this, and these files may be saved in the network server NTSRV or persistent storage PRSTR. In this way, the overall layout and presentation timing on the window are managed by the playlist PLLST, and the layout positions and presentation timings of respective buttons and icons are managed by the markup file MRKUP. The playlist PLLST makes designation with respect to the markup file MRKUP via the manifest file MNFST. Video information and commands (scripts) of various icons and buttons, and command information are stored in independent files compared to the conventional DVD-Video in which they are stored in a video object, and undergo middle management using the markup file MRKUP. This structure can greatly facilitate edit and change processing of the content producer. As for the telop text message 39 shown in FIG. 20, the playlist PLLST designates the filename and file saving location of the markup file MRKUPS of the advanced subtitle via the manifest file MNFSTS of the advanced subtitle (see FIG. 13). The markup file MRKUPS of the advanced subtitle is recorded not only in the information storage medium DISC but it can also be saved on the network server NTSRV or persistent storage PRSTR in this embodiment.

<Playlist> (Again)

Playlist is used for two purposes of Advanced Content playback. The one is for initial system configuration of a player. The other is for definition of how to play plural kind of presentation objects of Advanced Content. Playlist consists of following configuration information for Advanced Content playback.

· Object Mapping Information for each Title

>Track Number Assignment
>Resource Information

· Playback Sequence for each Title
· Scheduled Control Information for each Title
· System Configuration for Advanced Content playback

More intelligible explanations will be provided below.
In this embodiment, upon playback of the advanced content ADVCT, there are two use purposes of the playlist PLLST, as will be described below. The first use purpose is to define the initial system structure (advance settings of the required memory area in the data cache DTCCH and the like) in the information playback apparatus 1. The second use purpose is to define the playback methods of plural kind of presentation objects in the advanced content ADVCT. The playlist PLLST has the following configuration information.

1) Object mapping information OBMAPI of each title

>Track number assignment
>Resource information RESRCI

2) Playback sequence information PLSQI of each title
3) System configuration for playback of the advanced content ADVCT

<Resource Information>

On Object Mapping Information in Playlist, there is information element which specifies when resource files are needed for Advanced Application playback or Advanced Subtitle playback. They are called Resource Information. There are two types of Resource Information. The one is the Resource Information which is associated to Application. The other is the Resource Information which is associated to Title.

More intelligible explanations will be provided below.

An overview of the resource information RESRCI shown in FIG. 21 will be described below. The resource information RESRCI records information indicating which timings resource files that record information needed to play back the advanced application ADAPL and advanced subtitle ADSBT are to be stored on the data cache DTCCH (file cache FLCCH) in the object mapping information OBMAPT in the playlist PLLST. In this embodiment, there are two different types of resource information RESRCI. The first type of resource information RESRCI is that related with the advanced application ADAPL, and the second type is that related with the advanced subtitle ADSBT.

<Relationship between Track and Object Mapping>

Each Object Mapping Information of Presentation Object on Title Timeline can contain Track Number Assignment information in Playlist. Track is to enhance selectable presentation streams through the different Presentation Objects in Advanced Content. For example, it is possible to select to play main audio stream in Substitute Audio in addition to the selection of main audio streams in Primary Audio Video. There are five types of Tracks. They are main video, main audio, subtitle, sub video and sub audio.

More intelligible explanations will be provided below.

The object mapping information OBMAPI corresponding to various objects to be presented on the title timeline TMLE shown in FIG. 21 includes track number assignment information defined in the playlist PLLST.

In the advanced content ADVCT of this embodiment, track numbers are defined to select various streams corresponding to different objects. For example, audio information to be presented to the user can be selected from a plurality of pieces of audio information (audio streams) by designating the track number. As shown in, e.g., FIG. 12, the substitute audio SBTAD includes the main audio MANAD, which often includes a plurality of audio streams having different contents. By designating an audio track number defined in advance in the object mapping information OBMAPI (track number assignment), an audio stream to be presented to the user can be selected from a plurality of audio streams. Also, audio information which is recorded as the main audio MANAD in the substitute audio SBTAD can be output to be superposed on the main audio MANAD in the primary audio video PRMAV. In some cases, the main audio MANAD in the primary audio video PRMAV, which is to be superposed upon output, often has a plurality of pieces of audio information (audio streams) having different contents. In such case, an audio stream to be presented to the user can be selected from a plurality of audio streams by designating an audio track number which is defined in advance in the object mapping information OBMAPI (track number assignment).

In the aforementioned track, five different objects, i.e., the main video MANVD, main audio MANAD, subtitle ADSBT, sub video SUBVD, and sub audio SUBAD exist, and these five different objects can simultaneously record a plurality of streams having different contents. For this reason, track numbers are assigned to individual streams of these five different object types, and a stream to be presented to the user can be selected by selecting the track number.

<Information of explanatory title, Telop, etc.>

In this embodiment, there are two methods of displaying information of the explanatory title, telop, and the like, i.e., a method of displaying such information using the sub-picture SUBPT in the primary audio video PRMAV and a method of displaying such information using the advanced subtitle ADSBT. In this embodiment, mapping of the advanced subtitle ADBST on the timeline TMLE can be independently defined on the object mapping information OBMAPI irrespective of, e.g., the mapping situation of the primary audio video PRMAV and the like. As a result, not only pieces of information such as a title and telop, i.e., the sub-picture SUBPT in the primary audio video PRMAV and the advanced subtitle ADSBT can be simultaneously presented, but also their presentation start and end timings can be respectively uniquely set. Also, one of them can be selectively presented, thereby greatly improving the presentation performance of the subtitle and telop.

In FIG. 21, a part corresponding to the primary audio video PRMAV is indicated by a single band as P-EVOB. In fact, this band includes main video MANVD tracks, main audio MANAD tracks, sub video SUBVD tracks, sub audio SUBAD tracks, and sub-picture SUBPT tracks. Each object includes a plurality of tracks, and one track (stream) is selected and presented upon presentation. Likewise, the secondary video set SCDVS is indicated by bands as S-EVOB, each of which includes sub video SUBVD tracks and sub audio SUBAD tracks. Of these tracks, one track (one stream) is selected and presented. If the primary audio video PRMAV alone is mapped on the object mapping information OBMAPI on the title timeline TMLE, the following rules are specified in this embodiment to assure easy playback control processing.

- The main video stream MANVD shall always be mapped on the object mapping information OBMAPI and played back.
- One track (one stream) of the main audio streams MANAD is mapped on the object mapping information OBMAPI and played back (but it may not be played back). This embodiment permits to map none of the main audio streams MANAD on the object mapping information OBMAPI, regardless of such rule.
- Under the precondition, the sub video stream SUBVD mapped on the title timeline TMLE is to be presented to the user, but it is not always presented (by user selection or the like).
- Under the precondition, one track (one stream) of the sub audio streams SUBAD mapped on the title timeline TMLE is to be presented to the user, but it is not always presented (by user selection or the like).
  If the primary audio video PRMAV and the substitute audio SBTAD are simultaneously mapped on the title timeline TMLE and are simultaneously presented, the following rules are specified in this embodiment, thus assuring easy control processing and reliability in the advanced content playback unit ADVPL.
- The main video MANVD in the primary audio video PRMAV shall be mapped in the object mapping information OBMAPI and shall be necessarily played back.
- The main audio stream MANAD in the substitute audio SBTAD can be played back in place of the main audio stream MANAD in the primary audio video PRMAV.
- Under the precondition, the sub video stream SUBVD is to be simultaneously presented with given data, but it is not always presented (by user selection or the like).
- Under the precondition, one track (one stream) (of a plurality of tracks) of the sub audio SUBAD is to be presented, but it is not always presented (by user selection or the like).
  When the primary audio video PRMAV and the secondary audio video SCDAV are simultaneously mapped on the title timeline TMLE in the object mapping information OBMAPI, the following rules are specified in this embodiment, thus assuring simple processing and high reliability of the advanced content playback unit ADVPL.
- The main video stream MANVD in the primary audio video PRMAV shall be played back.
- Under the precondition, one track (one stream) of the main audio streams MANAD is to be presented, but it is not always presented (by user selection or the like).
- The sub video stream SUBVD and sub audio stream SUBAD in the secondary audio video SCDAV can be played back in place of the sub video stream SUBVD and sub audio stream SUBAD in the primary audio video PRMAV. When sub video stream SUBVD and sub audio stream SUBAD are multiplexed and recorded in the secondary enhanced video object S-EVOB in the secondary audio video SCDAV, playback of the sub audio stream SUBAD alone is inhibited.

<Object Mapping Position>

Time code for Title Timeline is 'Time code'. It is based on non-drop frame and described as HH:MM:SS:FF.

The life period of all presentation objects shall be mapped and described by Time code values onto Title Timeline. Presentation end timing of audio presentation may not be exactly same as Time code timing. In this case, the end timing of audio presentation shall be rounded up to Video System Time Unit (VSTU) timing from the last audio sample presentation timing. This rule is to avoid overlapping of audio presentation objects on the time on Title Timeline.

Video presentation timing for 60 Hz region, even if presentation object is 1/24 frequency, it shall be mapped at 1/60 VSTU timing. For video presentation timing of Primary Audio Video or Secondary Audio Video, it shall have 3:2 pull-down information in elementary stream for 60 Hz region, so presentation timing on the Title Timeline is derived from this information for video presentation. For graphical presentation timing of Advanced Application or Advanced Subtitle with 1/24 frequency, it shall follow graphic output timing model in this specification.

There are two conditions between 1/24 timing and 1/60 time code unit timing. The one is exactly matches both timings, and the other is mismatches between them. In case mismatch timing of 1/24 presentation object frame, it shall be rounded up to the most recent 1/60 time unit timing.

More intelligible explanations will be provided below.

A method of setting a unit of the title timeline TMLE in this embodiment will be explained below.

The title timeline TMLE in this embodiment has time units synchronized with the presentation timings of frames and fields of video information, and the time on the title timeline TMLE is set based on the count value of time units. This point is a large technical feature in this embodiment. For example, in the NTSC system, interlaced display has 60 fields and 30 frames per second. Therefore, the duration of a minimum time unit on the title timeline TMLE is divided into 60 per second, and the time on the title timeline TMLE is set based on the count value of the time units. Also, progressive display in the NTSC system has 60 fields = 60 frames per second, and matches the aforementioned time units. The PAL system is a 50-Hz system, and interlaced display has 50 fields and 25 frames per second, and progressive display has 50 fields = 50 frames per second. In case of video information of the 50-Hz system, the title timeline TMLE is equally divided into 50 units per second, and the time and timing on the title timeline TMLE is set based on a count value with reference to the equally divided one interval (1/50 sec). In this manner, since the reference duration (minimum time unit) of the title timeline TMLE is set in synchronism with the presentation timings of fields and frames of video information, synchronized timing presentation control among respective pieces of video information can be facilitated, and time settings with the highest precision within a practically significant range can be made.

As described above, in this embodiment, the time units are set in synchronism with fields and frames of video information, i.e., one time unit in the 60-Hz system is 1/60 sec, and one time unit in the 50-Hz system is 1/50 sec. At respective time unit positions (times), the switching timings (presentation start or end timing or switching timing to another frame) of all presentation objects are controlled. That is, in this embodiment, the presentation periods of every presentation objects are set in synchronism with the time units (1/60 sec or 1/50 sec) on the title timeline TMLE. The frame interval of audio information is often different from the frame or field interval of the video information. In such case, as the playback start and end timings of the audio information, the presentation period (presentation start and end times) is set based on timings which are rounded out in correspondence with the unit interval on the title timeline TMLE. In this way, presentation outputs of a plurality of audio objects can be prevented from overlapping on the title timeline TMLE.

When the presentation timing of the advanced application ADAPL information is different from the unit interval of the title timeline TMLE (for example, when the advanced application ADAPL has 24 frames per second and its presentation period is expressed on the title timeline of the 60-Hz system), the presentation timings (presentation start and end times) of the advanced application ADAPL are rounded out in correspondence with the title timeline TMLE of the 60-Hz system (time unit = 1/60 sec).

<Timing Model for Advanced Application>

Advanced Application (ADV APP) consists of one or plural Markup(s) files which can have one-directional or bi-directional links each other, script files which shares a name space belonging to the Advanced Application, and Advanced Element files which are used by the Markup (s) and Script(s). Valid period of each Markup file in one Advanced Application is the same as the valid period of Advanced Application which is mapped on Title Timeline. During the presentation of one Advanced Application, active Markup is always only one. An active Markup jumps one to another. The valid period one Application is divided to three major periods; pre-script period, Markup presentation period and post-script period.

More intelligible explanations will be provided below.

In this embodiment, the valid period of the advanced application ADAPL on the title timeline TMLE can be divided into three periods i.e., a pre-script period, markup presentation period, and post-script period. The markup presentation period represents a period in which objects of the advanced application ADAPL are presented in correspondence with time units of the title timeline TMLE based on information of the markup file MRKUP of the advanced application ADAPL. The pre-script period is used as a preparation period of presenting the window of the advanced application ADAPL prior to the markup presentation period. The post-script period is set immediately after the markup presentation period, and is used as an end period (e.g., a period used in release processing of memory resources) immediately after presentation of respective presentation objects of the advanced application ADAPL. This embodiment is not limited to this. For example, the pre-script period can be used as a control processing period (e.g., to clear the score of a game given to the user) prior to presentation of the advanced application ADAPL. Also, the post-script period can be used in command processing (e.g., point-up processing of the score of a game of the user) immediately after playback of the advanced application ADAPL.

<Application Sync Model>

There are two kind of application which has following two Sync Models:

· Soft-Sync Application
. Hard-Sync Application

The information of sync type is defined by sync attribute of application segment in Playlist. In Soft-Sync Application and Hard-Sync Application, the behavior to Title Timeline differs at the time of execution preparation of application. Execution preparation of application is resource loading and other startup process (such as script global code execution). Resource loading is reading resource from storage (DISC, Persistent Storage and Network Server) and store to the File Cache. Every application shall not execute before all resource loading is finished.

More intelligible explanations will be provided below.

The window during the aforementioned markup presentation period will be described below. Taking the presentation window in FIG. 20 as an example, when the stop button 34 is pressed during presentation of video information in this embodiment, that video information stops, and the window presentation of, e.g., changing the shape and color of the stop button 34 can be changed. This means the effect of 1.1) "Make response by means of change in animation and image at the time of button selection or execution instruction" in 1] "Make flexible and impressive reactions in response to user's actions" described in the column "New effects obtained as a result of technical devices" shown in FIGS. 1 to 3. When the display window itself of FIG. 20 is largely changed as in the above example, the corresponding markup file MRKUP jumps to another markup file MRKUP in the advanced application ADAPL. In this way, by jumping the markup file MRKUP that sets the presentation window contents of the advanced application ADAPL to another markup file MRKUP, the apparent window presentation can be greatly changed. That is, in this embodiment, a plurality of markup files MRKUP are set in correspondence with different windows during the markup presentation period, and are switched in correspondence with switching of the window (the switching processing is executed based on a method described in the script file SCRPT). Therefore, the start timing of a markup page on the title timeline TMLE during the presentation period of the markup file MRKUP matches the presentation start timing of the one to be presented first of the plurality of markup files MRKUP, and the end timing of a markup page on the title timeline TMLE matches the presentation end timing of the last one of the plurality of markup files MRKUP. As a method of jumping the markup pages (changing the presentation window of the advanced application ADAPL part in the presentation window), this embodiment specifies the following two sync models.

· Soft-Sync Application
· Hard-Sync Application

<Soft-Sync Application>

Soft-Sync Application gives preference to seamless proceeding of Title Timeline over execution preparation. If 'auto Run' attribute is 'true' and application is selected then resources will load into the File Cache by soft synced mechanism. Soft-Sync Application is activated after that all resources loading into the File Cache. The resource which cannot read without Title Timeline stopping shall not be defined as a resource of Soft-Sync Application. In case, Title Timeline jump into the valid period of Soft-Sync Application, the Application may not execute. And also, during the varied period of Soft-Sync Application, playback mode changes trick play to normal playback, the Application may not run.
More intelligible explanations will be provided below.
The first jump method is soft sync jump (jump model) of markup pages. At this jump timing, the time flow of the title timeline TMLE does not stop on the window to be presented to the user. That is, the switching timing of the markup page matches that of unit position (time) of the aforementioned title timeline TMLE, and the end timing of the previous markup page matches the start timing of the next markup page (presentation window of the advanced application ADAPL) on the title timeline TMLE. To allow such control, in this embodiment, a time period required to end the previous markup page (e.g., a time period used to release the assigned memory space in the data cache DTCCH) is set to overlap the presentation time period of the next markup page. Furthermore, the presentation preparation period of the next markup page is set to overlap the presentation period of the previous markup page. The soft sync jump of the markup page can be used for the advanced application ADAPL or advanced subtitle ADSBT synchronized with the title timeline TMLE.

<Hard-Sync Application>

Hard-Sync Application gives preference to execution preparation over seamless progress of Title Timeline. Hard-Sync Application is activated after all resources loading into the File Cache. If 'auto Run' attribute is 'true' and application is selected then resources will load into the File Cache by hard synced mechanism. Hard-Sync Application holds the Title Timeline during the resource loading and execution preparation of application.
More intelligible explanations will be provided below.
As the other jump method, this embodiment also specifies hard sync jump of markup pages. In general, a time change on the title timeline TMLE occurs on the window to be presented to the user (count-up on the title timeline TMLE is made), and the window of the primary audio video PRMAV changes in synchronism with such change. For example, when the time on the title timeline TMLE stops (the count value on the title timeline TMLE is fixed), the window of the corresponding primary audio video PRMAV stops, and a still window is presented to the user. When the hard sync jump of markup pages occurs in this embodiment, a period in which the time on the title timeline TMLE stops (the count value on the title timeline TMLE is fixed) is formed. In the hard sync jump of markup pages, the end timing time of a markup page before apparent switching on the title timeline TMLE matches the playback start timing of the next markup page on the title timeline TMLE. In case of this jump, the end period of the previously presented markup page does not overlap the preparation period required to present the next markup page. For this reason, the time flow on the title timeline TMLE temporarily stops during the jump period, and presentation of, e.g., the primary audio video PRMAV or the like is temporarily stopped. The hard sync jump processing of markup pages is used in only the advanced application ADAPL in this embodiment. In this way, the window change of the advanced subtitle ADSBT can be made without stopping the time change on the title timeline TMLE (without stopping, e.g., the primary audio video PRMAV) upon switching the presentation window of the advanced subtitle ADSBT.

The windows of the advanced application ADAPL, advanced subtitle ADSBT, and the like designated by the markup page are switched for respective frames in this embodiment. For example, interlaced display, the number of frames per second is different from that of fields per second. However, when the windows of the advanced application ADAPL and advanced subtitle ADSBT are controlled to be switched for respective frames, switching processing can be done at the same timing irrespective of interlaced or progressive display, thus facilitating control. That is, preparation of a window required for the next frame is started at the immediately preceding frame presentation timing. The preparation is completed until the presentation timing of the next frame, and the window is displayed in synchronism with the presentation timing of the next frame. For example, since NTSC interlaced display corresponds to the 60-Hz system, the interval of the time units on the title timeline is 1/60 sec. In this case, since 30 frames are displayed per sec, the frame presentation timing is set at an interval of two units (the boundary position of two units) of the title timeline TMLE. Therefore, when a window is to be presented at the n-th count value on the title timeline TMLE, presentation preparation of the next frame starts at the (n-2)-th timing two counts before, and a prepared graphic frame (a window that presents various windows related with the advanced application ADAPL will be referred to as a graphic frame in this embodiment) is presented at the timing of the n-th count on the title timeline TMLE. In this embodiment, since the graphic frame is prepared and presented for respective frames in this way, the continuously switched graphic frames can be presented to the user, thus preventing the user from feeling odd.

<Presentation Clip element and Object Mapping Information>

Tide element in Playlist file contains a list of element, called by Presentation Clip element, which describes Object Mapping Information of the segment of Presentation Object.

Primary Audio Video Clip element, Substitute Audio Video Clip element, Secondary Audio Video Clip element and Substitute Audio Clip element, Advanced Subtitle Segment element Application Segment element respectively describe Object Mapping Information of Primary Audio Video, Secondary Audio Video, Substitute Audio, Advanced Subtitle of Advanced Subtitle of Advanced Subtitle Profile markup and Advanced Application of Markup and Script.

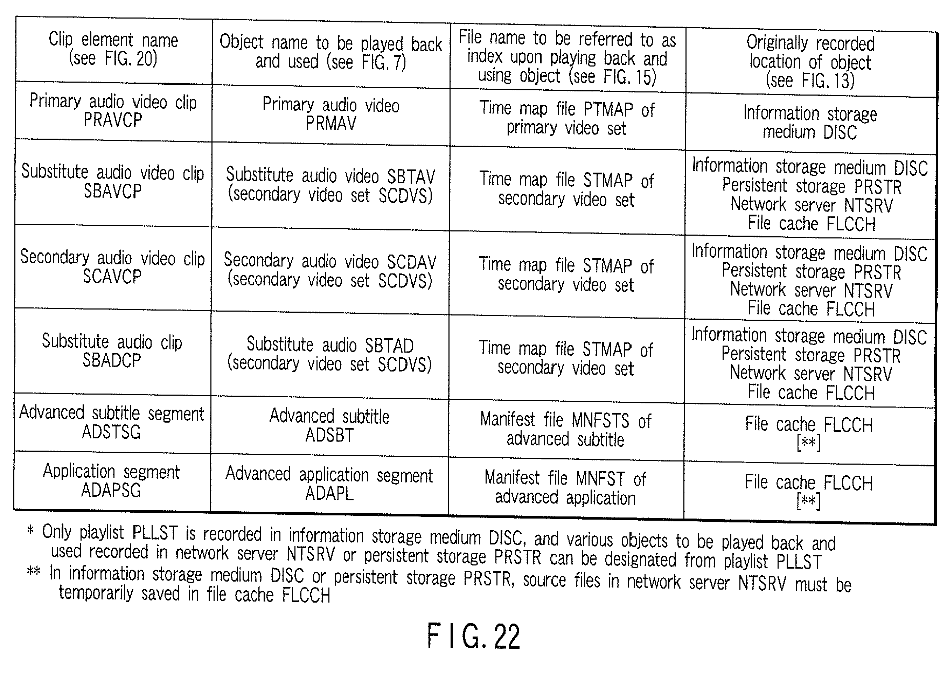

Presentation Object shall be referred by the URI of the index information file as shown in FIG. 22.

Object Mapping Information of a Presentation Object in a Title Timeline, is a valid period of the Presentation Object in a Title Timeline.

The valid period on Title Timeline of a Presentation Object is determined by start time and end time on Title Timeline. The start time and end time on Title Timeline are described by title Time Begin attribute and title Time End attribute of each Presentation Clip element, respectively. For the Presentation Clip except for Advanced Subtitle and Application, the starting position of the Presentation Object is described by clip Time Begin attribute of each Presentation Clip element.

For Primary Audio Video Clip, Substitute Audio Video Clip, Substitute Audio Clip and Secondary Audio Video Clip element, the Presentation Object shall be present at the starting position, described by clip Time Begin.

The clip Time Begin attribute value shall be the presentation start time (PTS) of Coded-Frame of the video streams in P-EVOB (S-EVOB).

Attribute values of titleTimeBegin, titleTimeEnd and clipTimeBegin, and the duration time of the Presentation Object shall satisfy the following relation:
titleTimeBegin < titleTimeEnd and
titleTimeEnd < duration time of the Title

If the Presentation Object is synchronized with Title Timeline, the following relation shall be satisfied:

$$\text{clipTimeBegin} + \text{titleTimeEnd} - \text{titleTimeBegin}$$
$$\leq \text{duration time of the Presentation Object}$$

The valid period of Primary Audio Video Clip element shall not overlap each other on Title Timeline.

The valid period of Secondary Audio Video Clip element shall not overlap each other on Title Timeline.

The valid period of Substitute Audio Clip element shall not overlap each other on Title Timeline.

The valid period of Substitute Audio Video Clip element shall not overlap each other on Title Timeline.

For any of Primary Audio Video Clip element and Substitute Audio Video Clip element, the valid periods on Title Timeline shall not overlap.

For any of Substitute Audio Video Clip element, Secondary Audio Video Clip element and Substitute Audio Clip element, the valid periods on Tide Timeline shall not overlap.

For any Presentation Clip element with 'Disc' data Source, the valid periods on Title Timeline shall not overlap to those of other Presentation Clip element with 'Disc' data Source.

More intelligible explanations will be provided below.

The object mapping information OBMAPI described in the playlist PLLST shown in FIG. 21 describes list information of elements called presentation clip elements. FIG. 22 shows the relationship between various presentation clip elements and corresponding object names to be presented and used.

As shown in FIG. 22, a primary audio video clip element PRAVCP described in the object mapping information OBMAPI explains object mapping information OBMAPI related with the primary audio video PRMAV. A secondary audio video clip element SCAVCP explains object mapping information OBMAPI of the secondary audio video SCDAV. A substitute audio clip element SBADCP explains object mapping information OBMAPI of the substitute audio SBTAD. An advanced subtitle segment element ADSTSG in the object mapping information OBMAPI describes information related with the markup file MRKUPS in the advanced subtitle ADSBT. An application segment element ADAPSG in the object mapping information OBMAPI describes information related with the markup file MRKUP and script file SCRPT of the advanced application ADAPL. The object mapping information OBMAPI related with each object to be played back and used describes information related with the valid period (including a presentation period or a preparation period and end processing period) of each object on the title timeline TMLE. The valid period on the title timeline TMLE is specified by the start time and end time on the title timeline TMLE. In each clip element, the start time and end time on the title timeline TMLE are specified by a titleTimeBegin attribute and titleTimeEnd attribute. That is, each clip element individually records the titleTimeBegin attribute and titleTimeEnd attribute. Presentation of a corresponding object begins from the time described by the titleTimeBegin attribute on the title timeline TMLE, and ends at the time described by the titleTimeEnd attribute. In the primary audio video clip element PRAVCP, secondary audio video clip element SCAVCP, and substitute audio clip element SBADCP except for the advanced subtitle segment element ADSTSG and application segment element ADAPSG, each of the primary audio video PRMAV, secondary audio video SCDAV, and substitute audio SBTAD begins to be presented by clipTimeBegin which means an presentation elapsed time period calculated from a start position where each object is recorded. That is, the aforementioned titleTimeBegin attribute and titleTimeEnd attribute mean time information on the title timeline TMLE. On the other hand, clipTimeBegin means an independent time elapse in each object. By synchronizing the times of the titleTimeBegin attribute and clipTimeBegin, a plurality of different objects can be synchronously presented on the same title timeline TMLE.

Note that various objects to be played back and used are not recorded in the information storage medium (DISC) but only the playlist (PLLST) is recorded in the information storage medium (DISC). The information playback apparatus may designate and acquire from the corresponding playlist (PLLST) various objects to be played back and used recorded in the network server (NTSRV) or persistent storage (PRSTR).

In this embodiment, the following relationship is set among the presentation period of each presentation object, and titleTimeBegin, titleTimeEnd, and clipTimeBegin to improve the precision of the presentation processing without producing any conflict among presentation timings.

$$titleTimeBegin < titleTimeEnd$$

and

$$titleTimeEnd < duration\ time\ of\ the\ Title$$
$$clipTimeBegin + titleTimeEnd - titleTimeBegin$$
$$\leq duration\ time\ of\ the\ Presentation\ Object$$

Furthermore, in this embodiment, the presentation precision is improved by setting the following conditions.

- The valid periods of respective primary audio video clip elements PRAVCP shall not overlap on the title timeline TMLE.
- The valid periods of respective secondary audio video clip elements SCAVCP shall not overlap on the title timeline TMLE.
- The valid periods of respective substitute audio clip elements SBADCP shall not overlap on the title timeline TMLE.
- The valid period of the secondary audio video clip element SCAVCP shall not overlap that of the substitute audio clip element SBADCP on the title timeline TMLE.

As shown in FIGS. 14A 14B and 14C, the time map file PTMAP of the primary video set PRMVS, the time map file STMAP of the secondary video set SCDVS, the manifest file MNFST, and the manifest file MNFSTS of the advanced subtitle ADSBT are referred to from the playlist PLLST.

More specifically, as shown in FIG. 22, the primary audio video clip element PRAVCP describes the filename and saving location of the time map file PTMAP of the primary video set PRMVS as the filename to be referred to in the primary audio video clip element PRAVCP. Likewise, the second audio video clip element SCAVCP describes the filename and saving location of the time map file STMAP of the secondary video set SCDVS. Furthermore, the substitute audio clip element SBADCP describes the filename and saving location of the time map file STMAP of the secondary video set SCDVS. The advanced subtitle segment element ADSTSG describes the filename and saving location of the manifest file MNFSTS of the advanced subtitle ADSBT. The application segment element ADAPSG describes the filename and saving location of the manifest file MNFST of the advanced application ADAPL.

The locations of files to be referred to as indices upon playing back and using objects shown in FIG. 22 are described in FIG. 12. For reconfirmation, they are described in the column of the original data sources of objects in FIG. 22.

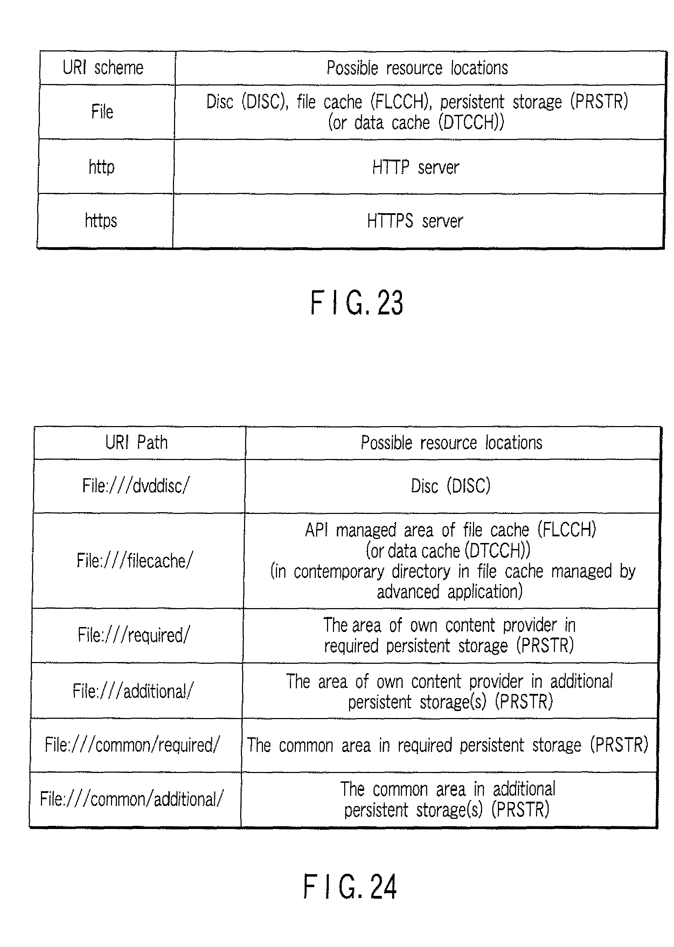

The files which are described in respective clip elements and are referred to as indices upon playing back and using objects can be recorded in various recording media (including the network server NTSRV), as shown in FIG. 22. FIG. 23 shows the saving location designation method of the files described in respective clip elements. More specifically, when files are saved in the network server NTSRV, the address of an HTTP server or HTTPS server is designated by "http:..." or "https:...", as shown in FIG. 23. In this embodiment, the description range of file saving location designation information (URI: Uniform Resource Identifier) described in each clip element shall be described using 1024 bytes or less. When such information is recorded in the information storage medium DISC, file cache FLCCH (data cache DTCCH), or persistent storage PRSTR, the file saving location is designated as a data file.

When each file is saved in the information storage medium DISC, file cache FLCCH (data cache DTCCH), or persistent storage PRSTR shown in FIG. 23, each medium shall be identified. In this embodiment, each medium can be identified by adopting a path designation description method shown in FIG. 24 in respective clip elements. This point is a large technical feature in this embodiment.

<Content Referencing>

Every resource available on the disc or the network has an address that encoded by a Uniform Resource Identifier.

The following is a URI example which refers to a XML file on a Disc.
file:///dvddisk/ADV_OBJ/file.xmu

The total length of URI shall be less than 1024.

By the 'file' URI scheme, URI can refer to the resources on DVD Disc contents, File Cache, and Persistent Storages. There is two type of Persistent Storage. One is Required Persistent Storage, which all Player shall have only one. The other is Additional Persistent Storage, which Player can have one or more. The path of URI includes storage type and identifier for Persistent Storage in the following manner.

All Advanced Navigation files (Manifest/Markup/Script) and Advanced Element files shall be loaded into File Cache by Resource Information element in Playlist, or API. All files loaded by Resource Information element shall be referred by URI of the original file location, not location in the File Cache.

Files in archived file shall be referred by sub path of URI of archived file. At this time URI of archived file shall be referred by original location, not location in file cache.

The path 'file:///file cache/' is resolved as/temp directory in File Cache. For file cache, only application managed directory may be accessed.

Playlist, Manifest and Markup may use relative URI reference. The base URI shall be derived from the URI of the original file location, if xml: base attribute is not specified. If xml: base attribute is specified, base URI is determined by rule.

The path-segment ".." shall not used in URI.

More intelligible explanations will be provided below.

In this embodiment, two different recording media are brought into view as the persistent storage PRSTR. The first one is the fixed persistent storage PRSTR, and specifies only one persistent storage drive 3 in the information recording and playback apparatus 1 in this embodiment. The other one is the portable persistent storage PRSTR, and one or more storages (a plurality of storages are allowed) can be mounted in the information recording and playback apparatus 1 in this embodiment. In the path designation description to a file, the description method shown in FIG. 24 is specified, and the contents are described in each clip element in the playlist PLLST. That is, when a file is recorded in the information storage medium DISC, "file:///dvddisc/" is described. When a file is stored in the file cache FLCCH (data cache DTCCH), "file:///filecache/" is described as the path designation description method. When a file is recorded in the fixed persistent storage PRSTR, "file:///fixed/" is described as the path designation description method. When a file is recorded in the portable persistent storage PRSTR, "file:///removable/" is described as the path designation description method. When various files are recorded in the information storage medium DISC, file cache FLCCH (data cache DTCCH), or persistent storage PRSTR, the file structure shown in FIG. 13 is formed in each recording medium, and files are recorded under corresponding directories.

<Playlist File>

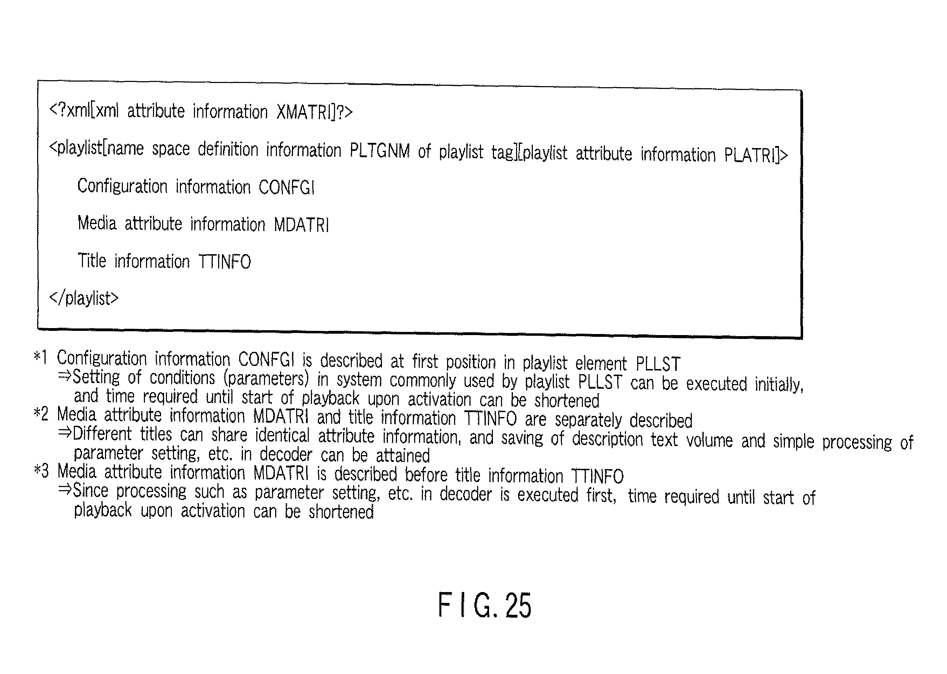

Playlist File describes the navigation, the synchronization and the initial system configuration information for Advanced Content. Playlist File shall be encoded as well-formed XML. FIG. 25 shows an outline example of Playlist file. The root element of Playlist shall be Playlist element, which contains Configuration element, Media Attribute List element and Title Set element in a content of Playlist element.

More intelligible explanations will be provided below.

FIG. 25 shows the data structure in the playlist file PLLST that records information related with the playlist PLLST shown in FIG. 21. This playlist file PLLST is directly recorded in the form of the playlist file PLLST under the advanced content directory ADVCT, as shown in FIG. 13. The playlist file PLLST describes management information, synchronization information among respective presentation objects, and information related with the initial system structure (e.g., information related with pre-assignment of a memory space used in the data cache DTCCH or the like). The playlist file PLLST is described by a description method based on XML. FIG. 25 shows a schematic data structure in the playlist file PLLST.

A field bounded by <Playlist[playlist]...> and </Playlist> is called a playlist element in FIG. 25. As information in the playlist element, configuration information CONFGI, media attribute information MDATRI, and title information TTINFO are described in this order. In this embodiment, the allocation order of various elements in the playlist element is set in correspondence with the operation sequence before the beginning of video presentation in the advanced content playback unit ADVPL in the information recording and playback apparatus 1 shown in FIG. 15. That is, the assignment of the memory space used in the data cache DTCCH in the advanced content playback unit ADVPL shown in FIG. 16 is most necessary in the process of playback preparation. For this reason, a configuration information CONFGI element 134 is described first in the playlist element. The presentation engine PRSEN in FIG. 16 shall be prepared in accordance with the attributes of information in respective presentation objects. For this purpose, a media attribute information MDATRI element 135 shall be described after the configuration information CONFGI element 134 and before a title information TTINFO element 136. In this manner, after the data cache DTCCH and presentation engine PRSEN have been prepared, the advanced content playback unit ADVPL starts presentation processing according to the information described in the title information TTINFO element 136. Therefore, the title information TTINFO element 136 is allocated after the information required for preparations (at the last position).

A description 131 of the first line in FIG. 25 is definition text that declares "the following sentences are described based on the XML description method", and has a structure in which information of xml attribute information XMATRI is described between "<?xml" and "?>".

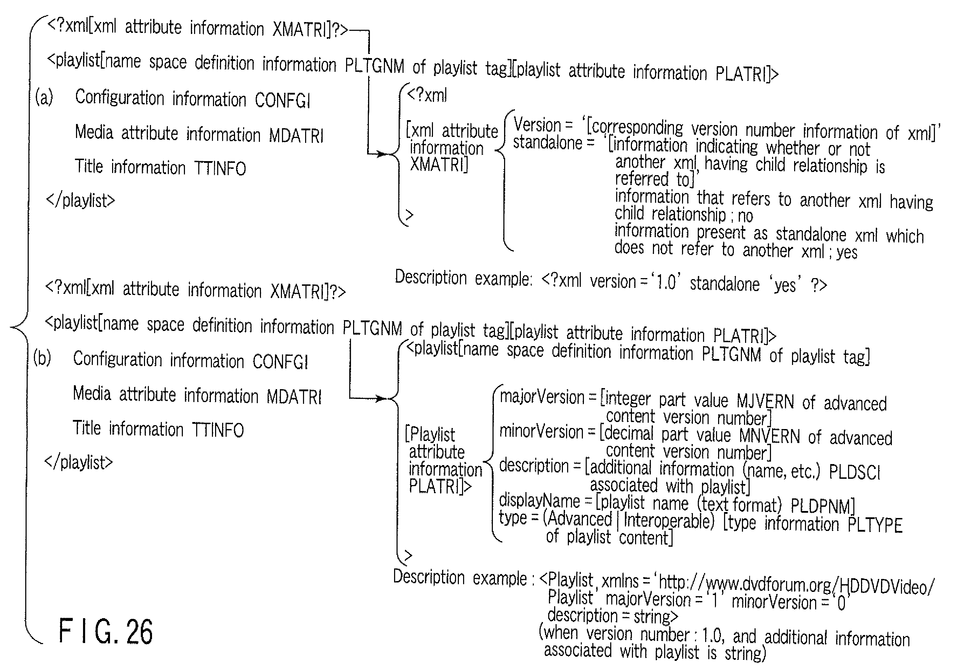

FIG. 26 shows the information contents in the xml attribute information XMATRI in (a).

The xml attribute information XMATRI describes information indicating whether or not another XML having a child relationship with corresponding version information of XML is referred to. Information indicating whether or not the other XML having the child relationship is referred to is described using "yes" or "no". If the other XML having the child relationship is directly referred to in this target text, "no" is described; if this XML text does not directly refer to the other XML and is present as standalone XML, "yes" is described. As an XML statement, for example, when the corresponding version number of XML is 1.0, and XML text does not refer to the other XML but is present as standalone XML, "<?xml version = '1.0' standalone = 'yes' ?>" is described as a description example (a) of FIG. 26.

Description text in a playlist element tag that specifies the range of a playlist element describes name space definition information PLTGNM of the playlist tag and playlist attribute information PLATRI after "<Playlist", and closes with ">", thus forming the playlist element tag. FIG. 26 shows description information in the playlist element tag in (b). In this embodiment, the number of playlist elements which exit in the playlist file PLLST is one in principle. However, in a special case, a plurality of playlist elements can be described. In such case, since a plurality of playlist element tags may be described in the playlist file PLLST, the name space definition information PLTGNM of the playlist tag is described immediately after "<Playlist" so as to identify each playlist element. The playlist attribute information PLATRI describes an integer part value MJVERN of the advanced content version number, a decimal part value MNVERN of the advanced content version number information, and additional information (e.g., a name or the like) PLDSCI related with the playlist in the playlist element in this order. For example, as a description example, when the advanced content version number is "1.0", "1" is set in the integer part value MJVERN of the advanced content version number, and "0" is set in the decimal part value MNVERN of the advanced content version number. If the additional information related with the playlist PLLST is "string", and the name space definition information PLTGNM of the playlist tag is "http://www.dvdforum.org/HDDVD-Video/Playlist", the description text in the playlist element is:
"<Playlist xmlns = 'http://www.dvdforum.org/HDDVDVideo/Playlist' majorVersion= '1' minorVersion = '0' description = string>"

The advanced content playback unit ADVPL in the information recording and playback apparatus 1 shown in FIG. 15 plays back the advanced content version number described in the playlist element tag first, and determines if the advanced content version number falls within the version number range supported by it.

If the advanced content version number falls outside the support range, the advanced content playback unit ADVPL shall immediately stop the playback processing. For this purpose, in this embodiment, the playlist attribute information PLATRI describes the information of the advanced content version number at the foremost position.

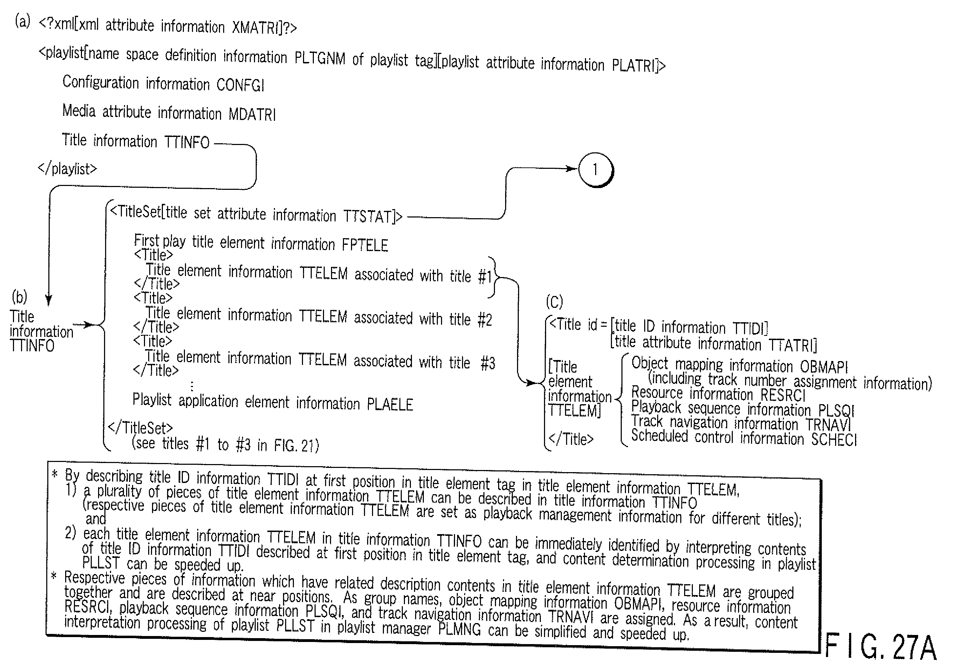

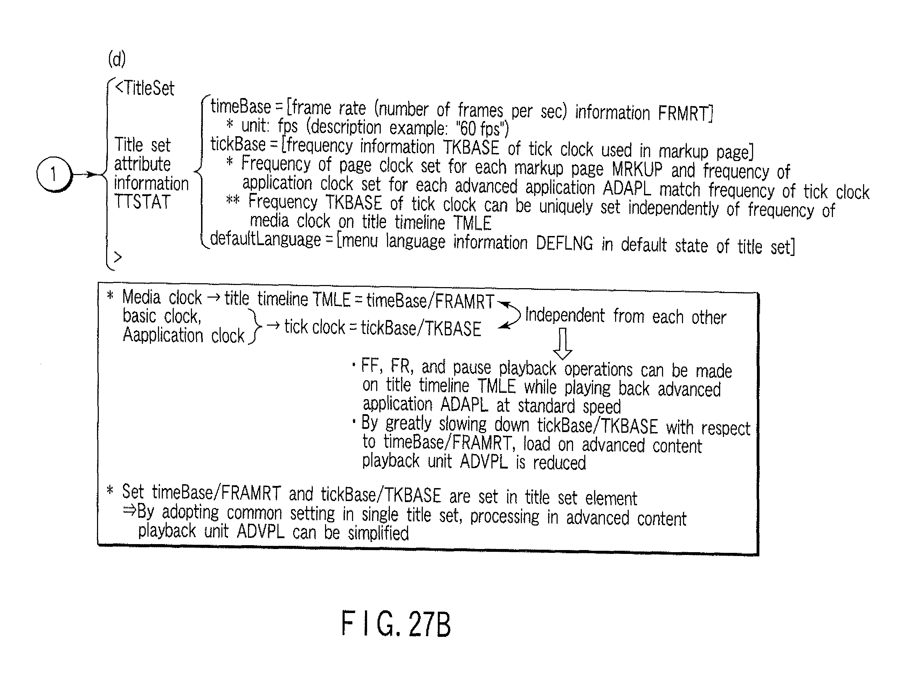

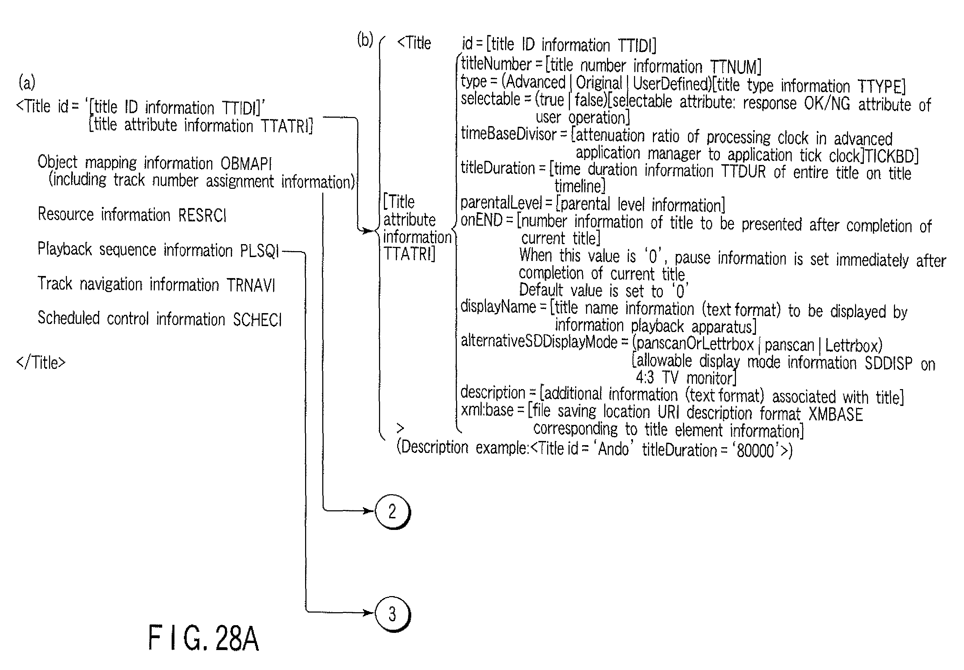

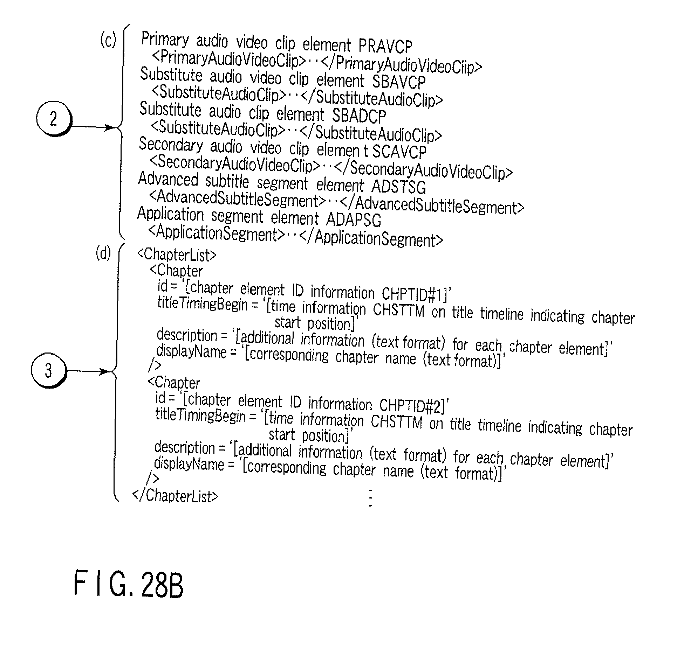

Various kinds of information described in the playlist PLLST in this embodiment have a hierarchical structure, as shown in FIGS. 27A and 27B, and FIGS. 28A and 28B.

<Title Information>

A Playlist file contains a list of Title elements in the Title Set element. The Title Set element describes information of a set of Titles for Advanced Contents in the Playlist.

Title Timeline is assigned for each Title. The duration of Title Timeline shall be described by title Duration attribute of Title element by the time Expression value. The duration of Title Timeline shall be greater than '00:00:00:00'.

Note: To describe Title which contains only Advanced Application, set duration to some value such as '00:01: 00:00', and pause the time on Tide Timeline at the beginning of Title.

The total number of Title shall be less than 1000.

Each Title element describes a set of information of a Title for Advanced Content.

More intelligible explanations will be provided below.

In information recorded in the aforementioned playlist file PLLST, the title information TTINFO included in the playlist element is described using a title set element bounded by <TitleSet> and </TitleSet>, as shown in (b) of FIG. 27A. This title set element describes information related with a title set of the advanced content ADVCT defined in the playlist PLLST. The title set element describes one or more pieces of title element information TTELEM in turn, and management information related with each title is recorded in the corresponding title element information TTELEM. The example of FIG. 21 has three titles, i.e., titles #1 to #3, and (b) of FIG. 27A describes title element information TTELEM related with title #1 to that related with title #3. However, this embodiment is not limited to such example, and title element information TTELEM related with one to an arbitrary number of titles can be described. A title timeline TMLE is set to each title corresponding to the title element information TTELEM. The presentation period of the title timeline TMLE of each title is described in titleDuration attribute information (time duration information TTDUR of the entire title on the title timeline TMLE) in the title element information TTELEM. The numbers of corresponding titles are set in accordance with the order of description of respective pieces of title element information TTELEM described in the title set element. As shown in (b) of FIG. 27A, the title number of a title corresponding to the title element information TTELEM described first in the title set element is set to "1". In this embodiment, the number of pieces of title element information TTELEM (the number of titles defined per playlist PLLST) that can be described in the title set element is set to be 512 or less. By setting the upper limit value of the number of titles, the processing in the advanced content playback unit ADVPL is prevented from diffusing. Each title element information TTELEM describes object mapping information OBMAPI, resource information RESRCI, playback sequence information PLSQI, and track navigation information TRNAVI in this order. The object mapping information OBMAPI includes information of track number assignment information that sets stream (track) numbers in respective presentation objects. The object mapping information describes a list of various clip elements described using FIGS. 28A and 28B. Also, the object mapping information OBMAPI describes a list related with track number assignment information which represents the setting information of track numbers in the aforementioned presentation clip elements. In this embodiment, each playback object such as video information, audio information, sub-picture information, or the like can have a plurality of streams, independent tracks are related with these streams, and track numbers are set, thus identifying playback streams in each presentation object. By setting the track number assignment element list in this way, the number of streams included in each presentation object and individual streams can be identified. The resource information RESRCI explains a list of resource elements in the title element information TTELEM. The track navigation information TRNAVI describes information related with a track navigation list element. The playback sequence information PLSQI describes information of a chapter list element indicating the head positions of chapters corresponding to divisions of the video contents in a single title.

As shown in (c) of FIG. 27A, the arrangement order of the object mapping information OBMAPI, resource information RESRCI, playback sequence information PLSQI, and track navigation information TRNAVI in the title element information TTELEM corresponds to the processing sequence of the advanced content playback unit ADVPL in the information recording and playback apparatus 1 (see FIG. 15). That is, information of the object mapping information OBMAPI which describes the information of the advanced application ADAPL and advanced subtitle ADSBT used in a single title is described at the first location in the title element information TTELEM. The advanced content playback unit ADVPL recognizes the contents of the advanced application ADAPL and advanced subtitle ADSBT used in the single title first from the object mapping information OBMAPI recorded first. As has been described using FIG. 12, the information of the advanced application ADAPL and advanced subtitle ADSBT shall be saved in the file cache FLCCH (data cache DTCCH) in advance prior to presentation to the user. For this reason, the advanced content playback unit ADVPL in the information recording and playback apparatus 1 requires information related with the advanced application ADAPL and advanced subtitle ADSBT set in the title and their storage timings in the file cache FLCCH (data cache DTCCH) prior to playback. The advanced content playback unit ADVPL then reads the resource information RESRCI, and can detect the storage timings of the advanced application ADAPL and advanced subtitle ADSBT in the file cache FLCCH (data cache DTCCH). Therefore, since the resource information RESRCI is described after the object mapping information OBMAPI, the processing of the advanced content playback unit ADVPL is facilitated. Since the playback sequence information PLSQI becomes important to allow the user to immediately move video information that he or she wants to see upon playing back the advanced content ADVCT, the playback sequence information PLSQI is allocated after the resource information RESRCI. Since the track navigation information TRNAVI is information required immediately before presentation to the user, it is described at the last location in the title element information TTELEM.

<Title Element>

The Title element describes information of a Title for Advanced Contents, which consists of Object Mapping Information, Track Number Assignment for elementary stream and Playback Sequence in a Title.

The content of Title element consists of Chapter List element, Track Navigation List element, Title Resource element and list of Presentation Clip element. Presentation Clip elements are Primary Audio Video Clip, Substitute Audio Video Clip, Substitute Audio Clip, Secondary Audio Video Clip, Advanced Subtitle Segment and Application Segment.

Presentation Clip elements in Title element describe the Object Mapping Information in the Title.

Presentation Clip elements also describe Track Number Assignment for elementary stream.

Chapter List element describes the information of Playback Sequence in the Title.

Track Navigation List element describes the information of Track Navigation Information in the Title.

Title Resource element describes the information of Resource Information par Title.

(a) title Number attribute
Describes the number of Title. The Title number shall follow the constraints.

(b) type attribute
Describes type of Title. If the content is Interoperable Content and Title is Original Title, the value shall be 'Original'. If the content is Interoperable Content and Title is User Defined Title, the value shall be 'User Defined'. Otherwise it shall be omitted, or 'Advanced'. The value may be omitted. The default value is 'Advanced'.

(c) selectable attribute
Describes whether the Title can be selectable by User Operation, or not. If the value is "false", the title shall not be navigated by User Operation. The value may be omitted. The default value is "true".

(d) title Duration attribute
Describes the duration of the Title Timeline. The attribute value shall be described by time Expression.
The end time of all Presentation Object shall be less than the duration time of Title Timeline.

(e) parental Level attribute
Describes the list of parental level for each country code. The attribute value shall be described by parental List value. This attribute can be omitted. Default value is '*: 1'.

(f) tick Base Divisor attribute
Describes the reducing rate of the Application Ticks to process in Advanced Application Manager. For example, if tick Base Divisor value is 3, Advanced Application Manager shall process one of the three Application Ticks, and ignore the rest of them.

(g) on End attribute
Describes the id attribute value of Title element describing Title to be played after end of current Title. This value can be omitted. If this value is omitted, player shall be stopped after Title playback.

(h) display Name attribute
Describes the name of Title in the human consumable text form. Player may display this name as title name. This attribute can be omitted.

(i) alternative SD Display Mode attribute
Describes the permitted display modes on 4:3 monitor in this Title playback. 'pan scan Or Letter box' allows both Pan-scan and Letterbox, 'pan scan' allows only Pan-scan, and 'letterbox' allows only Letterbox for 4:3 monitor. Player shall output into 4:3 monitor forcedly in allowed display modes. This attribute can be omitted. The default value is 'pan scan Or Letter box'.

(j) description attribute

Describes additional information in the human consumable text form. This attribute can be omitted.
(k) xml: base attribute
Describes the base URI in this element. The semantics of xml:base shall follow to XML Base.
More intelligible explanations will be provided below.

FIGS. 28A and 28B show information described in the title element tag that represents the start of each title element information TTELEM in this embodiment. The title element tag describes ID information TTIDI of a title used to identify each title first. Next, selectable attribute information is described. This selectable attribute information indicates selection information as to whether or not the designated title can be operated in response to user operations. For example, in case of the system shown in FIG. 15, the user may oppose the wide-screen TV monitor 15 and may perform screen operations (e.g., fast-forwarding FF or first-rewinding FR) using a remote controller (not shown). Processing designated by the user in this way is called a user operation, and the selectable attribute information indicates whether or not the title is processed in response to user operations. In this information, a word of either "true" or "false" is described. For example, when the video contents of the corresponding title, i.e., the commercial 44 and preview 41 are not allowed to be fast-forwarded by the user, the entire corresponding title may be set to inhibit user operations. In such case, the selectable attribute information is set to "false" to inhibit user operations with respect to the corresponding title, thus rejecting requests such as fast-forwarding, fast-rewinding, and the like by the user. When this value is "true", user operations are supported, and processing (user operations) such as fast-forwarding, fast-rewinding, and the like can be executed in response to user's requests. In this embodiment, the default value of the selectable attribute information is set to "true". The title playback processing method of the advanced content playback unit ADVPL (see FIG. 15) largely changes depending on the selectable attribute information. Therefore, by allocating the selectable attribute information at a position immediately after the title ID information TTIDI and after other kinds of information, the convenience of the processing of the advanced content playback unit ADVPL can be improved. In this embodiment, a description of the selectable attribute information can be omitted in the title element tag. When the description of this information is omitted, it is set as a default value "true".

Frame rate information represents the number of frames per sec of video information to be presented on the screen, and corresponds to a reference time interval of the title timeline TMLE. As has been described using FIG. 21, in this embodiment, two systems, i.e., the 50-Hz system (50 counts are counted up per sec on the title timeline TMLE) and 60-Hz system (60 counts are counted up per sec on the title timeline TMLE) can be set as the title timeline TMLE. For example, in case of NTSC interlaced display, 30 frames (60 fields) are displayed per sec. This case corresponds to 60-Hz system, and a unit interval (time interval of one count of the title timeline is set to 1/60 sec.

Time duration information TTDUR of the entire title on the title timeline TMLE represents the duration of the entire title timeline TMLE on the corresponding title. The time duration information TTDUR of the entire title on the title timeline TMLE is described using the total number of counts of the 50-Hz system or 60-Hz system corresponding to the frame rate (number of frames per sec) information. For example, when the presentation time of the corresponding entire title is n sec, a value "60n" or "50n" is set in the total number of counts as the time duration information TTDUR of the entire title on the title timeline TMLE. In this embodiment, the end times of all playback objects shall be smaller than the time duration information TTDUR of the entire title on the title timeline TMLE. In this manner, since the time duration information TTDUR of the entire title on the title timeline TMLE depends on the time unit interval on the title timeline TMLE, it is allocated behind the frame rate information, thus assuring easy data processing of the advanced content playback unit ADVPL.

Next parental level information indicates a parental level of the corresponding title to be played back.

A numeral equal to or smaller than 8 is entered as the parental level value. In this embodiment, this information may be omitted in the title element tag. A default value of this information is set to "1".

Information "onEnd" that represents the number information of a title to be presented after completion of the current title describes information of the title number related with the next title to be played back after completion of the current title. When a value set in the title number is "0", the window is kept paused (to present the end window) after completion of the title. A default value of this information is set to "0". A description of this information can be omitted in the title element tag, and in such case, that information is set to "0" as a default value.

Title name information "display-Name" to be displayed by the information recording and playback apparatus 1 describes the name of the corresponding title in a text format. Information described in this information can be displayed as the title name of the information recording and playback apparatus 1. Also, this information can be omitted in the title element tag.

Furthermore, the column of additional information (description) related with a title describes additional information related with the title in a text format. A description of this information can be omitted in the title element tag. The title name information (displayName) to be displayed by the information recording and playback apparatus 1 and additional information (description) related with the title are not essential upon executing the playback processing of the advanced content playback unit ADVPL. Therefore, these pieces of information are recorded at the last location in title attribute information TTATRI.

As a practical information example of the title element tag, for example, when the identification ID information of a title is "Ando" and the time duration of the entire title in the 60-Hz system is 80000, a description example is:

```
<Title = 'Ando' titleDuration = '80000'>
```

In the 60-Hz system, since the number of counts of the title timeline TMLE is counted up by 60 per sec, the value "80000" amounts to 22 min ($\approx$ 80000 ÷ 60 ÷ 60).

Information in the title element information TTELEM includes the object mapping information OBMAPI that describes a presentation clip element list, the resource information RESRCI that records a title resource element, the playback sequence information PLSQI that describes a chapter list element, and the track navigation information TRNAVI that describes a track list navigation list element, as shown in (c) of FIG. 27A. The presentation clip elements describe the primary audio video clip PRAVCP, substitute audio clip SBADCP, secondary audio video clip SCAVCP, advanced subtitle segment ADSTSG, and application segment ADAPSG, as shown in (c) of FIG. 28B. The presentation clip elements are described in the object mapping information OBMAPI in each title. The presentation clip elements are described as a part of track number assignment information in correspondence with each elementary stream.

The playback sequence information PLSQI is described as a list of chapter list elements, as shown in (d) of FIG. 28B.

<Chapter elements and Playback Sequence Information>

Title element in Playlist file contains a list of Chapter elements in a Chapter List element. Chapter List element describes chapter structure, called by Playback Sequence Information.

The Chapter List element consists of a list of Chapter element. According to the document order of Chapter element in Chapter List, the Chapter number for Advanced Navigation shall be assigned continuously from '1'.

The total number of chapters in a Title shall be less than 2000.

The total number of chapters in a Playlist shall be less than 100000.

The title Time Begin attribute of Chapter element describes the chapter start position by the time value on the Title Timeline. Chapter end position is given as the next chapter start position or the end of the Title Timeline for the last chapter.

The chapter start position in a Title Timeline shall be monotonically increased according to the chapter number, and be less than or equals to the duration of Title Timeline. The chapter start position of chapter 1 shall be 00:00:00:00.

The following description is an example of Playback Sequence.

```
<ChapterList>
    <Chapter titleTimeBegin="00:00:00:00"/>
    <Chapter titleTimeBegin="00:01:02:00"/>
    <Chapter titleTimeBegin="00:02:01:03"/>
    <Chapter titleTimeBegin="00:04:02:30"/>
    <Chapter titleTimeBegin="00:05:21:22"/>
    <Chapter titleTimeBegin="00:06:31:23"/>
</ChapterList>
```

More intelligible explanations will be provided below.

The chapter list element in the playback sequence information PLSQI describes a chapter structure in the title. The chapter list element is described as a list of chapter elements (respective lines starting with a <Chapter titleTimingBegin> tag, as shown in (d) of FIG. 28B). The number of a chapter element described first in the chapter list is set to "1", and the chapter numbers are set in accordance with the order of description of respective chapter elements. The number of chapters in one chapter list (title) is set to be 512 or less, thus preventing diffusion in the processing of the advanced content playback unit ADVPL. A titleTimingBegin attribute (information described after "<Chapter titleTimingBegin> =") in each chapter element represents time information (the number of counts on the title timeline TMLE) indicating the start position of each chapter on the title timeline.

Time information indicating the start position of each chapter is presented in the form of "HH : MM : SS : FF" which respectively represent hours, minutes, seconds, and the number of frames. The end position of this chapter is expressed by the start position of the next chapter. The end position of the last chapter is interpreted as the last value (count value) on the title timeline TMLE. The time information (count value) indicating the start position of each chapter on the title timeline TMLE must be set to monotonously increase in correspondence with increments of chapter number. With this setting, sequential jump access control according to the playback order of chapters is facilitated.

Additional information for each chapter element is described in a text format to be easy to understand by the users. Also, the additional information for each chapter element can omit a description in a chapter element tag. Furthermore, immediately after "displayName=", a corresponding chapter name can be described in a text format that can be easily understood by the users. The advanced content playback unit ADVPL (see FIG. 15) can present the corresponding chapter name information on the wide-screen TV monitor 15 as a name of each chapter. The corresponding chapter name information can omit a description in the chapter element tag.

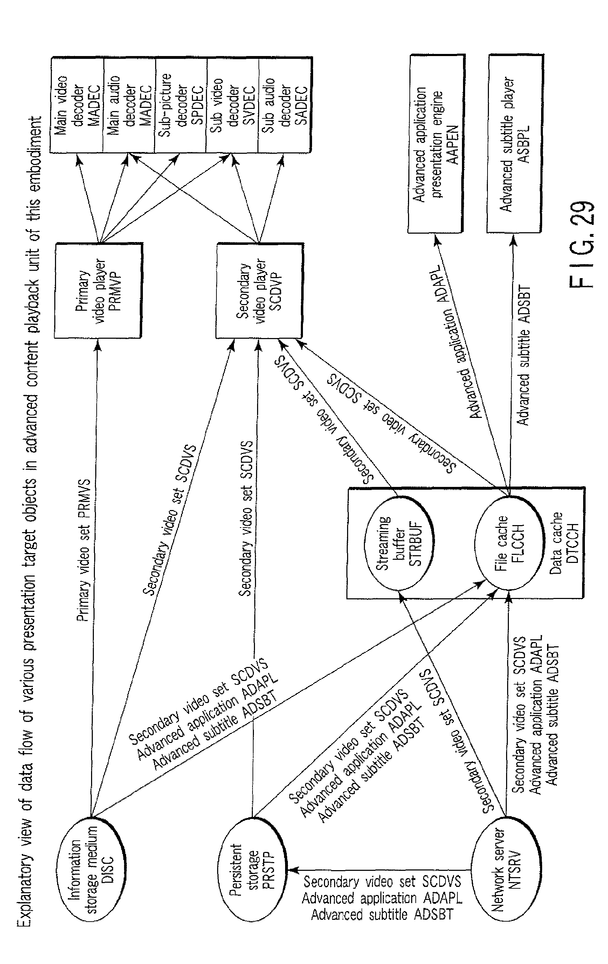

FIG. 29 shows the data flow in the advanced content playback unit ADVPL of various playback presentation objects defined in FIG. 12 described previously.

FIG. 16 shows the structure in the advanced content playback unit ADVPL shown in FIG. 15. An information storage medium DISC, persistent storage PRSTR, and network server NTSRV in FIG. 29 respectively match the corresponding ones in FIG. 16. A streaming buffer STRBUF and file cache FLCCH in FIG. 29 will be generally called as a data cache DTCCH, which corresponds to the data cache DTCCH in FIG. 16. A primary video player PRMVP, secondary video player SCDVP, main video decoder MVDEC, main audio decoder MADEC, sub-picture decoder SPDEC, sub video decoder SVDEC, sub audio decoder SADEC, advanced application presentation engine AAPEN, and advanced subtitle player ASBPL in FIG. 29 are included in the presentation engine PRSEN in FIG. 16. The navigation manager NVMNG in FIG. 16 manages the flow of various playback presentation object data in the advanced content playback unit ADVPL, and the data access manager DAMNG in FIG. 16 mediates data between the storage locations of various advanced contents ADVCT and the advanced content playback unit ADVPL.

As shown in FIG. 12, upon playing back playback objects, data of the primary video set PRMVS must be recorded in the information storage medium DISC.

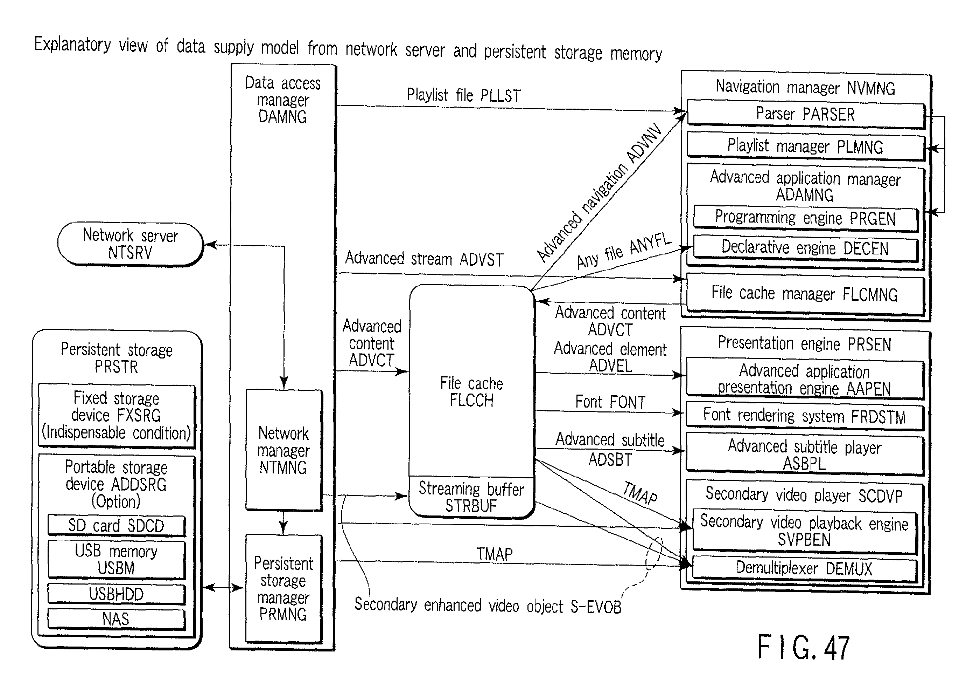

In this embodiment, the primary video set PRMVS can also handle high-resolution video information. Therefore, the data transfer rate of the primary video set PRMVS may become very high. When direct playback from the network server NTSRV is attempted, or when the data transfer rate on a network line temporarily drops, continuous video expression to the user may be interrupted. As shown in FIG. 47, various information storage media such as an SD card SDCD, USB memory USBM, USBHDD, NAS, and the like are assumed as the persistent storage PRSTR, and some information storage media used as the persistent storage PRSTR may have a low data transfer rate. Therefore, in this embodiment, since the primary video set PRMVS that can also handle high-resolution video information is allowed to be recorded in only the information storage medium DISC, continuous presentation to the user can be guaranteed without interrupting high-resolution data of the primary video set PRMVS. The primary video set read out from the information storage medium DISC in this way is transferred into the primary video player PRMVP. In the primary video set PRMVS, a main video MANVD, main audio MANAD, sub video SUBVD, sub audio SUBAD, and sub-picture SUBPT are multiplexed and recorded as packs in 2048-byte units. These packs are demultiplexed upon playback, and undergo decode processing in the main video decoder MVDEC, main audio decoder MADEC, sub video decoder SVDEC, sub audio decoder SADEC, and sub-picture decoder SPDEC. This embodiment allows two different playback methods of objects of the secondary video set SCDVS, i.e., a direct playback route from the information storage medium DISC or persistent storage PRSTR, and a method of playing back objects from the data cache DTCCH after they are temporarily stored in the data cache DTCCH. In the first method described above, the secondary video set SCDVS recorded in the information storage medium DISC or persistent storage PRSTR is directly transferred to the secondary video player SCDVP, and undergoes decode processing by the main audio decoder MADEC, sub video decoder SVDEC, or sub audio decoder SADEC. As the second method described above, the secondary video set SCDVS is temporarily recorded in the data cache DTCCH irrespective of its storage location (i.e., the information storage medium DISC, persistent storage PRSTR, or network server NTSRV), and is then sent from the data cache DTCCH to the secondary video player SCDVP. At this time, the secondary video set SCDVS recorded in the information storage medium DISC or persistent storage PRSTR is recorded in the file cache FLCCH in the data cache DTCCH. However, the secondary video set SCDVS recorded in the network server NTSRV is temporarily stored in the streaming buffer STRBUF. Data transfer from the information storage medium DISC or persistent storage PRSTR does not suffer any large data transfer rate drop. However, the data transfer rate of object data sent from the network server NTSRV may temporarily largely drop according to network circumstances. Therefore, since the secondary video set SCDVS sent from the network server NTSRV is recorded in the streaming buffer STRBUF, a data transfer rate drop on the network can be backed up in terms of the system, and continuous playback upon user presentation can be guaranteed. This embodiment is not limited to these methods, and can store data of the secondary video set SCDVS recorded in the network server NTSRV in the persistent storage PRSTR. After that, the information of the secondary video set SCDVS is transferred from the persistent storage PRSTR to the secondary video player SCDVP, and can be played back and presented.

As shown in FIG. 12, all pieces of information of the advanced application ADAPL and advanced subtitle ADSBT are temporarily stored in the file cache FLCCH in the data cache DTCCH irrespective of the recording locations of objects. In this way, the number of times of access of an optical head in the information recording and playback unit shown in FIG. 15 is reduced upon simultaneous playback with the primary video set PRMVS and secondary video set SCDVS, thus guaranteeing continuous presentation to the user. The advanced application ADAPL temporarily stored in the file cache FLCCH is transferred to the advanced application presentation engine AAPEN, and undergoes presentation processing to the user. The information of the advanced subtitle ADSBT stored in the file cache FLCCH is transferred to the advanced subtitle player ASBPL, and is presented to the user.

Data Access Manager

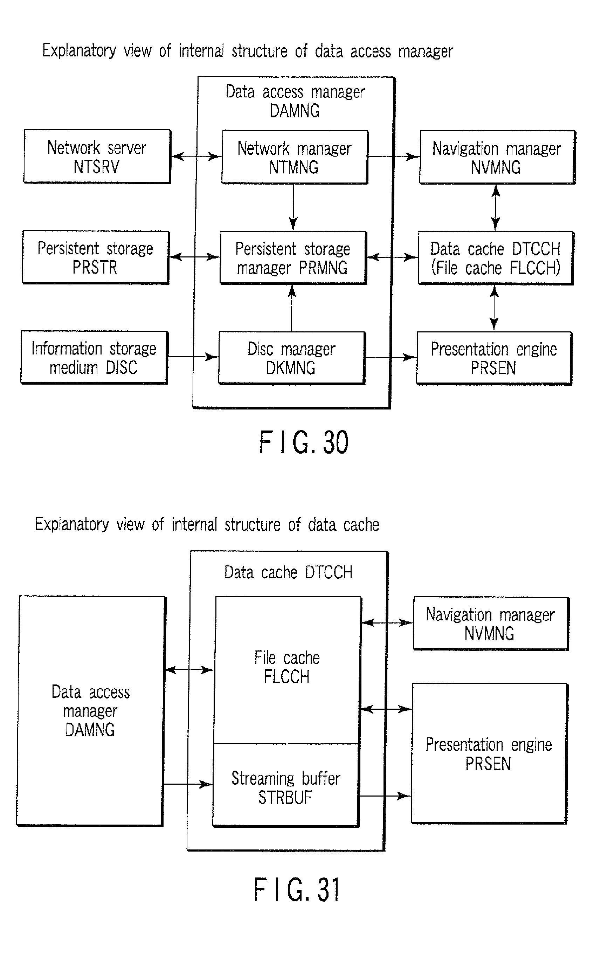

Data Access Manager consists of Disc Manger, Network Manager and Persistent Storage Manager (see FIG. 30).

Disc Manager:
The Disc Manager controls data reading from HD DVD disc to internal modules of the Advanced Content Player. The Disc Manager is responsible to provide file access API set for HD DVD Disc. HD DVD Disc shall not support write function.
Persistent Storage Manager:
The Persistent Storage Manager controls data exchange between Persistent Storage Devices and internal modules of Advanced Content Player. The Persistent Storage Manager is responsible to provide file access API set for Persistent Storage devices. Persistent Storage devices may support file read/write functions.
Network Manager:
The Network Manager controls data exchange between Network Server and internal modules of the Advanced Content Player. The Network Manager is responsible to provide file access API set for Network Server. Network Server usually supports file download and some Network Servers may support file upload.

The Navigation Manager invokes file download/upload between Network Server and the File Cache in accordance with Advanced Application. The Network Manager also provides protocol level access functions to the Presentation Engine. The Secondary Video Player in the Presentation Engine can utilize these functions for streaming from Network Server.
More intelligible explanations will be provided below.
FIG. 30 shows the structure of the data access manager DAMNG in the advanced content playback unit ADVPL shown in FIG. 16.
The data access manager DAMNG in this embodiment controls exchange of various playback objects recorded in the persistent storage PRSTR, network server NTSRV, and information storage medium DISC into the advanced content playback unit ADVPL. The data access manager DAMNG includes a disc manager DKMNG, persistent storage manager PRMNG, and network manager NTMNG. The operation of the disc manager DKMNG will be described first. In this embodiment, the disc manager DKMNG performs data control upon reading information from the information storage medium DISC and transferring data to various internal modules in the advanced content playback unit ADVPL. The disc manager DKMNG plays back various files recorded in the information storage medium DISC in accordance with API (application interface) commands with respect to the information storage medium DISC of this embodiment. This embodiment is not premised on a write function of information in the information storage medium DISC.
The persistent storage manager PRMNG controls data transfer between the persistent storage PRSTR and various internal modules in the advanced content playback unit ADVPL. The persistent storage manager PRMNG also performs file access control (file read control) in the persistent storage PRSTR in correspondence with an API Command set as in the disc manager DKMNG. The persistent storage PRSTR of this embodiment is premised on recording and playback functions.
The network manager NTMNG performs data transfer control between the network server NTSRV and internal modules in the advanced content playback unit ADVPL. The network manager NTMNG performs file access control (file read control) based on an API command set with respect to the network server NTSRV. In this embodiment, the network server NTSRV not only normally supports file downloading from the network server NTSRV but also can support file uploading to the network server NTSRV.
Furthermore, in this embodiment, the network manager NTMNG also manages an access control function in protocol level of various playback objects to be sent to the presentation engine PRSEN. Also, the network manager NTMNG can perform data transfer control of the secondary video set SCDVS from the network server NTSRV to the secondary video player SCDVP via the streaming buffer STRBUF, as shown in FIG. 29. The network manager NTMNG also controls and manages these control operations.

Data Cache

The Data Cache can be divided into two kinds of temporal data storages. One is the File Cache which is temporal buffer for file data. The other is the Streaming Buffer which is temporal buffer for streaming data.
The Data Cache quota for the Streaming Buffer is described in Play list and the Data Cache is divided during startup sequence of the Advanced Content playback. Minimum size of Data Cache is 64 MB (see FIG. 31).

Data Cache Initialization

The Data Cache configuration is changed during startup sequence of Advanced Content playback. Play list can include size of the Streaming Buffer. If there is no Streaming Buffer size configuration, it indicates Streaming Buffer size equals zero. The byte size of Streaming Buffer size is calculated as follows.

<streaming Buf size = "1024"/>

$$\text{Streaming Buffer size} = 1024 \text{ (kB)} = 1024 \times 1024 \text{ bytes.}$$

The Streaming Buffer size shall be multiple of 2048 bytes.
Minimum Streaming Buffer size is zero byte.

File Cache

The File Cache is used for temporal file cache among Data Sources, Navigation Manager and Presentation Engine.

Streaming Buffer

The Streaming Buffer is used for temporal data buffer for Secondary Video Set by the Secondary Video Presentation Engine in the Secondary Video Player. The Secondary Video Player requests the Network Manager to get a part of S-EVOB of Secondary Video Set to the Streaming Buffer. And then Secondary Video Player reads S-EVOB data from the Streaming Buffer and feeds it to the Demux Module in the Secondary Video Player.
More intelligible explanations will be provided below.
FIG. 31 shows the structure in the data cache DTCCH in the advanced content playback unit ADVPL shown in FIG. 16.
In this embodiment, the data cache DTCCH is divided into two different types of areas to be described below as temporal data storage locations. The first area is the file cache FLCCH which is used as a temporary storage location (temporal buffer) for file data. As the second area, in this embodiment, the streaming buffer STRBUF which is used as a temporary storage location for streaming data can be defined. As shown in FIG. 29, in this embodiment, the streaming buffer STRBUF can temporarily store the secondary video set SCDVS transferred from the network server NTSRV. A substitute audio SBTAD, substitute audio video SBTAV, or secondary audio video included in the secondary video set SCDVS is temporarily recorded in the streaming buffer STRBUF. An information description column associated with the streaming buffer in resource information RESRCI in a playlist PLLST describes information associated with the streaming buffer STRBUF area assigned to the data cache DTCCH (the size of the streaming buffer STRBUF area, the address range on the memory space assigned as the streaming buffer STRBUF area, and the like).
During playback startup processing (startup sequence) of the advanced content ADVCT, an assignment job of the data cache DTCCH (assignment processing of the data size to be assigned to the file cache FLCCH and that to be assigned to the streaming buffer) is executed. In this embodiment, the data size in the data cache DTCCH is premised on 64 MB or more. Smooth execution of the presentation processing of the advanced application ADAPL and advanced subtitle ADSBT premised on 64 MB or more to the user is guaranteed.
In this embodiment, during the startup processing (startup sequence) upon playback of the advanced content ADVCT, the assignment job in the data cache DTCCH (settings of the assigned memory sizes of the file cache FLCCH and streaming buffer STRBUF, and the like) is changed. The playlist file PLLST describes memory size information to be assigned to the streaming buffer STRBUF. If the size of the streaming buffer STRBUF is not described in the playlist PLLST, the memory size to be assigned to the streaming buffer STRBUF is considered as "0". The size information of the streaming buffer STRBUF described in configuration information CONFGI in the playlist file PLLST shown in FIG. 27 is described using a pack size (logical block size or logical sector size) as a unit. In this embodiment, all of one pack size, one logical block size, and one logical sector size are equal to each other, i.e., 2048 bytes (about 2 kbytes). For example, when the aforementioned configuration information CONFGI describes that the streaming buffer size is 1024, the size of the streaming buffer on the memory space, which is actually assigned in the data cache DTCCH, is 1024 x 2 = 2048 kbytes. The minimum size of the streaming buffer STRBUF is specified as 0 byte. In this embodiment, primary enhanced video objects P-EVOB included in the primary video set PRMVS and secondary enhanced video objects S-EVOB included in the secondary video set SCDVS are recorded as streams in pack units for respective logical blocks (logical sectors). Therefore, in this embodiment, by describing the size information of the streaming buffer STRBUF using a pack size (logical block size or logical sector size) as a unit access control to respective stream packs can be facilitated.

The file cache FLCCH is used as a location used to temporarily store data of the advanced content ADVCT externally fetched via the data access manager DAMNG, and can be used by both the navigation manager NVMNG and presentation engine PRSEN, as shown in FIG. 31.

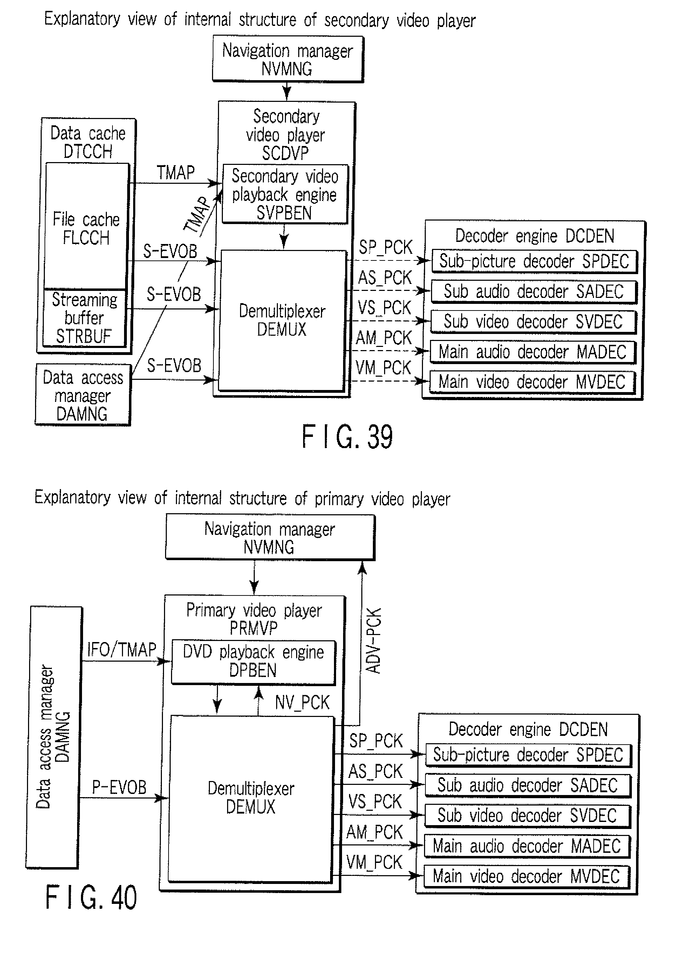

As shown in FIG. 31, in this embodiment, the streaming buffer STRBUF is a memory space used by the presentation engine PRSEN alone. As shown in FIG. 29, in this embodiment, the streaming buffer STRBUF records data of the secondary video set SCDVS, and can be used by a secondary video playback engine SVPBEN in the secondary video player SCDVP. The secondary video player SCDVP issues a request to the network manager NTMNG (included in the data access manager DAMNG shown in FIG. 30) to read at least some of secondary enhanced video object data S-EVOB in the secondary video set SCDVS from the network server NTSRV and to temporarily store them in the streaming buffer STRBUF. After that, the secondary video player SCDVP reads the secondary enhanced video object data S-EVOB temporarily stored in the streaming buffer STRBUF, transfers them to a demultiplexer DEMUX in the secondary video player SCDVP shown in FIG. 39, and make them undergo decoder processing in a decoder engine DCDEN.

Navigation Manager

Navigation Manager consists of five major functional modules, Parser, Play list Manager, Advanced Application Manager, File Cache Manager and User Interface Engine (see FIG. 32).

Parser

Parser reads and parses Advanced Navigation files in response to the request from Play list Manager and Advanced Application Manager. Parsed results are sent to the requested modules.

Play list Manager

Play list Manager has following responsibilities.

- Initialization of all playback control modules
- Title Timeline control
- File Cache resource management
- Playback control module management
- Interface of player system

Initialization of all playback control modules

Play list Manager executes startup procedures based on the descriptions in Play list. Play list Manager changes File Cache size and Streaming Buffer size. Play list Manager tells playback information to each playback control modules, for example, information of TMAP file and playback duration of P-EVOB to Primary Video Player, manifest file to Advanced Application Manager, and so on.

Title Timeline control

Play list Manager controls Title Timeline progress in response to the request from Advanced Application, playback progress status from each playback control modules and default playback schedule of the current Play list. Play list Manager also observes each playback modules, such as Primary Video Player, Secondary Video Player and so on, whether they can keep seamless playback the own Presentation Object which is synchronized to Title Timeline. When some synchronized Presentation Object can not keep seamless playback, Play list Manager arbitrates presentation timing among synchronized Presentation Objects and time of Title Timeline.

File Cache resource management

Play list Manager reads and parses Resource Information of Object Mapping information in Play list. Play list Manager gives Resource Information to File Cache Manager which generates resource management table in it.
Play list Manager orders File Cache Manager to load and discard resource files based on this table along with Title Timeline progress.

Playback control module management

Play list Manager provides variety set of APIs of playback control modules to programming engine in Advanced Application Manager. There are APIs of Secondary Video Player control, Effect Audio control, Audio Mixing control and so on.

Interface of player system

Play list Manager provides player system APIs to programming engine in Advanced Application Manager.
There are APIs to access System Information and so on.

Advanced Application Manger

Advanced Application Manager controls entire playback behavior of Advanced Content and also controls Advanced Application Presentation Engine in accordance with the cooperation of Markup and Script of Advanced Application. Advanced Application Manager consists of Declarative Engine and Programming Engine (See FIG. 32).

Declarative Engine

Declarative Engine manages and controls declarative behavior of Advanced Content in accordance with the Markup of Advanced Application. Declarative Engine has following responsibilities:

• Control of Advanced Application Presentation Engine

> Layout of graphics object and advanced text
> Style of graphics object and advanced text
> Timing control of scheduled graphics plane behaviors and effect audio playback

• Control of main video

> Attributes control of main video in Primary Audio Video via the object element which is assigned to main video.

• Control of sub video

> Attributes control of sub video in Primary Audio Video or Secondary Audio Video via the object element which is assigned to sub video.

• Scheduled script call

> Control script call timing by executing timing element.

Programming Engine

Programming Engine manages event driven behaviors, API set calls, or any kind of control of Advanced Content. User Interface events are typically handled by Programming Engine and it may change the behavior of Advanced Content or Advanced Application which is defined in Declarative Engine.

File Cache Manager

File Cache Manager is responsible for

- Storing resource files including package file which is multiplexed in P-EVOBS from demux module in Primary Video Player to File Cache
- Storing resource files including package file on Disc, Network Server or Persistent Storage
- Retrieving resource files including package file from Data Source to File Cache which is requested by Play list Manager or Advanced Application Manager.
- File System management of File Cache

File Cache Manager receives PCKs of Advanced Stream multiplexed in P-EVOBS from demux module in Primary Video Player. PS header of Advanced Stream PCK is removed, and then stored Advanced Stream data into File Cache. File Cache Manager also gets resource files including package file on Disc, Network Server or Persistent Storage in response to the request from Play list Manager or Advanced Application.

User Interface Engine

The User Interface Engine includes the Cursor Manager and several user interface device controllers, such as Front Panel, Remote Control, Mouse, Game Pad controller and so on. At least support one device which can generate User Input Event is mandatory. Support of Cursor Manager is mandatory. Support of a way for slipping out of a hang-up (such as, Reset Button, DISC tray compulsorily open button and so on) is mandatory. To support other user interfaces are optional.

Each controller detects availability of the device and observes user operation events. Every User Input Event is defined in this specification. The user input events are notified to Programming Engine in Advanced Application Manager in Navigation Manager.

The Cursor Manager controls cursor shape and position. Cursor position, image and hotspot may be updated via API call from the Programming Engine in Advanced Application Manager. The Cursor Manager updates the Cursor Plane according to moving events from related devices, such as Mouse, Game Pad and so on. The area to which Cursor can move is called 'Cursor Region'. This area may be changed by API call.

More intelligible explanations will be provided below.

FIG. 32 shows the internal structure of the navigation manager NVMNG in the advanced content playback unit ADVPL shown in FIG. 16. In this embodiment, the navigation manager NVMNG includes five principal functional modules, i.e., a parser PARSER, playlist manager PLMNG, advanced application manager ADAMNG, file cache manager FLCMNG, and user interface engine UIENG.

In this embodiment, the parser PARSER shown in FIG. 32 parses an advanced navigation file (a manifest file MNFST, markup file MRKUP, and script file SCRPT in the advanced navigation directory ADVNV shown in FIG. 13) in response to a request from the playlist manager PLMNG or advanced application manager ADAMNG to execute analysis processing of the contents. The parser PARSER sends various kinds of required information to respective functional modules based on the analysis result.

The playlist manager PLMNG shown in FIG. 32 executes the following processes:

- initialization of all playback control modules such as the presentation engine PRSEN, AV renderer AVRND, and the like in the advanced content playback unit ADVPL shown in FIG. 16;
- title timeline TMLE control (synchronization processing of respective presentation objects synchronized with the title timeline TMLE, pause or fast-forwarding control of the title timeline TMLE upon user presentation, and the like);
- resource management in the file cache FLCCH (data cache DTCCH);
- management of playback presentation control modules such as the presentation engine PRSEN, AV renderer AVRND, and the like in the advanced content playback unit ADVPL; and
- interface processing of the player system.

In this embodiment, the playlist manager PLMNG sown in FIG. 32 executes initialization processing based on the contents described in the playlist file PLLST. As practical contents, the playlist manager PLMNG changes the memory space size to be assigned to the file cache FLCCH and the data size on the memory space to be assigned as the streaming buffer STRBUF in the data cache DTCCH shown in FIG. 31. Upon playback and presentation of the advanced content ADVCT, the playlist manager PLMNG executes transfer processing of required playback presentation information to respective playback control modules. For example, the playlist manager PLMNG transmits a time map file PTMAP of the primary video set PRMVS to the primary video player PRMVP during the playback period of the primary enhanced video object data P-EVOB. The playlist manager PLMNG transfers the manifest file MNFST to the advanced application manager ADAMNG from the playlist manager PLMNG.

The playlist manager PLMNG performs the following three control operations.

1) The playlist manager PLMNG executes progress processing of the title timeline TMLE in response to a request from the advanced application ADAPL. In the description of FIG. 21, a markup page jump takes place due to a hard sync jump upon playback of the advanced application ADAPL. The following description will be given using the example of FIG. 20. In response to pressing of a help icon 33 included in the advanced application ADAPL by the user during simultaneous presentation of a main title 31 and independent window 32 for a commercial, the screen contents which are presented on the lower side of the screen and are configured by the advanced application ADAPL are often changed (markup page jump). At this time, preparation for the contents (the next markup page to be presented) often requires a predetermined period of time. In such case, the playlist manager PLMNG stops progress of the title timeline TMLE to set a still state of video and audio data until the preparation for the next markup page is completed. These processes are executed by the playlist manager PLMNG.

2) The playlist manager PLMNG controls playback presentation processing status of playback states from various playback presentation control modules. As a practical example, in this embodiment, the playlist manager PLMNG recognizes the progress states of respective modules, and executes corresponding processing when any abnormality has occurred.

3) Playback presentation schedule management in a default state in the current playlist PLLST

In this embodiment, the playlist manager PLMNG monitors playback presentation modules such as the primary video player PRMVP, secondary video player SCDVP, and the like irrespective of the necessity of continuous (seamless) playback of various presentation objects to be presented in synchronism with the title timeline TMLE. When continuous (seamless) playback of various presentation objects to be presented in synchronism with the title timeline TMLE is disabled, the playlist manager PLMNG adjusts playback timings between the objects to be synchronously presented and played back, and time (time period) on the title timeline TMLE, thus performing presentation control that does not make the user feel uneasy.

The playlist manager PLMNG in the navigation manager NVMNG reads out and analyzes resource information RESRCI in the playlist PLLST. The playlist manager PLMNG transfers the readout resource information RESRCI to the file cache FLCCH. The playlist manager PLMNG instructs the file cache manager FLCMNG to load or erase resource files based on a resource management table in synchronism with the progress of the title timeline TMLE.

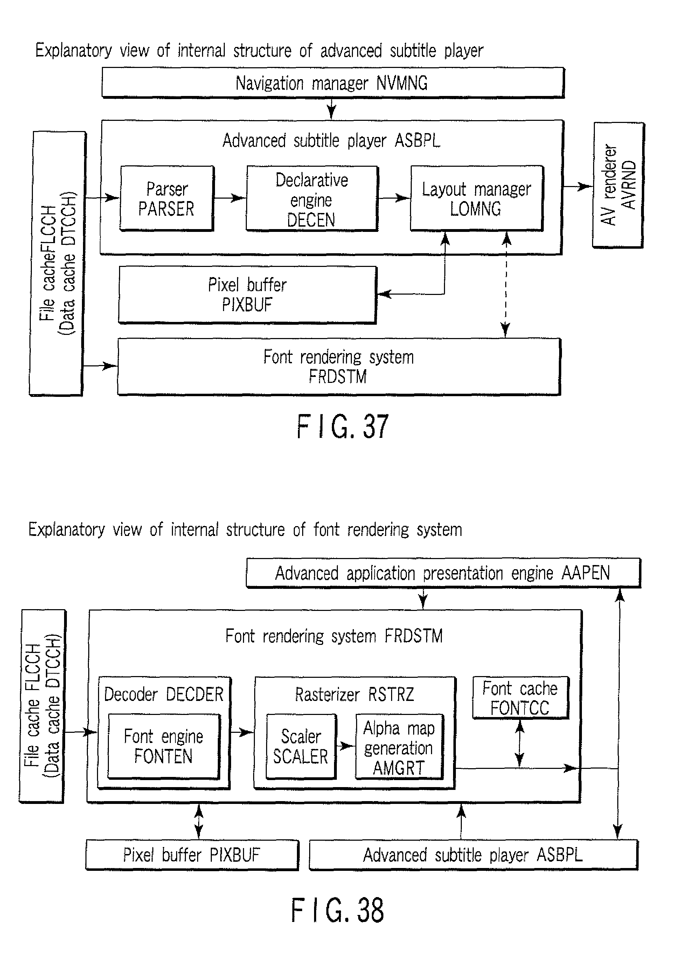

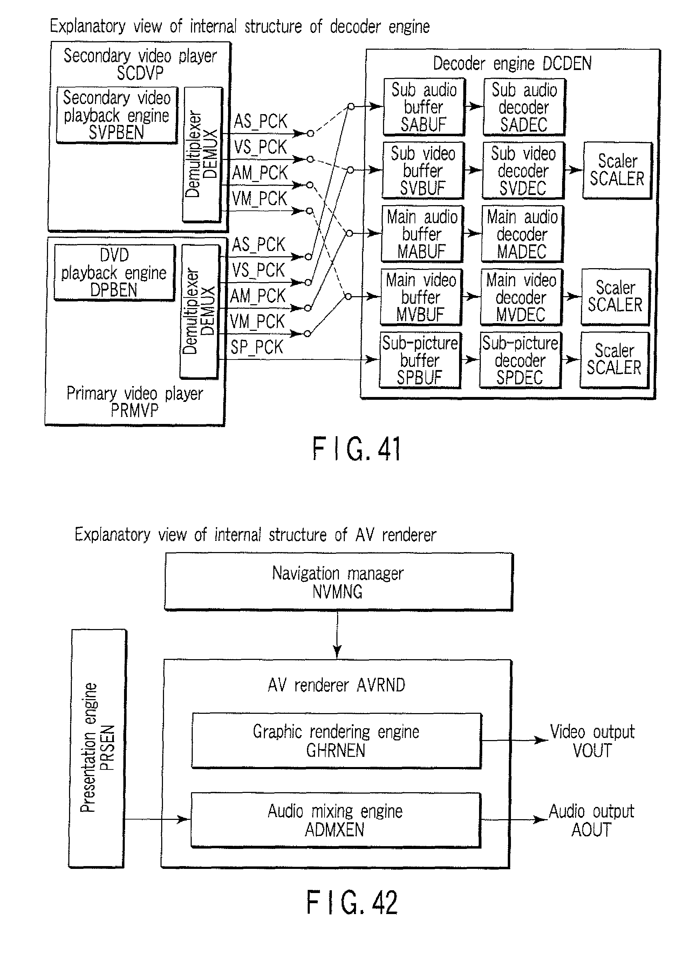

The playlist manager PLMNG in the navigation manager NVMNG generates various commands (API) associated with playback presentation control to a programming engine PRGEN in the advanced application manager ADAMNG to control the programming engine PRGEN. As an example of various commands (API) generated by the playlist manager PLMNG, a control command for the secondary video player SCDVP (FIG. 38), a control command for an audio mixing engine ADMXEN (FIG. 42), an API command associated with processing of an effect audio EFTAD, and the like are issued.

The playlist manager PLMNG also issues player system API commands for the programming engine PRGEN in the advanced application manager ADAMNG. These player system API commands include a command required to access system information, and the like.

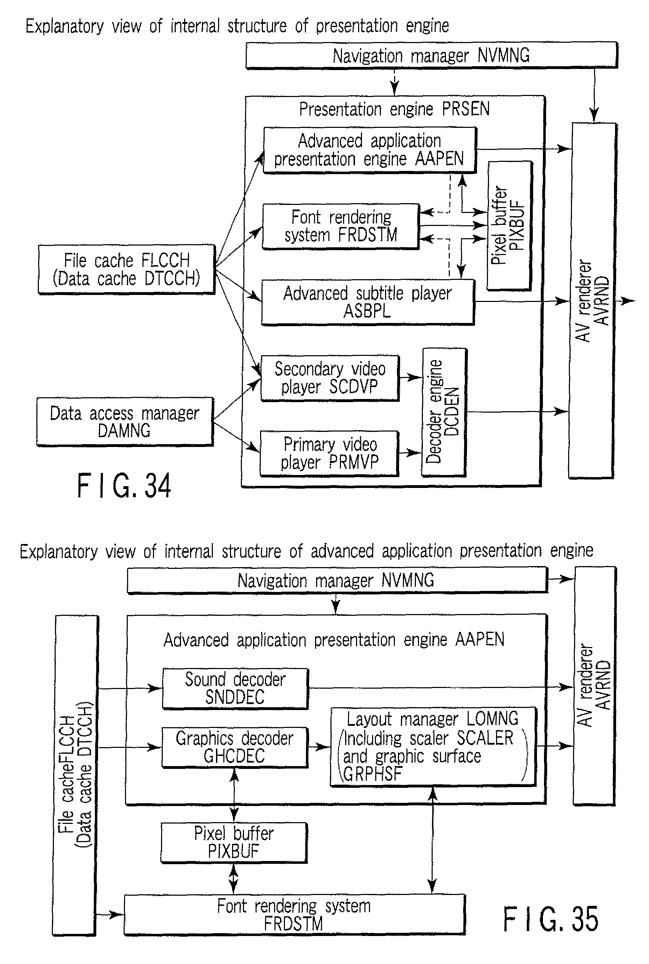

In this embodiment, the functions of the advanced application manager ADAMNG shown in FIG. 32 will be described below. The advanced application manager ADAMNG performs control associated with all playback presentation processes of the advanced content ADVCT. Furthermore, the advanced application manager ADAMNG also controls the advanced application presentation engine AAPEN shown in FIG. 34 as a collaboration job in association with the information of the markup file MRKUP and script file SCRPT of the advanced application ADAPL. As shown in FIG. 32, the advanced application manager ADAMNG includes a declarative engine DECEN and the programming engine PRGEN.

The declarative engine DECEN manages and controls declaration processing of the advanced content ADVCT in correspondence with the markup file MRKUP in the advanced application ADAPL. The declarative engine DECEN copes with the following items.

1. Control of advanced application presentation engine AAPEN (FIG. 34)

•Layout processing of graphic object (advanced application ADAPL) and advanced text (advanced subtitle ADSBT)

•Presentation style control of graphic object (advanced application ADAPL) and advanced text (advanced subtitle ADSBT)

•Presentation timing control in synchronism with presentation plan of graphic plane (presentation associated with advanced application ADAPL) and timing control upon playback of effect audio EFTAD

2. Control processing of main video MANVD

• Attribute control of main video MANVD in primary audio video PRMAV
As shown in FIG. 43, the frame size of a main video MANVD in the main video plane MNVDPL is set by an API command in the advanced application ADAPL. In this case, the declarative engine DECEN performs presentation control of the main video MANVD in correspondence with the frame size and frame layout location information of the main video MANVD described in the advanced application ADAPL.

3. Control of sub video SUBVD

• Attribute control of sub video SUBVD in primary audio video PRMAV or secondary audio video SCDAV
As shown in FIG. 43, the frame size of a sub video SUBVD in the sub video plane SBVDPL is set by an API command in the advanced application ADAPL. In this case, the declarative engine DECEN performs presentation control of the sub video SUBVD in correspondence with the frame size and frame layout location information of the sub video SUBVD described in the advanced application ADAPL.

4. Schedule-managed script call

• The script call timing is controlled in correspondence with execution of a timing element described in the advanced application ADAPL.

In this embodiment, the programming engine PRGEN manages processing corresponding to various events such as an API set call, given control of the advanced content ADVCT, and the like. Also, the programming engine PRGEN normally handles user interface events such as remote controller operation processing and the like. The processing of the advanced application ADAPL, that of the advanced content ADVCT, and the like defined in the declarative engine DECEN can be changed by a user interface event UIEVT or the like.

The file cache manager FLCMNG processes in correspondence with the following events.

1. The file cache manager FLCMNG extracts packs associated with the advanced application ADAPL and those associated with the advanced subtitle ADSBT, which are multiplexed in a primary enhanced video object set P-EVOBS, combines them as resource files, and stores the resource files in the file cache FLCCH. The packs corresponding to the advanced application ADAPL and those corresponding to the advanced subtitle ADSBT, which are multiplexed in the primary enhanced video object set P-EVOBS, are extracted by the demultiplexer DEMUX shown in FIG. 39.

2. The file cache manager FLCMNG stores various files recorded in the information storage medium DISC, network server NTSRV, or persistent storage PRSTR in the file cache FLCCH as resource files.

3. The file cache manager FLCMNG plays back source files, which were previously transferred from various data sources to the file cache FLCCH, in response to requests from the playlist manager PLMNG and the advanced application manager ADAMNG.

4. The file cache manager FLCMNG performs file system management processing in the file cache FLCCH.

As described above, the file cache manager FLCMNG performs processing of the packs associated with the advanced application ADAPL, which are multiplexed in the primary enhanced video object set P-EVOBS and are extracted by the demultiplexer DEMUX in the primary video player PRMVP. At this time, a presentation stream header in an advanced stream pack included in the primary enhanced video object set P-EVOBS is removed, and packs are recorded in the file cache FLCCH as advanced stream data. The file cache manager FLCMNG acquires resource files stored in the information storage medium DISC, network server NTSRV, and persistent storage PRSTR in response to requests from the playlist manager PLMNG and the advanced application manager ADAMNG.

The user interface engine UIENG includes a remote control controller RMCCTR, front panel controller FRPCTR, game pad controller GMPCTR, keyboard controller KBDCTR, mouse controller MUSCTR, and cursor manager CRSMNG, as shown in FIG. 32. In this embodiment, one of the front panel controller FRPCTR and remote control controller RMCCTR must be supported. In this embodiment, the cursor manager CRSMNG is indispensable, and the user processing on the screen is premised on the use of a cursor like in a personal computer. Various other controllers are handled as options in this embodiment. Various controllers in the user interface engine UIENG shown in FIG. 32 detect if corresponding actual devices (a mouse, keyboard, and the like) are available, and monitor user operation events. if the above user input processing is made, its information is sent to the programming engine PRGEN in the advanced application manager ADAMNG as a user interface event UIEVT. The cursor manager CRSMNG controls the cursor shape and the cursor position on the screen. The cursor manager CRSMNG updates a cursor plane CRSRPL shown in FIG. 43 in response to motion information detected in the user interface engine UIENG.

Player State Machine for Advanced Content Player

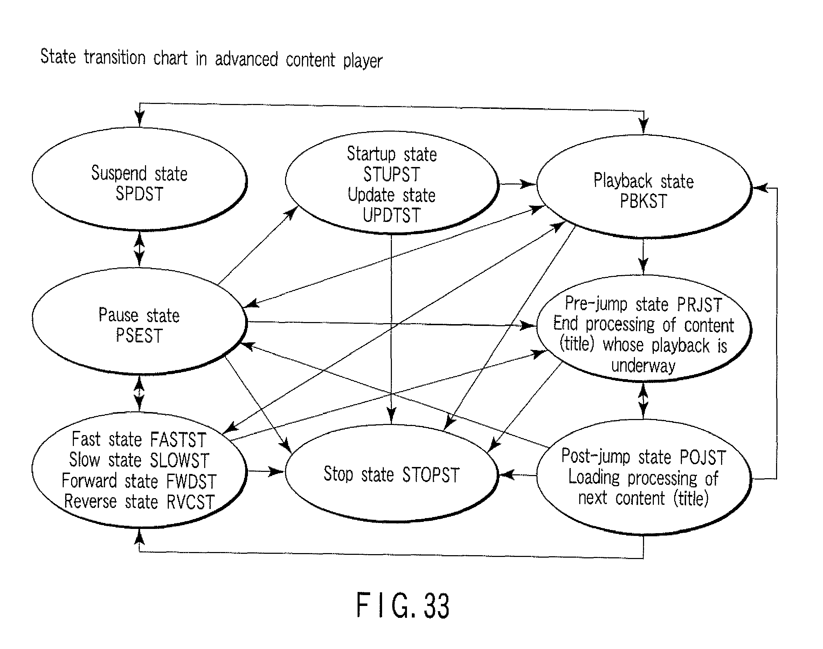

FIG. 33 shows state machine of Advanced Content Player. There are eight states in the state machine, Startup, Playback, Pause, Pre Jump, Post Jump, Stop and Suspend.

A) Startup/Update State
When the player starts Startup Sequence or Update Sequence, player state machine moves to Startup/Update State. After Startup/Update Sequence is completed normally, state machine moves to Playback State.
B) Playback State
While the Title Timeline progress at normal speed, player state machine in Playback State.
C) Stop State
On this state, the Title Timeline shall not progress and also every application shall not progress.
D) Pause State
While the Title Timeline has stopped temporarily, the player state machine moves to Pause State.
E) Fast/Slow - Forward/Reverse State
While the Title Timeline has run fast forward, slow forward, fast reverse or slow reverse, player state machine moves to Fast/Slow - Forward/Reverse State.
F) Pre Jump State
When user clicks 'jump' button which is presented by Menu Application, the player state machine moves to Pre Jump State. In this state, among current running applications, all applications which are invalid at destination point on Title Time line, are terminated. After this processing is completed, state machine moves to Post Jump State.
G) Post Jump State
In the beginning of this state, jump to certain jump destination time on Title Timeline. And then, the preparations for starting next presentation, such as buffering for video presentation, resource loading for application, are made. After that, the state machine moves to Playback State.
H) Suspend State
While Standard Contents is playing or Persistent Storage Management Menu is in execution, the state machine moves to Suspend State. In this state, Title Timeline and all presentation objects are suspended.

More intelligible explanations will be provided below.
States to be processed by the advanced content playback unit ADVPL in the information recording and playback apparatus 1 shown in FIG. 15 include eight states, i.e., a suspend state SPDST, pause state PSEST, fast state FASTST/ slow state SLOWST/forward state FWDST/reverse state RVCST, startup state STUPST/update state UPDTST, stop state STOPST, playback state PBKST, pre-jump state PRJST, and post-jump state POJST. FIG. 33 is a state transition chart among the states of the advanced content playback unit ADVPL. Respective states shown in this state transition chart are controlled by the navigation manager NVMNG in the advanced content playback unit ADAPL, as shown in FIG. 16. For example, in case of the system example shown in FIG. 15, when the user operates a remote controller toward the wide-screen TV monitor 15, wireless data 18 is input to the advanced content playback unit ADVPL via the wireless LAN controller 7-1 in the information recording and playback apparatus 1. When information of the user operation UOPE is input to the navigation manager NVMNG in the advanced content playback unit ADVPL, the remote control controller RMCCTR operates, and inputs that information to the advanced application manager ADAMNG as a user interface event UIEVT, as shown in FIG. 32. The advanced application manager ADAMNG interprets the user designated contents in correspondence with the position on the screen designated by the user, and notifies the parser PARSER of them. The parser PARSER causes transition to each of the states shown in FIG. 33. When each state transition has occurred, as shown in FIG. 33, the parser PARSER controls optimal processing in correspondence with information of the playlist PLLST interpreted by the playlist manager PLMNG. The operation contents of respective states will be described below.

A) Startup State STUPST/Update State UPDTST

When the advanced content playback unit ADVPL starts the startup processing or update processing, it transits to the startup state STUPST/update state UPDTST. When the startup state STUPST/update state UPDTST is normally complete, the advanced content playback unit ADVPL transits to the playback state PBKST.

B) Playback State PBKST

The playback state PBKST means a playback state of the advanced content ADVCT at a normal speed. That is, when the advanced content playback unit ADVPL is in the playback state PBKST, it executes processing along the title timeline TMLE at a normal playback speed.

C) Stop State STOPST

The stop state STOPST means that the advanced content playback unit ADVPL reaches an end state. At this time, the processing along the time axis of the title timeline TMLE is not executed, and every application processes are also stopped.

D) Pause State PSEST

The pause state PSEST represents a paused state. At this time, the time progress of the title timeline TMLE (count-up on the title timeline TMLE) is paused.

E) Fast State FASTST/Slow State SLOWST/Forward State FWDST/Reverse State RVCST

The fast state FASTST means a fast playback mode of a movie, and the slow state SLOWST means a slow playback mode of a movie. The forward state FWDST means information playback in a normal playback direction and also includes jump processing to an identical title in the forward direction (to access a playback position after an elapse of a specific time period). The reverse state RVCST means playback in the reverse direction with respect to the normal playback direction (rewinding), and also includes jump playback to a position a specific time period before. When the advanced content playback unit ADVPL is in each of the above states, the time change (count-up/count-down) processing on the title timeline TMLE is executed in correspondence with each of these playback states as the time progress (count change state) on the title timeline.

F) Pre-jump State PRJST

The pre-jump state means end processing of a content (title), playback of which is underway. In this embodiment, the advanced application ADAPL presents various control buttons on the screen. When the user clicks a "jump button" of these buttons, the advanced content playback unit ADVPL transits to the pre-jump state PRJST. A jump destination designated by the "jump button" presented by the advanced application ADAPL indicates jump to a different title or is largely different from the time (count value) designated by the title timeline TMLE even in an identical title. The advanced application ADVPL currently presented on the screen is often not used (its validity period has expired) on the time (count value) of a title timeline TMLE corresponding to the jump destination. In this case, the end processing of the advanced application ADAPL currently presented on the screen is needed. Therefore, in this embodiment, in the pre-jump state PRJST, the time (count value) of the title timeline TMLE at the jump destination is checked, and the end processing of the advanced application ADAPL, the validity period of which has expired and presentation preparation processing of an advanced application ADAPL, the validity period of which newly starts (which is not presented on the frame before jump) are executed. After that, the advanced content playback unit ADVPL transits to the post-jump state POJST.

G) Post-jump State POJST

The post-jump state POJST represents a loading processing mode of the next content (title). As shown in FIG. 21, unique title timelines TMLE are set for respective titles. When transition is made to the pre-jump state PRJST during playback of, e.g., title #2, the time progress of the title timeline TMLE of title #2 is stopped. When playback preparation of next title #3 is made in the post-jump state POJST, the title timeline TMLE shifts from the one for title #2 to that corresponding to title #3. In the post-jump state POJST, preparation processes such as the setting of the memory space of the data cache DTCCH, loading processing of the advanced application ADAPL into the set data cache DTCCH, and the like are executed. Upon completion of these series of preparation processes, the advanced content playback unit ADVPL transits to the playback state PBKST.

H) Suspend State SPDST

The suspend state means that the advanced content playback unit ADVPL is in a standby state. In this state, the time progress of the title timeline TMLE is paused, and various playback presentation objects are in a presentation standby state. As an example of this state, in, e.g., FIG. 15, this state is set when only the standard content STDCT is presented on the wide-screen TV monitor 15, and the advanced content ADVCT is not presented.

When the user inserts the information storage medium DISC into the information recording and playback unit 2 in the information recording and playback apparatus 1, the advanced content playback unit ADVPL is set in the startup state STUPST, and also enters the update state UPDTST as an initial state. After that, in a normal case, the advanced content playback unit ADVPL transits to the playback state PBKST soon to start a presentation mode of the advanced content ADVCT. At this time, when the user switches the advanced content ADVCT to the standard content STDCT, the advanced content playback unit ADVPL transits to the suspend state SPDST. When the user starts to play back the advanced content ADVCT again, the advanced content playback unit ADVPL transits to the playback state PBKST. Next, when the user instructs frame transition to another frame (title), the advanced content playback unit ADVPL transits to the post-jump state POJST via the pre-jump state PRJST, and then transits to the playback state PBKST of the title designated by the user. In this case, when the user presses a pause button during playback, the advanced content playback unit ADVPL transits to the pause state PSEST. After that, when the user designates fast-forwarding, the advanced content playback unit ADVPL transits to the fast state. After that, when the user quits the information recording and playback apparatus 1, the advanced content playback unit ADVPL transits to the stop state STOPST. The state transition of the advanced content playback unit ADVPL takes place in response to user operations UOPE in this way.

Presentation Engine

The Presentation Engine is responsible to decode presentation data and output AV Renderer in response to control commands from the Navigation Manager. It consists of six major modules and one graphic buffering memory. These six major modules are Advanced Application Presentation Engine, Advanced Subtitle Player, Font Rendering System, Secondary Video Player, Primary Video Player and Decoder Engine.

And, one graphics buffering memory is Pixel Buffer. The Pixel buffer is shared graphics memory which is stores pixel images, such as text images and decoded PNG images. The Pixel buffer is used for the Advanced Application Presentation Engine, Font Rendering System and Advanced Subtitle Player (See FIG. 34).

Advanced Application Presentation Engine

More intelligible explanations will be provided below.

FIG. 34 shows the internal structure of the presentation engine PRSEN in the advanced content playback unit ADVPL shown in FIG. 16.

Positioning of the presentation engine PRSEN will be described first. The advanced content ADVCT recorded on each of various recording media passes through the data access manager DAMNG, as shown in FIG. 16, and then undergoes data transfer to the AV renderer AVRND via the presentation engine PRSEN. Control at this time is done by the navigation manager NVMNG. That is, the presentation engine PRSEN decodes playback presentation data corresponding to various presentation objects in response to control commands generated by the navigation manager NVMNG, and transfers the decoded results to the AV renderer AVRND. As shown in FIG. 34, the presentation engine PRSEN includes six different principal processing functional modules and one graphic buffer memory. The six different principal functional modules include the advanced application presentation engine AAPEN, a font rendering system FRDSTM, the advanced subtitle player ASBPL, the secondary video player SCDVP, the primary video player PRMVP, and the decoder engine DCDEN. A pixel buffer PIXBUF corresponds to the graphic buffer memory. For example, the pixel buffer PIXBUF is shared as a graphic memory that stores, e.g., a text image and a pixel image such as a PNG image or the like.

As shown in FIG. 34, the pixel buffer PIXBUF is shared by the advanced application presentation engine AAPEN, font rendering system FRDSTM, and advanced subtitle player ASBPL. That is, as will be described later, the advanced application presentation engine AAPEN generates image pictures associated with the advanced application ADAPL (for example, a series of frame images from the help icon 33 to the FF button 38 shown in FIG. 20). At this time, the advanced application presentation engine AAPEN uses the pixel buffer PIXBUF as a temporary storage location of the image pictures. Likewise, the font rendering system FRDSTM generates text information corresponding to font. An image picture as the text information of the font shape which is specified and designated temporarily shares the pixel buffer PIXBUF as its temporary storage location. Also, when the advanced subtitle player ASBPL generates, e.g., subtitle information of the advanced subtitle ADSBT, its image picture can be temporarily stored in the pixel buffer PIXBUF.

As shown in FIG. 12, in this embodiment, there are four different types of playback presentation objects, and FIG. 29 describes the data flow of these playback presentation objects in the advanced content playback unit ADVPL. The relationship between FIG. 34 and FIG. 29 described above will be explained below.

The primary video set PRMVS will be explained first. As shown in FIG. 29, the primary video set PRMVS recorded in the information storage medium DISC is directly transferred to the primary video player PRMVP, and is decoded by various decoders. A relevant explanation will be given using FIG. 34. The primary video set PRMVS recorded in the information storage medium DISK goes through the data access manager DAMNG, is then decoded by the decoder engine DCDEN via the primary video player PRMVP, and undergoes picture composition by the AV renderer AVRND.

The secondary video set SCDVS will be described below. As shown in FIG. 29, the secondary video set SCDVS goes through the secondary video player SCDVP and is decoded by various decoders. A relevant explanation will be given using FIG. 34. The secondary video set SCDVS goes through the data access manager DAMNG, is processed by the secondary video player SCDVP, is then decoded by the decoder engine DCDEN, and undergoes picture composition by the AV renderer AVRND. Also, as shown in FIG. 29, the secondary video set SCDVS recorded in the network server NTSRV goes through the streaming buffer STRBUF, and reaches the secondary video player SCDVP. A relevant explanation will be given using FIG. 34. The secondary video set SCDVS recorded in the network server NTSRV is temporarily stored in the streaming buffer STRBUF (not shown) in the data cache DTCCH, is sent from the streaming buffer STRBUF in the data cache DTCCH to the secondary video player SCDVP, is decoded by the decoder engine DCDEN, and undergoes picture composition by the AV renderer AVRND.

The advanced application ADAPL will be explained below. As shown in FIG. 29, the advanced application ADAPL is temporarily stored in the file cache FLCCH, and is then transferred to an advanced element presentation engine AEPEN. A relevant explanation will be given using FIG. 34. The advanced application ADAPL is transferred from the file cache FLCCH in which it is temporarily stored to the advanced application presentation engine AAPEN, is formed as an image picture in the advanced application presentation engine AAPEN, and then undergoes picture composition by the AV renderer AVRND.

Finally, the advanced subtitle ADSBT will be described below. As shown in FIG. 29, the advanced subtitle ADSBT is inevitably temporarily stored in the file cache FLCCH, and is then transferred to the advanced subtitle player ASBPL. A relevant explanation will be given using FIG. 34. The advanced subtitle ADSBT stored in the file cache FLCCH is converted into an image picture that expresses the text contents by the advanced subtitle player ASBPL, and undergoes picture composition on the AV renderer AVRND. Especially, when the advanced subtitle ADSBT is to be presented on the screen in a designated font format, a font file FONT stored in the advanced element directory ADVEL, as shown in FIG. 13, is used. Using this data, the advanced subtitle ADSBT stored in the file cache FLCCH is converted into a character picture (image picture) in the designated font format in the font rendering system FRDSTM, and then undergoes picture composition by the AV renderer AVRND. In this embodiment, a character picture (image picture) in a unique font format generated by the font rendering system FRDSTM is temporarily stored in the pixel buffer PIXBUF, and that image picture is transferred to the AV renderer AVRND via the advanced subtitle player ASBPL.

The Advanced Application Presentation Engine outputs two presentation streams to the AV Renderer.

One is frame image for the Graphics Plane. The other is effect audio stream. The Advanced Application Presentation Engine consists of Sound Decoder, Graphics Decoder and Layout Manager (See FIG. 35).

Sound Decoder

The Sound Decoder reads WAV file from the File Cache and continuously outputs LPCM data to AV Renderer triggered by API call from the Programming Engine.

Graphics Decoder

The Graphics Decoder retrieves graphics data, such as MNG, PNG or JPEG image from the File Cache.

These image files are decoded and stored in the Pixel Buffer. And then, it sent (bitblt) to the Layout Manager in response to request from the Layout Manager.

Layout Manager

The Layout Manager has responsibility to make frame image for the Graphics Plane to the AV Renderer.

Layout information comes from the Declarative Engine in the Advanced Application Manager, when frame image is changed. The Layout Manager has the memory called "Graphics Surface" for creating frame image.

The Layout Manger invokes the Graphics Decoder to decode specified graphics object which is to be located on frame image. The Layout Manger also invokes the Font Rendering System to make text image which is also to be located on frame image. The Layout Manager locates graphical images on proper position from bottom to top and calculates the pixel alpha value when the object has alpha channel/value. Then finally it sends frame image to AV Renderer.

More intelligible explanations will be provided below.

As shown in FIG. 16, in this embodiment, the advanced content playback unit ADVPL includes the presentation engine PRSEN. FIG. 35 shows the internal structure of the advanced application presentation engine AAPEN in the presentation engine PRSEN shown in FIG. 34.

In this embodiment, the advanced application presentation engine AAPEN transfers two different types of playback presentation streams (playback presentation objects) to be described below to the AV renderer AVRND. One of playback presentation streams to be transferred to the AV renderer AVRND is a frame image presented on the graphic plane GRPHPL shown in FIG. 43. An effect audio stream EFTAD corresponds to the other playback presentation stream. As shown in FIG. 35, the advanced application presentation engine AAPEN includes a sound decoder SNDDEC, graphics decoder GHCDEC, and layout manager LOMNG.

Effect audio EFTAD (see FIG. 12) information in the advanced application ADAPL is transferred from the file cache FLCCH in which it is temporarily stored in advance to the sound decoder SNDDEC, is decoded in the sound decoder SNDDEC, and then undergoes audio mixing in the AV renderer AVRND. Each individual still picture IMAGE (see FIG. 12) which forms the image picture in the advanced application ADAPL is transferred from the file cache FLCCH in which it is temporarily stored to the graphics decoder GHCDEC, and is converted into (an element of) the image picture on the bitmap in the graphics decoder GHCDEC. Furthermore, each still picture IMAGE undergoes size conversion (scaler processing) in the layout manager LOMNG, is composited on the layout to form the image picture, and then undergoes image composition by the AV renderer.

The above processing will be described below using the example shown in FIG. 20. As shown in FIG. 20, a plurality of pieces of individual still picture information corresponding to the help icon 33, stop button 34, play button 35, FR button 36, pause button 37, and FF button 38 are stored in the file cache FLCCH in correspondence with the advanced application ADAPL. In the graphics decoder GHCDEC, each individual still picture is converted into (an element of) the image picture on the bitmap by decoder processing. Next, the layout manager LOMNG sets the position of the help icon 33, that of the stop button 34, and the like, and the image picture formed as an array of pictures from the help icon 33 to the FF button 38 is generated in the layout manager LOMNG. This image picture as an array of pictures from the help icon 33 to the FF button 38 generated by the layout manager LOMNG is composited to other pictures by the AV renderer AVRND.

The sound decoder SNDDEC reads a WAV file from the file cache FLCCH, and continuously outputs that file in the linear PCM format to the AV renderer AVRND. As shown in FIG. 32, the navigation manager NVMNG includes the programming engine PRGEN. This programming engine PRGEN issues an API command to the presentation engine PRSEN, and the above data processing is executed in response to that API command as a trigger.

The graphics decoder GHCDEC executes decode processing of graphics data stored in the file cache FLCCH. In this embodiment, (elements of) image pictures to be handled include an MNG image, PNG image, MPEG image, and the like. An image file that records information associated with these image pictures is decoded in the graphics decoder GHCDEC, and the decoded (elements of) image pictures are temporarily stored in the pixel buffer PIXBUF shown in FIG. 34. After that, the temporarily stored (elements of) image pictures are transferred to the layout manager LOMNG in response to a request from this layout manager LOMNG.

In this embodiment, the image pictures to be handled by the advanced application presentation engine AAPEN form a presentation frame on the graphic plane GRPHPL shown in FIG. 43. The layout manager LOMNG executes processing for generating these image pictures on the graphic plane GRPHPL, and transferring them to the AV renderer AVRND for composition. Layout information corresponding to each presentation frame (elements of image picture) in the graphic plane GRPHPL shown in FIG. 43 is available. That is, different pieces of corresponding layout information exist every time the frame contents in the graphic plane GRPHPL change, and the layout in the layout manager LOMNG is set based on such layout information. This layout information issued by the declarative engine DECEN included in the advanced application manager ADAMNG in the navigation manager NVMNG is transferred to the layout manager LOMNG, as shown in FIG. 32. The layout manager LOMNG incorporates a memory called a graphics surface GRPHSF, which is used upon generating image pictures on the graphic plane GRPHPL. Upon laying out a plurality of pictures (elements of the image picture) in the graphic plane GRPHPL, the layout manager LOMNG individually activates the graphics decoder GHCDEC to decode each element of the image picture, and then sets the layout for respective elements of image pictures as a frame image (image picture). As shown in FIG. 34, the presentation engine PRSEN includes the font rendering system FRDSTM, which converts character information based on the designated font format into an image picture. Upon making presentation using such specific font, the layout manager LOMNG activates the font rendering system FRDSTM to convert text information into a frame image (image picture) and to lay it out on the graphic plane GRPHPL. In this embodiment, as shown in FIG. 43, the entire image picture or each individual element of the image picture on the graphic plane GRPHPL is set to be translucent, so that a video picture of a sub-picture plane SBPCPL, sub video plane SBVDPL, or main video plane MNVDPL which exists below the graphic plane GRPHPL can be seen through it. The transparency of each element of the image picture (or the entire image picture) in the graphic plane GRPHPL with respect to the lower planes is defined by an alpha value. When the alpha value is set in this way, the layout manager LOMNG sets to lay out the elements at designated positions on the graphic plane GRPHPL as translucent patterns according to the alpha value.

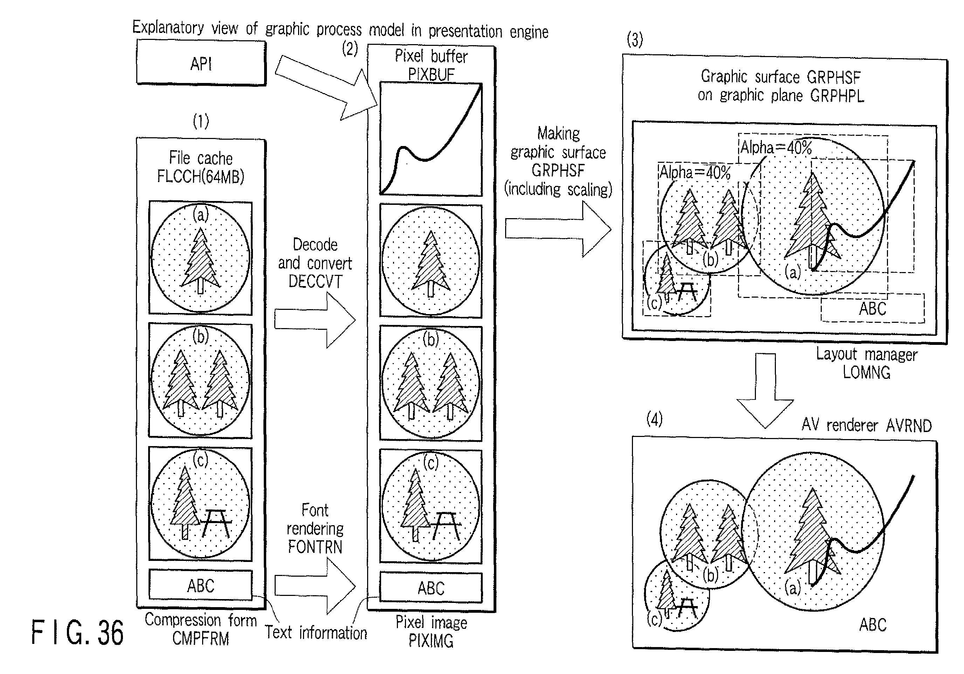

FIG. 36 shows an example behavior of Graphic Process Model how objects in the File Cache and Drawing Canvas are treated.

1) There are three graphics objects (Face marks "Smile", "Angry" and "Cry") on the File Cache.In a similar way, texts for advanced application are stored on the File Cache.

2) The Presentation Engine decoded all face marks using Graphic Decoder and stores it in the Pixel Buffer. In a similar way, the text "ABC" is converted by Font Rendering System and is stored in the Pixel Buffer. A Line Object on drawing canvas written by API is stored in the Pixel Buffer.

3) These face mark objects are scaled and positioned on the Graphics Surface. At this time, alpha value of these graphics is calculated. In this example, alpha value of "Face mark Angry" and "Face mark Smile" is 40 % transparent.

In a similar way, the text object and the line object are positioned on the Graphics Surface.
4) Layout Manager sends frame image to AV Render. More intelligible explanations will be provided below.

FIG. 36 shows a graphic process model in the presentation engine PRSEN in this embodiment.

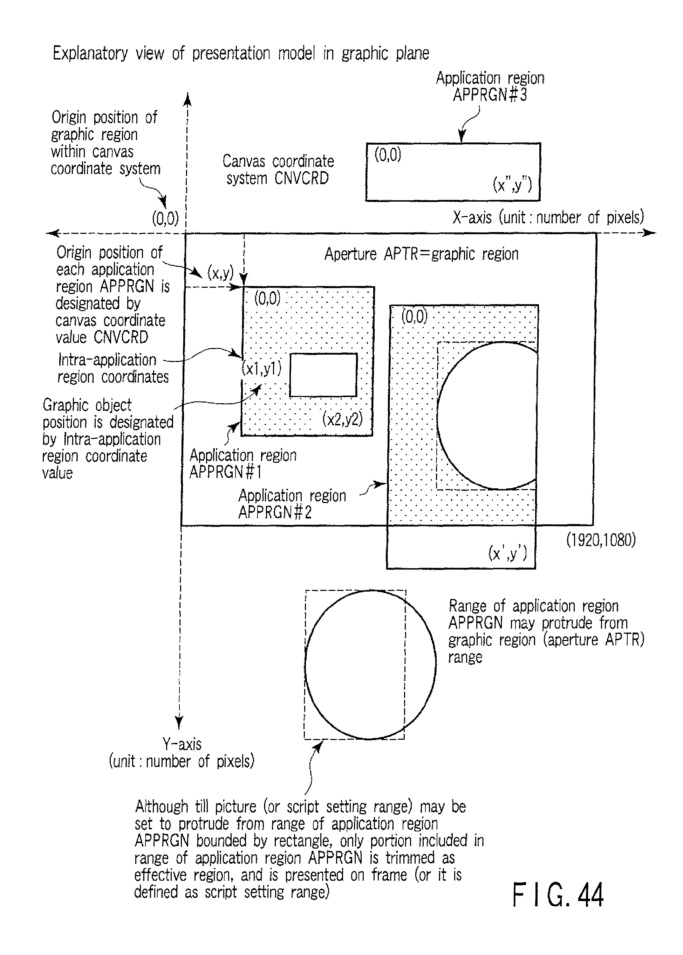

Before a graphic process, information of the advanced application ADAPL is recorded in the file cache FLCCH in a compressed form (compression form CMPFRM) in this embodiment. A graphic image (image picture) generated by the graphic process is presented on the graphic plane GRPHPL in FIG. 43, as will be described later. On the graphic plane GRPHPL, a canvas coordinate system CNVCRD is defined, as shown in FIG. 44, and each decoded graphic image (image picture including an animation) is laid out on the canvas coordinate system CNVCRD.

1) In the embodiment shown in FIG. 36, three types of graphic objects (a), (b), and (c) are recorded in advance in the file cache FLCCH in the compression form CMPFRM (compressed form). Also, text information of the advanced application ADAPL can be recorded in the file cache FLCCH, as indicated by an example of "ABC".

2) The graphics decoder GHCDEC shown in FIG. 35 decodes the three pieces of compressed information (a), (b), and (c) shown in FIG. 36(1) to convert them into image pictures (pixel images PIXIMG), and stores the decoded results in the pixel buffer PIXBUF (FIG. 36(2)). Likewise, the font rendering system FRDSTM converts the text information "ABC" recorded in the file cache FLCCH into an image picture (pixel image PIXIMG) and records it in the pixel buffer PIXBUF. As shown in FIG. 32, this embodiment also supports the mouse controller MUSCTR in the navigation manager NVMNG. When the user draws a figure using a mouse via the mouse controller MUSCTR, that figure is input in the form of a line object as the coordinates of the start and end point positions of each line. The line object is drawn as an image picture (pixel image PIXIMG) on the canvas coordinate system CNVCRD in the form of an API command via the mouse controller MUSCTR. The image picture (pixel image PIXIMG) drawn as the line object is similarly recorded in the pixel buffer PIXBUF.

3) The layout manager LOMNG in FIG. 35 sets the layout positions and presentation sizes on the graphic surface GRPHSF (on the graphic plane GRPHPL) of various decoded image pictures (pixel images PIXIMG) which are temporarily stored. As shown in FIG. 36(3), the drawings (a), (b), and (c), the text image "ABC", and the figure drawn by the API command are presented on the identical graphic surface GRPHSF (on the graphic plane GRPHPL) to overlap each other. In this embodiment, by specifying the transparency to each image picture (pixel image PIXIMG), a figure on the reverse side of the overlapping portion is seen through. The translucency of each image picture (pixel image PIXIMG) is defined by the alpha value (alpha information). The layout manager LOMNG can calculate the alpha value for each image picture (pixel image PIXIMG), and can set so that the reverse side of the overlapping portion can be seen through. In the example of FIG. 36(3), the alpha value of (a) and (b) is set to be 40% (40% transparency).

4) The composite image picture (frame image) on the graphic surface GRPHSF (on the graphic plane GRPHPL) is sent from the layout manager LOMNG to the AV renderer AVRND.

As shown in FIG. 15, the information recording and playback apparatus 1 includes the advanced content playback unit ADVPL. The advanced content playback unit ADVPL includes the presentation engine PRSEN, as shown in FIG. 16. Also, the presentation engine PRSEN includes the advanced subtitle player ASBPL, as shown in FIG. 34. The structure in the advanced subtitle player ASBPL will be described below.

As shown in FIG. 43, the sub-picture plane SBPCPL which presents a sub-picture and advanced subtitle ADSBT exists on the presentation frame. The advanced subtitle player ASBPL outputs a subtitle image to be presented on the sub-picture plane SBPCPL. As shown in FIG. 37, the advanced subtitle player ASBPL comprises the parser PARSER, declarative engine DECEN, and layout manager LOMNG.

Advanced Subtitle Player

The Advanced Subtitle Player outputs Subtitle image to the Subpicture Plane. Advanced Subtitle is a subset of Advanced Application, so the Advanced Subtitle Player has subset modules of the Advanced Application Manager and the Advanced Application Presentation Engine. The Advanced Subtitle Player consists of Parser, Declarative Engine and Layout Engine (see FIG. 37).

Parser reads Markup from the File Cache, and then the parsed results are transferred to Declarative Engine.

Declarative Engine manages the presentation information of layout, style and timing of Advanced Subtitle.

Along with the progress of Title Timeline, Declarative Engine sends commands to Layout Manager to generate Subpicture image. Layout Manager invokes Font Rendering System to generate text image in accordance with the information comes from Declarative Engine, and then locates generated image on proper position in Subpicture frame image. At this time, a required graphic image is stored at Pixel Buffer, and a frame image is created on the Graphics Surface in the Layout Manager. Finally, outputs a frame image onto the Subpicture Plane.

More intelligible explanations will be provided below.

The advanced subtitle ADSBT is positioned as a subset of the advanced application ADAPL. Therefore, the advanced subtitle player ASBPL has subset modules of the advanced application manager ADAMNG (see FIG. 32) and the advanced application presentation engine AAPEN (see FIG. 34). That is, as shown in FIG. 34, the advanced subtitle player ASBPL and advanced application presentation engine AAPEN share one pixel buffer PIXBUF. As shown in FIG. 37, the layout manager LOMNG in the advanced subtitle player ASBPL shares that in the advanced application presentation engine AAPEN, as shown in FIG. 35, and the declarative engine DECEN in the advanced subtitle player ASBPL shares that in the advanced application manager ADAMNG, as shown in FIG. 32.

Initially, the parser PARSER in the advanced subtitle player ASBPL reads a markup file MRKUPS of the advanced subtitle stored in the file cache FLCCH in the data cache DTCCH, and parses its contents. The parser PARSER transfers the parsing result to the declarative engine DECEN. The declarative engine DECEN manages presentation information associated with the presentation format (style) and presentation timing of the layout of the advanced subtitle ADSBT. In order to generate a subtitle image (an image of telop text or the like) in synchronism with the time progress on the title timeline TMLE, the declarative engine DECEN transfers various commands to the layout manager LOMNG. In accordance with the command information transferred from the declarative engine DECEN, the layout manager LOMNG activates the font rendering system FRDSTM in the presentation engine PRSEN to generate a text image (image picture). After that, the layout manager LOMNG lays out the generated text image (image picture) at an appropriate position in a sub-picture frame image (sub-picture plane SBPCPL). At this time, the generated text image (image picture) is recorded on the pixel buffer PIXBUF, and undergoes layout processing on the sub-picture plane SBPCPL by the layout manager LOMNG. The image picture (frame image) as the processing result is output onto the sub-picture plane SBPCPL.

As shown in FIG. 34, the font rendering system FRDSTM is included in the presentation engine PRSEN, and generates a text image (image picture) in response to requests from the advanced application presentation engine AAPEN and the advanced subtitle player ASBPL. FIG. 38 shows the structure in the font rendering system FRDSTM.

Font Rendering System

The Font Rendering System is responsible for generating text image in response to the request from the Advanced Application Presentation Engine or the Advanced Subtitle Player. "The Font Rendering System uses Pixel Buffer, in order to decode text images. Font Type that Font Rendering System supports is Open Type font.

More intelligible explanations will be provided below.

The font rendering system FRDSTM includes a decoder DECDER which incorporates a font engine FONTEN, a rasterizer RSTRZ, and a font cache FONTCC. The advanced subtitle ADSBT information or advanced application ADAPL information read out from the font cache FLCCH is used to generate a text image (image picture) in the decoder DECDER using the font engine FONTEN. The presentation size of the generated text image (image picture) in the sub-picture plane SBPCPL (see FIG. 43) is set by a scaler SCALER in the rasterizer RSTRZ. After that, the transparency of the generated text image (image picture) is designated by an alpha map generation AMGRT. The generated text image (image picture) is temporarily stored in the font cache FONTCC as needed, and is read out from the font cache FONTCC at a required timing, thus presenting the picture. The transparency of the generated text image (image picture) is specified by the alpha map generation AMGRT. As a result, a video picture on the sub video plane SBVDPL or main video plane MNVDPL (see FIG. 43) located below the overlapping portion of the text image can be seen through.

In this embodiment, the alpha map generation AMGRT not only can evenly set the transparency of the overall text image (image picture) generated by the decoder DECDER but also can partially change the transparency in the text image (image picture). In this embodiment, in the process of conversion from a text character into a text image (image picture) by the decoder DECDER, the pixel buffer PIXBUF can be used. In this embodiment, a font type supported by the font rendering system FRDSTM is basically an open type (conventionally, generally used font type). However, this embodiment is not limited to such specific type, and a text image can be generated in the form of a font type corresponding to a font file FONT using the font file FONT located under the advanced element directory ADVEL shown in FIG. 13.

As shown in FIG. 16, the advanced content playback unit ADVPL includes the presentation engine PRSEN, which includes the secondary video player SCDVP (see FIG. 34). The internal structure of the secondary video player SCDVP in this embodiment will be described below using FIG. 39.

Secondary Video Player

Secondary Video Player is responsible to play Substitute Audio Video, Substitute Audio and Secondary Audio Video which are carried by Secondary Video Set. These Presentation Objects may be stored on Disc, Network Server, Persistent Storage and File Cache. In order to play Secondary Video Set from disc while Primary Video Set is playing back from disc, it needs to be stored Secondary Video Set on File Cache in advance to be played by Secondary Video Player. The contents from Network Server should be stored in Streaming Buffer before feeding it to Demux module in Secondary Video Player to avoid data lack because of bit rate fluctuation of network transporting path. For relatively short length contents, may be stored on File Cache before being read by Secondary Video Player. Secondary Video Player consists of Secondary Video Playback Engine and Demux. Secondary Video Player connects proper decoders in Decoder Engine according to presentation stream types in Secondary Video Set (see FIG. 39).

Secondary Video Playback Engine

Secondary Video Playback Engine is responsible to control all functional modules. in Secondary Video Player in response to the request from Play list Manager in Navigation Manager. Secondary Video Playback Engine reads and analyses TMAP file to find proper reading position of S-EVOB.

Demux

Demux reads and distributes S-EVOB stream to proper decoder modules in Decoder Engine, which are connected to Secondary Video Player. Demux has also responsibility to output each PCK in S-EVOB in accurate SCR timing. When S-EVOB consists of single stream of video or audio, Demux just supplies it to the decoder in accurate SCR timing.

More intelligible explanations will be provided below.

As shown in FIG. 12, the secondary video set SCDVS includes a substitute audio video SBTAV, substitute audio SBTAD, and secondary audio video SCDAV, and the secondary video player SCDVP performs playback processing of them. Playback presentation objects of the secondary video set SCDVS can be stored in any of the information storage medium DISC, network server NTSRV, and persistent storage PRSTR. As in the presentation frame example shown in FIG. 20, when the primary video set PRMVS and secondary video set SCDVS are simultaneously presented on a single frame, playback presentation objects of the secondary video set SCDVS must be stored in advance in the file cache FLCCH, and must be played back from the file cache FLCCH. For example, when the primary video set PRMVS and secondary video set SCDVS are stored at different locations in the single information storage medium DISC, if they are to be simultaneously played back, an optical head (not shown) included in the information recording and playback unit 2 in the information recording and playback apparatus 1 shown in FIG. 15 is required to repeat access control between the recording locations of the primary video set PRMVS and secondary video set SCDVS, and they become hard to be continuously played back due to the influence of the access time of the optical head. To avoid this, in this embodiment, the secondary video set SCDVS is stored in the file cache FLCCH to allow the optical head in the information recording and playback unit 2 to play back only the primary video set PRMVS. As a result, the number of times of access of the optical head is greatly reduced, and the primary video set PRMVS and secondary video set SCDVS can be continuously presented on a single frame. When the secondary video player SCDVP executes playback processing of the secondary video set SCDVS recorded in the network server NTSRV, the secondary video set SCDVS must be stored in the streaming buffer STRBUF in the data cache DTCCH in advance before data is transferred to the demultiplexer DEMUX in the secondary video player SCDVP (see FIG. 29). In this way, depletion of data to be transferred can be prevented even when the transfer rate of the network route has varied. Basically, the secondary video set SCDVS stored in the network server NTSRV is stored in advance in the streaming buffer STRBUF in the data cache DTCCH. However, this embodiment is not limited to this. When the data size of the secondary video set SCDVS is small, the secondary video set SCDVS can be stored in the file cache FLCCH in the data cache DTCCH. In this case, the secondary video set SCDVS is transferred from the file cache FLCCH in the data cache DTCCH to the demultiplexer DEMUX. As shown in FIG. 39, the secondary video player SCDVP includes a secondary video playback engine SVPBEN and the demultiplexer DEMUX. As shown in FIG. 12, a main audio MANAD and main video MANVD are multiplexed in the secondary video set SCDVS for respective packs, and data are recorded (a sub video SUBVD and sub audio SUBAD are also multiplexed and recorded for respective packs). The demultiplexer DEMUX demultiplexes these data for respective packs, and transfers the packs to the decoder engine DCDEN. That is, sub-picture packs SP_PCK extracted by the demultiplexer DEMUX are transferred to the sub-picture decoder SPDEC, and sub audio packs AS_PCK are transferred to the sub audio decoder SADEC. Sub video packs VS_PCK are transferred to the sub video decoder SVDEC, main audio packs AM_ PCK are transferred to the main audio decoder MADEC, and main video packs VM_PCK are transferred to the main video decoder MVDEC.

The secondary video playback engine SVPBEN shown in FIG. 39 executes control processing of all functional modules in the secondary video player SCDVP. In the control of the secondary video playback engine SVPBEN, processing is executed in response to a request from the playlist manager PLMNG in the navigation manager NVMNG shown in FIG. 32. When the secondary video set SCDVS is played back and presented, the playlist PLLST refers to the time map file STMAP of the secondary video set SCDVS, as shown in FIG. 14, as has been described previously. The secondary video playback engine SVPBEN plays back the time map file STMAP of the secondary video set SCDVS, and interprets its contents, thus calculating an optimal playback start position of secondary enhanced video object data S-EVOB and issuing an access instruction to the optical head in the information recording and playback unit 2 (see FIG. 15).

The demultiplexer DEMUX in the secondary video player SCDVP plays back a secondary enhanced video object data stream S-EVOB, demultiplexes it into packs, and transfers data to various decoders in the decoder engine DCDEN for respective packs. Upon transferring packs to the decoder engine DCDEN, the demultiplexer DEMUX transfers them to various decoders at the timings of DTS (decoding time stamp) data described in respective packs in synchronism with system clock timings (SCR timings) of a standard clock included in the decoder engine DCDEN.

The advanced content playback unit ADVPL shown in FIG. 15 includes the presentation engine PRSEN, as shown in FIG. 16. As shown in FIG. 34, the presentation engine PRSEN includes the primary video player PRMVP. FIG. 40 shows the internal structure of the primary video player PRMVP.

Primary Video Player

Primary Video Player is responsible to play Primary Video Set. Primary Video Set shall be stored on Disc.
Primary Video Player consists of DVD Playback Engine and Demux. Primary Video Player connects proper decoder modules in Decoder Engine according to presentation stream types in Primary Video Set (see FIG. 40).

DVD Playback Engine

DVD Playback Engine is responsible to control all functional modules in Primary Video Player in response to the request from Play list Manager in Navigation Manager. DVD Playback Engine reads and analyses IFO and TMAP (s) to find proper reading position of P-EVOB and controls special playback features of Primary Video Set, such as multi angle, audio/Subpicture selection and sub video/audio playback.

Demux

Demux reads and distributes P-EVOB stream to proper decoder modules in Decoder Engine, which are connected to Primary Video Player. Demux also has a responsibility to output each PCK in P-EVQB in accurate SCR timing to each decoder. For multi angle stream, it reads proper interleaved block of P-EVOB on Disc or Persistent Storage in accordance with location information in the TMAP or navigation pack (NV PCK). Demux is responsible to provide the selected audio pack (AM_PCK or AS PCK) to the audio decoder (main audio decoder or sub audio decoder). And also it is responsible to provide the selected Subpicture pack (SP PCK) to Subpicture decoder.

More intelligible explanations will be provided below.
In this embodiment, the primary video player PRMVP supports playback of the primary video set PRMVS. The primary video set PRMVS is stored in only the information storage medium DISC. As shown in FIG. 40, the primary video player PRMVP includes a DVD playback engine DPBKEN and demultiplexer DEMUX. As shown in FIG. 12, various data types of the primary video set PRMVS include those from a main video MANVD to sub-picture SUBPT. The demultiplexer DEMUX is connected to corresponding decoders in the decoder engine DCDEN in accordance with these various data types. That is, sub-picture packs SP_PCK included in primary enhanced video object data P-EVOB are transferred to the sub-picture decoder SPDEC, and sub audio packs AS_PCK are transferred to the sub audio decoder SADEC. Sub video packs VS_PCK are transferred to the sub video decoder SVDEC, main audio packs AM_PCK are transferred to the main audio decoder MADEC, and main video packs VM_PCK are transferred to the main video decoder MVDEC.

As shown in FIG. 32, the navigation manager NVMNG includes the playlist manager PLMNG which interprets the contents of the playlist file PLLST. The DVD playback engine DPBKEN shown in FIG. 40 supports control of every functional modules in the primary video player PRMVP in response to a request from the playlist manager PLMNG. The DVD playback engine DPBKEN interprets the contents of management information associated with playback (the playlist file PLLST and video title set information ADVTSI shown in FIG. 13), and controls access to the playback start position in the primary enhanced video object data P-FVOB using the time map file PTMAP located under the primary video set directory PRMAV. In addition, the DVD playback engine DPBKEN controls special playback functions of the primary video set PRMVS such as switching of multi-angle, audio, and sub-picture tracks (streams), two-window simultaneous playback using a sub video SUBVD and sub audio SUBAD, and the like.

The demultiplexer DEMUX transfers various stream (pack) data distributed and allocated in the primary enhanced video object data P-EVOB to corresponding decoders in the decoder engine DCDEN connected to the primary video player PRMVP to make them execute decode processing. Although not shown, each pack PCK in the primary enhanced video object data P-EVOB includes DTS (decoding time stamp) information to transfer each pack information to the corresponding decoder at the designated DTS time. For a multi-angle stream, the demultiplexer DEMUX supports processing for playing back appropriate data in interleaved blocks of the primary enhanced video object data P-EVOB recorded in the information storage medium DISC in correspondence with information in the time map file PTMAP or information of navigation packs NV_PCK of the primary video set.

As shown in FIG. 16, the advanced content playback unit ADVPL in this embodiment includes the presentation engine PRSEN, which includes the decoder engine DCDEN, as shown in FIG. 34. The decoder engine DCDEN includes five different decoders, i.e., the sub audio decoder SADEC, sub video decoder SVDEC, main audio decoder MADEC, main video decoder MVDEC, and sub-picture decoder SPDEC, as shown in FIG. 41.

Decoder Engine

Decoder Engine is an aggregation of five kinds of decoders, Subpicture Decoder, Sub Audio Decoder, Sub Video Decoder, Main Audio Decoder and Main Video Decoder. Each decoder module has own input buffer module. For Subpicture Decoder, Sub Video Decoder and Main Video Decoder, each of them has scaler function for output frame. Each decoder is connected and controlled by the playback engine of the connected Player, Secondary Video Playback Engine in Secondary Video Player or DVD Playback engine in Primary Video Player (See FIG. 41).
The decode function modules for each presentation stream type can be connected to Secondary Video Player or Primary Video Player depends on the current playback combination of presentation streams.

Subpicture Decoder

The Subpicture Decoder is responsible to decode Subpicture stream in response to request from the DVD Playback Engine. The output plane is called Subpicture plane and it shall be exclusively shared between the output from the Advanced Subtitle Player and the Subpicture Decoder.

Sub Audio Decoder

The Sub Audio Decoder supports decoding the audio stream which is called as 'sub audio'. Number of channels of sub audio is up to 2ch and its sampling rate is up to 48 kHz. The output audio stream of Sub Audio Decoder is called as 'sub audio stream'.

Sub Video Decoder

The Sub Video Decoder supports video stream which is called as 'sub video'. The Sub Video Decoder support SD resolution is mandatory, and support HD resolution is optional. The output video plane of Sub Video Decoder is. called as 'sub video plane'.

Scaling Function in Sub video decoder

Scaling function in Sub Video decoder consists of three kinds of functionality as follows:

1) Scaling of source picture resolution to expected display resolution
If the source picture resolution is different from expected display resolution, scaling for up-sampling the Sub Video shall be performed.
2) Scaling of non-square pixel to square pixel
Since pixel aspect ratio is non-square pixel if Sub Video is SD, the Sub Video shall be scaled horizontally to obtain square pixel image.
3) Scaling by API defined in Annex Z
This scaling corresponds to the layout of Sub Video. This scaling will not change the aspect ratio of Sub Video. The scaling ratio shall be specified by API when the Sub Video is composed to Aperture.

Main Audio Decoder

The Main Audio Decoder can support up to 7.1ch multi channel audio and up to 192 kHz sampling rate, which is called as 'main audio'. The output audio stream of the Main Audio Decoder is called as 'main audio stream'.

Main Video Decoder

The Main Video Decoder can support HD resolution video stream which is called as 'main video'. The output video plane of the Main Video Decoder is called as 'main video plane'.

The Main Video Decoder decodes main video stream and locates it specified size of the Graphic Plane which is called as 'Aperture'. Decoded main video is scaled by the scaler and located proper position on canvas in accordance with the position and scale information from the Navigation Manager. The information also includes outer frame color information. This is applied to the outside area from main video in canvas.

The default color value of outer frame is "16, 128, 128" (= black).

Scaling Function in Main Video Decoder

Scaling function in Main Video decoder consists of three kinds of functionalities as follows:

1) Scaling of source picture resolution to expected display resolution
If the source picture resolution is different from expected display resolution, scaling for up-sampling the Main Video shall be performed.
2) Scaling of non-square pixel to square pixel
Since pixel aspect ratio is non-square pixel if Main Video is SD, the Main Video shall be scaled horizontally to obtain square pixel image.
3) Scaling by API defined in Annex Z
This scaling corresponds to the layout of Main Video. This scaling will not change the aspect ratio of Main Video. It is allowed not to specify the scaling ratio by API. In this case, the default behavior is to scale Main Video to fit to full screen. In case of 4:3 source materials, there are vertical side panels on both left and right side so that the scaled-up image is placed in the middle of the Aperture. More specifically, if the size of Aperture is 1920 x 1080, 240 pixels side panels are put on both left and right side. If the size of Aperture is 1280 x 720, 160 pixels side panels are put on both left and right side.

More intelligible explanations will be provided below.

A sub audio buffer SABUF, sub video buffer SVBUF, main audio buffer MABUF, main video buffer MVBUF, and sub-picture buffer SPBUF are respectively connected to these decoders. Also, scalers SCALER, each of which sets the presentation size and presentation location on the frame, are connected to the sub video decoder SVDEC, main video decoder MVDEC, and sub-picture decoder SPDEC. The respective decoders are connected to and controlled by the DVD playback engine DPBKEN in the primary video player PRMVP, and are also connected to and controlled by the secondary video playback engine SVPEN in the secondary video player SCDVP.

The primary video set PRMVS and secondary video set SCDVS have various data described in a data type column in FIG. 12.

Respective data included in the primary video set PRMVS are demultiplexed into five types of streams and these streams are output from the demultiplexer DEMUX in the primary video player PRMVP. The processing method of respective streams will be described below. Main video packs VM_PCK that record data of a main video MANVD undergo decode processing in the main video decoder MVDEC via the main video buffer MVBUF. Main audio packs AM_PCK that record data of a main audio MANAD undergo decode processing in the main audio decoder MADEC via the main audio buffer MABUF. Sub video packs VS_PCK that record data of a sub video SUBVD undergo decode processing in the sub video decoder SVDEC via the sub video buffer SVBUF. Sub audio packs AS_PCK that record data of a sub audio SUBAD undergo decode processing in the sub audio decoder SADEC via the sub audio buffer SABUF. Finally, sub-picture packs SP_PCK that record data of a sub-picture SUBPT undergo decode processing in the sub-picture decoder SPDEC via the sub-picture buffer SVBUF.

Likewise, respective data included in the secondary video set SCDVS are demultiplexed into four types of streams and are output from the demultiplexer DEMUX in the secondary video player SCDVP. The processing method of respective streams will be described below. Main audio packs AM_PCK that record data of a main audio MANAD included in a substitute audio SBTAD or substitute audio video SBTAV undergo decode processing in the main audio decoder MADFC via the main audio buffer MABUF. Main video packs VM_PCK that record data of a main video MANVD in the substitute audio video SBTAV undergo decode processing in the main video decoder MVDEC via the main video buffer MVBUF. Sub video packs VS_PCK that record data of a sub video SUBVD in a secondary audio video SCDAV undergo decode processing in the sub video decoder SVDEC via the sub video buffer SVBUF. Finally, sub audio packs AS_PCK that record data of a sub audio SUBAD in the secondary audio video SCDAV undergo decode processing in the sub audio decoder SADEC via the sub audio buffer SABUF.

In response to a request from the DVD playback engine DPBKEN in the primary video player PRMVP or the secondary video playback engine SVPBEN in the secondary video player SCDVP shown in FIG. 41, the sub-picture decoder SPDEC executes decode processing of a sub-picture stream. Respective frame layers on the presentation frame will be explained using FIG. 43. The output from the sub-picture decoder SPDEC is presented on the sub-picture plane SBPCPL. In this embodiment, in the sub-picture plane SBPCPL, the decode results of a sub-picture SUBPT and advanced subtitle ADSBT are commonly (alternatively) presented. The advanced subtitle ADSBT is decoded and output by the advanced subtitle player ASBPL shown in FIG. 34.

The sub audio decoder SADEC processes decoding of an audio stream called a sub audio SUBAD. In this embodiment, the sub video decoder SVDEC can support up to a maximum of two channels, and sets a sample rate of 48 kHz or less. By holding down the performance of the sub audio decoder SADEC in this way, the manufacturing cost in the decoder engine DCDEN can be reduced. An audio stream output from the sub audio decoder SADEC is called a sub audio stream SUBAD.

The sub video decoder SVDEC supports decode processing of a video stream called a sub video SUBVD. The sub video decoder SVDEC indispensably supports SD (standard definition) resolutions, and can also support HD (high definition) resolutions. Data output from the sub video decoder SVDEC is presented on the sub video plane SBVDPL (see FIG. 43).

The scaler SCALER connected to the output side of the sub video decoder SVDEC has the following three functions.

1) The scaler SCALER changes the resolution of a sub video SUBVD in correspondence with the display resolution required to output. When the ideal resolution of the sub video SUBVD upon outputting to the wide-screen TV monitor 15 shown in FIG. 15 is determined, the scaler SCALER changes the resolution of the sub video SUBVD in correspondence with the resolutions of every wide-screen TV monitors 15.

2) Scaling function corresponding to aspect ratio upon presentation

If the aspect ratio of the frame to be presented on the wide-screen TV monitor 15 is different from that to be originally presented by the sub video SUBVD, the scaler SCALER performs aspect ratio conversion to execute processing for making optimal presentation on the wide-screen TV monitor 15.

3) Scaling processing based on API command

As in the example shown in FIG. 43, when the independent window 32 for a commercial is presented on a part of a single frame as the sub video SUBVD, the size of the independent window 32 for a commercial (sub video SUBVD) can be set by an API command compliant to the advanced application ADAPL. In this manner, according to this embodiment, the optimal presentation frame size is set in the scaler SCALER based on the API command. In this case, the aspect ratio of the sub video SUBVD which is originally set remains unchanged, and only the entire size is changed.

In this embodiment, the main audio decoder MADEC supports decoding of a multi-channel audio up to 7.1 channels, and an audio up to a sampling rate of 192 kHz. Data decoded by the main audio decoder MADEC is called a main audio MANAD.

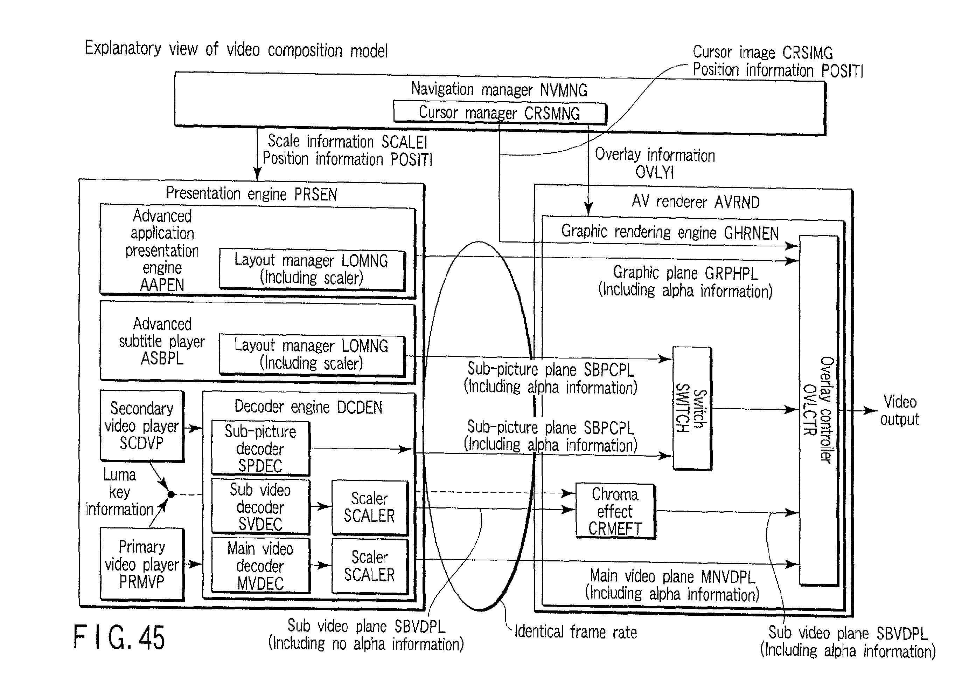

The main video decoder MVDEC can support HD (high definition) resolutions, and decoded video information is called a main video MANVD. In this manner, since the main video decoder MVDEC can implement decoding of high resolutions, high picture quality that meets the users demand can be attained. Since the sub video decoder SVDEC is provided in addition to this decoder, two windows can be presented at the same time. Also, by limiting the decode performance of the sub video decoder SVDEC, the price of the decoder engine DCDEN can be suppressed. The frame decoded by the main video decoder MVDEC is presented on the main video plane MNVDPL (see FIG. 43). The main video decoder MVDEC decodes a main video MANVD. In this embodiment, the presentation size of the decoded video information must match the size called an aperture APTR (see FIG. 44) on the graphic plane GRPHPL (see FIG. 43). In this embodiment, the decoded main video MANVD is scaled to an appropriate size on the aperture APTR and is laid out at an appropriate position on the aperture APTR by the scaler SCALER in correspondence with position information POSITI and scale information SCALEI (see FIG. 45) supplied from the navigation manager NVMNG. The scale information transferred from the navigation manager NVMNG includes information for the color of a frame part that presents the border of the frame of the main video plane MNVDPL. In this embodiment, the color of the border is set as "0, 0, 0" (black) in a default state.

The scaler SCALER connected to the output side of the main video decoder MVDEC has the following three functions.

1) The scaler SCALER changes the resolution of a main video MANVD in correspondence with the display resolution required to output. When the ideal resolution of the main video MANVD upon outputting to the wide-screen TV monitor 15 shown in FIG. 15 is determined, the scaler SCALER changes the resolution of the main video MANVD in correspondence with the resolutions of every wide-screen TV monitors 15.

2) Scaling function corresponding to aspect ratio upon presentation

If the aspect ratio of the frame to be presented on the wide-screen TV monitor 15 is different from that to be originally presented by the main video MANVD, the scaler SCALER performs aspect ratio conversion processing to make optimal presentation on the wide-screen TV monitor 15.

3) Scaling processing based on API command

When the main video MANVD (main title 31) is to be presented, as shown in FIG. 43, the size of the main video MANVD (main title 31) can be designated by an API command compliant to the advanced application ADAPL. In this manner, when an optimal frame size is set in the scaler SCALER, the aspect ratio of the main video MANVD which is originally set remains unchanged, and only the entire size is changed (conversion to a specific aspect ratio is inhibited depending on the API command). In this case, the main video MANVD is presented on a full screen in a default state. For example, in case of the aspect ratio = 4 : 3, when a frame having that aspect ratio is presented on the wide screen, since its width becomes narrow, a presentation frame having a narrow width is presented at the center on the wide screen. Especially, when the size of the aperture APTR is set to "1920 ×1080" or "1280 × 720" (wide screen compatible), a full-size frame is displayed on the wide screen.

As shown in FIG. 15, the information recording and playback apparatus 1 includes the advanced content playback unit ADVPL, which includes the AV renderer AVRND, as shown in FIG. 16. The AV renderer AVRND includes a graphic rendering engine GHRNEN and audio mixing engine ADMXEN, as shown in FIG. 42.

AV Renderer

The AV Renderer has two responsibilities. One is to composite graphic planes come from the Presentation Engine and the Navigation Manager and output composite video signal. The other is to mix PCM streams from the Presentation Engine and output mixed audio signal. The AV Renderer consists of the Graphic Rendering Engine and the Sound Mixing Engine (see FIG. 42).

Graphic Rendering Engine

The Graphic Rendering Engine can receive four graphic plane inputs from the Presentation Engine. The Graphics Rendering Engine has the Cursor Plane and updates it in accordance with cursor-image and position information from the Navigation Manager. The Graphic Rendering Engine composites these five planes in accordance with control information from the Navigation Manager, then output composite video signal.

Audio Mixing Engine

The Audio Mixing Engine can receive three LPCM streams from the Presentation Engine. The Audio Mixing Engine mixes these three LPCM streams in accordance with mixing level information from the Navigation Manager, and then outputs mixed audio signal.

More intelligible explanations will be provided below.

The graphic rendering engine GHRNEN performs composition processing of pictures on the graphic plane GRPHPL (see FIG. 43) based on information coming from the navigation manager NVMNG and presentation engine PRSEN shown in FIG. 16. The audio mixing engine ADMXEN mixes audio information (PCM streams) coming from the presentation engine PRSEN and outputs mixed audio information.

A frame to be presented to the user is configured by five planes, i.e., a cursor plane CRSRPL, graphic plane GRPHPL, sub-picture plane SBPCPL, sub video plane SBVDPL, and main video plane MNVDPL, as will be described in FIG. 43 in detail. These five planes undergo composition processing on the graphic rendering engine GHRNEN. The presentation engine PRSEN shown in FIG. 42 generates pictures on the respective planes, i.e., the graphic plane GRPHPL, sub-picture plane SBPCPL, sub video plane SBVDPL, and main video plane MNVDPL, and transfers them to the graphic rendering engine GHRNEN. The graphic rendering engine GHRNEN newly generates a cursor plane CRSRPL. The graphic rendering engine GHRNEN generates a cursor image CRSIMG, and lays it out on the cursor plane CRSRPL based on position information of the cursor image CRSIMG of the cursor sent from the navigation manager NVMNG. As a result, the graphic rendering engine GHRNEN executes composition processing of the five planes based on control information from the navigation manager NVMNG, and then outputs a composite picture as a video signal.

The audio mixing engine ADMXEN simultaneously can receive linear PCM streams up to a maximum of three types sent from the presentation engine PRSEN and can mix these audio streams. At this time, the audio mixing engine ADMXEN sets a tone volume for each linear PCM stream based on mixing level information sent from the navigation manager NVMNG, and then outputs the mixed stream.

As shown in FIG. 43, on the presentation screen, the frame is configured by five frame layers, i.e., the cursor plane CRSRPL, graphic plane GRPHPL, sub-picture plane SBPCPL, sub video plane SBVDPL, and main video plane MNVDPL. In this embodiment, one frame layer as the cursor plane CRSRPL is generated in the graphic rendering engine GHRNEN (see FIG. 45) in the AV renderer AVRND. Four frame layers, i.e., the graphic plane GRPHPL, sub-picture plane SBPCPL, sub video plane SBVDPL, and main video plane MNVDPL in FIG. 43, are generated in the presentation engine PRSEN (see FIG. 45). The frame rates of the four frame layers, i.e., the graphic plane GRPHPL, sub-picture plane SBPCPL, sub video plane SBVDPL, and main video plane MNVDPL, which are input to the graphic rendering engine GHRNEN and are generated in the presentation engine PRSEN, can be respectively independently set. More specifically, video information output from the advanced application presentation engine AAPEN in the presentation engine PRSEN, that output from the advanced subtitle player ASBPL, that output from the secondary video player SCDVP, and that output from the primary video player PRMVP can have unique frame rates. The main video plane MNVDPL shown in FIG. 43 is obtained as an output which is output from the primary video player PRMVP shown in FIG. 45 or 34 and goes through the decoder engine DCDEN and the scaler SCALER. The frame layer of the sub video plane SBVDPL is generated as an output of the scaler SCALER after it is output from the secondary video player SCDVP and goes through the decoder engine DCDEN. The sub video plane SBVDPL is generated by selecting one of the output from the advanced subtitle player ASBPL shown in FIG. 45 or 34, and the frame which is output from the sub video decoder SVDEC and goes through the scaler SCALER. The graphic plane GRPHPL is obtained as the output from the advanced application presentation engine AAPEN.

The region definition in the graphic plane GRPHPL will be described below using the example of FIG. 43. A composite frame shown on the lower side of FIG. 43 represents a full-size frame to be viewed by the user. The frame dimension size (resolution) to be optimally presented varies depending on a wide screen, standard screen, or the like with respect to the screen of the television. In this embodiment, an optimal frame size to be presented to the user is defined by the graphic plane GRPHPL. That is, the optimal frame size to be presented to the user on the graphic plane GRPHPL is set based on the number of scan lines and the number of dots. In this case, the optimal frame size (the number of pixels) to be presented to the user is defined as the size of the aperture APTR (graphic region) on the graphic plane GRPHPL. Therefore, when the frame to be presented to the user is a high-resolution frame, the size of the aperture APTR (graphic region) on the graphic plane GRPHPL becomes large, and when the frame size (resolution) to be presented to the user is a conventional standard size, the size of the aperture APTR (graphic region) becomes smaller compared to the resolution (the total number of pixels). Unlike the example shown in FIG. 43, when the main video MANVD of the primary audio video PRMAV is presented on the full screen, i.e., over the full user frame, the frame size on the main video plane MNVDPL completely matches the size of the aperture APTR (graphic region) on the graphic plane GRPHPL. As shown in FIG. 43, when the advanced application ADAPL from the help icon 33 to the FF button 38 is presented together on the lower region of the composite frame, presentation control can be facilitated by defining a region (application region APPRGN) that presents the advanced application ADAPL together within the aperture APTR (graphic region). For this reason, in this embodiment, the application region APPRGN can be defined as a region for presenting a plurality of elements included in the advanced application ADAPL together. In this embodiment, a plurality of application regions APPRGN can be set within the aperture APTR (graphic region) on the graphic plane GRPHPL. Details of the following contents will be described later using FIG. 44.

FIG. 43 has explained that the aperture APTR (graphic region) can be set on the graphic plane GRPHPL in correspondence with the frame size of the composite frame. Also, FIG. 43 has explained that one or more application regions APPRGN can be set as those for presenting one or more elements of the advanced application ADAPL within the aperture APTR (graphic region). A detailed explanation will be given using FIG. 44.

On the graphic plane GRPHPL, a coordinate system called a canvas (canvas coordinate system CNVCRD) can be defined. In this embodiment, a rectangular region that allows frame composition on the graphic plane GRPHPL can be defined within the canvas coordinate system CNVCRD. This rectangular region is called the aperture APTR (graphic region). In this embodiment, the origin position (0, 0) of the graphic region on the canvas coordinate system CNVCRD matches the position of an end point (origin) of the aperture APTR (graphic region). Therefore, the position of the end point (origin) of the aperture APTR (graphic region) is (0, 0) on the canvas coordinate system CNVCRD. Units of the X-axis and Y-axis of the aperture APTR (graphic region) are respectively identified by the number of pixels. For example, when the number of pixels of the frame to be presented to the user is 1920 x 1080, the corresponding position (1920, 1080) of the other end of the aperture APTR (graphic region) can be defined. The size of the aperture APTR (graphic region) can be defined in the playlist PLLST. In this embodiment, the advanced application ADAPL can set a unique coordinate system. The unique coordinate system can be set in the canvas coordinate system CNVCRD as a rectangular region. This rectangular region is called an application region APPRGN. Each advanced application ADAPL can have at least one application region APPRGN. The setting location of the application region APPRGN can be designated by X- and Y-coordinate values on the canvas coordinate system CNVCRD. That is, as shown in FIG. 44, the layout location of an application region APPRGN#1 on the aperture APTR (graphic region) is set by the canvas coordinate CNVCRD coordinate values within the canvas coordinate system CNVCRD of an end point (origin) of the application region APPRGN#1.

In this embodiment, a specific still picture IMAGE and the like can be laid out in the application region APPRGN as a plurality of elements (application elements or child elements) in the advanced application ADAPL. As a method of indicating the layout location of each element in the application region, the X- and Y-values of an independent coordinate system in the application region APPRGN can be defined. That is, as shown in FIG. 44, the application region APPRGN#1 has a unique intra- application region coordinate system, and the layout location of each element can be designated by intra- application region coordinate values. For example, as shown in FIG. 44, when the size of the application region APPRGN#1 is specified by the range from the origin (0, 0) to (y2, y2), coordinates (x1, y1) upon laying out an open rectangle portion as an element example can designate the position of that open rectangle in the application region APPRGN. In this way, the plurality of elements can be laid out using the unique coordinate system (intra- application region coordinate system), and a portion of the element may protrude from the application region APPRGN. In this case, only the element portion included in the application region APPRGN which is laid out within the aperture APTR (graphic region) is presented to the user.

FIG. 45 shows the relationship between the detailed structure in the graphic rendering engine GHRNEN in the AV renderer AVRND shown in FIG. 42, and various engines and players in the presentation engine PRSEN shown in FIG. 34.

Video Compositing Model

Video Compositing Model in this specification is shown in FIG. 45. There are five graphic plane inputs in this model. They are Cursor Plane, Graphics Plane, Subpicture Plane, Sub Video Plane and Main Video Plane. Those planes have the coordinate system called 'Canvas'. The area of Canvas is from $31^{st}$ power of -2 to the $31^{st}$ power of 2 minus 1 in x directions, and from $31^{st}$ power of -2 to the $31^{st}$ power of 2 minus 1 in y directions. The origin point (0, 0) and direction of x-y axis are correspond with each other.

There is a rectangle area which is to be rendered to each plane. This rectangle area is called 'Aperture'.

The origin of Aperture is (0, 0) in Canvas coordinate system. The size of Aperture is defined in Play list.

Frame rates of all graphic inputs to Graphic Rendering Engine shall be identical to video output of a player.

Cursor Plane

The Cursor Plane is the topmost plane of five graphic planes in the Graphic Rendering Engine in this Video Compositing Model. The Cursor Plane is managed by the Overlay Controller in the Graphic Rendering Engine. The Cursor Manager in the Navigation Manager is responsible to supply cursor image to the Overlay Controller. The Cursor Manager is also responsible to manage cursor position and update the position information to the Overlay Controller.

More intelligible explanations will be provided below.

In this embodiment, as shown in FIG. 42, the frame to be presented to the user is configured by five frame layers, and pictures of these frame layers are composited by an overlay controller CVLCNT. A large characteristic feature of this embodiment lies in that the frame rate (the number of frames to be presented per sec) of each frame layer input to the overlay controller OVLCNT can be independently set for each frame layer. With this feature, an optimal frame rate for each frame layer can be set without being limited by the frame rate, and an effective frame can be presented to the user.

As for the main video plane MNVDPL shown in FIG. 43, one of an output moving picture of the primary video player PRMVP and the substitute audio video STBAV of an output moving picture of the secondary video player SCDVP is selected, and is decoded by the main video decoder MVDEC in the decoder engine DCDEN after chroma information CRMI is considered. After that, the frame size and presentation frame position of the decoded output are set by the scaler SCALER, and the decoded output is input to the overlay controller OVLCTR.

In the sub video plane SBVDPL, one of the sub video SUBVD output from the primary video player PRMVP and that output from the secondary video player SCDVP is input to the sub video decoder in the decoder engine DCDEN in consideration of chroma information CRMI. The presentation size and presentation position on the frame of the output moving picture decoded by that decoder are set by the scaler SCALER, and the output moving picture then undergo chroma effect processing CRMEFT. Then, the processed output can be input to the overlay controller OVLCTR in a translucent form in correspondence with alpha information indicating the transparency that allows to display the main video plane MNVDPL as the lower layer.

As a video picture to be presented on the sub-picture plane SBPCPL, one of the advanced subtitle ADSBT and the sub-picture SUBPT of the primary audio video PRMAV is presented. That is, the advanced subtitle ADSBT is input to a switch (module) SWITCH after its presentation frame size and presentation position are set by the layout manager LOMNG in the advanced subtitle player ASBPL. The sub-picture SUBPT of the primary audio video PRMAV is input from the primary video player PRMVP to the sub-picture decoder SPDEC in the decoder engine DCDEN and is decoded by that decoder, and the presentation frame size and presentation position of the sub-picture SUBPT are then set by the scaler SCALER. After that, the sub-picture SUBPT is similarly input to the switch SWITCH. In this embodiment, one of the advanced subtitle ADSBT and the sub-picture SUBPT in the primary audio video PRMAV is selected by selection processing by the switch SWITCH, and is input to the overlay controller OVLCNT, as shown in FIG. 45.

An output for the graphic plane GRPHPL is directly input to the overlay controller OVLCNT after the presentation size and presentation position are set by the layout manager LOMNG in the advanced application presentation engine AAPEN.

For the cursor plane CRSRPL, the cursor manager CRSMNG in the navigation manager NVMNG outputs a cursor image CRSIMG and position information POSITI indicating the presentation position of the cursor, and the frame layer of the cursor is generated in the overlay controller OVLCTR. A detailed description of the respective frame layers will be given below.

The cursor plane CRSRPL indicates the frame layer which is located at the uppermost position of the five frame layers, and its frame is generated in the graphic rendering engine GHRNEN. The resolution of the cursor plane CRSRPL matches that of the aperture APTR (graphic region) on the graphic plane GRPHPL (see the explanation of FIG. 43). As described above, the cursor plane CRSRPL is generated and managed in the overlay controller OVLCTR in the graphic rendering engine GHRNEN. The cursor manager CRSMNG included in the navigation manager NVMNG generates the cursor image CRSIMG and transfers it to the overlay controller OVLCTR. The cursor manager CRSMNG manages and generates the position information POSITI that represents the cursor position on the screen, and transfers it to the overlay controller OVLCTR. Also, the cursor manager CRSMNG timely updates the position information POSITT of the cursor in response to the user input, and transfers the updated information to the overlay controller OVLCTR. The cursor image CRSIMG and X- and Y-coordinates (hotspotXY) indicating the position of the cursor in a default state (initial state) depend on the advanced content playback unit ADVPL to be used. In this embodiment, the cursor position (X, Y) in the default state (initial state) is set at (0, 0) (origin position). The cursor image CRSIMG and position information POSITI indicating its position are updated by API commands from the programming engine PRGEN (see FIG. 32) in the advanced application manager ADAMNG. In this embodiment, a maximum resolution of the cursor image CRSIMG is set to be 256 x 256 pixels. By setting this numerical value, a cursor image CRSIMG having certain expressive power can be expressed, and the cursor presentation processing speed can be increased by preventing an unnecessarily high resolution setting. The file format of the cursor image CRSIMG is set by PMG (8-bit color expression). In this embodiment, the cursor image CRSIMG can be switched by an API command between a state in which it is completely presented on the screen or a state in which it is 100% transparent and cannot be seen on the screen. According to the position information POSITI sent from the cursor manager CRSMNG, the cursor image CRSIMG is laid out on the cursor plane CRSRPL in the overlay controller OVLCTR. In addition, the overlay controller OVLCTR can set alpha mixing (i.e., setting of transparency based on alpha information) indicating a translucent state with respect to the frames of lower frame layers than the cursor plane CRSRPL.

The graphic plane GRPHPL in the video composition model of this embodiment corresponds to the second uppermost frame layer generated in the graphic rendering engine GHRNEN. Under the control of the advanced application manager ADAMNG in the navigation manager NVMNG shown in FIG. 32, the advanced application presentation engine AAPEN shown in FIG. 45 generates the frame of the graphic plane GRPHPL. The advanced application manager ADAMNG in the navigation manager NVMNG shown in FIG. 32 controls the graphic decoder GHCDEC and font rendering system FRDSTM in the advanced application presentation engine AAPEN shown in FIG. 35 to generate a part of the frame of the graphic plane GRPHPL. Finally, the layout manager LOMNG in the advanced application presentation engine AAPEN generates a composite frame of the graphic plane GRPHPL. The layout manager LOMNG sets the output video size and presentation location of the frame output from there. The frame rate (the number of frames changes per sec) output from the layout manager LOMNG can be uniquely set independently of the frame rate of video pictures of, e.g., the main video MANVD, sub video SUBVD, and the like. In this embodiment, an animation effect can be presented as continuation of graphic images such as animation or the like.

When the layout manager LOMNG shown in FIG. 35 sets the frame on the graphic plane GRPHPL, it cannot set the conditions of alpha information (alpha value) for individual building frames. In this embodiment, an alpha value cannot be set for respective graphic images (individual building frames) in the graphic plane GRPHPL, but an alpha value for the entire graphic plane GRPHPL can be set. Therefore, the transparency (alpha value) for lower frames is set to be constant everywhere on the graphic plane GRPHPL.

The sub-picture plane SBPCPL in the video composition model of this embodiment corresponds to the third uppermost frame layer generated by the graphic rendering engine GHRNEN. The sub-picture plane SBPCPL is generated by the advanced subtitle player ASBPL or the sub-picture decoder SPDEC in the decoder engine DCDEN (see FIG. 45). The primary video set PRMVS includes an image of the sub-picture SUBPT having a designated presentation frame size. When the presentation size of the image of the sub-picture SUBPT is designated, the sub-picture decoder SPDEC does not change the size of the image of the sub-picture SUBPT by directly by the scaler SCALER, and that image is directly transferred to the graphic rendering engine GHRNEN. As has been described using, e.g., FIG. 43, the presentation size of the composite frame is specified by the size of the aperture APTR (graphic region) on the graphic plane GRPHPL. When the main video MANVD on the main video plane MNVDPL is presented on the composite frame to have the full-screen size, the presentation size of the main video MANVD matches the size of the aperture APTR (graphic region). In this case, the presentation size of the sub-picture SUBPT is automatically determined based on the size of the aperture APTR (graphic region). In such case, the output frame of the sub-picture decoder SPDEC is directly transferred to the graphic rendering engine GHRNEN without being processed by the scaler SCALER. Conversely, as shown in FIG. 43, when the presentation size of the main title 31 on the main video plane MNVDPL is considerably smaller than the size of the aperture APTR (graphic region), the frame size of the sub-picture SUBPT need be changed accordingly. As described above, when an appropriate presentation size of the image of the sub-picture SUBPT is not set, the scaler SCALER connected at the output side of the sub-picture decoder SPDEC sets an optimal presentation size and presentation position of the aperture APTR (graphic region) and then transfers them to the graphic rendering engine GHRNEN. However, this embodiment is not limited to the above description. When an appropriate presentation size of the sub-picture is unknown (not designated), the sub-picture SUBPT can be presented to be aligned to the upper left corner of the aperture APTR (graphic region). In this embodiment, the frame rate of the frame to be transferred to the graphic rendering engine GHRNEN of the sub-picture plane SBPCPL can be uniquely set independently of that of the video output, as shown in FIG. 45. In this way, since the frame rates of the sub-picture plane SBPCPL and graphic plane GRPHPL that presents the sub-picture SUBPT and the advanced subtitle ADSBT or advanced application ADAPL are uniquely set independently of those of the main video plane MNVDPL and sub video plane SBVDPL, high processing efficiency of the presentation engine PRSEN can be achieved. This is because the main video plane MNVDPL and sub video plane SBVDPL change 50 to 60 fields per sec, but frames presented on the sub-picture plane SBPCPL and graphic plane GRPHPL have relatively low change rates. For example, an identical frame is presented for 10 seconds on the graphic plane GRPHPL in some cases. At this time, when a picture is transferred to the AV renderer AVRND at the frame rate in accordance with that (50 to 60 fields per sec) of the video plane, the loads on the advanced application presentation engine AAPEN and advanced subtitle player ASBPL become too heavy. Hence, by uniquely setting the frame transfer rates, the loads on these engine and player can be greatly reduced. The advanced subtitle player ASBPL can provide the frame of the sub-picture plane SBPCPL corresponding to the subset of the advanced application ADAPL. As described above, as the sub-picture plane SBPCPL to be transferred to the overlay controller OVLCTR which generates a composite frame by compositing the respective frame layers, one of the outputs from the advanced subtitle player ASBPL and sub-picture decoder SPDEC is used. In this embodiment, based on overlay information OVLYI transferred from the navigation manager NVMNG, the frame to be presented on the sub-picture plane SBPCPL supplied from the presentation engine PRSEN is selected by the switch module SWITCH in the graphic rendering engine GHRNEN. In this embodiment, the transparency of the frame to be presented on the sub-picture plane SBPCPL can also be set, so that the frames of the sub video plane SBVDPL and main video plane MNVDPL as its lower layers are seen through that plane. In this embodiment, an alpha value (alpha information) indicating transparency can be set for the sub-picture plane SBPCPL, and a constant alpha value (alpha information) is set everywhere in the sub-picture plane SBPCPL.

As for the video composition model of this embodiment, the sub video plane SBVDPL corresponds to the fourth uppermost frame layer to be generated by the graphic rendering engine GHRNEN (see FIG. 43). The sub video plane SBVDPL presents a video picture decoded in the sub video decoder SVDEC in the decoder engine DCDEN. Based on scale information SCALEI and position information POSITI sent from the navigation manager NVMNG, the scaler SCALER connected on the output side of the sub video decoder SVDEC sets the frame size and presentation position of the sub video SUBVD on the sub video plane SBVDPL, and outputs a final presentation video size (see FIG. 45). In a default (initial value), a scaling ratio indicated by the scale information SCALEI is set to be 1 (to be presented on the full aperture APTR (graphic region) size without being reduced in size). Also, in a default (initial value), the position information POSITI is set to include an X-position = "0" and Y-position = "0" (the origin position of the aperture APTR (graphic region)), and the alpha value is set to be 100% transparent. This embodiment is not limited to this, and the alpha value may be set to 100% presentation (transparency = 0%). The values of the alpha value, scale information SCALEI, and position information POSITI can be changed by API commands. If a new title is to be presented, these values are set to be default values (initial values). In this embodiment, the output frame rate of the sub video plane SBVDPL can be uniquely set irrespective of that of a video output of the advanced content playback unit ADVPL (the frame rate of the main video plane MNVDPL). In this way, for example, by decreasing the frame rate of the sub video plane SBVDPL, continuity upon loading can be guaranteed when a stream is transferred from the network server NTSRV. When chroma information CRMI is set in the sub video stream SUBVD, the edge of a video object in the sub video SUBVD can be extracted by the chroma effect processing CRMEFT in the graphic rendering engine GHRNEN. When a video picture includes that of a person who appears on, e.g., a blue background, chroma key processing allows to set the blue part to be transparent and a person or the like in colors other than blue to be opaque, and to superimpose another frame on the blue part. For example, in case of the example using the explanatory view of the respective frame layers in FIG. 43, a case will be examined below wherein, for example, the frame of the main video plane MNVDPL is presented to have the full frame size of the aperture APTR (graphic region), and the frame on the sub video plane SBVDPL is presented to be superimposed on the former frame. At this time, when the frame on the sub video plane SBVDPL includes a video picture in which a specific person appears on the blue background, only the person on the sub video plane can be presented to be superimposed on a video picture on the main video plane MNVDPL as the lower layer by setting the chroma color to be blue, i.e., setting only the blue part to be transparent. By utilizing the chroma key (chroma effect CRMEFT) technique, processing for extracting the edge of a specific object on the sub video plane SBVDPL, and superimposing the extracted object on the main video plane MNVDPL as the lower layer by setting a transparent background color can be done. As described above, in this embodiment, the chroma information CRMI can be applied to the sub video player module corresponding to the secondary video player SCDVP or the primary video player PRMVP. Two alpha values (alpha information) are set for an output video picture from the chroma effect CRMEFT. That is, one alpha value is set in a 100% visible state, and a video picture of the sub video plane SBVDPL located on the back side cannot be seen through. In the above example, the object (person) or the like which exists in the blue background and has colors different from blue has this alpha value. The other alpha value is set to be 100% transparent, and the blue background has this value in the above example. This portion allows 100% transparency, and the frame of the main video plane MNVDPL as the lower layer can be seen through. This embodiment is not limited to such specific values, and an intermediate value between 100% and 0% can be set as an alpha value. An intermediate value of alpha values (alpha information) at respective positions of a video picture in the sub video plane SBVDPL which overlaps the main video plane MNVDPL as the lowermost layer is set by the overlay information OVLYI transferred from the navigation manager NVMNG, and is actually set based on the value of that information by the overlay controller OVLCTR in the graphic rendering engine GHRNEN.

In the video composition model of this embodiment, the main video plane MNVDPL corresponds to the lowermost frame layer to be composited in the graphic rendering engine GHRNEN. A video picture of the main video plane MNVDPL includes that decoded by the main video decoder MVDEC in the decoder engine DCDEN. Based on scale information SCALEI and position information POSITI transferred from the navigation manager NVMNG, the scaler SCALER connected to the output stage of the main video decoder MVDEC sets the presentation frame size and presentation position on the main video plane MNVDPL. The size and presentation location as defaults (initial values) of the main video frame on the main video plane MNVDPL match the size of the aperture APTR (graphic region). The size information of the aperture APTR (graphic region) in this embodiment is specified in configuration information CONFGI in the playlist file PLLST, as shown in FIG. 25, and is designated while the aspect ratio of the frame is held in an original state. For example, when the aspect ratio of a video picture to be presented on the main video plane MNVDPL is 4 : 3, and the designated aspect ratio of the aperture APTR (graphic region) is 16 : 9, the presentation position of a video picture of the main video plane MNVDPL in the aperture APTR (graphic region) is set so that the height of the presentation frame matches that of the aperture APTR (graphic region), and a frame having a narrow width with respect to the full frame is presented at the central position of the aperture APTR (graphic region) in the widthwise direction of the screen. When video expression colors designated by the configuration information CONFGI in the playlist file PLLST are different from those set on the main video plane MNVDPL, the presentation color condition as a default (initial value) in the main video plane MNVDPL is not converted into the configuration information CONFGI, and original default colors are used. The values of the presentation size, presentation position, presentation colors, aspect ratio, and the like in the main video plane MNVDPL can be changed by API commands. Upon jumping to another title in the playlist PLLST, the information values of the video size, video presentation position, presentation colors, aspect ratio, and the like are set to be defaults (initial values) before jump. After that, the values of the video size, presentation position, presentation colors, aspect ratio, and the like are changed to designated values set by the playlist PLLST at the beginning of playback of the next title.

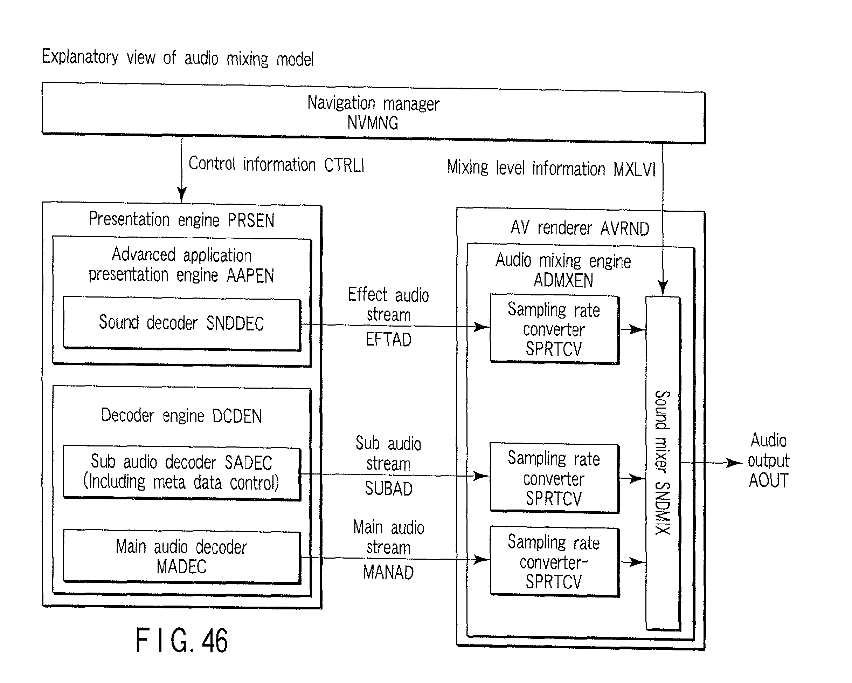

The information recording and playback apparatus 1 of this embodiment includes the advanced content playback unit ADVPL (see FIG. 15). As shown in FIG. 16, the advanced content playback unit ADVPL includes the AV renderer AVRND, which includes the audio mixing engine ADMXEN, as shown in FIG. 42. FIG. 46 shows an audio mixing model representing the relationship between the audio mixing engine ADMXEN and the presentation engine PRSEN which is connected on the input side of the engine ADMXEN.

Audio Mixing Model

Audio Mixing Model in this specification is shown in FIG. 46. There are three audio stream inputs in this model. They are effect audio, sub audio and main audio. Sampling Rate Converter adjusts audio sampling rate from the output of each sound/audio decoder to the sampling rate of final audio output.

Static mixing levels among three audio streams are handled by Sound Mixer in Audio Mixing Engine in accordance with the mixing level information from Navigation Manager. Final output audio signal depends on a player.

Effect audio stream

Effect audio steam is typically used when graphical button is clicked. Single channel (mono) and stereo channel WAV formats are supported. Sound Decoder reads WAV file from File Cache and sends LPCM stream to Audio Mixing Engine in response to the request from Navigation Manager. Two or more streams are not present simultaneously. In case that presentation of the other stream is requested while one stream is being presented, presentation of current stream is stopped and presentation of next stream is started.

Sub audio stream

There are two sources of sub audio stream. The one is sub audio stream in Secondary Audio Video and the other is sub audio stream in Primary Audio Video. Secondary Audio Video may be synchronized or not to Title Timeline. If Secondary Audio Video consists of sub video and sub audio, they shall be synchronized each other no matter what Secondary Audio Video is synchronized to Title Timeline. For sub audio in Primary Audio Video, it shall be synchronized with Title Timeline.

Main audio stream

There are three sources of main audio stream. The first one is main audio stream in Substitute Audio Video.
The next one is main audio stream in Substitute Audio. The last one is main audio stream in Primary Audio Video. Every main audio stream in different Presentation Object shall be synchronized with Title Timeline.
More intelligible explanations will be provided below.
In this embodiment, three different types of audio streams, i.e., an effect audio EFTAD, sub audio SUBAD, and main audio MANAD (see FIG. 12) are input to the audio mixing engine ADMXEN. Of these three different types of audio streams, the effect audio EFTAD is supplied as the output from the sound decoder SNDDEC in the advanced application presentation engine AAPEN shown in FIG. 46. The sub audio stream SUBAD is supplied as the output from the sub audio decoder SADEC in the decoder engine DCDEN. The main audio stream MANAD is supplied as the output from the main audio decoder MADEC in the decoder engine DCDEN. In this embodiment, the sampling frequencies of these audio streams need not match, and these audio streams can have different sampling frequencies (sampling rates). Upon mixing the audio streams having three different sampling frequencies, the audio mixing engine ADMXEN includes sampling rate converters SPRTCV corresponding to the respective audio streams. That is, the sampling rate converters SPRTCV have a function of changing the sampling frequencies (sampling rates) upon output from the audio decoders (SNDDEC, SADEC, MADEC) to that of a final audio output. In this embodiment, as shown in FIG. 46, mixing level information MXLVI is transferred from the navigation manager NVMNG to a sound mixer SNDMIX in the audio mixing engine ADMXEN, and a mixing level upon mixing the three different types of audio streams is set based on the transferred information in the sound mixer SNDMIX. The output dynamic range of a final audio output AOUT can be uniquely set by the advanced content playback unit ADVPL to be used.
The handling method and contents of the three different types of audio streams in the audio mixing model of this embodiment will be described below.
The effect audio stream EFTAD (see FIG. 12) is an audio stream basically used when the user clicks a graphical button. A use example will be explained below using FIG. 20. As shown in FIG. 20, the advanced application ADAPL is presented on the screen, and the help icon 33 is presented in it. For example, when the user clicks (designates) the help icon 33, a specific audio is output immediately after the help icon 33 is pressed as one means for indicating clicking of the help icon 33 to the user, thus clearly demonstrating the fact of clicking of the help icon 33 to the user. An effect sound that informs the user of clicking corresponds to the effect audio EFTAD. In this embodiment, the effect audio EFTAD supports a single-channel (monaural) or stereo-channel (two-channel) WAV format. In this embodiment, the sound decoder SNDDEC in the advanced application presentation engine AAPEN generates an effect audio stream EFTAD in accordance with the information contents of control information CTRLI sent from the navigation manager NVMNG, and transfers it to the audio mixing engine ADMXEN. The sound source of this effect audio stream EFTAD is saved in advance as a WAV file in the file cache FLCCH. The sound decoder SNDDEC in the advanced application presentation engine AAPEN reads this WAV file, converts it into a linear PCM format, and transfers the converted file to the audio mixing engine ADMXEN. In this embodiment, the effect audio EFTAD cannot present two or more streams at the same time. In this embodiment, when a presentation output request of the next effect audio stream EFTAD is issued while one effect audio stream EFTAD is presented, the effect audio stream EFTAD designated next is preferentially output. A practical example will be explained using FIG. 20. For example, a case will be examined wherein the user holds down the FF button 38. That is, a case will be examined below wherein upon holding down the effect (FF) button 38, a corresponding effect audio EFTAD continuously sounds for several seconds to present that fact to the user. When the user presses the play button 35 immediately after he or she holds down the FF button 38 before sounding of the effect audio EFTAD ends, an effect audio EFTAD indicating pressing of the play button 35 is output instead before sounding of the effect audio EFTAD ends. As a result, when the user successively presses a plurality of image objects of the advanced application ADAPL presented on the screen, a quick response to the user can be presented, thus greatly improving user's convenience.

In this embodiment, the sub audio stream SUBAD supports two sub audio streams SUBAD, i.e., the sub audio stream SUBAD in the secondary audio video SCDAV and that in the primary audio video PRMAV.

The secondary audio video SCDAV can be presented in synchronism with the title timeline TMLE or can also be presented asynchronously. If the secondary audio video SCDAV includes both the sub video SUBVD and sub audio SUBAD, the sub video SUBVD and sub audio SUBAD must be synchronized with each other independently of whether or not the secondary audio video SCDAV is synchronized with the title timeline TMLE. The sub audio SUBAD in the primary audio video PRMAV must be synchronized with the title timeline TMLE. In this embodiment, meta data control information in an elementary stream of the sub audio stream SUBAD is also processed by the sub audio decoder SADEC.

In this embodiment, as the main audio stream MANAD, three different types of main audio streams MANAD, i.e., a main audio stream MANAD in a substitute audio video SBTAV, that in a substitute audio SBTAD, and that in a primary audio video PRMAV are available. All main audio streams MANAD included in different playback presentation objects must be synchronized with the title timeline TMLE.

FIG. 47 shows a data supply model from the network server NTSRV and persistent storage PRSTR memory in this embodiment.

Network and Persistent Storage Data Supply Model

Persistent Storage can store any Advanced Content files. Network Server can store any Advanced Content files except for Primary Video Set. Network Manager and Persistent Storage Manager provide file access functions. Network Manager also provides protocol level access functions.

File Cache Manager in Navigation Manager can get Advanced Stream file directly from Network Server and Persistent Storage via Network Manager and Persistent Storage Manager. Parser in Navigation Manager cannot read Advanced Navigation files directly from Network Server and Persistent Storage except for Play list in startup sequence. Files shall be stored to File Cache at once before being read by Parser.

Advanced Application Presentation Engine has a way to copy the files from Network Server or Persistent Storage to File Cache. Advanced Application Presentation Engine invokes File Cache Manager to get the files which are not located on File Cache. File Cache Manager compares with File Cache Table whether requested file is cached on File Cache or not. The case the file exists on File Cache, File Cache Manager passes the file data to Advanced Application Presentation Engine directly from File Cache. The case the file does not exist on File Cache, File Cache Manager get the file from its original location to File Cache, and then passes the file data to Advanced Application Presentation Engine.

Secondary Video Player can directly get files of Secondary Video Set, such as TMAP and S-EVOB, from Network Server and Persistent Storage via Network Manager and Persistent Storage Manager as well as File Cache. Typically, Secondary Video Playback Engine uses Streaming Buffer to get S-EVOB from Network Server. It stored part of S-EVOB data to Streaming Buffer at once, and feed to it to Demux module in Secondary Video Player.

More intelligible explanations will be provided below.

In this embodiment, the advanced content file ADVCT can be stored in the persistent storage PRSTR. Also, the advanced content ADVCT except for the primary video set PRMVS can be stored in the network server NTSRV. In this embodiment, the network manager NTMNG and persistent storage manager PRMNG in the data access manager DAMNG in FIG. 47 execute access processing to various files associated with the advanced content ADVCT. Furthermore, the network manager NTMNG has an access function on the protocol level. The file cache manager FLCMNG in the navigation manager NVMNG makes control upon directly acquiring an advanced stream file associated with the advanced application ADAPL from the network server NTSRV or persistent storage PRSTR via the network manager NTMNG or persistent storage manager PRMNG. The parser PARSER can directly read the contents of the playlist file PLLST upon startup of the advanced content playback unit ADVPL. To this end, the playlist file PLLST must be stored in the information storage medium DISC. However, this embodiment is not limited to this. For example, the playlist file PLLST may be stored in the persistent storage PRSTR, network server NTSRV, or the like, and may be directly read from there. In this embodiment, the parser PARSER in the navigation manager NVMNG cannot directly play back files such as a manifest file MNFST, markup file MRKUP, script file SCRPT, and the like, which are located under the advanced navigation directory ADVNV indicated by advanced navigation files (see FIG. 13) and are obtained from the network server NTSRV or persistent storage PRSTR.

That is, this embodiment is premised on that when the parser PARSER plays back advanced navigation files ADVNV (i.e., files such as the manifest file MNFST, markup file MRKUP, script file SCRPT, and the like under the directory ADVNV), these files are temporarily recorded in the file cache FLCCH, and the parser PARSER plays back the advanced navigation files ADVNV from the file cache FLCCH. It is also premised on that advanced elements ADVEL (files such as a still picture file IMAGE, effect audio file EFTAD, font file FONT, and other files OTHER shown in FIG. 13) are stored in the file cache FLCCH in advance. That is, the advanced content ADVCT including the advanced elements ADVEL is transferred in advance from the network server NTSRV or persistent storage PRSTR via the network manager NTMNG or persistent storage manager PRMNG in the data access manager DAMNG, and is stored in advance in the file cache FLCCH. Then, the advanced application presentation engine AAPEN reads the advanced elements ADVEL stored in the file cache FLCCH. The advanced application presentation engine AAPEN in the presentation engine PRSEN controls to copy various files in the network server NTSRV or persistent storage PRSTR to the file cache FLCCH. The advanced application presentation engine AAPEN controls the file cache manager FLCMNG in the navigation manager NVMNG to store required files (or short files of required information) in the file cache FLCCH. With this control, the file cache manager FLCMNG confirms the contents of a file cache table which indicates a list stored in the file cache FLCCH to see if files requested from the advanced application presentation engine AAPEN are temporarily stored in the file cache FLCCH. In the description of this embodiment, the advanced application presentation engine AAPEN in the presentation engine PRSEN controls the file cache manager FLCMNG in the navigation manager NVMNG to store the required advanced content ADVCT in the file cache FLCCH in advance. However, this embodiment is not limited to this. For example, the playlist manager PLMNG in the navigation manager NVMNG may interpret the contents of resource information RESRCI in the playlist PLLST and may report the parser PARSER on that result, and the parser PARSER may control the file cache manager FLCMNG based on the resource information RESRCI to store the required advanced content ADVCT in the file cache FLCCH in advance. As a result, if all the required files are temporarily stored in the file cache FLCCH, the file cache manager FLCMNG directly transfers the required file data from the file cache FLCCH to the advanced application presentation engine AAPEN. Contrary to this, if not all the required files are stored in the file cache FLCCH, the file cache manager FLCMNG reads required files from their original storage location (network server NTSRV or persistent storage PRSTR) and transfers them to the file cache FLCCH. After that, the required file data are transferred to the advanced application presentation engine AAPEN. The secondary video player SCDVP controls to transfer the time map file STMAP (see FIG. 13) and secondary enhanced video object file S-EVOB of the secondary video set file SCDVS from the network server NTSRV or persistent storage PRSTR to the file cache FLCCH via the network manager NTMNG or persistent storage manager PRMNG. The secondary enhanced object data S-EVOB read from the network server NTSRV is temporarily stored in the streaming buffer STRBUF. After that, the secondary video playback engine SVPBEN in the secondary video player SCDVP plays back the stored secondary enhanced video object data S-EVOB from the streaming buffer STRBUF. Some of the secondary enhanced video object data S-EVOB stored in the streaming buffer STRBUF are transferred to the demultiplexer DEMUX in the secondary video player SCDVP, and are demultiplexed.

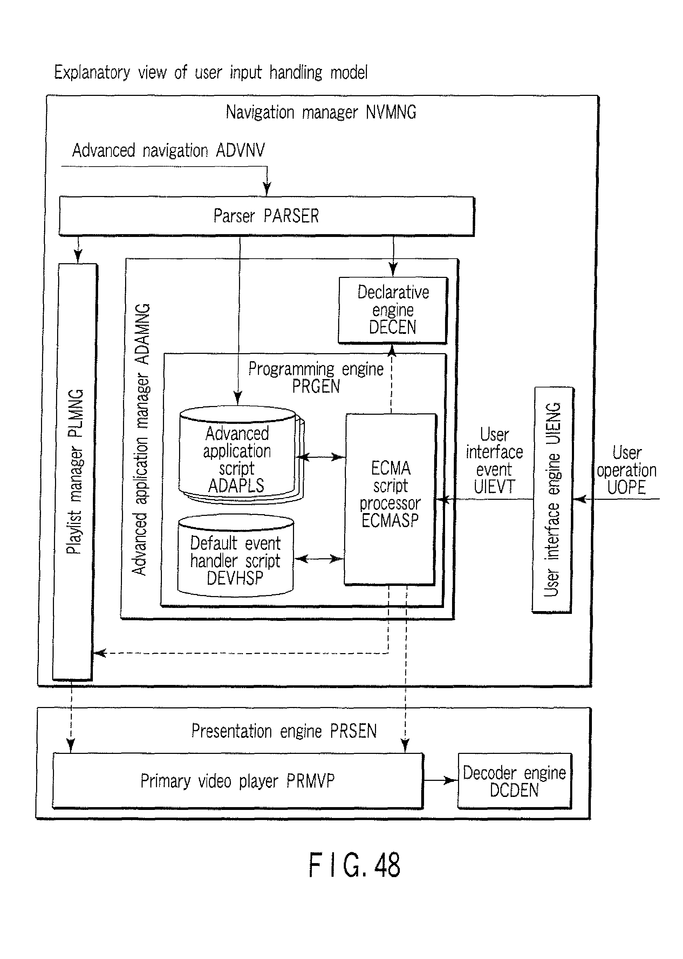

In this embodiment, upon playback of the advanced content ADVCT, every user input events are processed first by the programming engine PRGEN in the advanced application manager ADAMNG. FIG. 48 shows a user input handling model in this embodiment.

User Input Model

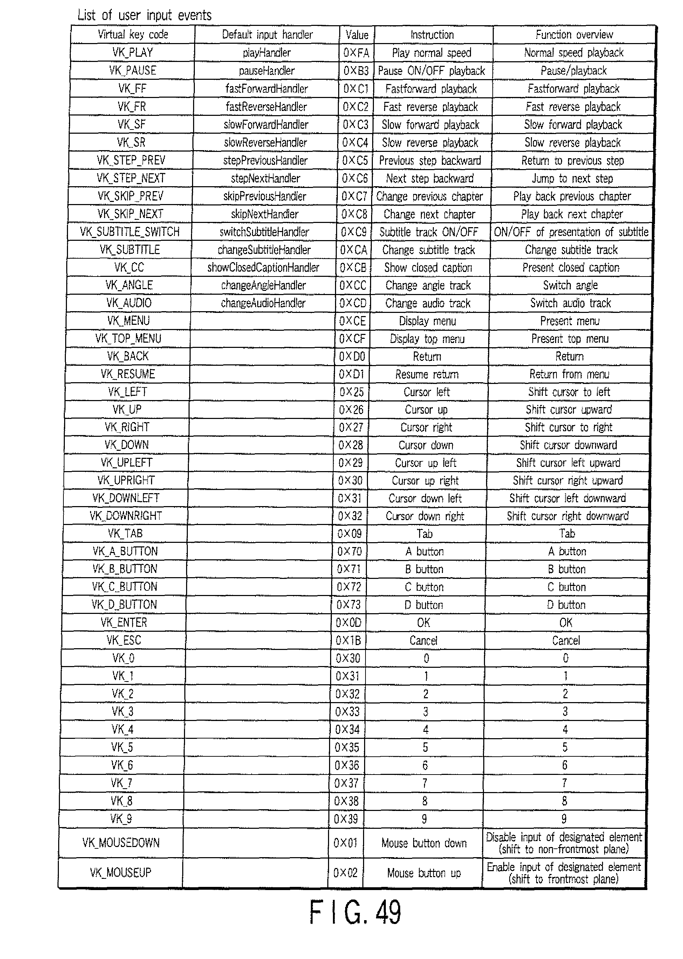

All user input events shall be handled by Programming Engine at first while Advanced Content is played back.
User operation signal via user interface devices are inputted into each device controller module in User Interface Engine. Some of user operation signals may be translated to defined events, "U/I Event" of "Interface Remote Controller Event". Translated U/I Events are transmitted to Programming Engine.
Programming Engine has ECMA Script Processor which is responsible for executing programmable behaviors. Programmable behaviors are defined by description of ECMA Script which is provided by script file(s) in each Advanced Application. User event handlers which are defined in Script are registered into Programming Engine.
When ECMA Script Processor receives user input event, ECMA Script Processor searches whether the user event handler which is corresponding to the current event in the registered Script of Advanced Application.
If exists, ECMA Script Processor executes it. If not exist, ECMA Script Processor searches in default event handler script which is defined by in this specification. If there exists the corresponding default event handler code, ECMA Script Processor executes it. If not exist, ECMA Script Processor discards the event.
More intelligible explanations will be provided below.
For example, signals of user operations UOPE generated by various user interface drives such as a keyboard, mouse, remote controller, and the like are input as user interface events UIEVT by various device controller modules (e.g., the remote control controller RMCCTR, keyboard controller KBDCTR, mouse controller MUSCTR, and the like) in the user interface engine UIENG, as shown in FIG. 32. That is, each user operation signal UOPE is input to the programming engine PRGEN in the advanced application manager ADAMNG as a user interface event UIEVT through the user interface engine UIENG, as shown in FIG. 48. An ECMA script processor ECMASP which supports execution of various script files SCRPT is included in the programming engine PRGEN in the advanced application manager ADAMNG. In this embodiment, the programming engine PRGEN in the advanced application manager ADAMNG includes the storage location of an advanced application script ADAPLS and that of a default event handler script DEVHSP, as shown in FIG. 48. FIG. 49 shows a list of user input events in this embodiment.

Default Input Handler

Definition of Default Input Handler for User Input Event is defined in FIG. 49.

When user input events are not consumed by Advanced Application, Default Input Handler shall implement the action defined by the following Scripts.

Virtual Key Code: Virtual Key Code that is created by Player in response to user input devices

Instruction: An instruction for Virtual Key Code

Default Input Handler: Script that define the default action

Mandatory/Optional: When Virtual Key Code is "Mandatory", Player shall provide user input devices that are able to send this code.

Value: The value used in Script for user input events

More intelligible explanations will be provided below.

As shown in FIG. 49, for example, a simple operation for moving a cursor on the screen, or a combination of such simple operations is called a user input event, and combination processing of a series of operations such as FF playback and the like is called an input handler. Virtual key codes (input handler codes) are set in correspondence with the user input events and input handlers. In this embodiment, a plurality of pieces of information of virtual key codes corresponding to default input handler codes and user input events shown in FIG. 49 are recorded in advance in the default event handler script DEVHSP in the programming engine PRGEN. Information recorded in the script file SCRPT (see FIG. 13) of the advanced application ADAPL, which is fetched from the network server NTSRV, information storage medium DISC, or persistent storage PRSTR, is recorded in the advanced application script recording area ADAPLS in the programming engine PRGEN, as shown in FIG. 48. Upon reception of a user interface event UIEVT, the ECMA script processor ECMASP interprets event handler codes (virtual key codes corresponding to default input handler codes or user input events) included in that user interface event UIEVT, and searches to see if all the event handler codes described in the user interface event UIEVT correspond to those which are registered in the advanced application script recording area ADAPLS. If all the event handler codes described in the user interface event UIEVT correspond to those registered in the advanced application script recording area ADAPLS, the ECMA script processor ECMASP immediately starts execution processing according to their contents. If the event handler codes described in the user interface event UIEVT includes those which are not registered in the advanced application script recording area ADAPLS, the default event handler script DEVHSP is searched for corresponding event handler codes. If all pieces of information of short event handler codes are stored in the default event handler script DEVHSP, the ECMA script processor ECMASP performs execution processing according to the contents of the user interface event UIEVT using the event handler codes registered in the advanced application script recording area ADAPLS and default event handler script DEVHSP. If the event handler codes included in the user interface event UIEVT are not registered in the default event handler script DEVHSP, either, the ECMA script processor ignores the contents of the user interface event UIEVT, and invalidates execution of the user interface event UIEVT.

FIG. 49 shows the contents of the event handlers and event handler codes described in the description of FIG. 48. FIG. 49 shows the contents of event handlers and virtual key codes which are registered in advance in the default event handler script DEVHSP, the user event handlers described using FIG. 48 correspond to default input handlers in FIG. 49, and the default event handler codes described using FIG. 48 correspond to virtual key codes in FIG. 49. Instructions in FIG. 49 represent execution contents corresponding to the virtual key codes, and their detailed contents will be explained in the following paragraphs of function overview.

As shown in FIG. 49, events having default input handlers correspond to 15 different types of virtual key codes. When the virtual key code is "VK_PLAY", the default input handler is "playHandler", the value is "0xFA", and this event is set upon normal speed playback. When the virtual key code is "VK_PAUSE", the default input handler is "pauseHandler", the value is "0xB3", and this event is set upon pausing and playback. When the virtual key code is "VK_FF", the default input handler is "fastForwardHandler", the value is "0xC1", and this event is set upon fastforward playback. When the virtual key code is "VK_FR", the default input handler is "fastReverseHandler", the value is "0xC2", and this event is set upon fast-reverse playback. When the virtual key code is "VK_SF", the default input handler is "slowForwardHandler", the value is "0xC3", and this event is set upon slow-forward playback. When the virtual key code is "VK_SR", the default input handler is "slowReverseHandler", the value is "0xC4", and this event is set upon slow-reverse playback. When the virtual key code is "VK_STEP_REV", the default input handler is "stepPreviousHandler", the value is "0xC5", and this event is set upon returning to the previous step. When the virtual key code is "VK_STEP_NEXT", the default input handler is "stepNextHandler", the value is "0xC6", and this event is set upon jumping to the next step. When the virtual key code is "VK_SKIP_PREV", the default input handler is "skipPreviousHandler", the value is "0xC7", and this event is set upon playing back the previous chapter. When the virtual key code is "VK_SKIP_NEXT", the default input handler is "skipNextHandler", the value is "0xC8", and this event is set upon playing back the next chapter. When the virtual key code is "VK_SUBTITLE_SWITCH", the default input handler is "switchSubtitleHandler", the value is "0xC9", and this event is set upon setting ON/OFF of presentation of a subtitle. When the virtual key code is "VK_SUBTITLE", the default input handler is "changeSubtitleHandler", the value is "0xCA", and this event is set upon changing a subtitle track. When the virtual key code is "VK_CC", the default input handler is "showClosedCaptionHandler", the value is "0xCB", and this event is set upon presenting a closed caption. When the virtual key code is "VK_ANGLE", the default input handler is "changeAngleHandler", the value is "0xCC", and this event is set upon switching an angle. When the virtual key code is "VK_AUDIO", the default input handler is "changeAudioHandler", the value is "0xCD", and this event is set upon switching an audio track.

Even for events having no default input handlers, values and instructions can be set for virtual key codes. When the virtual key code is "VK_MENU", the value is "0xCE", and this event is set upon presenting a menu. When the virtual key code is "VK_TOP_MEKU", the value is "0xCF", and this event is set upon presenting a top menu. When the virtual key code is "VK_BACK" , the value is "0xD0", and this event is set upon returning to the previous frame or the playback start position. When the virtual key code is "VK_RESUME", the value is "0xD1", and this event is set upon returning from a menu. When the virtual key code is "VK_LEFT", the value is "0x25", and this event is set upon shifting the cursor to the left. When the virtual key code is "VK_UP", the value is "0x26", and this event is set upon shifting the cursor upward. When the virtual key code is "VK_RIGHT", the value is "0x27", and this event is set upon shifting the cursor to the right. When the virtual key code is "VK_DOWN", the value is "0x28", and this event is set upon shifting the cursor downward. When the virtual key code is "VK_UPLEFT", the value is "0x29", and this event is set upon shifting the cursor left upward. When the virtual key code is "VK_UPRIGHT", the value is "0x30", and this event is set upon shifting the cursor right upward. When the virtual key code is "VK_DOWNLEFT", the value is "0x31", and this event is set upon shifting the cursor left downward. When the virtual key code is "VK_DOWNRIGHT", the value is "0x32", and this event is set upon shifting the cursor right downward. When the virtual key code is "VK_TAB", the value is "0x09", and this event is set upon using a tab. When the virtual key code is "VK_A_BUTTON", the value is "0x70", and this event is set upon pressing an A button. When the virtual key code is "VK_B_BUTTON", the value is "0x71", and this event is set upon pressing a B button. When the virtual key code is "VK_C_BUTTON", the value is "0x72", and this event is set upon pressing a C button. When the virtual key code is "VK_D_BUTTON", the value is "0x73", and this event is set upon pressing a D button. When the virtual key code is "VK_ENTER", the value is "0x0D", and this event is set upon pressing an OK button. When the virtual key code is "VK_ESC" , the value is "0x1B", and this event is set upon cancel. When the virtual key code is "VK_0", the value is "0x30", and "0" is set. When the virtual key code is "VK_1", the value is "0x31", and "1" is set. When the virtual key code is "VK_2", the value is "0x32", and "2" is set. When the virtual key code is "VK_3", the value is "0x33", and "3" is set. When the virtual key code is "VK_4", the value is "0x34", and "4" is set. When the virtual key code is "VK 5", the value is "0x35", and "5" is set. When the virtual key code is "VK_6", the value is "0x36", and "6" is set. When the virtual key code is "VK_7", the value is "0x37", and "7" is set. When the virtual key code is "VK_8", the value is "0x38", and "8" is set. When the virtual key code is "VK_9", the value is "0x39", and "9" is set. When the virtual key code is "VK_MOUSEDOWN", the value is "0x01", and this event is set upon disabling input of the designated element (shifting it to the non-frontmost plane). When the virtual key code is "VK_MOUSEUP", the value is "0x02", and this event is set upon enabling input of the designated element (shifting it to the frontmost plane).

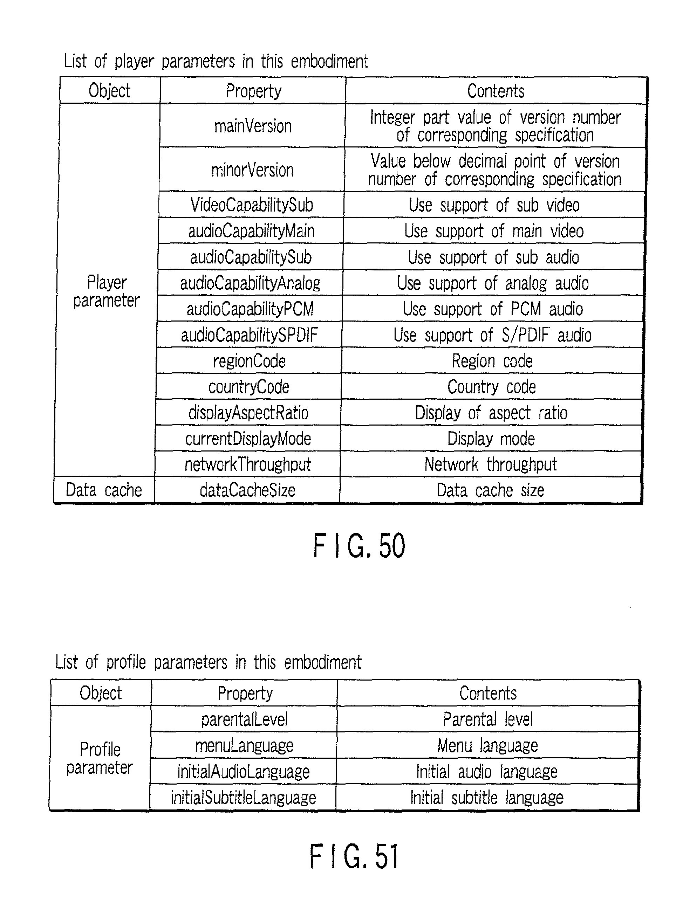

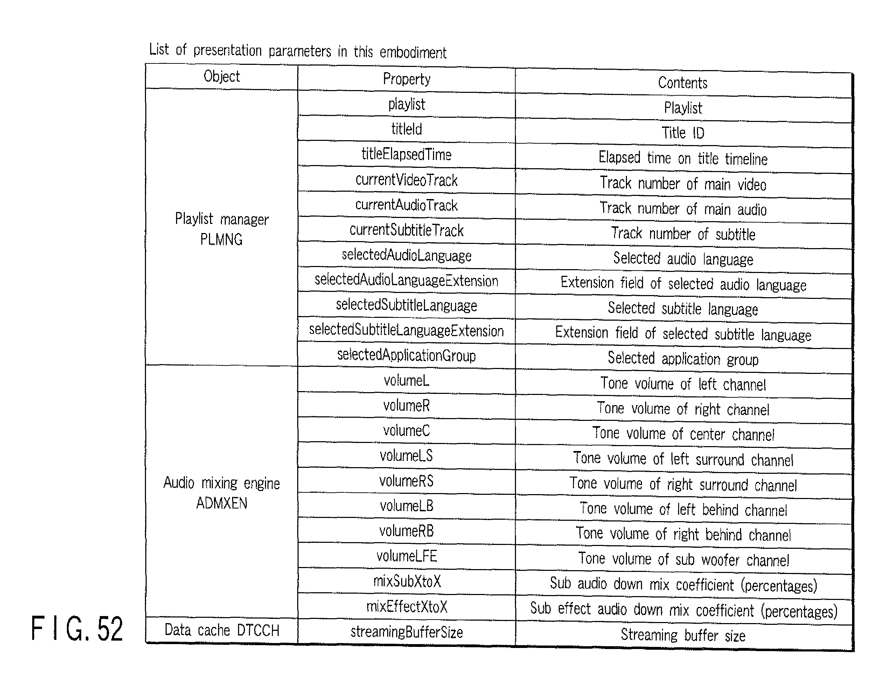

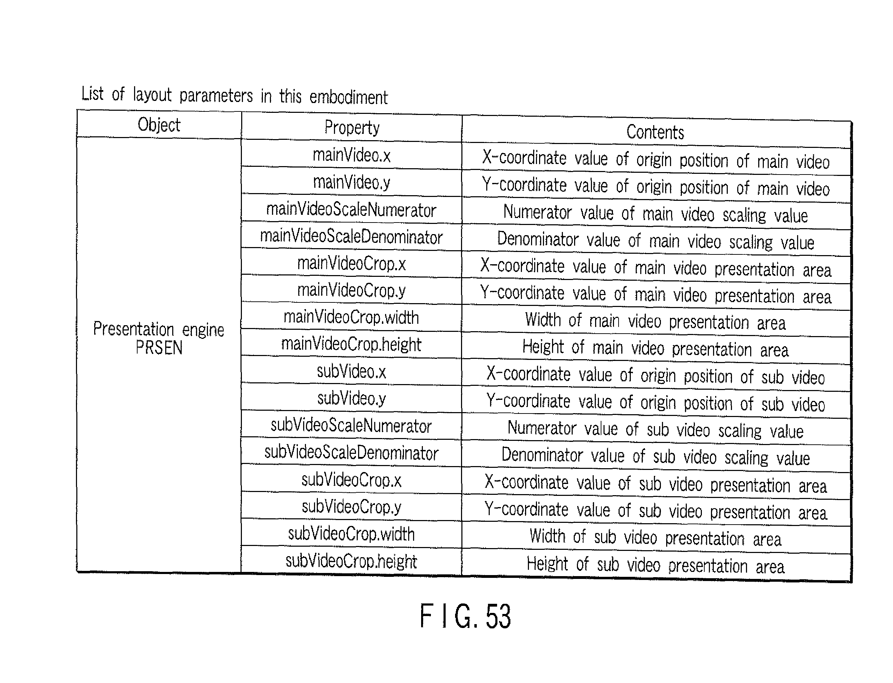

In the existing DVD-Video or the standard content STDCT in this embodiment, an SPRM (system parameter) is defined to set a parameter used by the system. However, in this embodiment, the advanced content navigation does not use any SPRM (system parameters), and system parameters shown in FIGS. 50 to 53 are set as alternatives to the SPRM (system parameters). Upon playing back the advanced content ADVCT, the SPRM (system parameter) value can be detected by API command processing. As the system parameter in this embodiment, the following four different types of parameters can be set. The system parameters are set for each advanced content playback unit ADVPL in the information recording and playback apparatus 1. Player parameters shown in FIG. 50 can be commonly set for each information recording and playback apparatus 1. Profile parameters shown in FIG. 51 indicate data of a user profile. Presentation parameters shown in FIG. 52 indicate the presentation state on the screen. Layout parameters shown in FIG. 53 mean parameters associated with the layout upon video presentation (see FIG. 43).

In this embodiment, the system parameters are temporarily set in the data cache DTCCH shown in FIG. 16. However, this embodiment is not limited to this. For example, the system parameters can be set in a temporary memory (not shown) set in the parser PARSER in the navigation manager NVMNG shown in FIG. 32. An explanation will be given below for respective drawings.

FIG. 50 shows a list of player parameters in this embodiment.

In this embodiment, the player parameters include two objects, i.e., a player parameter object and a data cache object. The player parameters mean general parameter information required upon executing video playback processing of the advanced content playback unit ADVPL in the information recording and playback apparatus 1 shown in FIG. 15. Of the player parameters, general parameter information which is not associated with network downloading and data transfer from the persistent storage PRSTR to the data cache DTCCH belongs to the player parameters. The processing in the advanced content playback unit ADVPL in this embodiment is premised on the data transfer processing to the data cache DTCCH. As parameter information required for the advanced content playback unit ADVPL, a parameter required for the data transfer processing to the data cache is defined as a player parameter corresponding to the data cache.

In the player parameter object, 13 player parameters are set. As the contents of the player parameters, "majorVersion" means an integer value of the version number of the corresponding specification. "minorVersion" means a value below the decimal point of the version number of the corresponding specification. "videoCapabilitySub" means the presentation capability of a sub video. "audioCapablityMain" means the presentation capability of a main audio. "audioCapabilitySub" means the presentation capability of a sub audio. "audioCapabilityAnalog" means the presentation capability of an analog audio. "audioCapabilityPCM" means the presentation capability of a PCM audio. "audioCapabilitySPDIF" means the presentation capability of an S/PDIF audio. "regionCode" means a region code. The region code means that the earth is divided into six regions, and region code numbers are set for respective regions. Upon video playback, playback presentation is permitted in only a region that matches the region code number. "countryCode" means a country code. "displayAspectRatio" means an aspect ratio. The aspect ratio means the horizontal to vertical ratio of the video screen to be presented to the user. "currentDisplayMode" means a display mode. "networkThroughput" means a network throughput. The network throughput means the transfer rate of data transferred from the network server NTSRV via the network.

Also, "dataCacheSize" is set in the data cache object, and means the data cache size as its contents.

FIG. 51 shows a list of profile parameters in this embodiment.

In this embodiment, the profile parameters include a profile parameter object. The profile parameters mean parameters associated with the frame presentation format processed by the advanced content playback unit ADVPL in the information recording and playback apparatus 1 shown in FIG. 15. In the profile parameter object, four profile parameters are set. As the contents of the profile parameters, "parentalLevel" means a parameter that specifies a level that permits children to view with respect to adult video, video pictures including violent/cruel scenes, and the like that cannot be presented to children. By utilizing this parameter, when, for example, a video picture with a high parental level is presented to children, a video picture obtained by editing only scenes the children can watch can be presented. "menuLanguage" means a menu language. "initialAudioLanguage" means an initial audio language. "initialSubtitleLanguage" means an initial subtitle language.

FIG. 52 shows a list of presentation parameters.

In this embodiment, the presentation parameters mean parameters associated with the presentation frame and presentation audio processed by the advanced content playback unit ADVPL in the information recording and playback apparatus shown in FIG. 15, and include three objects, i.e., a playlist manager PLMNG object, audio mixing engine ADMXEN object, and data cache DTCCH object. The playlist manager PLMNG object includes parameters required for the processing in the playlist manager PLMNG in the navigation manager NVMNG shown in FIG. 32. The audio mixing engine ADMXEN object can be classified to parameters required for the processing in the audio mixing engine ADMXEN in the AV renderer AVRND shown in FIG. 42. The data cache DTCCH object can be classified to a parameter (data cache) required for the processing in the streaming buffer STRBUF in the data cache DTCCH shown in FIG. 31.

In the playlist manager PLMNG object, 11 playlist manager PLMNG parameters are set. As the contents of the playlist manager parameters PLMNG, "playlist" will be described below. To the playlist file PLLST, a number can be appended to a file name. When the playlist file PLLST is edited or updated, that edited or updated file is appended with a number which has a value larger by "1" than the largest number of the previous appended numbers, and the file is saved, thus generating a latest playlist file PLLST. When the appended number of the playlist file PLLST to be played back by the advanced content playback unit ADVPL is set as the parameter, video playback can be implemented based on an optimal playlist PLLST that the user wants. However, this embodiment is not limited to this. As another embodiment, a combination of a title ID (titleid) and an elapsed time on the title timeline (titleElapsedTime) may be used to record the last position where the user interrupted playback (the last position where the user ended playback). As for "titleid", by recording identification information (title ID) of a title upon interrupting playback (or played back last), the user can restart playback from the title whose playback was interrupted previously. "titleElapsedTime" means an elapsed time on the title timeline. "currentVideoTrack" means the track number of a main video. "currentAudioTrack" means the track number of a main audio. "currentSubtitleTrack" means the track number of a subtitle. "selectedAudioLanguage" means a language (Japanese JA, English EN, etc.) which is selected by the user and is audibly output upon playback. "selectedAudioLanguageExtension" means an extension field of the selected audio language. "selectedSubtitleLanguage" means a language (Japanese JA, English EN, etc.) of a subtitle which is selected by the user and is output upon playback. "selectedSubtitleLanguageExtension" means an extension field of the selected subtitle language. "selectedApplicationGroup" means a language (Japanese JA, English EN, etc.) of an application group which is selected by the user and is output upon playback. For example, this parameter represents presentation language identification as to whether text presented on the help icon 33 shown in FIG. 20 is presented as "ヘルプ" or "help".

In the audio mixing engine ADMXEN object, 10 audio mixing engine ADMXEN parameters are set. As the contents of the audio mixing engine parameters ADMXEN, "volumeL" means the tone volume of a left channel. "volumeR" means the tone volume of a right channel. "volumeC" means the tone volume of a center channel. "volumeLS" means the tone volume of a left surround channel. "volumeRS" means the tone volume of a right surround channel. "volumeLB" means the tone volume of a left behind surround channel. "volumeRB" means the tone volume of a right behind surround channel. "volumeLFE" means the tone volume of a sub woofer channel. "mixSubXtoX" means a sub audio down mix coefficient (percentages). For example, when the main title 31 presented by the main video MANVD and the independent window 32 for a commercial presented by the sub video SUBVD are to be simultaneously presented, as shown in FIG. 20, the main audio MANAD corresponding to the main title 31 and the sub audio SUBAD corresponding to the independent window 32 for a commercial need be simultaneously audibly output. The ratio of the output tone volume of the sub audio SUBAD to that of the main audio MANAD at that time is called the sub audio down mixing coefficient. "mixEffectXtoX" means a sub effect audio down mix coefficient (percentages). For example, as shown in FIG. 20, the user often presses various icons 33 to 38 formed by the advanced application ADAPL. An effect sound which expresses that the user instructs to execute each element (icon) in the advanced application ADAPL means an example of the sub effect audio. In this case, the sub effect audio need be audibly output simultaneously with the main audio MANAD corresponding to the main title 31. The ratio of the tone volume of the sub effect audio to that of the main audio MANAD at that time is called the sub effect audio down mix coefficient.

In the data cache DTCCH object, "streamingBufferSize" is set, and means the streaming buffer size as its contents. Data of the secondary video set SCDVS transferred from the network server NTSRV are temporarily stored in the streaming buffer STRBUF. To allow such storage, the size of the streaming buffer STRBUF in the data cache DTCCH need be assigned in advance. The size of the streaming buffer STRBUF required at that time is specified in the configuration information CONFGI in the playlist file PLLST.

FIG. 53 shows a list of layout parameters in this embodiment. In this embodiment, the layout parameters include a presentation engine PRSEN object. The layout parameters mean those which are processed by the advanced content playback unit ADVPL in the information recording and playback apparatus 1 shown in FIG. 15, and are associated with the layout on the frame to be presented to the user.

In the presentation engine PRSEN object, 16 presentation engine PRSEN parameters are set. As the contents of the presentation engine PRSEN parameters, "mainVideo.x" means the x-coordinate value of the origin position of the main video. "mainVideo.y" means the y-coordinate value of the origin position of the main video. "mainVideoScaleNumerator" means the value of the numerator of a main video scaling value. "mainVideoScaleDenominator" means the value of the denominator of the main video scaling value. "mainVideoCrop.x" means the x-coordinate value of the main video presentation area. "mainVideoCrop.y" means the y-coordinate value of the main video presentation area. "mainVideoCrop.width" means the width of the main video presentation area. "mainVideoCrop.height" means the height of the main video presentation area. "subVideo.x" means the x-coordinate value of the origin position of the sub video. "subVideo.y" means the y-coordinate value of the origin position of the sub video. "subVideoScaleNumerator" means the numerator of a sub video scaling value. "subVideoScaleDenominator" means the denominator of the sub video scaling value. "subVideoCrop.x" means the x-coordinate value of the sub video presentation area. "subVideoCrop.y" means the y-coordinate value of the sub video presentation area. "subVideoCrop.width" means the width of the sub video presentation area. "subVideoCrop.height" means the height of the sub video presentation area.

By adopting the technique of this embodiment, the following requirements can be sufficiently met:

1. flexible and diversified expressive power (PC window like)
2. network actions
3. easy processing of video related information and easy transmission of information after processing

While certain embodiments of the inventions have been described, these embodiments have been presented by way of example only, and are not intended to limit the scope of the invention. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. An information storage medium which is to be played back by an information recording and playback apparatus or an information playback apparatus that comprises a navigation manager unit, **characterized by** comprising a content area (ADVCT) that records a content to be played back based on a playlist, wherein the content area comprises a playlist area (PLLST) that records the playlist at least a part of which is interpreted by a playlist manager unit included in the navigation manager unit.

2. An information playback apparatus **characterized by** comprising an advanced content playback unit (ADVPL) configured to play back an advanced content, wherein the advanced content playback unit comprises:

a navigation manager unit (NVMNG) configured to manage playback of video information and audio information which form the advanced content; and
an AV renderer unit (AVRND) configured to combine the video information and the audio information.

3. The apparatus according to claim 2, which further comprises:

an information recording and playback unit (2) configured to record and play back information; and
at least one of a persistent storage drive unit (3) and a network controller (7-1).

4. An information playback method to be applied to an information playback apparatus which comprises an advanced content playback unit including a navigation manager unit and an AV renderer unit, an information recording and playback unit, and at least one of a persistent storage drive and a network controller, **characterized by** comprising:

playing back (ST4.1.1-5) the advanced content by the navigation manager.

5. An information playback program **characterized by** comprising:

a content (ADVCT); and
a playlist (PLLST) which is used to play back the content, and at least a part of which is interpreted by a playlist manager of an information recording and playback apparatus or an information playback apparatus.

| Required functions | Problems of prior art | Solutions (technical device contents to solve problems) | New effects obtained as result of technical devices |
|---|---|---|---|
| Flexible and diversified powers of expression (PC window like) | Since user requests are of too greater variety such requests cannot be met by only custom-made like minor change of data structure in existing DVD-Video standards | Expression formats in PC world having versatility are adopted, and concept of timeline is newly introduced | 1] Make flexible and impressive reactions in response to user's actions<br>1.1) Make response by means of change in animation and image at the time of button selection or execution instruction<br>1.2) Make voice response at the time of button selection or execution instruction<br>1.3) Start execution operation at purposely delayed timing in response to user's execution instruction<br>1.4) Give voice answer to help (like PC)<br>1.5) Audibly and visually output how to use guide of menu, etc. |
| | | | 2] Allow flexible switching processing for video information itself and its playback method<br>2.1) Switching presentation of audio information<br>2.2) Switching presentation of subtitle information (telop, subtitle, still picture icon, etc.)<br>2.3) Allow enlarged-scale presentation of subtitle according to user's favor<br>2.4) Allow user to mark subtitle and to issue subtitle execution command<br>2.5) Mark specific image part in synchronism with comment while director is making that comment |
| | | | 3] Simultaneously present independent information to be superimposed on image during playback<br>3.1) Simultaneously present a plurality of pieces of video information by means of multi-windows<br>3.2) Allow to freely switch size of each of multi-windows<br>3.3) Simultaneously present prior audio message and after-recorded audio message by user<br>3.4) Simultaneously present scrolling text to be superimposed on video information<br>3.5) Simultaneously present graphic menus and figures (of select buttons, etc.) in flexible forms |
| | | | 4] Allow easy search to video location to be seen<br>4.1) Conduct keyword (text) search of location to be seen using pull-down menu |

## F I G. 1

| Required functions | Problems of prior art | Solutions (technical device contents to solve problems) | New effects obtained as result of technical devices |
|---|---|---|---|
| Network action | Disjunction between data structure specified by existing DVD-Video standards and network compatible window is too large | Homepage presentation format (XML and scripts) of Web which has good track record in window expression of network is adopted as basic part of data management structure, and video playback management format is adjusted to it | 5] Provide update function of information on disc using network<br>  5.1) Automatic updating of object information and intra-disc management information<br>  5.2) Network downloading of how to use guide of menus<br>  5.3) Automatic notification of information to user<br>  5.4) Notification of OK/NG of update information presentation to user<br>  5.5) Manual update function by user<br><br>6] Real-time online processing<br>  6.1) Switching or mixing processing to audio information downloaded via network upon video playback (commentary presentation by means of voice of movie director, etc.)<br>  6.2) Network shopping<br>  6.3) Interactive real-time video change<br><br>7] Real-time information sharing with another user via network<br>  7.1) Simultaneously present specific window even for another user at remote place<br>  7.2) Play battle game or interactive game with another user at remote place<br>  7.3) Participate in chatting during video playback<br>  7.4) Transmit or receive message to or from fan club simultaneously with video playback |

FIG.2

| Required functions | Problems of prior art | Solutions (technical device contents to solve problems) | New effects obtained as result of technical devices |
|---|---|---|---|
| Easy processing of video related information and easy transmission of information after processing | New management data structure that can flexibly and easily cope with complicated information processing is needed | XML is adopted and concept of timeline is introduced | 8] Allow user to select and generate playlist and to transmit it<br>  8.1) Allow user to select or generate playlist<br>  8.2) Allow user to transmit playlist selected or generated by him or her to friend<br>  8.3) Allow to play back playlist selected or generated by user only on specific disc<br>  8.4) Allow user to also select collection of highlight scenes of video information<br>  8.5) Publish scrapbook that captures favorite frames in video information on Web<br>  8.6) Store and play back angles or scenes in multi-angles or multi-scenes selected by user |
| | | | 9] Allow user to append specific information associated with video information and to transmit result via network<br>  9.1) Allow user to add comment about video information, and to share it with another user on network<br>  9.2) Paste input image to character's face in video information<br>  9.3) Paste user information or experience information upon seeing video information onto image information<br>  9.4) Use user information in parental lock to impose automatic limitation on video information to be presented |
| | | | 10] Automatically save playback log information<br>  10.1) Provide automatic saving function of resume (playback pause) information<br>  10.2) Automatically save halfway information of game progress until previous time<br>  10.3) Automatically save previous playback environment (battle game environment with a plurality of users, etc.) |

EP 1 752 987 A2

FIG. 3

Video manager (VMG)

Navigation data
(IFO)

Enhanced video
object data
(EVOB)

Standard video
title set (SVTS)

Navigation data
(IFO)

Enhanced video
object data
(EVOB)

FIG. 4

Category 1 disc

Standard content
(STDCT)

Video manager (VMG)

Standard video title set
(SVTS)

FIG. 5

Category 2 disc

Advanced content (ADVCT)

Playlist
(PLLST)

| Advanced application (ADAPL) | Primary video set (PRMVS) |
| Advanced subtitle (ADSBT) | Secondary video set (SCDVS) |

FIG. 6

Category 3 disc

Advanced content (ADVCT)

Standard content
(STDCT)

Primary video set (PRMVS)

Playlist (PLLST)

Advanced application
(ADAPL)

Advanced video
title set
(ADVTS)

Video manager
(VMG)

Advanced subtitle
(ADSBT)

Secondary video set
(SCDVS)

Standard video
title set (SVTS)

FIG. 7

Initial state
(INSTT)

Advanced
content playback
state (ADVPS)

Command via
markup/script (MSCMD)

Standard
content playback
state (STDPS)

Command in navigation
command (NCCMD)

# FIG.8

Start (Disc insertion)

S11

Disc for HD_DVD? — NO

YES

S12

Category 2 or 3? — NO

YES

S14

Category 1? — NO

YES

S13

Play advanced content
(ADVCT)

S15

Play standard content
(STDCT)

S16

Behaviors depends
on player

End

# FIG.9

Start (Disc insertion)

Disc for HD_DVD? — S21

NO

YES

Audio only player? — S22

NO

YES

S23

Play only audio of
advanced content (ADVCT)

S24

Behaviors depends on player

End

FIG. 10

Advanced content (ADVCT)

| Playlist (PLLST) |
| --- |

| Time map information | | |
| --- | --- | --- |
| (TMAPI#1) | (TMAPI#2) | (TMAPI#3) |

| Advanced video title set information (ADVTSI) | | |
| --- | --- | --- |
| Enhanced video object information | | |
| (EVOBI#1) | (EVOBI#2) | (EVOBI#3) |

| Enhanced video object data | |
| --- | --- |
| (EVOB#1) | (EVOB#2) |

Standard content (STDCT)

| Standard video title set information (STVTSI) |
| --- |

| Enhanced video object data (EVOB#4) | Enhanced video object data (EVOB#3) | Enhanced video object data (EVOB#5) |
| --- | --- | --- |

F I G. 11

EP 1 752 987 A2

| Presentation object | Data source | Data type | | Player | Decoder |
|---|---|---|---|---|---|
| Primary video set (PRMVS) | Disc (DISC) | Primary audio video (PRMAV) | Main video (MANVD) | Primary video player (PRMVP) | Main video decoder (MVDEC) |
| | | | Main audio (MANAD) | | Main audio decoder (MADEC) |
| | | | Sub video (SUBVD) | | Sub video decoder (SVDEC) |
| | | | Sub audio (SUBAD) | | Sub audio decoder (SADEC) |
| | | | Sub-picture (SUBPT) | | Sub-picture decoder (SPDEC) |
| Secondary video set (SCDVS) | Disc (DISC), persistent storage (RPSTR), network or file cache (FLCCH) (or data cache (DTCCH)) | Substitute audio video (SBTAV) | Main video (MANVD) | Secondary video player (SCDVP) | Main video decoder (MVDEC) |
| | | | Main audio (MANAD) | | Main audio decoder (MADEC) |
| | | Substitute audio (SBTAD) | Main audio (MANAD) | | Main audio decoder (MADEC) |
| | | Secondary audio video (SCDAV) | Sub video (SUBVD) | | Sub video decoder (SVDEC) |
| | | | Sub audio (SUBAD) | | Sub audio decoder (SADEC) |
| Advanced application (ADAPL) | File cache (FLCCH) (or data cache (DTCCH)) | Markup (MRKUP)/Script (SCRPT)/Image (IMAGE)/Effect audio (EFTAD)/Font (FONT) | | Advanced application presentation engine (AAPEN) | |
| Advanced subtitle (ADSBT) | File cache (FLCCH) (or data cache (DTCCH)) | Markup for advanced subtitle (MRKUPS)/Font (FONT)/Image (IMAGE) | | Advanced subtitle player (ASBPL) | |

F I G. 12

EP 1 752 987 A2

F I G. 13

Playlist (PLLST)

| Time map for primary video set (PTMAP) | Time map for secondary video set (STMAP) | Manifest (MNFST) | | Manifest for advanced subtitle (MNFSTS) |
|---|---|---|---|---|
| Enhanced video object information (EVOBI) | Secondary enhanced video object (S-EVOB) | Markup (MRKUP) | Script (SCRPT) | Markup for advanced subtitle (MRKUPS) |
| Primary enhanced video object (P-EVOB) | | Image (IMAGE) / Effect audio (EFTAD) / Font (FONT) | | Font for advanced subtitle (FONTS) / Image for advanced subtitle (IMAGES) |

One of primary video set (PRMVS)

One of secondary video set (SCDVS)

One advanced application (ADAPL)

One advanced subtitle (ADSBT)

F I G. 14A

EP 1 752 987 A2

| Point number | Feature and point contents in this embodiment | Explanation of effect contents |
|---|---|---|
| (1) | Hierarchical structure of playlist PLLST and markup file MRKUP is provided as setting management information associated with layout on time axis and two-dimensional layout on user presentation window. ⇒Both playlist PLLS T and markup file MRKUP are described using identical description format (XML). | 1) Extendability and flexibility of setting management information associated with layouts are improved. 2) Easy interpretation processing and sharing of management information can be attained since identical description format is used. |
| (2) | Playlist PLLST has media clock synchronized with title timeline TMLE and markup file MRKUP has page clock and application clock synchronized with setting based on timing element. These clocks can be independently set (they need not be synchronized). | When movie information synchronized with title timeline TMLE is played back at high speed or rewound, it can be presented simultaneously with window which undergoes standard playback on application clock, thus greatly improving power of expression to user. |
| (3) | Initial layout on window of movie (enhanced video object EVOB) is designated on playlist PLLST (video attribute item element VABITM), and can be changed in correspondence with execution of script file SCRPT. | Since movie presentation region on user window can be arbitrarily set, power of expression to user can be greatly improved. |
| (4) | Layout of presentation region (application region APPRGN) of advanced application ADAPL on window is designated in manifest file MNFST, and layouts for respective element in that region are designated on markup file MRKUP | 1) Since layout locations of respective elements of advanced application ADAPL are grouped (by application region APPRGN), management by advanced application manager ADAMNG is facilitated. 2) Layout management with movie expression region (prevention of overlapping, etc.) is facilitated. |

F I G. 14B

EP 1 752 987 A2

| Point number | Feature and point contents in this embodiment | Explanation of effect contents |
|---|---|---|
| (5) | A plurality of markup files MRKUP can be set for one playlist PLLST. | Jump presentation among a plurality of markup pages MRKUP can be attained during presentation of single movie, thus improving power of expression to user. |
| (6) | Jump among a plurality of markup pages MRKUP in single playlist PLLST is attained by executing script file SCRPT set in markup pages MRKUP. | Jump method among a plurality of markup pages MRKU is greatly and flexibly implemented. ⇒Example: Jump between markup pages MRKUP, which does not take place immediately after user designates action, and takes place with delay in synchronism with movie presentation window can be set using script file SCRPT (see effect (1. 3) in FIG. 2A). |
| (7) | 1) A plurality of markup pages MRKUP to be jumped in single playlist PLLST is designated by a plurality of manifest files MNFST.<br>2) Designated markup files MRKUP are temporarily saved in file cache FLCCH in advance. | Since markup page MRKUP information designated by manifest files MNFST can be saved in advance in file cache FLCCH, jump among a plurality of markup pages can be attained at high speed, and such function can be easily used by user (favorable impression). |
| (8) | Markup page MRKUP to be presented initially is designated from playlist PLLST via SRC attribute information of advanced application ADAPL and SRC attribute information of markup element MRKUP in manifest file MNFST. | Extendability about markup page MRKUP designation from playlist PLLST can be improved, and easy edit is assured. |

F I G. 14C

EP 1 752 987 A2

Information recording and playback apparatus (personal computer, recorder, or player) 1

Display 13

Keyboard 14

Information storage medium DISC

Hard disk device 6

Main CPU 5

Wireless LAN controller 7-1

Recording and playback processor

Standard content playback unit STDPL

Advanced content playback unit ADVPL

Information recording and playback unit 2

Persistent storage drive 3

4

Wireless data 18

Network server NTSRV

Optical cable 12

Router 11

Wireless LAN controller 7-2

Data manager 9

Network controller 8

Wireless data 17

Loudspeaker 16-2

Loudspeaker 16-1

Wide-screen TV monitor 15

Video display unit 21

Wireless LAN controller 7-3

Video processor 24

FIG.15

EP 1 752 987 A2

F I G. 16

EP 1 752 987 A2

Main video MANVD and main audio MANAD
of primary audio video PRMAV

Necessity
explanatory
video
information
of detailed
navigation

$\longrightarrow$ t

| Main title | CM | Main title | CM | Main title | CM | Main title | Preview |
| 42 | 31 | 44 | 31 | 44 | 31 | 44 | 31 | 41 |

Sub video SUBVD and sub audio SUBAD of
primary video set PRMVS are used initially,
and sub video SUBVD and sub audio SUBAD
of secondary video set SCDVS are used
after elapse of specific period of time

Sub video SUBVD and sub audio SUBAD of primary video set PRMVS are
used initially, and sub video SUBVD and sub audio SUBAD of secondary video set
SCDVS are used after elapse of specific period of time
(main video MANVD and main audio MANAD of primary video set PRMVS may be
used initially)

F I G. 17

Necessity
explanatory
video
information
of detailed
navigation 42 | Main title 31(Main video MANVD and main audio MANAD of primary audio video PRMAV) | Preview 41

Telop CM 43        Telop CM 43

Sub-picture SUBPT of primary video set is used initially,
and advanced subtitle ADSBT is used after elapse of
specific period of time

Sub video SUBVD and sub audio SUBAD of primary video set
PRMVS are used initially, and sub video SUBVD and sub audio
SUBAD of secondary video set SCDVS are used after elapse of
specific period of time
(main video MANVD and main audio MANAD of primary video
set PRMVS may be used initially)

F I G. 18

Sub video SUBVD and sub audio SUBAD of primary video set
PRMVS are used initially, and sub video SUBVD and sub audio
SUBAD of secondary video set SCDVS are used after elapse of
specific period of time
(main video MANVD and main audio MANAD of primary video
set PRMVS may be used initially)

Necessity
explanatory
video
information
of detailed
navigation 42 | Preview 41 | Main title 31(Main video MANVD and main audio MANAD of primary audio video PRMAV)

Homepage like

(Sub video SUBVD in primary video set PRMVS
is used initially, and sub video SUBVD in secondary
video set SCDVS is used after elapse of
specific period of time)

Independent window
for commercial 32

Help icon 33
(Icon presentation: still picture IMAGE of advanced application ADAPL,
icon presentation: script file SCRPT of advanced application ADAPL;
layout location and presentation timing settings are based on markup file
MRKUP of advanced application ADAPL)

F I G. 19

Point α

Telop text message
(news, weather forecast, etc.)

39

31

32

CM

Independent window
for commercial
(sub video SUBVD in
primary video set
PRMVS is used initially,
and sub video SUBVD
in secondary video set
SCDVS is used after
elapse of specific
period of time)

Main title
(main video MANVD in primary videoset PRMVS)

Help

Help icon
(advanced application ADAPL)
33

Stop    Play    FR    Pause    FF
button  button  button  button  button
34      35      36     37       38

Advanced application ADAPL
(or sub-picture SUBPT in primary video set PRMVS)

FIG. 20

EP 1 752 987 A2

FIG. 21

First play title (FRPLTT)

Title

Chapter

Title timeline (TMLE)
Advanced application (ADAPL)
Advanced subtitle (ADSBT)
Secondary audio video (SCDAV)
  (Secondary video set (SCDVS))
Substitute audio (SBTAD)
  (Secondary video set (SCDVS))
Substitute audio video (SBTAV)
  (Secondary video set (SCDVS))
Primary audio video (PRMAV)
  (Primary video set (PRMVS))

Resource information (RESRCI)

Playlist (PLLST)

Playback sequence information (PLSQI)

Title#1
Title#2

Ch#1 | Ch#1 | Ch#2 | Ch#3 | Ch#1 | Ch#2 | Ch#3

Object mapping information (OBMAPI)

ADAPL#A
ADAPL#B
ADAPL#C

ADSBT

S-EVOB

S-EVOB
S-EVOB
S-EVOB
S-EVOB

P-EVOB | P-EVOB | P-EVOB | P-EVOB | P-EVOB | P-EVOB

ACA#0 | ACA#1 | ACA#4
ACA#2 | ACA#2 | ACA#5
ACA#3 | ACA#3 | ACA#6 | ACA#6

Loading start time (LDSTTM)
Valid period (VALPRD)
Loading start time (LDSTTM)
Valid period (VALPRD)

EP 1 752 987 A2

| Clip element name (see FIG. 20) | Object name to be played back and used (see FIG. 7) | File name to be referred to as index upon playing back and using object (see FIG. 15) | Originally recorded location of object (see FIG. 13) |
|---|---|---|---|
| Primary audio video clip PRAVCP | Primary audio video PRMAV | Time map file PTMAP of primary video set | Information storage medium DISC |
| Substitute audio video clip SBAVCP | Substitute audio video SBTAV (secondary video set SCDVS) | Time map file STMAP of secondary video set | Information storage medium DISC Persistent storage PRSTR Network server NTSRV File cache FLCCH |
| Secondary audio video clip SCAVCP | Secondary audio video SCDAV (secondary video set SCDVS) | Time map file STMAP of secondary video set | Information storage medium DISC Persistent storage PRSTR Network server NTSRV File cache FLCCH |
| Substitute audio clip SBADCP | Substitute audio SBTAD (secondary video set SCDVS) | Time map file STMAP of secondary video set | Information storage medium DISC Persistent storage PRSTR Network server NTSRV File cache FLCCH |
| Advanced subtitle segment ADSTSG | Advanced subtitle ADSBT | Manifest file MNFSTS of advanced subtitle | File cache FLCCH [**] |
| Application segment ADAPSG | Advanced application segment ADAPL | Manifest file MNFST of advanced application | File cache FLCCH [**] |

\* Only playlist PLLST is recorded in information storage medium DISC, and various objects to be played back and used recorded in network server NTSRV or persistent storage PRSTR can be designated from playlist PLLST

\*\* In information storage medium DISC or persistent storage PRSTR, source files in network server NTSRV must be temporarily saved in file cache FLCCH

FIG. 22

EP 1 752 987 A2

| URI scheme | Possible resource locations |
|---|---|
| File | Disc (DISC), file cache (FLCCH), persistent storage (PRSTR) (or data cache (DTCCH)) |
| http | HTTP server |
| https | HTTPS server |

FIG. 23

| URI Path | Possible resource locations |
|---|---|
| File:///dvddisc/ | Disc (DISC) |
| File:///filecache/ | API managed area of file cache (FLCCH) (or data cache (DTCCH)) (in contemporary directory in file cache managed by advanced application) |
| File:///required/ | The area of own content provider in required persistent storage (PRSTR) |
| File:///additional/ | The area of own content provider in additional persistent storage(s) (PRSTR) |
| File:///common/required/ | The common area in required persistent storage (PRSTR) |
| File:///common/additional/ | The common area in additional persistent storage(s) (PRSTR) |

FIG. 24

```
<?xml[xml attribute information XMATRI]?>

<playlist[name space definition information PLTGNM of playlist tag][playlist attribute information PLATRI]>

    Configuration information CONFGI

    Media attribute information MDATRI

    Title information TTINFO

</playlist>
```

*1 Configuration information CONFGI is described at first position in playlist element PLLST
   ⇒Setting of conditions (parameters) in system commonly used by playlist PLLST can be executed initially,
     and time required until start of playback upon activation can be shortened
*2 Media attribute information MDATRI and title information TTINFO are separately described
   ⇒Different titles can share identical attribute information, and saving of description text volume and simple processing of
     parameter setting, etc. in decoder can be attained
*3 Media attribute information MDATRI is described before title information TTINFO
   ⇒Since processing such as parameter setting, etc. in decoder is executed first, time required until start of
     playback upon activation can be shortened

# F I G. 25

<?xml[xml attribute information XMATRI]?>

<playlist[name space definition information PLTGNM of playlist tag][playlist attribute information PLATRI]>

(a)  Configuration information CONFGI

Media attribute information MDATRI

Title information TTINFO

</playlist>

```
<?xml
[xml attribute
information
XMATRI]
>
```

Version = '[corresponding version number information of xml]'
standalone = '[information indicating whether or not
                          another xml, having child relationship is
                          referred to]
                          information that refers to another xml having
                          child relationship ; no
                          information present as standalone xml which
                          does not refer to another xml ; yes

Description example: <?xml version = '1.0' standalone 'yes' ?>

<?xml[xml attribute information XMATRI]?>

<playlist[name space definition information PLTGNM of playlist tag][playlist attribute information PLATRI]>

(b)  Configuration information CONFGI

Media attribute information MDATRI

Title information TTINFO

</playlist>

```
<playlist[name space definition information PLTGNM of playlist tag]

[Playlist
attribute
information
PLATRI]>

>
```

majorVersion = [integer part value MJVERN of advanced
                          content version number]
minorVersion = [decimal part value MNVERN of advanced
                          content version number]
description = [additional information (name, etc.) PLDSCI
                          associated with playlist]
displayName = [playlist name (text format) PLDPNM]
type = (Advanced | Interoperable) [type information PLTYPE
                          of playlist content]

Description example : <Playlist xmlns = 'http://www.dvdforum.org/HDDVDVideo/
                          Playlist' majorVersion = '1' minorVersion = '0'
                          description = string>
                          (when version number : 1.0, and additional information
                          associated with playlist is string)

# F I G. 26

EP 1 752 987 A2

(a) <?xml[xml attribute information XMATRI]?>

    <playlist[name space definition information PLTGNM of playlist tag][playlist attribute information PLATRI]>

        Configuration information CONFGI

        Media attribute information MDATRI

        Title information TTINFO ⎯⎯⎯

    </playlist>

(b)
Title
information
TTINFO

    <TitleSet[title set attribute information TTSTAT]> ⎯⎯⎯⎯ ①

      First play title element information FPTELE
      <Title>
        Title element information TTELEM associated with title #1
      </Title>
      <Title>
        Title element information TTELEM associated with title #2
      </Title>
      <Title>
        Title element information TTELEM associated with title #3
      </Title>
         ⋮
      Playlist application element information PLAELE
    </TitleSet>
      (see titles #1 to #3 in FIG. 21)

(C)
<Title id = [title ID information TTIDI]
        [title attribute information TTATRI]

[Title
element
information
TTELEM]

  { Object mapping information OBMAPI
     (including track number assignment information)
  Resource information RESRCI
  Playback sequence information PLSQI
  Track navigation information TRNAVI
  Scheduled control information SCHECI

</Title>

* By describing title ID information TTIDI at first position in title element tag in title element information TTELEM,
  1) a plurality of pieces of title element information TTELEM can be described in title information TTINFO
    (respective pieces of title element information TTELEM are set as playback management information for different titles);
    and
  2) each title element information TTELEM in title information TTINFO can be immediately identified by interpreting contents
    of title ID information TTIDI described at first position in title element tag, and content determination processing in playlist
    PLLST can be speeded up.
* Respective pieces of information which have related description contents in title element information TTELEM are grouped
  together and are described at near positions. As group names, object mapping information OBMAPI, resource information
  RESRCI, playback sequence information PLSQI, and track navigation information TRNAVI are assigned. As a result, content
  interpretation processing of playlist PLLST in playlist manager PLMNG can be simplified and speeded up.

F I G. 27A

EP 1 752 987 A2

(d)

<TitleSet

Title set
attribute
information
TTSTAT

timeBase = [frame rate (number of frames per sec) information FRMRT]
  * unit: fps (description example: "60 fps")
tickBase = [frequency information TKBASE of tick clock used in markup page]
  * Frequency of page clock set for each markup page MRKUP and frequency of
    application clock set for each advanced application ADAPL match frequency of tick clock
  ** Frequency TKBASE of tick clock can be uniquely set independently of frequency of
    media clock on title timeline TMLE
defaultLanguage = [menu language information DEFLNG in default state of title set]

>

---

* Media clock → title timeline TMLE = timeBase/FRAMRT
basic clock,
Aapplication clock } → tick clock = tickBase/TKBASE

Independent from each other

⬇

• FF, FR, and pause playback operations can be made
on title timeline TMLE while playing back advanced
application ADAPL at standard speed
• By greatly slowing down tickBase/TKBASE with respect
to timeBase/FRAMRT, load on advanced content
playback unit ADVPL is reduced

* Set timeBase/FRAMRT and tickBase/TKBASE are set in title set element
⇒By adopting common setting in single title set, processing in advanced content
playback unit ADVPL can be simplified

FIG. 27B

EP 1 752 987 A2

(a)

\<Title id = '[title ID information TTIDI]'
　　　　[title attribute information TTATRI] —

　　Object mapping information OBMAPI
　　　(including track number assignment information)

　　Resource information RESRCI

　　Playback sequence information PLSQI —

　　Track navigation information TRNAVI

　　Scheduled control information SCHECI

\</Title\>

(b) 　\<Title 　id = [title ID information TTIDI]

titleNumber = [title number information TTNUM]

type = (Advanced | Original | UserDefined)[title type information TTYPE]

selectable = (true | false)[selectable attribute: response OK/NG attribute of
　　　　　　user operation]

timeBaseDivisor = [attenuation ratio of processing clock in advanced
　　　　　　　　application manager to application tick clock]TICKBD]

titleDuration = [time duration information TTDUR of entire title on title
　　　　　　timeline]

[Title
attribute
information
TTATRI]

parentalLevel = [parental level information]

onEND = [number information of title to be presented after completion of
　　　　current title]
　　　　When this value is '0', pause information is set immediately after
　　　　completion of current title
　　　　Default value is set to '0'

displayName = [title name information (text format) to be displayed by
　　　　　　information playback apparatus]

alternativeSDDisplayMode = (panscanOrLettrbox | panscan | Lettrbox)
　　　　　　　　　　[allowable display mode information SDDISP on
　　　　　　　　　　4:3 TV monitor]

description = [additional information (text format) associated with title]

xml:base = [file saving location URI description format XMBASE
　　　　　　corresponding to title element information]

\>

(Description example:\<Title id = 'Ando' titleDuration = '80000'\>)

(2)

(3)

FIG. 28A

EP 1 752 987 A2

(c)
```
Primary audio video clip element PRAVCP
  <PrimaryAudioVideoClip>··</PrimaryAudioVideoClip>
Substitute audio video clip element SBAVCP
  <SubstituteAudioClip>··</SubstituteAudioClip>
Substitute audio clip element SBADCP
  <SubstituteAudioClip>··</SubstituteAudioClip>
Secondary audio video clip element SCAVCP
  <SecondaryAudioVideoClip>··</SecondaryAudioVideoClip>
Advanced subtitle segment element ADSTSG
  <AdvancedSubtitleSegment>··</AdvancedSubtitleSegment>
Application segment element ADAPSG
  <ApplicationSegment>··</ApplicationSegment>
```

(d)
```
<ChapterList>
  <Chapter
    id = '[chapter element ID information CHPTID#1]'
    titleTimingBegin = '[time information CHSTTM on title timeline indicating chapter
                  start position]'
    description = '[additional information (text format) for each chapter element]'
    displayName = '[corresponding chapter name (text format)]'
  />
  <Chapter
    id = '[chapter element ID information CHPTID#2]'
    titleTimingBegin = '[time information CHSTTM on title timeline indicating chapter
                  start position]'
    description = '[additional information (text format) for each chapter element]'
    displayName = '[corresponding chapter name (text format)]'
  />
</ChapterList>          ⋮
```

F I G. 28B

EP 1 752 987 A2

Explanatory view of data flow of various presentation target objects in advanced content playback unit of this embodiment

Information storage medium DISC

Primary video set PRMVS

Primary video player PRMVP

Secondary video set SCDVS
Advanced application ADAPL
Advanced subtitle ADSBT

Secondary video set SCDVS

Persistent storage PRSTP

Secondary video set SCDVS
Advanced application ADAPL
Advanced subtitle ADSBT

Secondary video set SCDVS

Secondary video player SCDVP

Secondary video set SCDVS
Advanced application ADAPL
Advanced subtitle ADSBT

Streaming buffer STRBUF

Secondary video set SCDVS

Secondary video set SCDVS

Network server NTSRV

Secondary video set SCDVS

Secondary video set SCDVS
Advanced application ADAPL
Advanced subtitle ADSBT

File cache FLCCH

Data cache DTCCH

Advanced application ADAPL

Advanced application presentation engine AAPEN

Advanced subtitle ADSBT

Advanced subtitle player ASBPL

Main video decoder MADEC

Main audio decoder MADEC

Sub-picture decoder SPDEC

Sub video decoder SVDEC

Sub audio decoder SADEC

FIG. 29

EP 1 752 987 A2

Explanatory view of internal structure of data access manager

F I G. 30

Explanatory view of internal structure of data cache

F I G. 31

Explanatory view of internal structure of navigation manager

Navigation manager NVMNG

| Parser PARSER |
| --- |

User interface event UIEVT

Data access manager DAMNG

File cache FLCCH
(Data cache DTCCH)

File cache manager FLCMNG

Playlist manager PLMNG

Advanced application manager ADAMNG

Reference clock CLK

Programming engine PRGEN

Declarative engine DECEN

User interface engine UIENG

Remote control controller RMCCTR

Front panel controller FRPCTR

Game pad controller GMPCTR

Keyboard controller KBDCTR

Mouse controller MUSCTR

Cursor manager CRSMNG

Other events OTEVT

| Presentation engine PRSEN | AV renderer AVRND |
| --- | --- |

FIG. 32

EP 1 752 987 A2

State transition chart in advanced content player

FIG. 33

EP 1 752 987 A2

Explanatory view of internal structure of presentation engine

Navigation manager NVMNG

Presentation engine PRSEN

Advanced application presentation engine AAPEN

Font rendering system FRDSTM

Pixel buffer PIXBUF

Advanced subtitle player ASBPL

File cache FLCCH (Data cache DTCCH)

Secondary video player SCDVP

Decoder engine DCDEN

Data access manager DAMNG

Primary video player PRMVP

AV renderer AVRND

FIG. 34

Explanatory view of internal structure of advanced application presentation engine

Navigation manager NVMNG

Advanced application presentation engine AAPEN

Sound decoder SNDDEC

Graphics decoder GHCDEC

Layout manager LOMNG (Including scaler SCALER and graphic surface GRPHSF)

File cacheFLCCH (Data cache DTCCH)

Pixel buffer PIXBUF

Font rendering system FRDSTM

AV renderer AVRND

FIG. 35

115

Explanatory view of graphic process model in presentation engine

**F I G. 36**

(1) File cache FLCCH(64MB)

(a)

(b)

(c)

ABC

Compression form CMPFRM

Decode and convert DECCVT

Font rendering FONTRN

Text information

(2) Pixel buffer PIXBUF

(a)

(b)

(c)

ABC

Pixel image PIXIMG

Making graphic surface GRPHSF (including scaling)

(3) Graphic surface GRPHSF on graphic plane GRPHPL

Alpha=40%

Alpha=40%

Alpha=40%

(a)

(b)

(c)

ABC

Layout manager LOMNG

AV renderer AVRND

(4)

(a)

(b)

(c)

ABC

API

EP 1 752 987 A2

Explanatory view of internal structure of advanced subtitle player

FIG. 37

Explanatory view of internal structure of font rendering system

FIG. 38

Explanatory view of internal structure of secondary video player

F I G. 39

Explanatory view of internal structure of primary video player

F I G. 40

Explanatory view of internal structure of decoder engine

FIG. 41

Explanatory view of internal structure of AV renderer

FIG. 42

Explanatory view of respective frame layers on presentation screen

Upper plane ←——                                        ——→ Lower plane

Aperture
(graphic region)

Graphic plane
GRPHPL

Sub-picture
plane
SBPCPL

Sub video
plane
SBVDPL

Main video
plane
MNVDPL

Telop

CM

for
commercial

Cursor plane
CRSRPL

Cursor image
CRSIMG

Application region
APPRGN

↓ Composite

Aperture APTR
(graphic region)

Composite frame

← Telop text 39 ←

31

CM

Independent
window for
commercial 32

Help    Stop    Play    FR      Pause   FF
icon    button  button  button  button  button
33      34      35      36      37      38

FIG. 43

Explanatory view of presentation model in graphic plane

Application region
APPRGN#3

Origin position of
graphic region
within canvas
coordinate system

Canvas coordinate
system CNVCRD

(0,0)

(x",y")

(0,0)

X-axis (unit : number of pixels)

Origin position of
each application
region APPRGN is
designated by
canvas coordinate
value CNVCRD

Aperture APTR=graphic region

(x,y)

(0,0)

Intra-application
region coordinates

(x1,y1)

(0,0)

Graphic object
position is designated
by Intra-application
region coordinate
value

(x2,y2)

Application region
APPRGN#1

Application region
APPRGN#2

(1920,1080)

(x',y')

Range of application region
APPRGN may protrude from
graphic region (aperture APTR)
range

Y-axis
(unit : number of pixels)

Although till picture (or script setting range) may be
set to protrude from range of application region
APPRGN bounded by rectangle, only portion included in
range of application region APPRGN is trimmed as
effective region, and is presented on frame (or it is
defined as script setting range)

F I G. 44

Explanatory view of video composition model

FIG. 45

Cursor image CRSIMG
Position information POSITI

Navigation manager NVMNG

Cursor manager CRSMNG

Scale information SCALEI
Position information POSITI

Overlay information
OVLYI

Presentation engine PRSEN

Advanced application presentation engine AAPEN — Layout manager LOMNG (Including scaler)

Advanced subtitle player ASBPL — Layout manager LOMNG (Including scaler)

Secondary video player SCDVP

Luma key information

Primary video player PRMVP

Decoder engine DCDEN

Sub-picture decoder SPDEC

Sub video decoder SVDEC — Scaler SCALER

Main video decoder MVDEC — Scaler SCALER

AV renderer AVRND

Graphic rendering engine GHRNEN

Graphic plane GRPHPL
(Including alpha information)

Sub-picture plane SBPCPL
(Including alpha information)

Sub-picture plane SBPCPL
(Including alpha information)

Switch SWITCH

Chroma effect CRMEFT

Overlay controller OVLCTR

Video output

Main video plane MNVDPL
(Including alpha information)

Sub video plane SBVDPL
(Including no alpha information)

Identical frame rate

Sub video plane SBVDPL
(Including alpha information)

EP 1 752 987 A2

Explanatory view of audio mixing model

FIG. 46

Navigation manager
NVMNG

Control information CTRLI

Mixing level information MXLVI

Presentation engine PRSEN

Advanced application
presentation engine AAPEN

Sound decoder SNDDEC

Decoder engine DCDEN

Sub audio decoder SADEC
(Including meta data control)

Main audio decoder
MADEC

Effect audio
stream
EFTAD

Sub audio
stream
SUBAD

Main audio
stream
MANAD

AV renderer AVRND

Audio mixing engine
ADMXEN

Sampling rate
converter
SPRTCV

Sampling rate
converter
SPRTCV

Sampling rate
converter-
SPRTCV

Sound mixer SNDMIX

Audio
output
AOUT

EP 1 752 987 A2

Explanatory view of data supply model from network server and persistent storage memory

FIG. 47

Navigation manager NVMNG
- Parser PARSER
- Playlist manager PLMNG
- Advanced application manager ADAMNG
- Programming engine PRGEN
- Declarative engine DECEN
- File cache manager FLCMNG

Presentation engine PRSEN
- Advanced application presentation engine AAPEN
- Font rendering system FRDSTM
- Advanced subtitle player ASBPL
- Secondary video player SCDVP
- Secondary video playback engine SVPBEN
- Demultiplexer DEMUX

Advanced navigation ADVNV
Any file ANYFL
Advanced content ADVCT
Advanced element ADVEL
Font FONT
Advanced subtitle ADSBT
TMAP

Playlist file PLLST
Advanced stream ADVST
Advanced content ADVCT

File cache FLCCH
Streaming buffer STRBUF
TMAP
Secondary enhanced video object S-EVOB

Data access manager DAMNG
Network manager NTMNG
Persistent storage manager PRMNG

Network server NTSRV

Persistent storage PRSTR
- Fixed storage device FXSRG (Indispensable condition)
- Portable storage device ADDSRG (Option)
  - SD card SDCD
  - USB memory USBM
  - USBHDD
  - NAS

EP 1 752 987 A2

Explanatory view of user input handling model

F I G. 48

125

List of user input events

| Virtual key code | Default input handler | Value | Instruction | Function overview |
|---|---|---|---|---|
| VK_PLAY | playHandler | 0XFA | Play normal speed | Normal speed playback |
| VK_PAUSE | pauseHandler | 0XB3 | Pause ON/OFF playback | Pause/playback |
| VK_FF | fastForwardHandler | 0XC1 | Fastforward playback | Fastforward playback |
| VK_FR | fastReverseHandler | 0XC2 | Fast reverse playback | Fast reverse playback |
| VK_SF | slowForwardHandler | 0XC3 | Slow forward playback | Slow forward playback |
| VK_SR | slowReverseHandler | 0XC4 | Slow reverse playback | Slow reverse playback |
| VK_STEP_PREV | stepPreviousHandler | 0XC5 | Previous step backward | Return to previous step |
| VK_STEP_NEXT | stepNextHandler | 0XC6 | Next step backward | Jump to next step |
| VK_SKIP_PREV | skipPreviousHandler | 0XC7 | Change previous chapter | Play back previous chapter |
| VK_SKIP_NEXT | skipNextHandler | 0XC8 | Change next chapter | Play back next chapter |
| VK_SUBTITLE_SWITCH | switchSubtitleHandler | 0XC9 | Subtitle track ON/OFF | ON/OFF of presentation of subtitle |
| VK_SUBTITLE | changeSubtitleHandler | 0XCA | Change subtitle track | Change subtitle track |
| VK_CC | showClosedCaptionHandler | 0XCB | Show closed caption | Present closed caption |
| VK_ANGLE | changeAngleHandler | 0XCC | Change angle track | Switch angle |
| VK_AUDIO | changeAudioHandler | 0XCD | Change audio track | Switch audio track |
| VK_MENU | | 0XCE | Display menu | Present menu |
| VK_TOP_MENU | | 0XCF | Display top menu | Present top menu |
| VK_BACK | | 0XD0 | Return | Return |
| VK_RESUME | | 0XD1 | Resume return | Return from menu |
| VK_LEFT | | 0X25 | Cursor left | Shift cursor to left |
| VK_UP | | 0X26 | Cursor up | Shift cursor upward |
| VK_RIGHT | | 0X27 | Cursor right | Shift cursor to right |
| VK_DOWN | | 0X28 | Cursor down | Shift cursor downward |
| VK_UPLEFT | | 0X29 | Cursor up left | Shift cursor left upward |
| VK_UPRIGHT | | 0X30 | Cursor up right | Shift cursor right upward |
| VK_DOWNLEFT | | 0X31 | Cursor down left | Shift cursor left downward |
| VK_DOWNRIGHT | | 0X32 | Cursor down right | Shift cursor right downward |
| VK_TAB | | 0X09 | Tab | Tab |
| VK_A_BUTTON | | 0X70 | A button | A button |
| VK_B_BUTTON | | 0X71 | B button | B button |
| VK_C_BUTTON | | 0X72 | C button | C button |
| VK_D_BUTTON | | 0X73 | D button | D button |
| VK_ENTER | | 0X0D | OK | OK |
| VK_ESC | | 0X1B | Cancel | Cancel |
| VK_0 | | 0X30 | 0 | 0 |
| VK_1 | | 0X31 | 1 | 1 |
| VK_2 | | 0X32 | 2 | 2 |
| VK_3 | | 0X33 | 3 | 3 |
| VK_4 | | 0X34 | 4 | 4 |
| VK_5 | | 0X35 | 5 | 5 |
| VK_6 | | 0X36 | 6 | 6 |
| VK_7 | | 0X37 | 7 | 7 |
| VK_8 | | 0X38 | 8 | 8 |
| VK_9 | | 0X39 | 9 | 9 |
| VK_MOUSEDOWN | | 0X01 | Mouse button down | Disable input of designated element (shift to non-frontmost plane) |
| VK_MOUSEUP | | 0X02 | Mouse button up | Enable input of designated element (shift to frontmost plane) |

# FIG. 49

List of player parameters in this embodiment

| Object | Property | Contents |
|---|---|---|
| Player parameter | mainVersion | Integer part value of version number of corresponding specification |
| | minorVersion | Value below decimal point of version number of corresponding specification |
| | VideoCapabilitySub | Use support of sub video |
| | audioCapabilityMain | Use support of main video |
| | audioCapabilitySub | Use support of sub audio |
| | audioCapabilityAnalog | Use support of analog audio |
| | audioCapabilityPCM | Use support of PCM audio |
| | audioCapabilitySPDIF | Use support of S/PDIF audio |
| | regionCode | Region code |
| | countryCode | Country code |
| | displayAspectRatio | Display of aspect ratio |
| | currentDisplayMode | Display mode |
| | networkThroughput | Network throughput |
| Data cache | dataCacheSize | Data cache size |

F I G. 50

List of profile parameters in this embodiment

| Object | Property | Contents |
|---|---|---|
| Profile parameter | parentalLevel | Parental level |
| | menuLanguage | Menu language |
| | initialAudioLanguage | Initial audio language |
| | initialSubtitleLanguage | Initial subtitle language |

F I G. 51

List of presentation parameters in this embodiment

| Object | Property | Contents |
|---|---|---|
| Playlist manager PLMNG | playlist | Playlist |
| | titleId | Title ID |
| | titleElapsedTime | Elapsed time on title timeline |
| | currentVideoTrack | Track number of main video |
| | currentAudioTrack | Track number of main audio |
| | currentSubtitleTrack | Track number of subtitle |
| | selectedAudioLanguage | Selected audio language |
| | selectedAudioLanguageExtension | Extension field of selected audio language |
| | selectedSubtitleLanguage | Selected subtitle language |
| | selectedSubtitleLanguageExtension | Extension field of selected subtitle language |
| | selectedApplicationGroup | Selected application group |
| Audio mixing engine ADMXEN | volumeL | Tone volume of left channel |
| | volumeR | Tone volume of right channel |
| | volumeC | Tone volume of center channel |
| | volumeLS | Tone volume of left surround channel |
| | volumeRS | Tone volume of right surround channel |
| | volumeLB | Tone volume of left behind channel |
| | volumeRB | Tone volume of right behind channel |
| | volumeLFE | Tone volume of sub woofer channel |
| | mixSubXtoX | Sub audio down mix coefficient (percentages) |
| | mixEffectXtoX | Sub effect audio down mix coefficient (percentages) |
| Data cache DTCCH | streamingBufferSize | Streaming buffer size |

FIG. 52

List of layout parameters in this embodiment

| Object | Property | Contents |
|---|---|---|
| Presentation engine PRSEN | mainVideo.x | X-coordinate value of origin position of main video |
| | mainVideo.y | Y-coordinate value of origin position of main video |
| | mainVideoScaleNumerator | Numerator value of main video scaling value |
| | mainVideoScaleDenominator | Denominator value of main video scaling value |
| | mainVideoCrop.x | X-coordinate value of main video presentation area |
| | mainVideoCrop.y | Y-coordinate value of main video presentation area |
| | mainVideoCrop.width | Width of main video presentation area |
| | mainVideoCrop.height | Height of main video presentation area |
| | subVideo.x | X-coordinate value of origin position of sub video |
| | subVideo.y | Y-coordinate value of origin position of sub video |
| | subVideoScaleNumerator | Numerator value of sub video scaling value |
| | subVideoScaleDenominator | Denominator value of sub video scaling value |
| | subVideoCrop.x | X-coordinate value of sub video presentation area |
| | subVideoCrop.y | Y-coordinate value of sub video presentation area |
| | subVideoCrop.width | Width of sub video presentation area |
| | subVideoCrop.height | Height of sub video presentation area |

F I G. 53

**EP 1 752 987 A2**

**REFERENCES CITED IN THE DESCRIPTION**

**Patent documents cited in the description**

- JP 2004343254 A